# EUROPÄISCHE PATENTSCHRIFT

(11) **EP 1 962 590 B1**
(45) Veröffentlichungstag und Bekanntmachung des Hinweises auf die Patenterteilung: **11.08.2010**
(21) Anmeldenummer: 06829500.5
(22) Anmeldetag: 11.12.2006
(51) Int. Cl.: A01N 33/12, A01N 59/02, A01N 43/90, A01N 43/38, A01N 43/12, A01N 43/40, A01N 43/16, A01N 43/86, A01N 43/08, A01N 35/06, A01N 25/04, A01N 25/02, A01P 7/00

(54) **HERBIZIDE ZUSAMMENSETZUNGEN MIT VERBESSERTER WIRKUNG**
HERBICIDAL COMPOSITIONS HAVING IMPROVED EFFECT
COMPOSITIONS HERBICIDES D'EFFICACITE ACCRUE

(30) Priorität: 13.12.2005 DE 102005059471
(43) Veröffentlichungstag der Anmeldung: 03.09.2008
(73) Patentinhaber: Bayer CropScience AG, 40789 Monheim (DE)
(72) Erfinder: FISCHER, Reiner, 40789 Monheim (DE); LEHR, Stefan, 65835 Liederbach (DE); FEUCHT, Dieter, 65760 Eschborn (DE); BICKERS, Udo, 65779 Kelkheim (DE); HUFF, Hans, Philipp, 65817 Eppstein (DE); HACKER, Erwin, 65239 Hochheim (DE); SUESSMANN, Rainer, 65549 Limburg (DE)
(86) Internationale Anmeldenummer: PCT/EP2006/011910
(87) Internationale Veröffentlichungsnummer: WO 2007/068427

(56) Entgegenhaltungen:
- WO-A-01/17352
- WO-A-99/43649
- WO-A-02/098230
- WO-A-03/099005
- WO-A-2005/044791
- WO-A-2005/044796
- WO-A-2005/066125
- WO-A-2005/084435
- WO-A-2006/024411
- US-A1- 2002 065 198
- DATABASE CA [Online] CHEMICAL ABSTRACTS SERVICE, COLUMBUS, OHIO, US; F.A.MANTHEY ET AL.: "Esterified seed oils with herbicides" XP002477351 gefunden im STN-INTERNATIONAL Database accession no. 111:169274 & ADJUVANTS AGROCHEM., Bd. 2, 1989, Seiten 139-148,
- DATABASE CA [Online] CHEMICAL ABSTRACTS SERVICE, COLUMBUS, OHIO, US; D.J.TURNER ET AL.: "Some increases in efficacy of foliage applied herbicidal salts due to addition of ammonium ions" XP002477352 gefunden im STN-INTERNATIONAL Database accession no. 85:42065 & PROCEEDINGS OF THE BRITISH WEED CONTROL CONFERENCE, 11, Bd. 2, 1972, Seiten 654-660,

## Beschreibung

Die vorliegende Erfindung betrifft die Steigerung der Wirkung von Pflanzenschutzmitteln enthaltend Inhibitoren der Fettsäure-Biosynthese, insbesondere phenylsubstituierte cyclische Ketoenole, durch die Zugabe von Ammonium- oder Phosphoniumsalzen und Penetrationsförderern, die entsprechenden Mittel, Verfahren zu ihrer Herstellung und ihre Anwendung im Pflanzenschutz zur Verhinderung von unerwünschtem Pflanzenwuchs.

Von 3-Acyl-pyrrolidin-2,4-dionen sind pharmazeutische Eigenschaften vorbeschrieben (S. Suzuki et al. Chem. Pharm. BuH. 15 1120 (1967)). Weiterhin wurden N-Phenylpyrrolidin-2,4-dione von R. Schmierer und H. Mildenberger (Liebigs Ann. Chem. 1985, 1095) synthetisiert. Eine biologische Wirksamkeit dieser Verbindungen wurde nicht beschrieben.

In EP-A-0 262 399 und GB-A-2 266 888 werden ähnlich strukturierte Verbindungen (3-Aryl-pyrrolidin-2,4-dione) offenbart, von denen jedoch keine herbizide, insektizide oder akarizide Wirkung bekannt geworden ist. Bekannt mit herbizider, insektizider oder akarizider Wirkung sind unsubstituierte, bicyclische 3-Aryl-pyrrolidin-2,4-dion-Derivate (EP-A-355 599, EP-A-415 211 und JP-A-12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 95/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/16748, WO 99/24437, WO 99/43649, WO 99/48869 und WO 99/55673, WO 01/17972, WO 01/23354, WO 01/74770, WO 03/013249; WO 04/007448, WO 04/024688, WO 04/065366, WO 04/080962, WO 04/111042, WO 05/044791, WO 05/044796, WO 05/048710, WO 05/049569, WO 05/066125, WO 05/092897, WO 06/000355, WO 06/029799, WO 06/056281, WO 06/056282, WO 06/089633).

Es ist bekannt, dass bestimmte substituierte Δ³-Dihydrofuran-2-on-Derivate herbizide Eigenschaften besitzen (vgl. DE-A-4 014 420). Die Synthese der als Ausgangsverbindungen verwendeten Tetronsäurederivate (wie z.B. 3-(2-Methyl-phenyl)-4-hydroxy-5-(4-fluorphenyl)-Δ³-di-hydrofuranon-(2)) ist ebenfalls in DE-A-4 014 420 beschrieben. Ähnlich strukturierte Verbindungen ohne Angabe einer insektiziden und/oder akariziden Wirksamkeit sind aus der Publikation Campbell et al., J. Chem. Soc., Perkin Trans. 1, 1985, (8) 1567-76 bekannt. Weiterhin sind 3-Aryl-A³-dihydrofuranon-Derivate mit herbiziden, akariziden und insektiziden Eigenschaften aus EP-A-528 156, EP-A-0 647 637, WO 95/26 345, WO 96/20 196, WO 96/25 395, WO 96/35 664, WO 97/01 535, WO 97/02 243, WO 97/36 868, WO 98/05638, WO 98/25928, WO 99/16748, WO 99/43649, WO 99/48869, WO 99/55673, WO 01/17972, WO 01/23354 und WO 01/74770, WO 03/013 249, WO 04/024 688, WO 04/080 962, WO 04/111 042, WO 05/092897, WO 06/000355, WO 06/029799 und WO 06/089633 bekannt. Auch 3-Aryl-Δ³-dihydrothiphen-on-Derivate sind bekannt (WO 95/26 345, 96/25 395, WO 97/01 535, WO 97/02 243, WO 97/36 868, WO 98/05638, WO 98/25928, WO 99/16748, WO 99/43649, WO 99/48869, WO 99/55673, WO 01/ 17972, WO 01/23354, WO 01/74770, WO 03/013249, WO 04/080 962, WO 04/111 042, WO 05/092897, WO 06/029799).

Bestimmte, im Phenylring unsubstituierte Phenyl-pyron-Derivate sind bereits bekannt geworden (vgl. A.M. Chirazi, T. Kappe und E. Ziegler, Arch. Pharm. 309, 558 (1976) und K.-H. Boltze und K. Heidenbluth, Chem. Ber. 91, 2849), wobei für diese Verbindungen eine mögliche Verwendbarkeit als Schädlingsbekämpfungsmittel nicht angegeben wird. Im Phenylring substituierte Phenyl-pyron-Derivate mit herbiziden, akariziden und insektiziden Eigenschaften sind in EP-A-588 137, WO 96/25 395, WO 96/35 664, WO 97/01 535, WO 97/02 243, WO 97/16 436, WO 97/19 941, WO 97/36 868, WO 98/05638, WO 99/43649, WO 99/48869, WO 99/55673, WO 01/17972, WO 01/74770, WO 03/013249, WO 04/080 962, WO 04/111 042, WO 05/092897 und WO 06/029799 beschrieben.

Bestimmte, im Phenylring unsubstituierte 5-Phenyl-1,3-thiazin-Derivate sind bereits bekannt geworden (vgl. E. Ziegler und E. Steiner, Monatsh. 95, 147 (1964), R. Ketcham, T. Kappe und E. Ziegler, J. Heterocycl. Chem. 10, 223 (1973)), wobei für diese Verbindungen eine mögliche Anwendung als Schädlingsbekämpfungsmittel nicht angegeben wird. Im Phenylring substituierte 5-Phenyl-1,3-thiazin-Derivate mit herbizider, akarizider und insektizider Wirkung sind in WO 94/14 785, WO 96/02 539, WO 96/35 664, WO 97/01 535, WO 97/02 243, WO 97/02 243, WO 97/36 868, WO 99/05638, WO 99/43649, WO 99/48869, WO 99/55673, WO 01/17972, WO 01/74770, WO 03/013249, WO 04/080 962, WO 04/111 042, WO 05/092897 und WO 06/029799 beschrieben.

Es ist bekannt, dass bestimmte substituierte 2-Arylcyclopentandione herbizide, insektizide und akarizide Eigenschaften besitzen (vgl. z.B. US-4 283 348; 4 338 122; 4 436 666; 4 526 723; 4 551 547; 4 632 698; WO 96/01 798; WO 96/03 366, WO 97/14 667 sowie WO 98/39281, WO 99/43649, WO 99/48869, WO 99/55673, WO 01/17972, WO 01/74770, WO 03/013249, WO 04/080 962, WO 04/111 042, WO 05/092897 und WO 06/029799). Außerdem sind ähnlich substituierte Verbindungen bekannt; 3-Hydroxy-5,5-dimethyl-2-phenylcyclopent-2-en-1-on aus der Publikation Micklefield et al., Tetrahedron, (1992), 7519-26 sowie der Naturstoff Involutin (-)-cis-5-(3,4-dihydroxyphenyl)-3,4-dihydroxy-2-(4-hydroxyphenyl)-cyclopent-2-en-one aus der Publikation Edwards et al., J. Chem. Soc. S, (1967), 405-9. Eine insektizide oder akarizide Wirkung wird nicht beschrieben. Außerdem ist 2-(2,4,6-Trimethylphenyl)-1,3-indandion aus der Publikation J. Economic Entomology, 66, (1973), 584 und der Offenlegungsschrift DE-A 2 361 084 bekannt, mit Angabe von herbiziden und akariziden Wirkungen.

Es ist bekannt, dass bestimmte substituierte 2-Arylcyclohexandione herbizide, insektizide und akarizide Eigenschaften besitzen (US-4 175 135, 4 209 432, 4 256 657, 4 256 658, 4 256 659, 4 257 858, 4 283 348, 4 303 669, 4 351 666, 4 409 153, 4 436 666, 4 526 723, 4 613 617, 4 659 372, DE-A 2 813 341, sowie Wheeler, T.N., J. Org. Chem. 44, 4906 (1979)), WO 99/43649, WO 99/48869, WO 99/55673, WO 01/17972, WO 01/74770, WO 03/013249, WO 04/080 962, WO 04/111 042, WO 05/092897 und WO 06/029799).

Es ist bekannt, dass bestimmte substituierte 4-Aryl-pyrazolidin-3,5-dione akarizide, insektizide und herbizide Eigenschaften besitzen (vgl. z.B. WO 92/16 510, EP-A-508 126, WO 96/11 574, WO 96/21 652, WO 99/47525, WO 01/17351, WO 01/17 352, WO 01/17353, WO 01/17 972, WO 01/17 973, WO 03/028 466, WO 03/062 244, WO 04/080 962, WO 04/111 042, WO 05/005428, WO 05/016873, WO 05/092897 und WO 06/029799).

Es ist bekannt, dass bestimmte Tetrahydropyridone herbizide Eigenschaften besitzen (JP 0832530). Außerdem sind spezielle 4-Hydroxytetrahydropyridone mit akariziden, insektiziden und herbiziden Eigenschaften bekannt (JP 11152273). Weiterhin bekannt wurden 4-Hydroxytetrahydropyridone als Schädlingsbekämpfungsmittel und Herbizide in WO 01/79204.

Es ist bekannt, dass bestimmte 5,6-Dihydropyron-Derivate als Proteaseinhibitoren antivirale Eigenschaften haben (WO 95/14012). Weiterhin ist das 4-Phenyl-6-(2-phenethyl)-5,6-dihydropyron aus der Synthese von Kawalakton-Derivaten bekannt (Kappe et al., Arch. Pharm. 309, 558-564 (1976). Außerdem sind 5,6-Dihydropyron-Derivate als Zwischenprodukte bekannt (White, J.D., Brenner, J.B., Deinsdale, M. J., J. Amer. Chem. Soc. 93, 281 - 282 (1971). 3-Phenyl-5,6-dihydropyron-Derivate mit Anwendungen im Pflanzenschutz sind in WO 01/98288 beschrieben.

Alle in den erfindungsgemäßen Mitteln enthaltenen Wirkstoffe sind bereits bekannt und können nach im Stand der Technik beschriebenen Verfahren (siehe oben genannte Referenzen) hergestellt werden. Ihre Wirkung ist gut, jedoch insbesondere bei niedrigen Aufwandmengen und Konzentrationen nicht immer voll zufriedenstellend. Weiterhin ist die Pflanzenverträglichkeit dieser Verbindungen nicht immer ausreichend. Es besteht deshalb ein Bedarf für eine Wirkungssteigerung der die Verbindungen enthaltenden Pflanzenschutzmittel.

In der Literatur wurde bereits beschrieben, dass sich die Wirkung verschiedener Wirkstoffe durch Zugabe von Ammoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4 844 734, US 5 462 912, US 5 538 937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. Eine Wirkungssteigerung z.B. durch Ammoniumsulfat ist beispielsweise für die Herbizide Glyphosat und Phosphinothricin beschrieben (US 6 645 914, EP-A2 0 036 106).

Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Es wurde nun völlig überraschend gefunden, dass sich die Wirkung von Herbiziden aus der Klasse der phenylsubstituierten cyclischen Ketoenole durch den Zusatz von Ammonium- oder Phosphoniumsalzen zur Anwendungslösung oder durch den Einbau dieser Salze in eine Formulierung enthaltend phenylsubstituierte cyclische Ketoenole, deutlich steigern lässt. Gegenstand der vorliegenden Erfindung ist also die Verwendung von Ammonium- oder Phosphoniumsalzen zur Wirkungssteigerung von Pflanzenschutzmitteln, die herbizid wirksame phenylsubstituierte cyclische Ketoenole als Wirkstoff enthalten gemäß Anspruch 20. Gegenstand der Erfindung sind ebenfalls Mittel, die herbizid wirksame phenylsubstituierte cyclische Ketoenole und die Wirkung steigernde Ammonium- oder Phosphoniumsalze und mindestens einen Penetrationsförderer gemäß Anspruch 1 enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von unerwünschtem Pflanzenwuchs.

Erfindungsgemäße Wirkstoffe aus der Klasse der phenylsubstituierten cyclischen Ketoenole, deren Wirkung sich durch die Zugabe von Ammonium- oder Phosphoniumsalzen zu den formulierten oder anwendungsfertigen Wirkstoffzubereitungen steigern lässt, werden durch Formel (I) definiert, 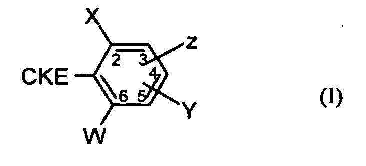 in welcher
- W: für Wasserstoff, Alkyl, Alkenyl, Alkinyl, Halogen, Alkoxy, Halogenalkyl, Halogenalkoxy oder Cyano steht,
- X: für Halogen, Alkyl, Alkenyl, Alkinyl, Alkoxy, Alkoxy-alkoxy, Halogenalkyl, Halogenal- koxy oder Cyano steht,
- Y: für Wasserstoff, Halogen, Alkyl, Alkenyl, Alkinyl, Alkoxy, Cyano, Halogenalkyl, Haloge- nalkoxy oder für jeweils gegebenenfalls substituiertes Phenyl oder Hetaryl steht,
- Z: für Wasserstoff, Halogen, Alkyl, Halogenalkyl, Cyano, Alkoxy oder Halogenalkoxy steht,
- CKE: für eine der Gruppen 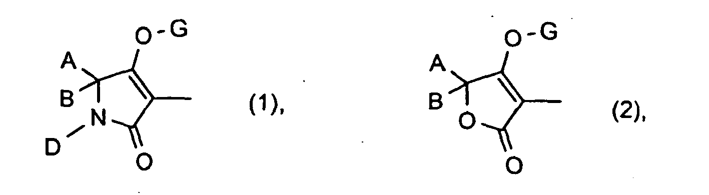 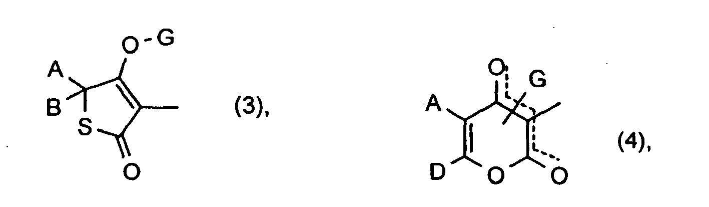 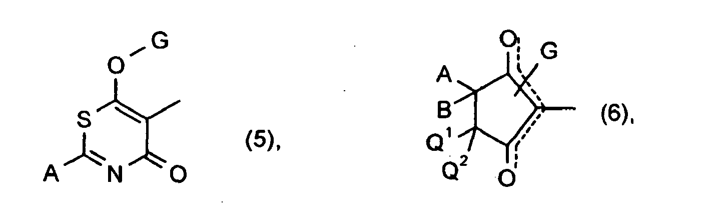 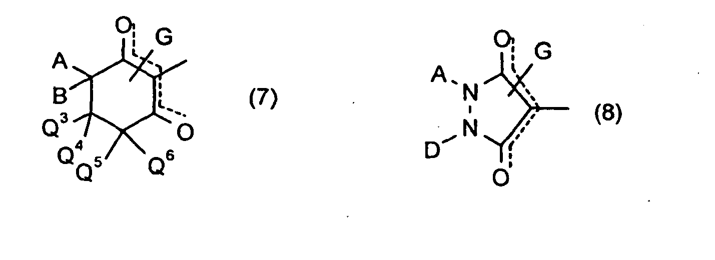 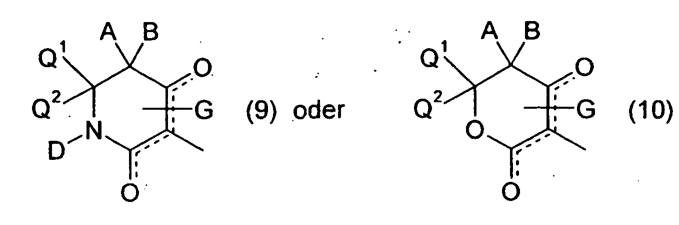 steht,
worin
- A: für Wasserstoff, jeweils gegebenenfalls durch Halogen substituiertes Alkyl, Alke- nyl, Alkoxyalkyl, Alkylthioalkyl, gesättigtes oder ungesättigtes, gegebenenfalls substituiertes Cycloalkyl, in welchem gegebenenfalls mindestens ein Ringatom durch ein Heteroatom ersetzt ist, oder jeweils gegebenenfalls durch Halogen, Al- kyl, Halogenalkyl, Alkoxy, Halogenalkoxy, Cyano oder Nitro substituiertes Aryl, Arylalkyl oder Hetaryl steht,
- B: für Wasserstoff, Alkyl oder Alkoxyalkyl steht, oder
- A und B: gemeinsam mit dem Kohlenstoffatom an das sie gebunden sind für einen ge- sättigten oder ungesättigten, gegebenenfalls mindestens ein Heteroatom ent- haltenden unsubstituierten oder substituierten Cyclus stehen,
- D: für Wasserstoff, oder einen gegebenenfalls substituierten Rest aus der Reihe Alkyl, Alkenyl, Alkinyl, Alkoxyalkyl, gesättigtes oder ungesättigtes Cycloalkyl, in wel- chem gegebenenfalls eines oder mehrere Ringglieder durch Heteroatome ersetzt sind, Arylalkyl, Aryl, Hetarylalkyl oder Hetaryl steht oder
- A und D: gemeinsam mit den Atomen an die sie gebunden sind für einen gesättigten oder ungesättigten und gegebenenfalls mindestens ein (im Falle CKE=8 ein weiteres) Heteroatom enthaltenden, im A,D-Teil unsubstituierten oder substituierten Cyclus stehen, bzw.
- A und Q¹: gemeinsam für gegebenenfalls durch Hydroxy, jeweils gegebenenfalls substitu- iertes Alkyl, Alkoxy, Alkylthio, Cycloalkyl, Benzyloxy oder Aryl substituiertes Alkandiyl oder Alkendiyl stehen oder
- D und Q¹: gemeinsam mit den Atomen, an die sie gebunden sind, für einen gesättigten oder ungesättigten und gegebenenfalls mindestens ein Heteroatom enthaltenden, im D, Q¹-Teil unsubstituierten oder substituierten Cyclus stehen,
- Q¹: für Wasserstoff, Alkyl, Alkoxyalkyl, gegebenenfalls substituiertes Cycloalkyl (worin gegebenenfalls eine Methylengruppe durch Sauerstoff oder Schwefel er- setzt ist) oder gegebenenfalls substituiertes Phenyl steht,
- Q², Q⁴, Q⁵ und Q⁶: unabhängig voneinander für Wasserstoff oder Alkyl stehen,
- Q³: für Wasserstoff, für gegebenenfalls substituiertes Alkyl, Alkoxyalkyl, Alkylthio- alkyl, gegebenenfalls substituiertes Cycloalkyl (worin gegebenenfalls eine Methy- lengruppe durch Sauerstoff oder Schwefel ersetzt ist) oder gegebenenfalls sub- stituiertes Phenyl steht, oder
- Q¹ und Q²: gemeinsam mit dem Kohlenstoffatom, an das sie gebunden sind, für einen ge- gebenenfalls ein Heteroatom enthaltenden unsubstituierten oder substituierten Cyclus stehen, oder
- Q³ und Q⁴: gemeinsam mit dem Kohlenstoffatom, an das sie gebunden sind, für einen ge- sättigten oder ungesättigten, gegebenenfalls ein Heteroatom enthaltenden un- substituierten oder substituierten Cyclus stehen,
- G: für Wasserstoff (a) oder für eine der Gruppen 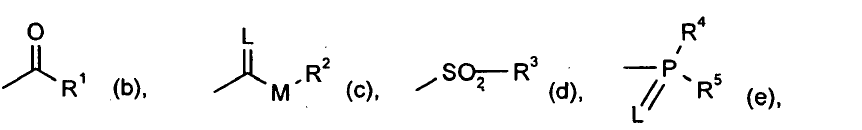
E (f) oder 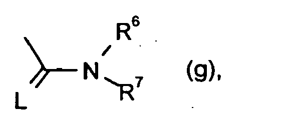 steht,
worin
E für ein Metallionäquivalent oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindes- tens ein Heteroatom unterbrochen sein kann, jeweils gegebenenfalls sub- stituiertes Phenyl, Phenylalkyl, Hetaryl, Phenoxyalkyl oder Hetaryloxy- alkyl steht,
R² für jeweils gegebenenfalls durch Halogen substituiertes Alkyl, Alkenyl, Alkoxyalkyl, Polyalkoxyalkyl oder für jeweils gegebenenfalls sub- stituiertes Cycloalkyl, Phenyl oder Benzyl steht,
R³, R⁴ und R⁵ unabhängig voneinander für jeweils gegebenenfalls durch Halogen substituiertes Alkyl, Alkoxy, Alkylamino, Dialkylamino, Alkylthio, Alke- nylthio, Cycloalkylthio oder für jeweils gegebenenfalls substituiertes Phe- nyl, Benzyl, Phenoxy oder Phenylthio stehen,
R⁶ und R⁷ unabhängig voneinander für Wasserstoff, jeweils gegebenenfalls durch Halogen substituiertes. Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbro- chenen Cyclus stehen.

Die Verbindungen der Formel (I) können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische sind in erfindungsgemäßen Mitteln einsetzbar und lassen sich in ihrer Wirkung durch erfindungsgemäße Ammonium- oder Phosphoniumsalze steigern. Im folgenden wird der Einfachheit halber stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Unter Einbeziehung der Bedeutungen (1) bis (10) der Gruppe CKE ergeben sich folgende hauptsächliche Strukturen (I-1) bis (I-10): 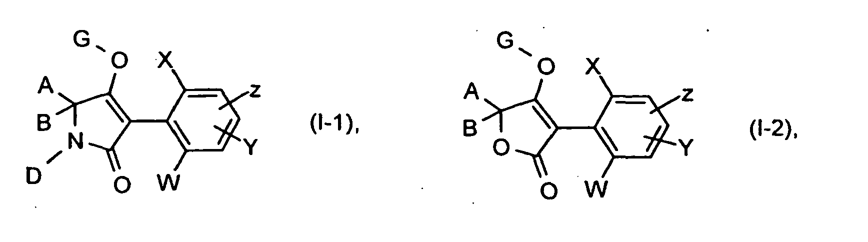 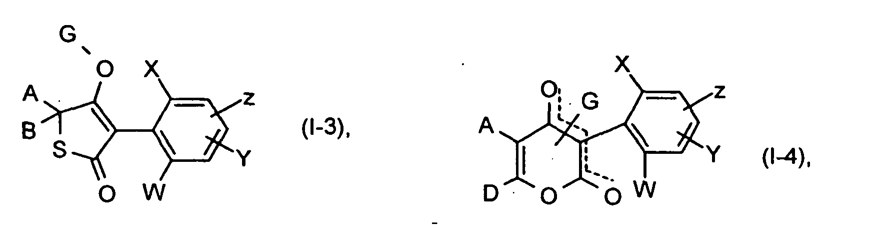 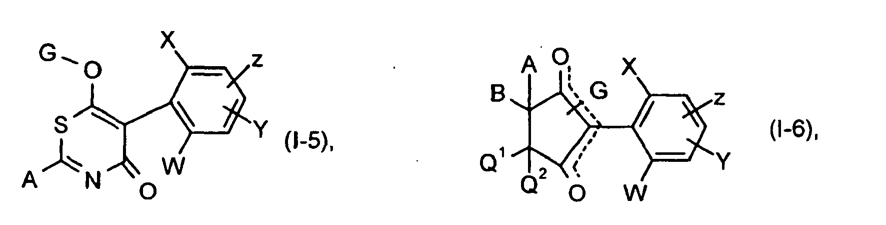 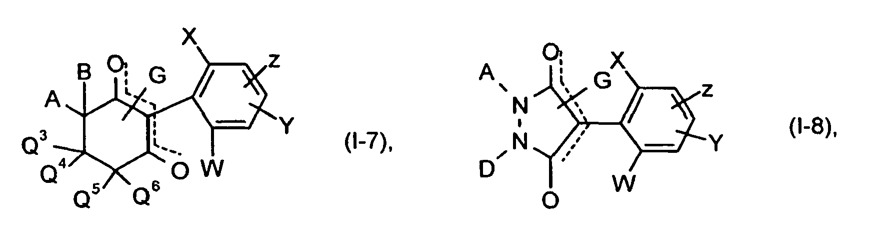 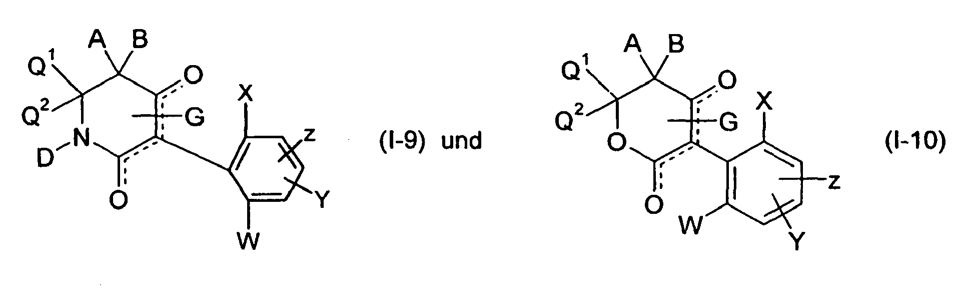 worin
A, B, D, G, Q¹, Q², Q³, Q⁴, Q⁵, Q⁶, W, X, Y und Z die oben angegebene Bedeutung haben.

Unter Einbeziehung der verschiedenen Bedeutungen (a), (b), (c), (d), (e), (f) und (g) der Gruppe G ergeben sich folgende hauptsächliche Strukturen (I-1-a) bis (I-1-g), wenn CKE für die Gruppe (1) steht, 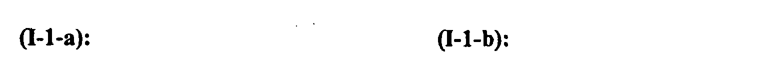 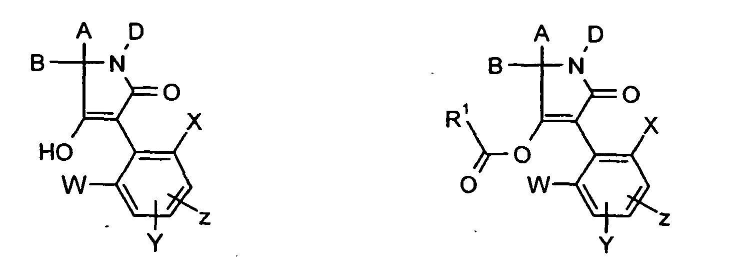 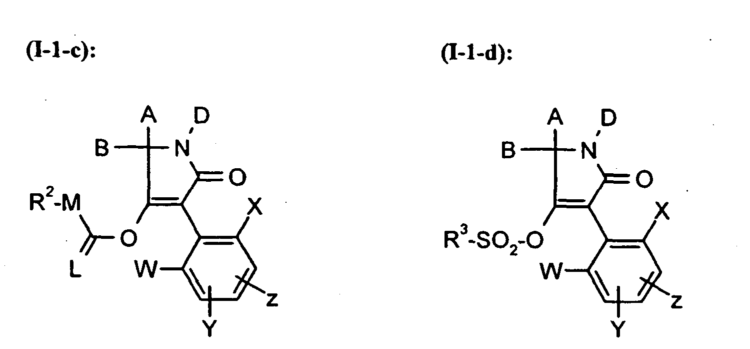 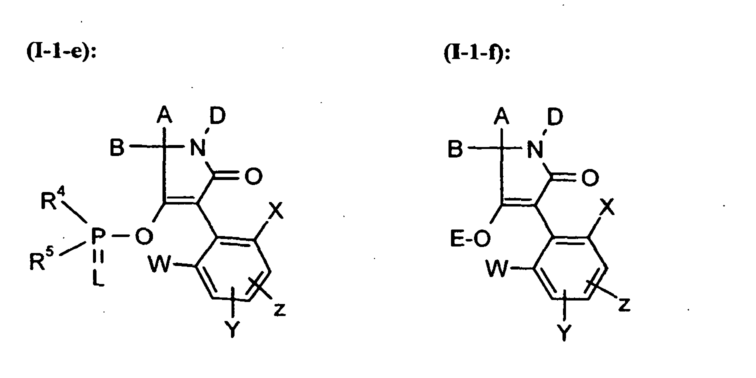 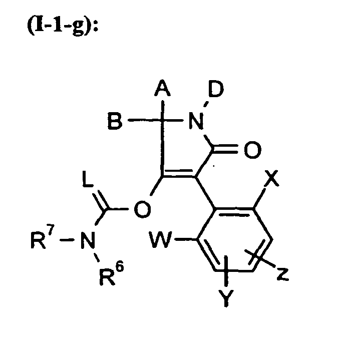 worin
A, B, D, E, L, M, W, X, Y, Z, R¹, R², R³, R⁴, R⁵, R⁶ und R⁷ die oben angegebenen Bedeutungen besitzen.

Unter Einbeziehung der verschiedenen Bedeutungen (a), (b), (c), (d), (e), (f) und (g) der Gruppe G ergeben sich folgende hauptsächliche Strukturen (I-2-a) bis (I-2-g), wenn CKE für die Gruppe (2) steht, 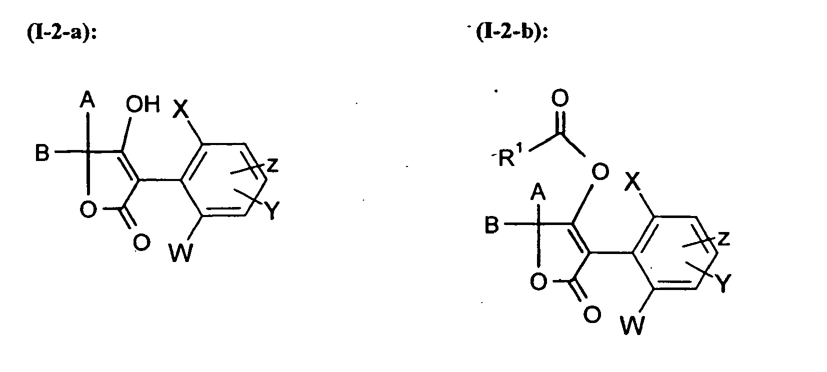 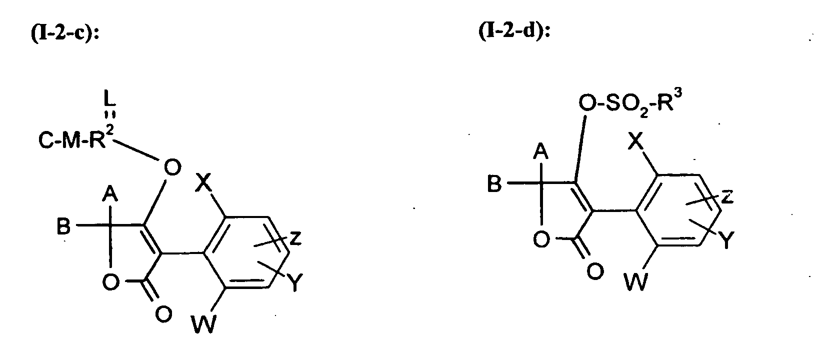 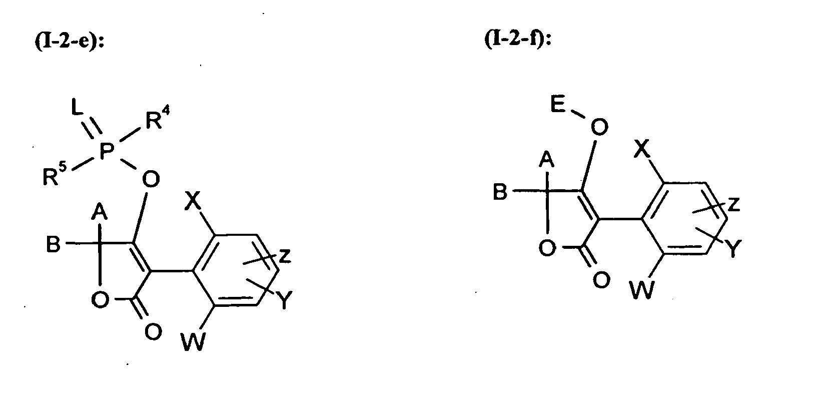 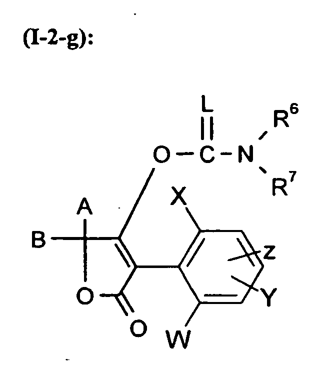 worin
A, B, E, L, M, W, X, Y, Z, R¹, R², R³, R⁴, R⁵, R⁶ und R⁷ die oben angegebene Bedeutung haben.

Unter Einbeziehung der verschiedenen Bedeutungen (a), (b), (c), (d), (e), (f) und (g) der Gruppe G ergeben sich folgende hauptsächliche Strukturen (I-3-a) bis (I-3-g), wenn CKE für die Gruppe (3) steht, 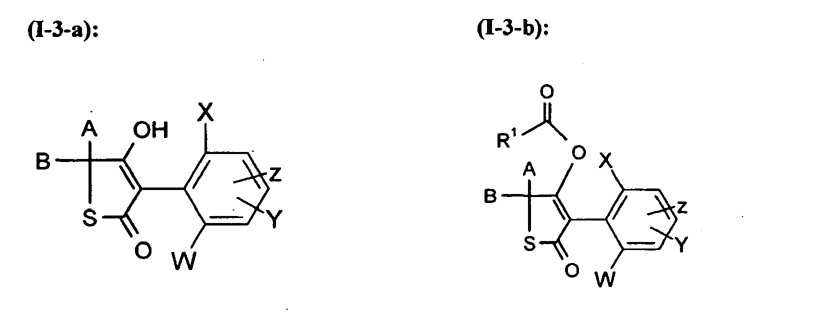 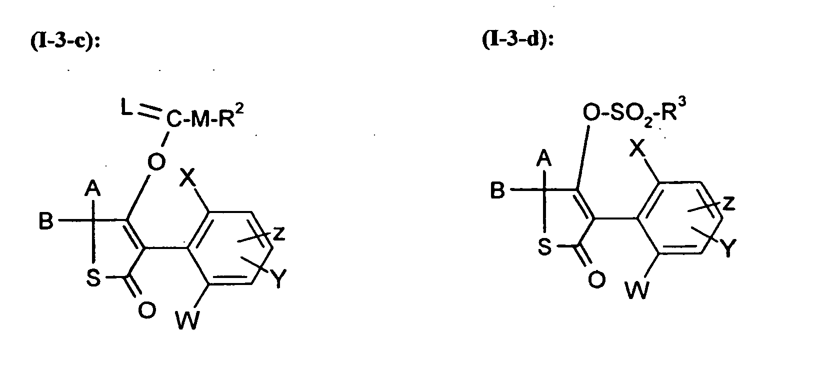 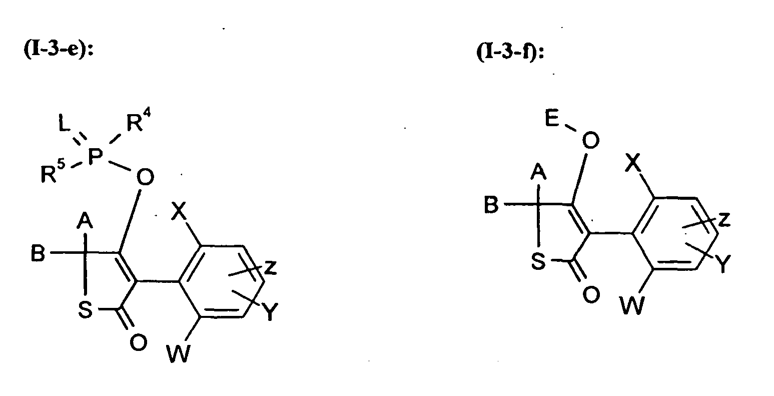 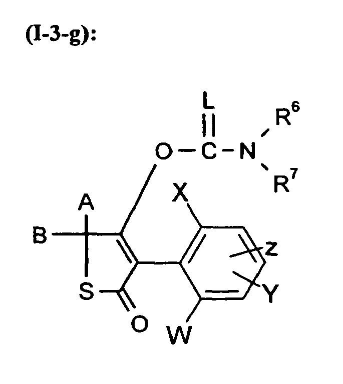 worin
A, B, E, L, M, W, X, Y, Z, R¹, R², R³, R⁴, R⁵, R⁶ und R⁷ die oben angegebenen Bedeutung besitzen.

Die Verbindungen der Formel (I-4) können in Abhängigkeit von der Stellung des Substituenten G in den zwei isomeren Formen der Formeln (I-4-A) und (I-4-B) vorliegen, 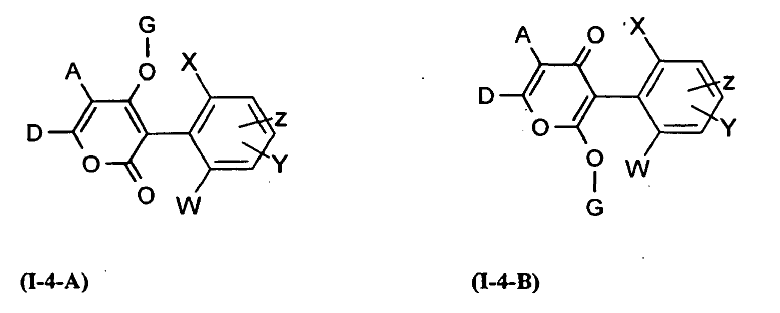 was durch die gestrichelte Linie in der Formel (I₋4) zum Ausdruck gebracht werden soll.

Die Verbindungen der Formeln (I-4-A) und (I-4-B) können sowohl als Gemische als auch in Form ihrer reinen Isomeren vorliegen. Gemische der Verbindungen der Formeln (I-4-A) und (I-4-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-4-a) bis (I-4-g), wenn CKE für die Gruppe (4) steht, 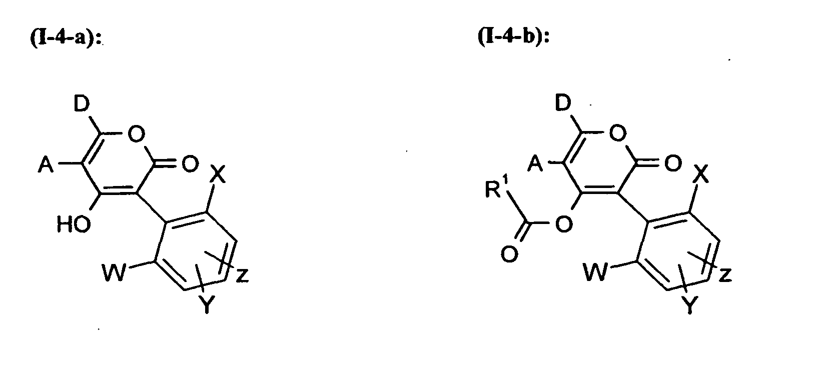 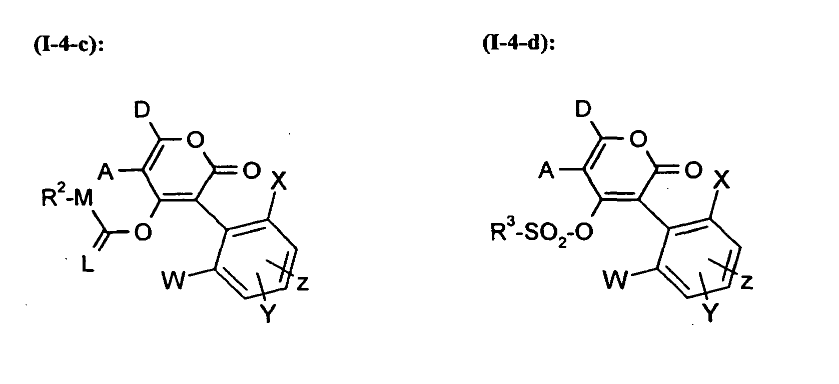 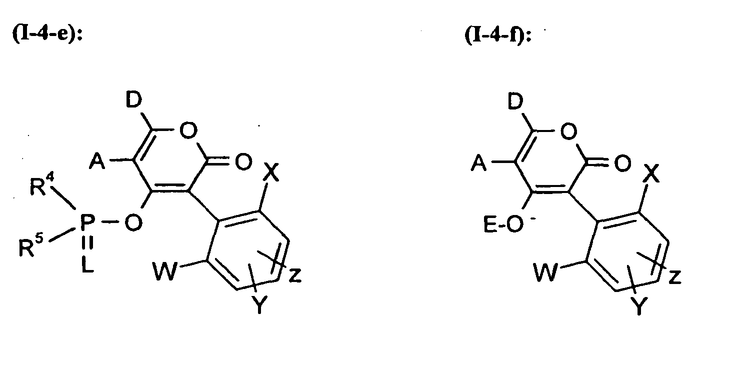 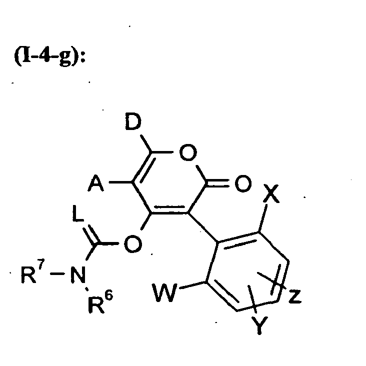 worin
A, D, E, L, M, W, X, Y, Z, R¹, R², R³, R⁴, R⁵, R⁶ und R⁷ die oben angegebenen Bedeutungen besitzen.

Unter Einbeziehung der verschiedenen Bedeutungen (a), (b), (c), (d), (e), (f) und (g) der Gruppe G ergeben sich folgende hauptsächliche Strukturen (I-5-a) bis (I-5-g), wenn CKE für die Gruppe (5) steht, 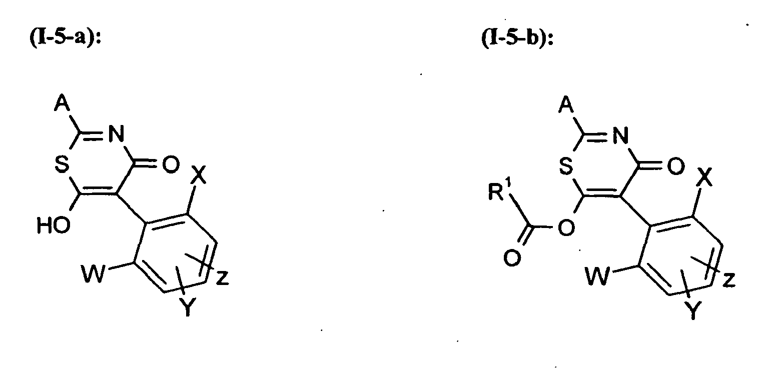 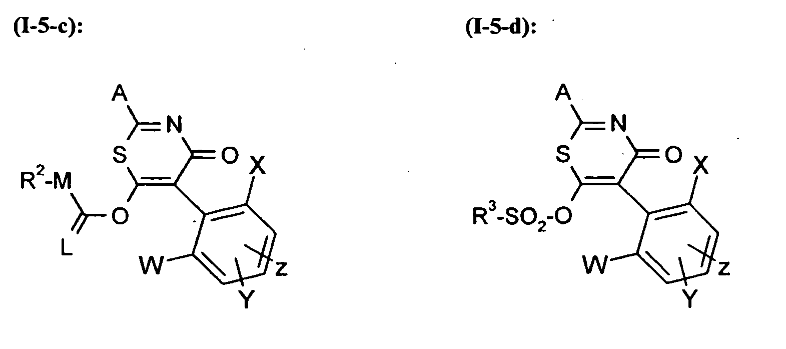 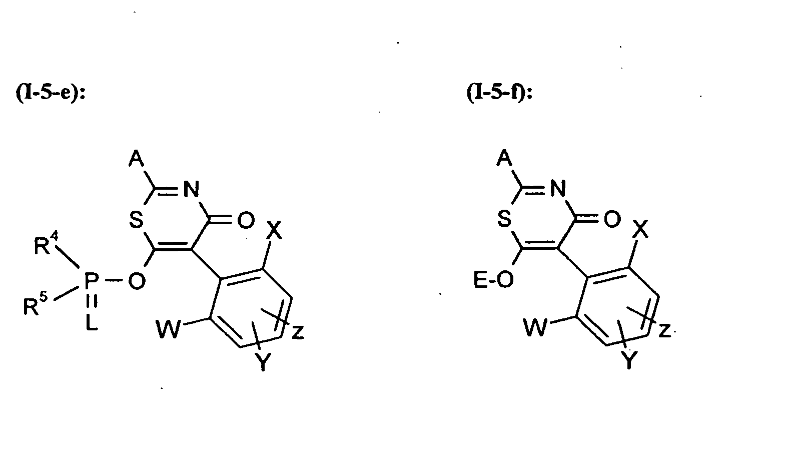 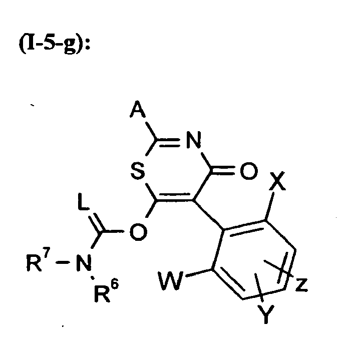 worin
A, E, L, M, W, X, Y, Z, R¹, R², R³, R⁴, R⁵, R⁶ und R⁷ die oben angegebenen Bedeutungen besitzen.

Die Verbindungen der Formel (I-6) können in Abhängigkeit von der Stellung des Substituenten G in den zwei isomeren Formen der Formeln (I-6-A) und (I-6-B) vorliegen, 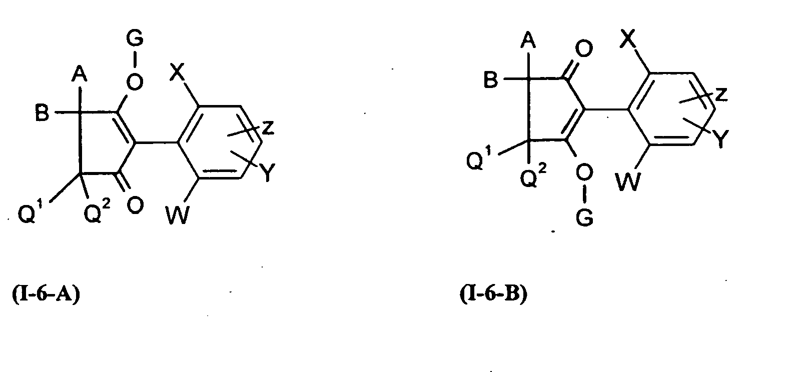 was durch die gestrichelte Linie in der Formel (I) zum Ausdruck gebracht werden soll.

Die Verbindungen der Formeln (I-6-A) und (I-6-B) können sowohl als Gemische als auch in Form ihrer reinen Isomeren vorliegen. Gemische der Verbindungen der Formeln (I-6-A) und (I-6-B) lassen sich gegebenenfalls durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächlichen Strukturen (I-6-a) bis (I-6-g): 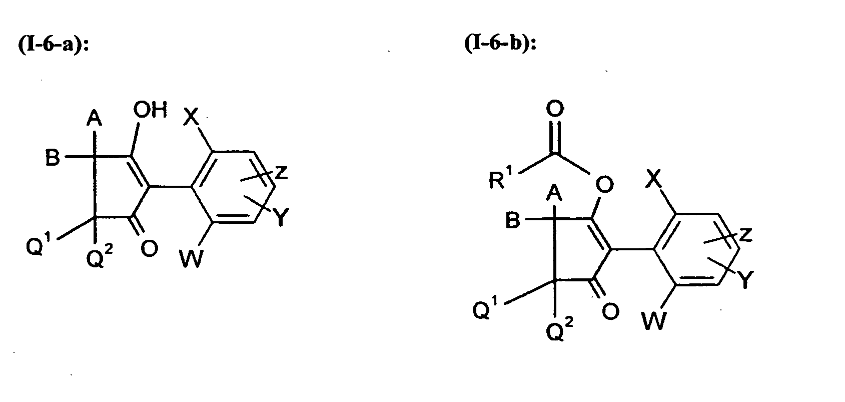 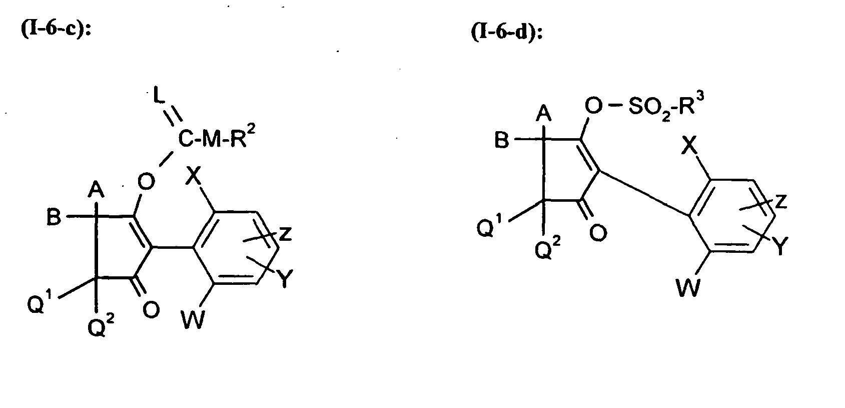 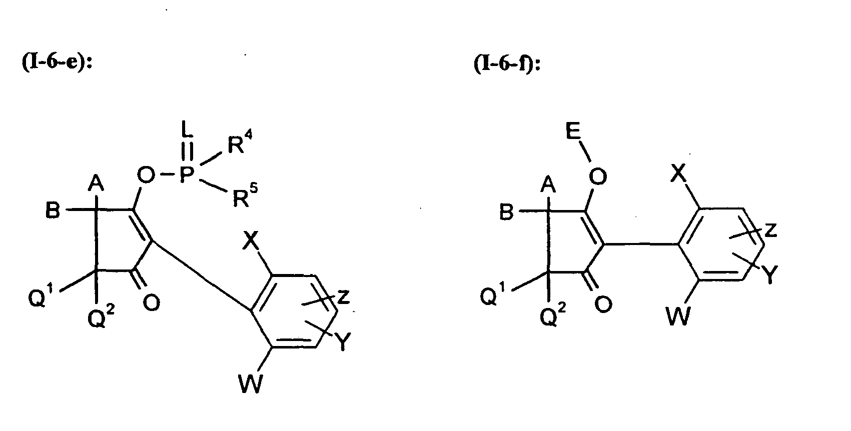 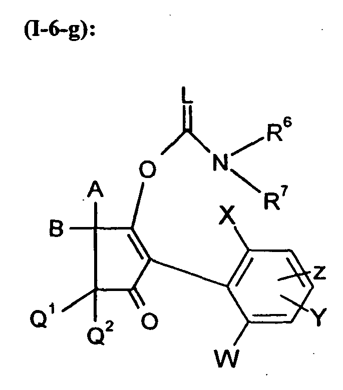 worin
A, B, Q¹, Q², E, L, M, W, X, Y, Z, R¹, R², R³, R⁴, R⁵, R⁶ und R⁷ die oben angegebenen Bedeutungen besitzen.

Die Verbindungen der Formel (I-7) können in Abhängigkeit von der Stellung des Substituenten G in den zwei isomeren Formen der Formeln (I-7-A) bzw. (I-7-B) vorliegen, was durch die gestrichelte Linie in der Formel (I-7) zum Ausdruck gebracht werden soll:

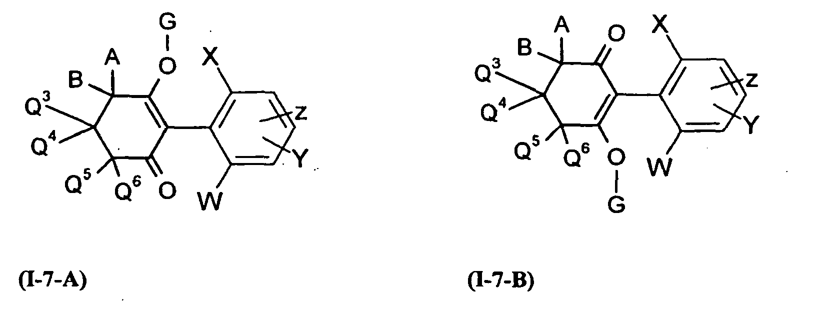

Die Verbindungen der Formeln (I-7-A) bzw. (I-7-B) können sowohl als Gemische als auch in Form ihrer reinen Isomeren vorliegen. Gemische der Verbindungen der Formeln (I-7-A) und (I-7-B) lassen sich gegebenenfalls durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt ein, dass die betreffende Verbindung gegebenenfalls als Isomerengemisch oder in der jeweils anderen isomeren Form vorliegen kann.

Unter Einbeziehung der verschiedenen Bedeutungen (a), (b), (c), (d), (e), (f) und (g) der Gruppe G ergeben sich folgende hauptsächlichen Strukturen (I-7-a) bis (I-7-g): 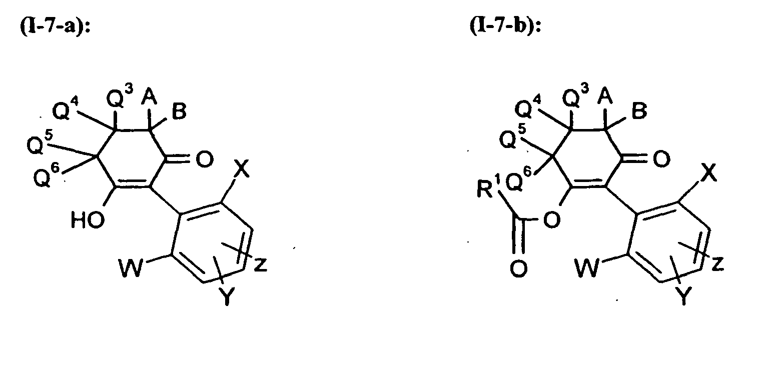 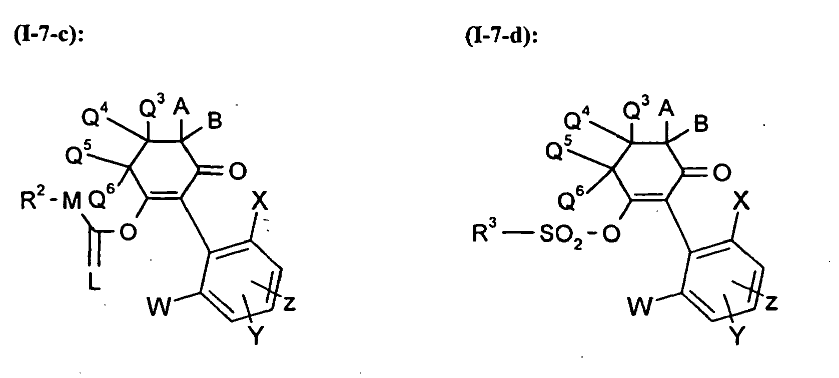 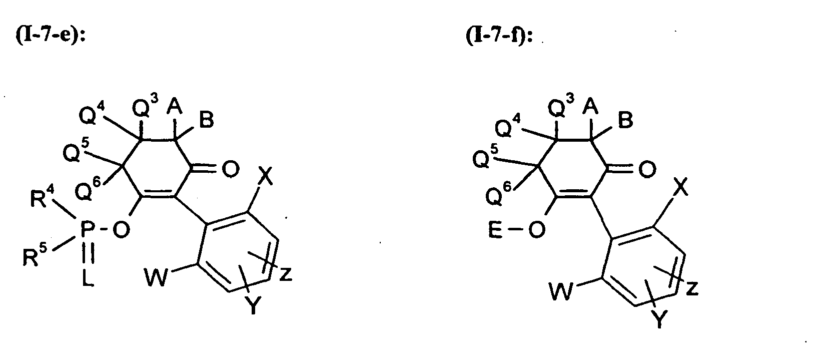 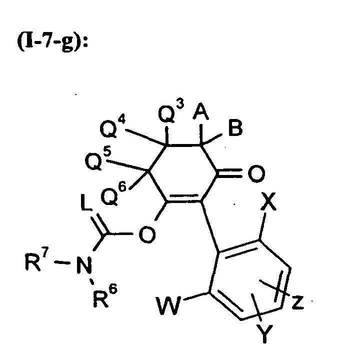 worin
A, B, E, L, M, Q³, Q⁴, Q⁵, Q⁶, W, X, Y, Z, R¹, R², R³, R⁴, R⁵, R⁶ und R⁷ die oben angegebenen Bedeutungen besitzen.

Die Verbindungen der Formel (I-8) können in Abhängigkeit von der Stellung des Substituenten G in den zwei isomeren Formeln (I-8-A) und (I-8-B) vorliegen, 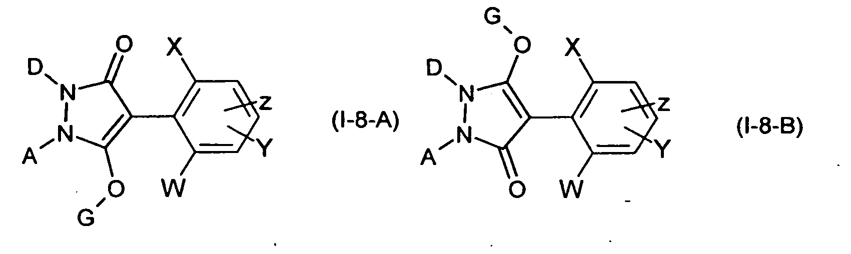 was durch die gestrichelte Linie in der Formel (I-8) zum Ausdruck gebracht werden soll.

Die Verbindungen der Formeln (I-8-A) und (I-8-B) können sowohl als Gemische als auch in Form ihrer reinen Isomeren vorliegen. Gemische der Verbindungen der Formel (I-8-A) und (I-8-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-8-a) (bis (I-8-g), wenn Het für die Gruppe (8) steht, 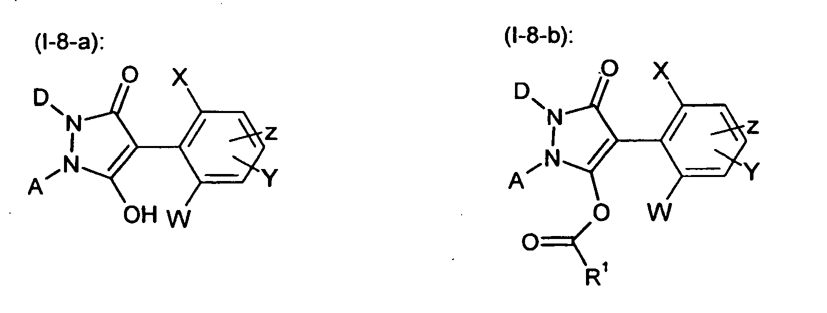 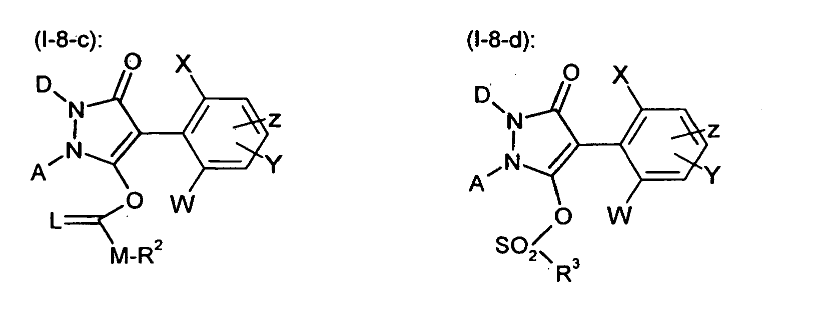 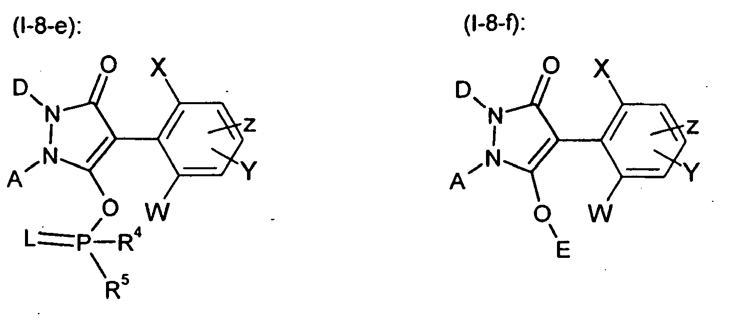 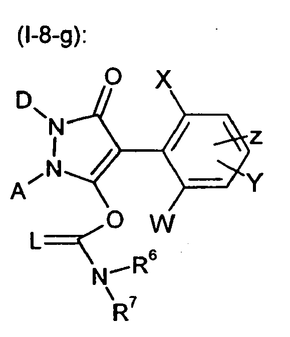 worin
A, D, E, L, M, W, X, Y, Z, R¹, R², R³, R⁴, R⁵, R⁶ und R⁷ die oben angegebenen Bedeutungen besitzen.

Die Verbindungen der Formel (I-9) können in Abhängigkeit von der Stellung des Substituenten G in den zwei isomeren Formen der Formeln (I-9-A) und (I-9-B) vorliegen, was durch die gestrichelte Linie in der Formel (I-9) zum Ausdruck gebracht werden soll.

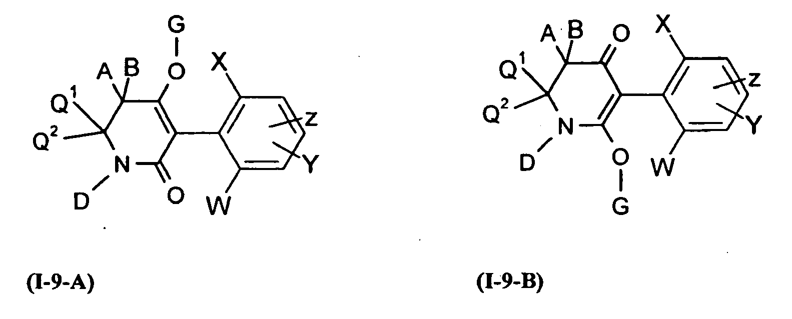

Die Verbindungen der Formeln (I-9-A) und (I-9-B) können sowohl als Gemische als auch in Form ihrer reinen Isomeren vorliegen. Gemische der Verbindungen der Formeln (I-9-A) und (I-9-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-9-a) bis (I-9-g), wenn CKE für die Gruppe (9) steht, 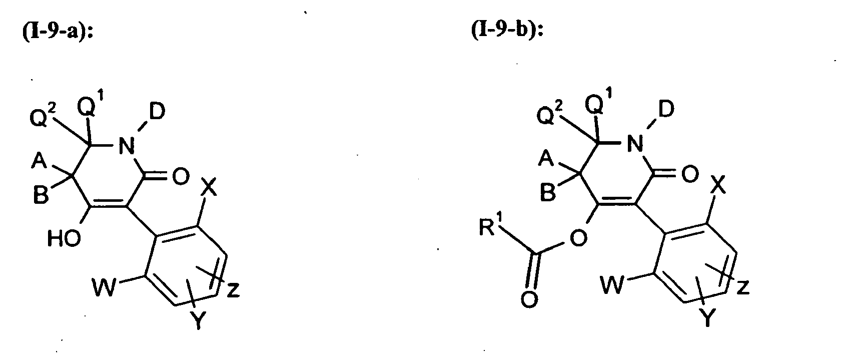 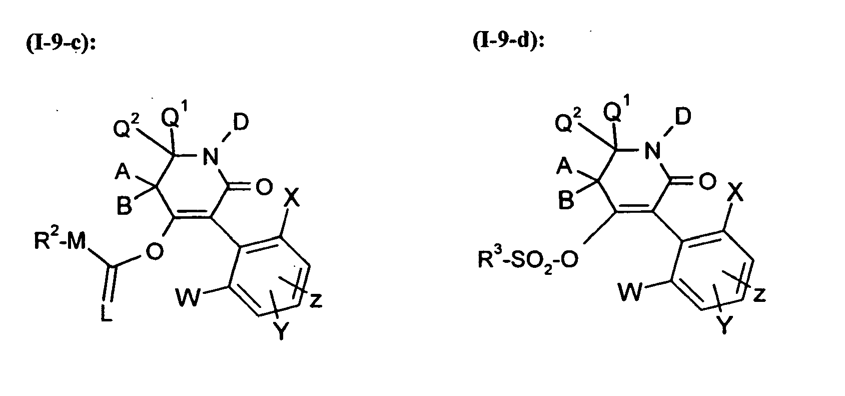 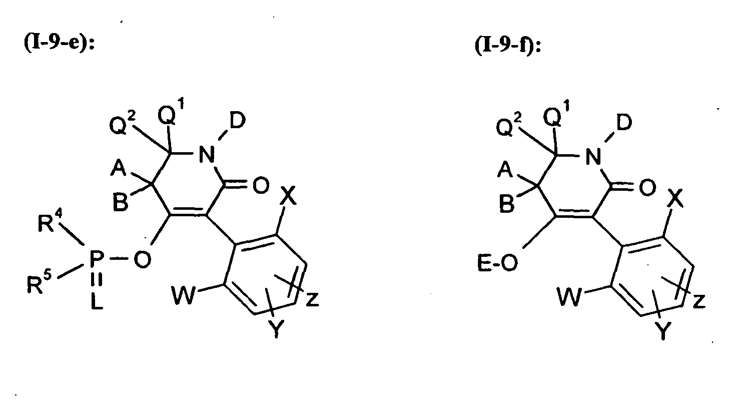 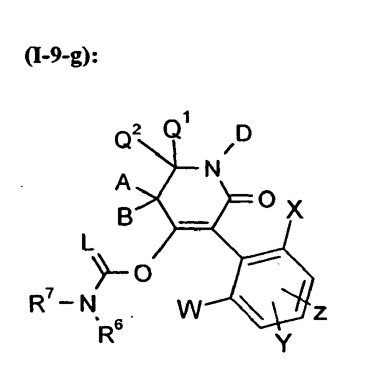 worin
A, B, D, E, L, M, Q¹, Q², W, X, Y, Z, R¹, R², R³, R⁴, R⁵, R⁶ und R⁷ die oben angegebenen Bedeutungen besitzen.

Die Verbindungen der Formel (I-10) können in Abhängigkeit von der Stellung des Substituenten G in den zwei isomeren Formen der Formeln (I-10-A) und (I-10-B) vorliegen, 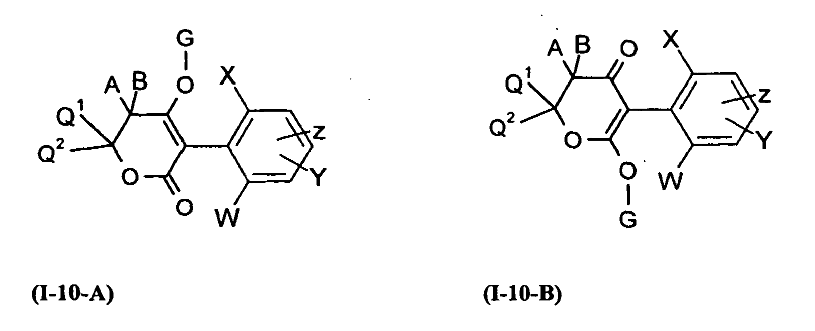 was durch die gestrichelte Linie in der Formel (I-10) zum Ausdruck gebracht werden soll.

Die Verbindungen der Formeln (I-10-A) und (I-10-B) können sowohl als Gemische als auch in Form ihrer reinen Isomeren vorliegen. Gemische der Verbindungen der Formeln (I-10-A) und (I-10-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-10-a) bis (I-10-g), wenn CKE für die Gruppe (10) steht, 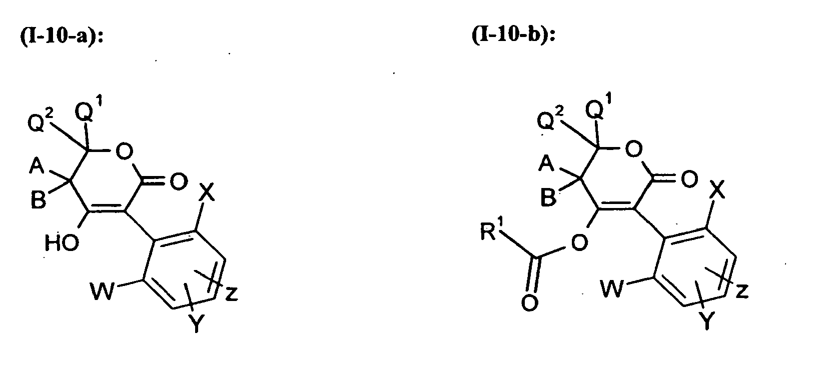 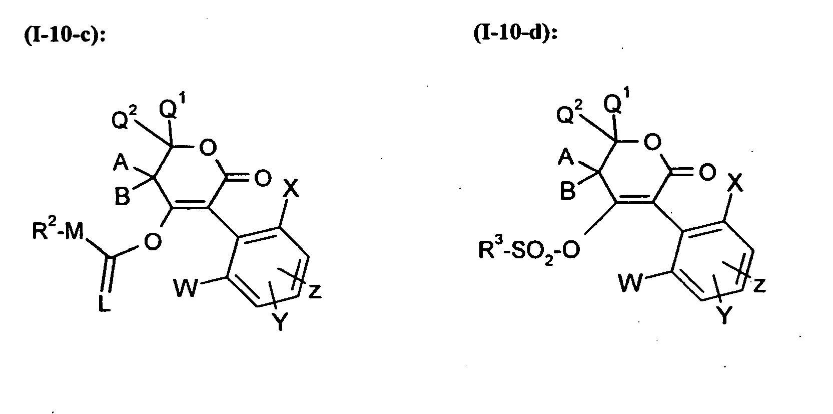 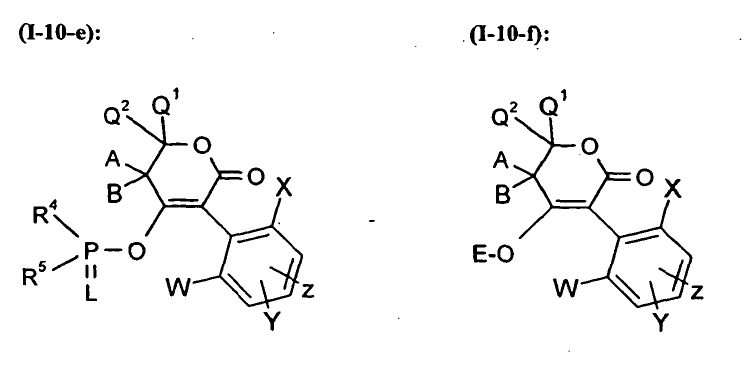 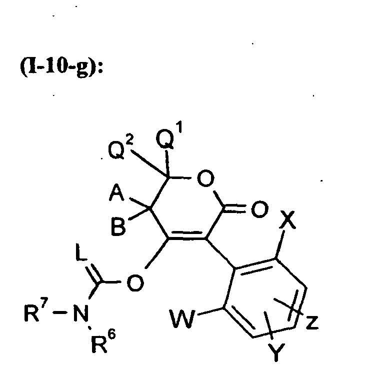 worin
A, B, D, E, L, M, Q¹, Q², W, X, Y, Z, R¹, R², R³, R⁴, R⁵, R⁶ und R⁷ die oben angegebenen Bedeutungen besitzen.

Die erfindungsgemäßen Verbindungen sind durch die Formel (I) allgemein definiert. Bevorzugte Substituenten bzw. Bereiche der in der oben und nachstehend erwähnten Formeln aufgeführten Reste werden im Folgenden erläutert:
- W: steht bevorzugt für Wasserstoff, C₁-C₆-Alkyl, C₂-C₆-Alkenyl, C₂-C₆-Alkinyl, Halogen, C₁-C₆-Alkoxy, C₁-C₄-Halogenalkyl, C₁-C₄-Halogenalkoxy oder Cyano,
- X: steht bevorzugt für Halogen, C₁-C₆-Alkyl, C₂-C₆-Alkenyl, C₂-C₆-Alkinyl, C₁-C₆- Alkoxy, C₁-C₆-Alkoxy-C₁-C₄-alkoxy, C₁-C₄-Halogenalkyl, C₁-C₄-Halogenalkoxy oder Cyano,
- Y: steht bevorzugt für Wasserstoff, Halogen, C₁-C₆-Alkyl, C₂-C₆-Alkenyl, C₂-C₆-Alkinyl, C₁-C₆-Alkoxy, Cyano, C₁-C₄-Halogenalkyl, Halogenalkoxy, für durch V¹ und V² substi- tuiertes Phenyl oder Pyridyl
- V¹: steht bevorzugt für Halogen, C₁-C₁₂-Alkyl, C₁-C₆-Alkoxy, C₁-C₄-Halogenalkyl, C₁-C₄- Halogenalkoxy, Cyano oder Nitro.
- V²: steht bevorzugt für Wasserstoff, Halogen, C₁-C₆-Alkyl, C₁-C₆-Alkoxy oder C₁-C₄- Halogenalkyl,
- V¹ und V²: stehen gemeinsam bevorzugt für C₃-C₄-Alkandiyl, welches gegebenenfalls durch Ha- logen und/oder C₁-C₂-Alkyl substituiert sein kann und welches gegebenenfalls durch ein oder zwei Sauerstoffatome unterbrochen sein kann.
- Z: steht bevorzugt für Wasserstoff, Halogen, C₁-C₆-Alkyl, C₁-C₄-Halogenalkyl, Cyano, C₁- C₆-Alkoxy oder C₁-C₄-Halogenalkoxy.
- CKE: steht bevorzugt für eine der Gruppen 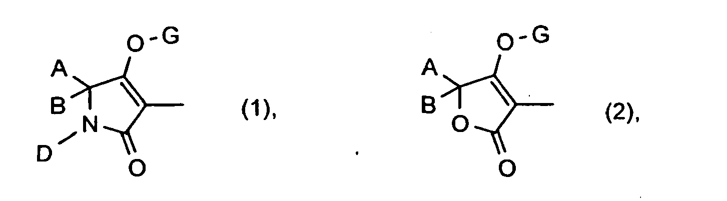 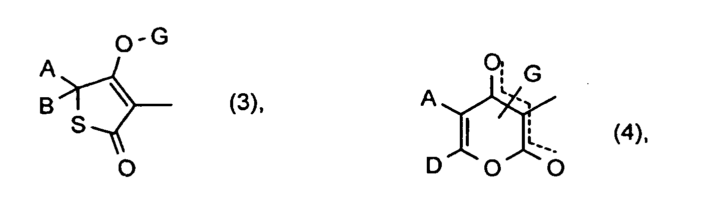 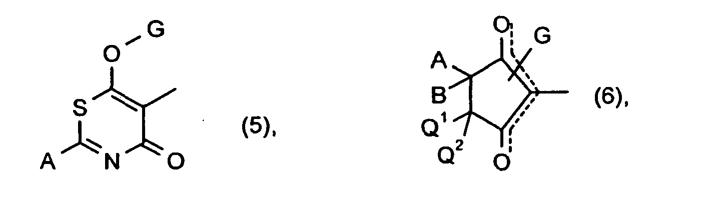 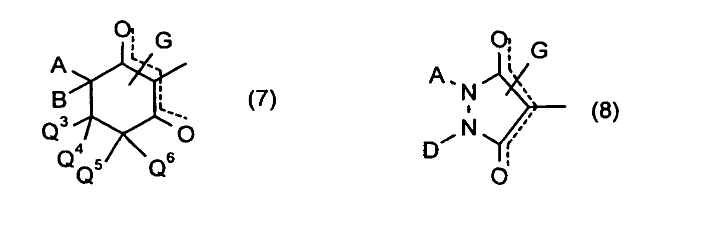 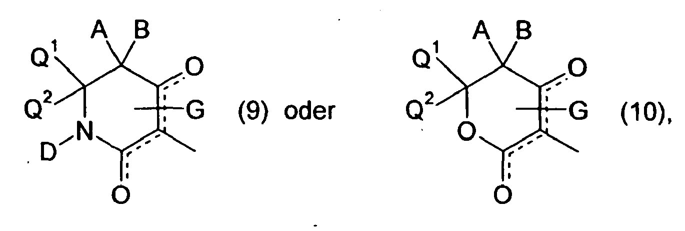
- A: steht bevorzugt für Wasserstoff oder jeweils gegebenenfalls durch Halogen substituiertes C₁-C₁₂₋Alkyl, C₃-C₈-Alkenyl, C₁-C₁₀-Alkoxy-C₁-C₈-alkyl, C₁-C₁₀-Alkylthio-C₁-C₆- alkyl, gegebenenfalls durch Halogen, C₁-C₆-Alkyl oder C₁-C₆-Alkoxy substituiertes C₃- C₈-Cycloalkyl, in welchem gegebenenfalls ein oder zwei nicht direkt benachbarte Ring- glieder durch Sauerstoff und/oder Schwefel ersetzt sind oder für jeweils gegebenenfalls durch Halogen, C₁-C₆-Alkyl, C₁-C₆-Halogerialkyl, C₁-C₆-Alkoxy, C₁-C₆-Halogen- alkoxy, Cyano oder Nitro substituiertes Phenyl, Naphthyl, Hetaryl mit 5 bis 6 Ringatomen (beispielsweise Furanyl, Pyridyl, Imidazolyl, Triazolyl, Pyrazolyl, Pyrimidyl, Thiazolyl oder Thienyl), Phenyl-C₁-C₆-alkyl oder Naphthyl-C₁-C₆-alkyl,
- B: steht bevorzugt für Wasserstoff, C₁-C₁₂-Alkyl oder C₁-C₈-Alkoxy-C₁-C₆-alkyl oder
- A, B: und das Kohlenstoffatom an das sie gebunden sind, stehen bevorzugt für gesättigtes C₃- C₁₀-Cycloalkyl oder ungesättigtes C₅-C₁₀-Cycloalkyl, worin gegebenenfalls ein Ring- glied durch Sauerstoff oder Schwefel ersetzt ist und welche gegebenenfalls einfach oder zweifach durch C₁-C₈-Alkyl, C₁-C₆-Alkoxy-C₁-C₆-Alkyl, C₃-C₆-Cycloalkyl-C₁-C₂- alkoxy, C₃-C₁₀-Cycloalkyl, C₁-C₈-Halogenalkyl, C₁-C₈-Alkoxy, C₁-C₆-Alkoxy-C₁-C₄- alkoxy, C₁-C₈-Alkylthio, Halogen oder Phenyl substituiert sind oder
- A, B: und das Kohlenstoffatom, an das sie gebunden sind, stehen bevorzugt für C₃-C₆-Cyclo- alkyl, welches durch eine gegebenenfalls ein oder zwei nicht direkt benachbarte Sauer- stoff- und/oder Schwefelatome enthaltende gegebenenfalls durch C₁-C₄-Alkyl sub- stituierte Alkylendiyl-, oder durch eine Alkylendioxyl- oder durch eine Alkylendithioyl- Gruppe substituiert ist, die mit dem Kohlenstoffatom, an das sie gebunden ist, einen weite- ren fünf- bis achtgliedrigen Ring bildet oder
- A, B: und das Kohlenstoffatom, an das sie gebunden sind, stehen bevorzugt für C₃-C₈-Cyclo- alkyl oder C₅-C₈-Cycloalkenyl, in welchen zwei Substituenten gemeinsam mit den Koh- lenstoffatomen, an die sie gebunden sind, für jeweils gegebenenfalls durch C₁-C₆-Alkyl, C₁-C₆-Alkoxy oder Halogen substituiertes C₂-C₆-Alkandiyl, C₂-C₆-Alkendiyl oder C₄- C₆-Alkandiendiyl stehen, worin gegebenenfalls eine Methylengruppe durch Sauerstoff o- der Schwefel ersetzt ist,
- D: steht bevorzugt für Wasserstoff, jeweils gegebenenfalls durch Halogen substituiertes C₁- C₁₂-Alkyl, C₃-C₈-Alkenyl, C₃-C₈-Alkinyl, C₁-C₁₀-Alkoxy-C₂-C₈-alkyl, gegebenenfalls durch Halogen, C₁-C₄-Alkyl, C₁-C₄-Alkoxy oder C₁-C₄-Halogenalkyl substituiertes C₃- C₈-Cycloalkyl, in welchem gegebenenfalls ein Ringglied durch Sauerstoff oder Schwefel ersetzt ist oder jeweils gegebenenfalls durch Halogen, C₁-C₆-Alkyl, C₁-C₆-Halogenalkyl, C₁-C₆-Alkoxy, C₁-C₆-Halogenalkoxy, Cyano oder Nitro substituiertes Phenyl, Hetaryl mit 5 oder 6 Ringatomen (beispielsweise Furanyl, Imidazolyl, Pyridyl, Thiazolyl, Pyrazo- lyl, Pyrimidyl, Pyrrolyl, Thienyl oder Triazolyl), Phenyl-C₁-C₆-alkyl oder Hetaryl-C₁-C₆- alkyl mit 5 oder 6 Ringatomen (beispielsweise Furanyl, Imidazolyl, Pyridyl, Thiazolyl, Py- razolyl, Pyrimidyl, Pyrrolyl, Thienyl oder Triazolyl) oder
- A und D: stehen gemeinsam bevorzugt für jeweils gegebenenfalls substituiertes C₃-C₆-Alkandiyl oder C₃-C₆-Alkendiyl, worin gegebenenfalls eine Methylengruppe durch eine Carbonyl- gruppe, Sauerstoff oder Schwefel ersetzt ist und wobei als Substituenten jeweils in Frage kommen: Halogen, Hydroxy, Mercapto oder jeweils gegebenenfalls durch Halogen substituiertes C₁-C₁₀-Alkyl, C₁-C₆-Alkoxy, C₁-C₆-Alkylthio, C₃-C₇-Cycloalkyl, Phenyl oder Benzy- loxy, oder eine weitere C₃-C₆-Alkandiylgruppierung, C₃-C₆-Alkendiylgruppierung oder eine Butadienylgruppierung, die gegebenenfalls durch C₁-C₆-Alkyl substituiert ist oder in der gegebenenfalls zwei benachbarte Substituenten mit den Kohlenstoffatomen, an die sie gebunden sind, einen weiteren gesättigten oder ungesättigten Cyclus mit 5 oder 6 Ring- atomen bilden (im Fall der Verbindung der Formel (I-1) stehen A und D dann gemeinsam mit den Atomen, an die sie gebunden sind beispielsweise für die weiter unten genannten Gruppen AD-1 bis AD-10), der Sauerstoff oder Schwefel enthalten kann, oder worin gege- benenfalls eine der folgenden Gruppen 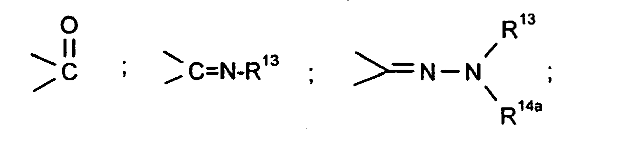 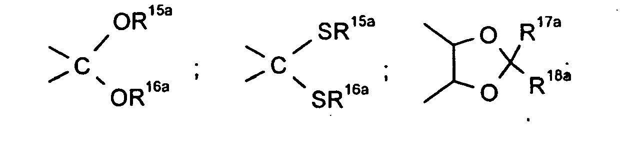 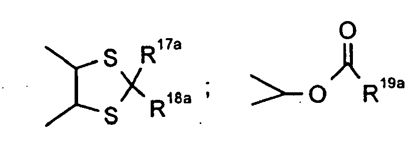 oder 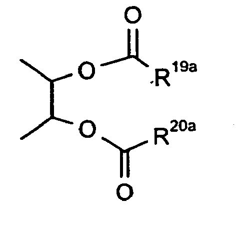 enthalten ist, oder
- A und Q¹: stehen gemeinsam bevorzugt für jeweils gegebenenfalls einfach oder zweifach, gleich oder verschieden durch Halogen, Hydroxy, durch jeweils gegebenenfalls einfach bis drei- fach, gleich oder verschieden durch Halogen substituiertes C₁-C₁₀-Alkyl; C₁-C₆-Alkoxy, C₁-C₆-Alkylthio, C₃-C₇-Cycloalkyl oder durch jeweils gegebenenfalls einfach bis drei- fach, gleich oder verschieden durch Halogen, C₁-C₆-Alkyl oder C₁-C₆-Alkoxy substituier- tes Benzyloxy oder Phenyl substituiertes C₃-C₆₋Alkandiyl oder C₄-C₆-Alkendiyl, welches außerdem gegebenenfalls eine der nachstehenden Gruppen 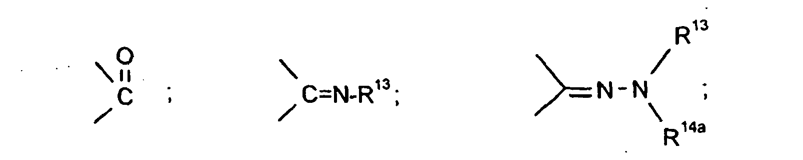 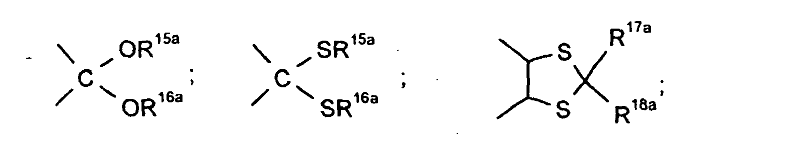 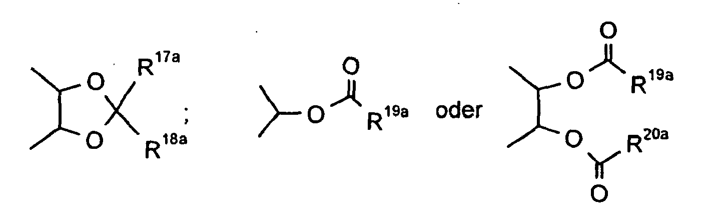 enthält oder durch eine C₁-C₂-Alkandiylgruppe oder durch ein Sauerstoffatom überbrückt ist oder
- D und Q¹: stehen gemeinsam bevorzugt für jeweils gegebenenfalls einfach oder zweifach, gleich oder verschieden durch C₁-C₄-Alkyl, C₁-C₄-Alkoxy substituiertes C₃-C₆-Alkandiyl.
- Q¹: steht bevorzugt für Wasserstoff, C₁-C₆-Alkyl, C₁-C₆-Alkoxy-C₁-C₂-alkyl, gegebenenfalls durch Fluor, Chlor, C₁-C₄-Alkyl, C₁-C₂-Halogenalkyl oder C₁-C₄-Alkoxy substituiertes C₃-C₈-Cycloalkyl, worin gegebenenfalls eine Methylengruppe durch Sauerstoff oder Schwefel ersetzt ist oder gegebenenfalls durch Halogen, C₁-C₄-Alkyl, C₁-C₄-Alkoxy, C₁- C₂-Halogenatkyl, C₁-C₂-Halogenalkoxy, Cyano oder Nitro substituiertes Phenyl oder
- Q², Q⁴, Q⁵ und Q⁶: stehen unabhängig voneinander bevorzugt für Wasserstoff oder C₁-C₄-AJkyJ,
- Q³: steht bevorzugt für Wasserstoff, C₁-C₆-Alkyl, C₁-C₆-Alkoxy-C₁-C₂-alkyl, C₁-C₆-Alkyl- thio-C₁-C₂-aikyl, gegebenenfalls durch C₁-C₄-Alkyl oder C₁-C4₋Alkoxy substituiertes C₃-C₈-Cycloalkyl, worin gegebenenfalls eine Methylengruppe durch Sauerstoff oder Schwefel ersetzt ist oder gegebenenfalls durch Halogen, C₁-C₄-Alkyl, C₁-C₄-Alkoxy, C₁-C₂-Halogenalkyl, C₁-C₂-Hatogenalkoxy, Cyano oder Nitro substituiertes Phenyl.
- Q1 und Q2: stehen bevorzugt mit dem Kohlenstoffatom, an das sie gebunden sind, für gegebenen- falls durch C₁-C₆-Alkyl, C₁-C₆-Alkoxy oder C₁-C₂-Halogenalkyl substituierten C₃-C₇- Ring, in welchem gegebenenfalls ein Ringglied durch Sauerstoff oder Schwefel ersetzt ist,
- Q³ und Q⁴: stehen bevorzugt gemeinsam mit dem Kohlenstoffatom, an das sie gebunden sind, für einen gegebenenfalls durch C₁-C₄-Alky), C₁-C₄-Alkoxy oder C₁-C₂-Halogen alkyl sub- stituierten C₃-C₇-Ring, in welchem gegebenenfalls ein Ringglied durch Sauerstoff oder Schwefel ersetzt ist,
- G: steht bevorzugt für Wasserstoff (a) oder für eine der Gruppen 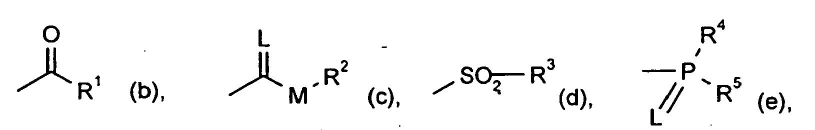
E (f) oder 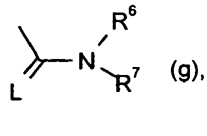 insbesondere für (a), (b), (c) oder (g)
in welchen
E für ein Metallionäquivalent oder ein Ammoniumion steht,
L für Sauerstoff oder Schwefel steht und
M für Sauerstoff oder Schwefel steht.
R¹ steht bevorzugt für jeweils gegebenenfalls durch Halogen substituiertes C₁-C₂₀-Alkyl, C₂- C₂₀-Alkenyl, C₁-C₈-Alkoxy-C₁-C₈-alkyl, C₁-C₈-Alkylthio-C₁-C₈-alkyl, Poly-C₁-C₈- alkoxy-C₁-C₈-alkyl oder gegebenenfalls durch Halogen, C₁-C₆-Alkyl oder C₁-C₆-Alkoxy substituiertes C₃-C₈-Cycloalkyl, in welchem gegebenenfalls ein oder mehrere (bevorzugt nicht mehr als zwei) nicht direkt benachbarte Ringglieder durch Sauerstoff und/oder Schwefel ersetzt sind,
für gegebenenfalls durch Halogen, Cyano, Nitro, C₁-C₆-Alkyl, C₁-C₆-Alkoxy, C₁-C₆- Halogenalkyl, C₁-C₆-Halogenalkoxy, C₁-C₆-Alkylthio oder C₁-C₆-Alkylsulfonyl substi- tuiertes Phenyl,
für gegebenenfalls durch Halogen, Nitro, Cyano, C₁-C₆-Alkyl, C₁-C₆-Alkoxy, C₁-C₆- Halogenalkyl oder C₁-C₆-Halogenalkoxy substituiertes Phenyl-C₁-C₆-alkyl,
für gegebenenfalls durch Halogen oder C₁-C₆-Alkyl substituiertes 5- oder 6-gliedriges Hetaryl (beispielsweise Pyrazolyl, Thiazolyl, Pyridyl, Pyrimidyl, Furanyl oder Thienyl),
für gegebenenfalls durch Halogen oder C₁-C₆-Alkyl substituiertes Phenoxy-C₁-C₆-alkyl oder
für gegebenenfalls durch Halogen, Amino oder C₁-C₆-Alkyl substituiertes 5- oder 6- gliedriges Hetaryloxy-C₁-C₆-alkyl (beispielsweise Pyridyloxy-C₁-C₆-alkyl, Pyrimidyloxy- C₁-C₆-alkyl oder Thiazolyloxy-C₁-C₆-alkyl),
R² steht bevorzugt für jeweils gegebenenfalls durch Halogen substituiertes C₁-C₂₀-Alkyl, C₂- C₂₀-Alkenyl, C₁-C₈-Alkoxy-C₂-C₈-alkyl, Poly-C₁-C₈-alkoxy-C₂-C₈-alkyl,
für gegebenenfalls durch Halogen, C₁-C₆-Alkyl oder C₁-C₆-Alkoxy substituiertes C₃-C₈- Cycloalkyl oder
für jeweils gegebenenfalls durch Halogen, Cyano, Nitro, C₁-C₆-Alkyl, C₁-C₆-Alkoxy, C₁- C₆-Halogenalkyl oder C₁-C₆-Halogenalkoxy substituiertes Phenyl oder Benzyl,
R³ steht bevorzugt für gegebenenfalls durch Halogen substituiertes C₁-C₈-Alkyl oder für jeweils gegebenenfalls durch Halogen, C₁-C₆-Alkyl, C₁-C₆-Alkoxy, C₁-C₄-Halogenalkyl, C₁-C₄-Halogenalkoxy, Cyano oder Nitro substituiertes Phenyl oder Benzyl,
R⁴ und R⁵ stehen bevorzugt unabhängig voneinander für jeweils gegebenenfalls durch Halogen substituiertes C₁-C₈-Alkyl, C₁-C₈-Alkoxy, C₁-C₈-Alkylamino, Di-(C₁-C₈-alkyl)amino, C₁-C₈-Alkylthio, C₂-C₈-Alkenylthio, C₃-C₇-Cycloalkylthio oder für jeweils gegebenen- falls durch Halogen, Nitro, Cyano, C₁-C₄-Alkoxy, C₁-C₄-Halogenalkoxy, C₁-C₄-Alkyl- thio, C₁-C₄-Halogenalkylthio, C₁-C₄-Alkyl oder C₁-C₄-Halogenalkyl substituiertes Phe- nyl, Phenoxy oder Phenylthio,
R⁶ und R⁷ stehen unabhängig voneinander bevorzugt für Wasserstoff, für jeweils gegebenenfalls durch Halogen substituiertes C₁-C₈-Alkyl, C₃-C₈-Cycloalkyl, C₁-C₈-Alkoxy, C₃-C₈- Alkenyl, C₁-C₈-Alkoxy-C₁-C₈-alkyl, für gegebenenfalls durch Halogen, C₁-C₈- Halogenalkyl, C₁-C₈-Alkyl oder C₁-C₈-Alkoxy substituiertes Phenyl, gegebenenfalls durch Halogen, C₁-C₈-Alkyl, C₁-C₈-Halogenalkyl oder C₁-C₈-Alkoxy substituiertes Ben- zyl oder zusammen für einen gegebenenfalls durch C₁-C₄-Alkyl substituierten C₃-C₆- Alkylenrest, in welchem gegebenenfalls ein Kohlenstoffatom durch Sauerstoff oder Schwefel ersetzt ist,
R¹³ steht bevorzugt für Wasserstoff, für jeweils gegebenenfalls durch Halogen substituiertes C₁-C₈-Alkyl oder C₁-C₈-Alkoxy, für gegebenenfalls durch Halogen, C₁-C₁₄-Alkyl oder C₁-C₄-Alkoxy substituiertes C₃-C₈-Cycloalkyl, in welchem gegebenenfalls eine Methy- lengruppe durch Sauerstoff oder Schwefel ersetzt ist, oder für jeweils gegebenenfalls durch Halogen, C₁-C₆-Alkyl, C₁-C₆-Alkoxy, C₁-C₄-Halogenalkyl, C₁-C₄-Halogenalkoxy, Nitro oder Cyano substituiertes Phenyl, Phenyl-C₁-C₄-alkyl oder Phenyl-C₁-C₄-alkoxy,
R^{14a} steht bevorzugt für Wasserstoff oder C₁-C₈-Alkyl oder
R¹³ und R^{14a} stehen gemeinsam bevorzugt für C₄-C₆-Alkandiyl,
R^{15a} und R^{16a} sind gleich oder verschieden und stehen bevorzugt für C₁-C₆-Alkyl oder
R^{15a} und R^{16a} stehen gemeinsam bevorzugt für einen C₂-C₄-Alkandiylrest, der gegebenenfalls durch C₁-C₆-Alkyl, C₁-C₆-Halogenalkyl oder durch gegebenenfalls durch Halogen, C₁- C₆-Alkyl, C₁-C₄-Halogenalkyl, C₁-C₆-Alkoxy, C₁-C₄-Halogenalkoxy, Nitro oder Cyano substituiertes Phenyl substituiert ist,
R^{17a} und R^{18a} stehen unabhängig voneinander bevorzugt für Wasserstoff, für gegebenenfalls durch Halogen substituiertes C₁-C₈-Alkyl oder für gegebenenfalls durch Halogen, C₁-C₆- Alkyl, C₁-C₆-Alkoxy, C₁-C₄-Halogenalkyl, C₁-C₄-Halogenalkoxy, Nitro oder Cyano sub- stituiertes Phenyl oder
R^{17a} und R^{18a} stehen gemeinsam mit dem Kohlenstoffatom, an das sie gebunden sind, bevorzugt für eine Carbonylgruppe oder für gegebenenfalls durch Halogen, C₁-C₄-Alkyl oder C₁- C₄-Alkoxy substituiertes C₅-C₇-Cycloalkyl, in dem gegebenenfalls eine Methylengruppe durch Sauerstoff oder Schwefel ersetzt ist,
R^{19a} und R^{20a} stehen unabhängig voneinander bevorzugt für C₁-C₁₀-Alkyl, C₂-C₁₀-Alkenyl, C₁-C₁₀-Alkoxy, C₁-C₁₀-Alkylamino, C₃-C₁₀-Alkenylamino, Di-(C₁-C₁₀-alkyl)amino oder Di-(C₃-C₁₀-alkenyl)amino.

In den als bevorzugt genannten Restedefinitionen steht Halogen für Fluor, Chlor, Brom und Jod, insbesondere für Fluor, Chlor und Brom.
- W: steht besonders bevorzugt für Wasserstoff, Fluor, Chlor, Brom, C₁-C₄-Alkyl, C₂-C₄- Alkenyl, C₂-C₄-Alkinyl, C₁-C₄-Alkoxy, C₁-C₂-Halogenalkyl oder C₁-C₂-Halogenalkoxy,
- X: steht besonders bevorzugt für Chlor, Brom, Iod, C₁-C₄-Alkyl, C₂-C₄-Alkenyl, C₂-C₄- Alkinyl, C₁-C₄-Alkoxy, C₁-C₄-Alkoxy-C₁-C₃-alkoxy, C₁-C₂-Halogenalkyl, C₁-C₂- Halogenalkoxy oder Cyano,
- Y: steht besonders bevorzugt in der 4-Position für Wasserstoff, Fluor, Chlor, Brom, Iod, Me- thoxy, Ethoxy, Cyano, Trifluormethyl, Difluormethoxy oder Trifluormethoxy,
- Z: steht besonders bevorzugt für Wasserstoff.
- W: steht auch besonders bevorzugt für Wasserstoff, Fluor, Chlor, Brom oder C₁-C₄-Alkyl,
- X: steht auch besonders bevorzugt für Chlor, Brom, C₁-C₄-Alkyl, C₁-C₄-Alkoxy, C₁-C₂- Halogenalkyl, C₁-C₂-Halogenalkoxy oder Cyano,
- Y: steht auch besonders bevorzugt in der 4-Position für C₂-C₄-Alkenyl, C₂-C₄-Alkinyl oder den Rest 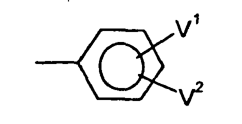
- Z: steht auch besonders bevorzugt für Wasserstoff,
- V¹: steht auch besonders bevorzugt für Fluor, Chlor, C₁-C₄-Alkyl, C₁-C₄-Alkoxy, C₁-C₂- Halogenalkyl oder C₁-C₂-Halogenalkoxy, Cyano oder Nitro,
- V²: steht auch besonders bevorzugt für Wasserstoff, Fluor, Chlor, C₁-C₄-Alkyl, C₁-C₄- Alkoxy oder C₁-C₂-Halogenalkyl,
- V¹ und V²: stehen gemeinsam auch besonders bevorzugt für-O-CH₂-O- und -O-CF₂-O-.
- W: steht ebenfalls besonders bevorzugt für Wasserstoff, Fluor, Chlor, Brom oder C₁-C₄- Alkyl,
- X: steht ebenfalls besonders bevorzugt für Chlor, Brom, C₁-C₄-Alkyl, C₁-C₄-Alkoxy, C₁- C₂-Halogenalkyl, C₁-C₂-Halogenalkoxy oder Cyano,
- Y: steht ebenfalls besonders bevorzugt in der 5-Position für C₂-C₄-Alkenyl, C₂-C₄-Alkinyl oder den Rest 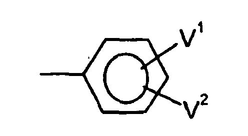
- Z: steht ebenfalls besonders bevorzugt in der 4-Position für Wasserstoff, C₁-C₄-Alkyl oder Chlor,
- V¹: steht ebenfalls besonders bevorzugt für Fluor, Chlor, C₁-C₄-Alkyl, C₁-C₄-Alkoxy, C₁-C₂- Halogenalkyl oder C₁-C₂-Halogenalkoxy, Cyano oder Nitro
- V²: steht ebenfalls besonders bevorzugt für Wasserstoff, Fluor, Chlor, C₁-C₄-Alkyl, C₁-C₄- Alkoxy oder C₁-C₂-Halogenalkyl,
- V¹ und V²: stehen gemeinsam ebenfalls besonders bevorzugt für -O-CH₂-O- und -O-CF₂-O-.
- W: steht außerdem besonders bevorzugt für Wasserstoff, C₁-C₄-Alkyl, C₂-C₄-Alkenyl, C₂- C₄-Alkinyl, C₁-C₄-Alkoxy, Fluor, Chlor, Brom oder Trifluormethyl,
- X: steht außerdem besonders bevorzugt für Fluor, Chlor, Brom, Iod, C₁-C₄-Alkyl, C₂-C₄- Alkenyl, C₂-C₄-Alkinyl, C₁-C₄-Alkoxy, C₁-C₄-Alkoxy-C₁-C₃-alkoxy, C₁-C₂- Halogenalkyl, C₁-C₂-Halogenalkoxy oder Cyano,
- Y: steht außerdem besonders bevorzugt in der 4-Position für C₁-C₄-Alkyl,
- Z: steht außerdem besonders bevorzugt für Wasserstoff.
- W: steht weiterhin besonders bevorzugt für Wasserstoff, Fluor, Chlor, Brom, C₁-C₄-Alkyl oder C₁-C₄-Alkoxy,
- X: steht weiterhin besonders bevorzugt für Chlor, Brom, Iod, C₁-C₄-Alkyl, C₁-C₄-Alkoxy, C₁-C₂-Halogenalkyl, C₁-C₂-Halogenalkoxy oder Cyano,
- Y: steht weiterhin besonders bevorzugt in der 4-Position für Wasserstoff, Chlor, Brom, Iod, C₁-C₄-Alkyl, C₁-C₂-Halogenalkyl oder C₁-C₂-Halogenalkoxy,
- Z: steht weiterhin besonders bevorzugt in der 3- oder 5-Position für Fluor, Chlor, Brom, Iod, C₁-C₄-Alkyl, C₁-C₂-Halogenalkyl, C₁-C₄-Alkoxy oder C₁-C₂-Halogenalkoxy.
- CKE: steht besonders bevorzugt für eine der Gruppen 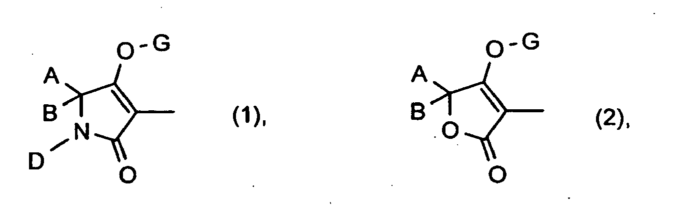 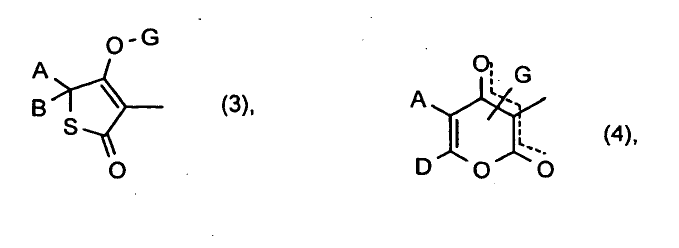 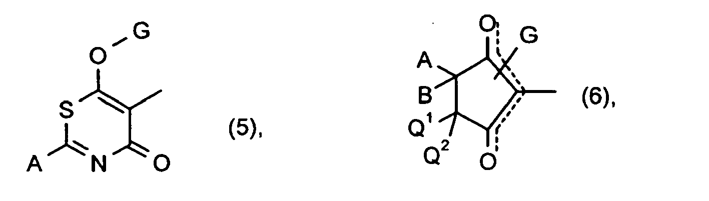 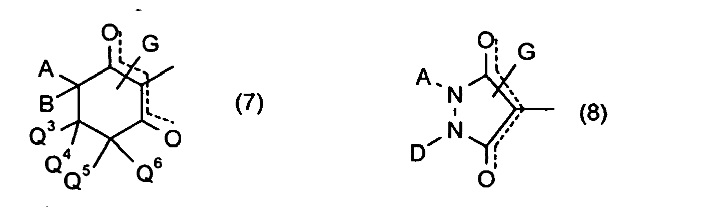 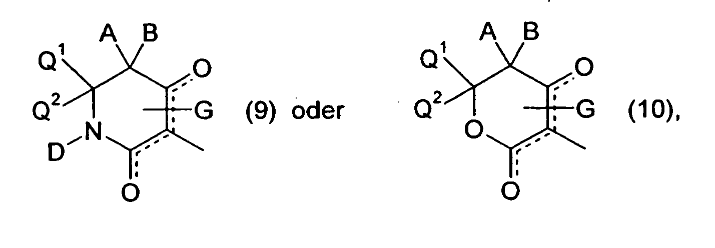
- A: steht besonders bevorzugt für Wasserstoff, jeweils gegebenenfalls einfach bis dreifach durch Fluor oder Chlor substituiertes C₁-C₆-Alkyl, C₁-C₄-Alkoxy-C₁-C₂-alkyl, gegebe- nenfalls einfach bis zweifach durch C₁-C₂-Alkyl oder C₁-C₂-Alkoxy substituiertes C₃- C₆-Cycloalkyl oder (jedoch nicht im Fall der Verbindungen der Formeln (I-3), (I-4), (I-6) und (I-7)) jeweils gegebenenfalls einfach bis zweifach durch Fluor, Chlor, Brom, C₁-C₄- Alkyl, C₁-C₂-Halogenalkyl, C₁-C₄-Alkoxy, C₁-C₂-Halogenalkoxy, Cyano oder Nitro sub- stituiertes Phenyl oder Benzyl,
- B: steht besonders bevorzugt für Wasserstoff, C₁-C₄-Alkyl oder C₁-C₂-Alkoxyl-C₁-C₂-alkyl oder
- A, B: und das Kohlenstoffatom an das sie gebunden sind, stehen besonders bevorzugt für ge- sättigtes oder ungesättigtes C₃-C₇-Cycloalkyl, worin gegebenenfalls ein Ringglied durch Sauerstoff oder Schwefel ersetzt ist und welches gegebenenfalls einfach bis zweifach durch C₁-C₆-Alkyl, C₁-C₄-Alkoxy-C₁-C₂-Alkyl, Trifluormethyl, C₁-C₆-Alkoxy, C₁-C₃- Alkoxy-C₁-C₃-alkoxy oder C₃-C₆-Cycloalkylmethoxy substituiert ist mit der Maßgabe, dass dann Q³ besonders bevorzugt für Wasserstoff oder Methyl steht oder
- A, B: und das Kohlenstoffatom, an das sie gebunden sind, stehen besonders bevorzugt für C₅- C₆-Cycloalkyl, welches durch eine gegebenenfalls ein oder zwei nicht direkt benachbarte Sauerstoff- oder Schwefelatome enthaltende gegebenenfalls durch Methyl oder Ethyl sub- stituierte Alkylendiyl- oder durch eine Alkylendioxyl- oder durch eine Alkylendithiol- Gruppe substituiert ist, die mit dem Kohlenstoffatom, an das sie gebunden ist, einen weite- ren fünf- oder sechsgliedrigen Ring bildet mit der Maßgabe, dass dann Q³ besonders be- vorzugt für Wasserstoff oder Methyl steht, oder
- A, B: und das Kohlenstoffatom, an das sie gebunden sind, stehen besonders bevorzugt für C₃- C₆-Cycloalkyl oder C₅-C₆-Cycloalkenyl, in welchen zwei Substituenten gemeinsam mit den Kohlenstoffatomen, an die sie gebunden sind, für jeweils gegebenenfalls durch C₁-C₂- Alkyl oder C₁-C₂-Alkoxy substituiertes C₂-C₄-Alkandiyl, C₂-C₄-Alkendiyl oder Buta- diendiyl stehen, mit der Maßgabe, dass dann Q³ besonders bevorzugt für Wasserstoff oder Methyl steht,
- D: steht besonders bevorzugt für Wasserstoff, für jeweils gegebenenfalls einfach bis dreifach durch Fluor substituiertes C₁-C₆-Alkyl, C₃-C₆-Alkenyl, C₁-C₄-Alkoxy-C₂-C₃-alkyl, für gegebenenfalls einfach bis zweifach durch C₁-C₄-Alkyl, C₁-C₄-Alkoxy oder C₁-C₂- Halogenalkyl substituiertes C₃-C₆-Cycloalkyl, in welchem gegebenenfalls eine Methylen- gruppe durch Sauerstoff ersetzt ist oder (jedoch nicht im Fall der Verbindungen der For- meln (I-1)) für jeweils gegebenenfalls einfach bis zweifach durch Fluor, Chlor, Brom, C₁- C₄-Alkyl, C₁-C₄-Halogenalkyl, C₁-C₄-Alkoxy oder C₁-C₄-Halogenalkoxy substituiertes Phenyl oder Pyridyl, oder
- A und D: stehen gemeinsam besonders bevorzugt für gegebenenfalls einfach bis zweifach sub- stituiertes C₃-C₅-Alkandiyl, in welchem eine Methylengruppe durch eine Carbonylgruppe (nicht jedoch im Fall der Verbindungen der Formel (I-1)), Sauerstoff oder Schwefel ersetzt sein kann, wobei als Substituenten C₁-C₂-Alkyl oder C₁-C₂-Alkoxy in Frage kommen o- der
- A und D: stehen (im Fall der Verbindungen der Formel (I-1)) gemeinsam mit den Atomen, an die sie gebunden sind, für eine der Gruppen AD-1 bis AD-10: 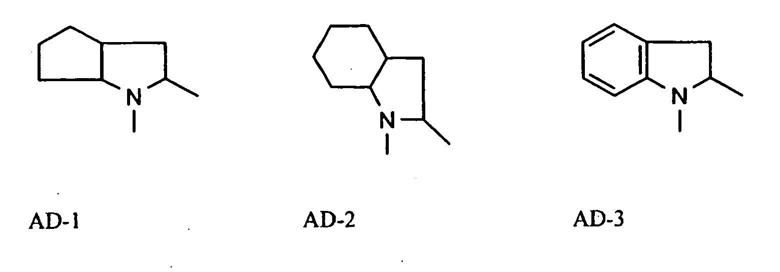 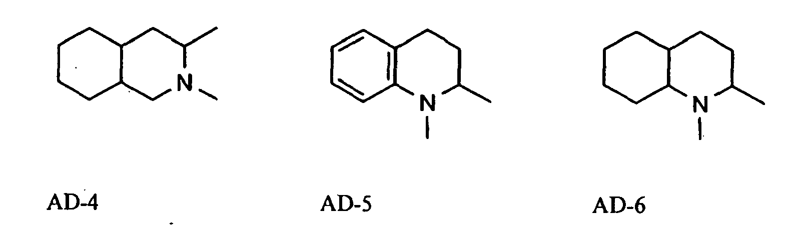 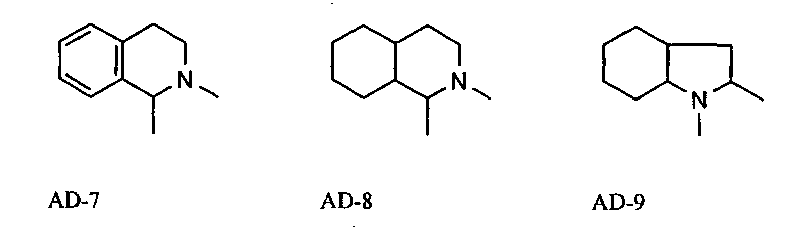 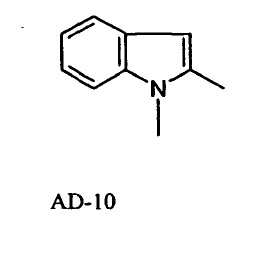 oder
- A und Q¹: stehen gemeinsam besonders bevorzugt für jeweils gegebenenfalls einfach oder zwei- fach, gleich oder verschieden durch C₁-C₂-Alkyl oder C₁-C₂-Alkoxy substituiertes C₃- C₄-Alkandiyl oder
- D und Q¹: stehen gemeinsam besonders bevorzugt für C₃-C₄-Alkandiyl, oder
- Q¹: steht besonders bevorzugt für Wasserstoff, C₁-C₄-Alkyl, C₁-C₄-Alkoxy-C₁-C₂-alkyl, oder gegebenenfalls durch Methyl oder Methoxy substituiertes C₃-C₆-Cycloalkyl, worin gege- benenfalls eine Methylengruppe durch Sauerstoff ersetzt ist,
- Q²: steht besonders bevorzugt für Wasserstoff, Methyl oder Ethyl,
- Q⁴, Q⁵ und Q⁶: stehen besonders bevorzugt unabhängig voneinander für Wasserstoff oder C₁-C₃- Alkyl,
- Q³: steht besonders bevorzugt für Wasserstoff, C₁-C₄-Alkyl, oder gegebenenfalls einfach bis zweifach durch Methyl oder Methoxy substituiertes C₃-C₆-Cycloalkyl, oder
- Q¹ und Q²: steht besonders bevorzugt für Wasserstoff, C₁-C₄-Alkyl, C₁-C₄-Alkoxy-C₁-C₂-alkyl, oder gegebenenfalls durch Methyl oder Methoxy substituiertes C₃-C₆-Cycloalkyl, worin gegebenenfalls eine Methylengruppe durch Sauerstoff ersetzt ist, oder
- Q³ und Q⁴: stehen besonders bevorzugt gemeinsam mit dem Kohlenstoff, an das sie gebunden sind, für einen gegebenenfalls durch C₁-C₂-Alkyl oder C₁-C₂-Alkoxy substituierten gesättigten C₅-C₆-Ring, in welchem gegebenenfalls ein Ringglied durch Sauerstoff oder Schwefel er- setzt ist, mit der Maßgabe, dass dann A besonders bevorzugt für Wasserstoff oder Methyl steht,
- G: steht besonders bevorzugt für Wasserstoff (a) oder für eine der Gruppen 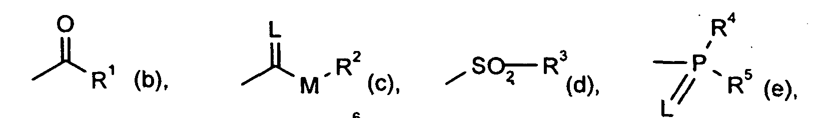
E (f) oder 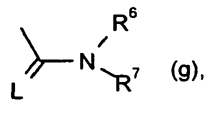 L insbesondere für (a), (b) oder (c),
in welchen
E für ein Metallionäquivalent oder ein Ammoniumion steht,
L für Sauerstoff oder Schwefel steht und
M für Sauerstoff oder Schwefel steht,
R¹ steht besonders bevorzugt für jeweils gegebenenfalls einfach bis dreifach durch Fluor oder Chlor substituiertes C₁-C7₈-Alkyl, C₂-C₁₈-Alkenyl, C₁-C₄-Alkoxy-C₁-C₂-alkyl, C₁-C₄- Alkylthio-C₁-C₂-alkyl oder gegebenenfalls einfach bis zweifach durch Fluor, Chlor, C₁-C₂-Alkyl oder C₁-C₂-Alkoxy substituiertes C₃-C₆-Cycloalkyl, in welchem gegebenen- falls ein oder zwei nicht direkt benachbarte Ringglieder durch Sauerstoff ersetzt sind, für gegebenenfalls einfach bis zweifach durch Fluor, Chlor, Brom, Cyano, Nitro, C₁-C₄- Alkyl, C₁-C₄-Alkoxy, C₁-C₂-Halogenalkyl oder C₁-C₂-Halogenalkoxy substituiertes Phenyl,
R² steht besonders bevorzugt für jeweils gegebenenfalls einfach bis dreifach durch Fluor sub- stituiertes C₁-C₈-Alkyl, C₂-C₈-Alkenyl oder C₁-C₄-Alkoxy-C₂-C₄-alkyl,
für gegebenenfalls einfach durch C₁-C₂-Alkyl oder C₁-C₂-Alkoxy substituiertes C₃-C₆- Cycloalkyl oder
für jeweils gegebenenfalls einfach bis zweifach durch Fluor, Chlor, Brom, Cyano, Nitro, C₁-C₄-Alkyl, C₁-C₃-Alkoxy, Trifluormethyl oder Trifluormethoxy substituiertes Phenyl oder Benzyl,
R³ steht besonders bevorzugt für gegebenenfalls einfach bis dreifach durch Fluor substi- tuiertes C₁-C₆-Alkyl oder für gegebenenfalls einfach durch Fluor, Chlor, Brom, C₁-C₄- Alkyl, C₁-C₄-Alkoxy, Trifluormethyl, Trifluormethoxy, Cyano oder Nitro substituiertes Phenyl,
R⁴ steht besonders bevorzugt für C₁-C₆-Alkyl, C₁-C₆-Alkoxy, C₁-C₆-Alkylamino, Di-(C₁- C₆-alkyl)amino, C₁-C₆-Alkylthio, C₃-C₄-Alkenylthio, C₃-C₆-Cycloalkylthio oder für je- weils gegebenenfalls einfach durch Fluor, Chlor, Brom, Nitro, Cyano, C₁-C₃-Alkoxy, C₁- C₃-Halogenalkoxy, C₁-C₃-Alkylthio, C₁-C₃-Halogenalkylthio, C₁-C₃-Alkyl oder Tri- fluormethyl substituiertes Phenyl, Phenoxy oder Phenylthio,
R⁵ steht besonders bevorzugt für C₁-C₆-Alkoxy oder C₁-C₆-Alkylthio,
R⁶ steht besonders bevorzugt für Wasserstoff, C₁-C₆-Alkyl, C₃-C₆-Cycloalkyl, C₁-C₆- Alkoxy, C₃-C₆-Alkenyl, C₁-C₆-Alkoxy-C₁-C₄-alkyl, für gegebenenfalls einfach durch Fluor, Chlor, Brom, Trifluormethyl, C₁-C₄-Alkyl oder C₁-C₄-Alkoxy substituiertes Phe- nyl, für gegebenenfalls einfach durch Fluor, Chlor, Brom, C₁-C₄-Alkyl, Trifluormethyl oder C₁-C₄-Alkoxy substituiertes Benzyl,
R⁷ steht besonders bevorzugt für C₁-C₆-Alkyl, C₃-C₆-Alkenyl oder C₁-C₆-Alkoxy-C₁-C₄- alkyl,
R⁶ und R⁷ stehen besonders bevorzugt zusammen für einen gegebenenfalls durch Methyl oder Ethyl substituierten C₄-C₅-Alkylenrest, in welchem gegebenenfalls eine Methylengruppe durch Sauerstoff oder Schwefel ersetzt ist.

In den als besonders bevorzugt genannten Restedefinitionen steht Halogen für Fluor, Chlor und Brom, insbesondere für Fluor und Chlor.
- W: steht ganz besonders bevorzugt für Wasserstoff, Methyl, Chlor, Brom, Ethyl, Methoxy, Ethoxy oder Trifluormethyl,
- X: steht ganz besonders bevorzugt für Chlor, Brom, Iod, Methyl, Ethyl, Propyl, Methoxy, Ethoxy, Propoxy, Methoxy-ethoxy, Ethoxy-ethoxy, Trifluormethyl, Difluormethoxy, Trifluormethoxy oder Cyano,
- Y: steht ganz besonders bevorzugt in der 4-Position für Wasserstoff, Chlor, Brom, Iod, Triflu- ormethyl oder Trifluormethoxy,
- Z: steht ganz besonders bevorzugt für Wasserstoff:
- W: steht auch ganz besonders bevorzugt für Wasserstoff, Chlor, Brom, Methyl oder Ethyl,
- X: steht auch ganz besonders bevorzugt für Chlor, Brom, Methyl, Ethyl, Propyl, Methoxy, Trifluormethyl, Difluormethoxy, Trifluormethoxy oder Cyano,
- Y: steht auch ganz besonders bevorzugt in der 4-Position für den Rest 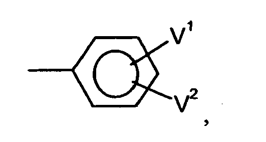
- Z: steht auch ganz besonders bevorzugt für Wasserstoff,
- V¹: steht auch ganz besonders bevorzugt für Fluor, Chlor, Methyl, Methoxy, Trifluormethyl, Trifluormethoxy oder Cyano,
- V²: steht auch ganz besonders bevorzugt für Wasserstoff, Fluor, Chlor, Methyl, Methoxy oder Trifluormethyl.
- W: steht ebenfalls ganz besonders bevorzugt für Wasserstoff, Chlor oder Methyl,
- X: steht ebenfalls ganz besonders bevorzugt für Chlor, Methyl, Trifluormethyl, Methoxy, Difluormethoxy, Trifluormethoxy oder Cyano,
- Y: steht ebenfalls ganz besonders bevorzugt in der 5-Position für den Rest 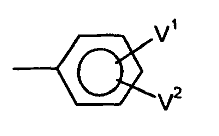
- Z: steht ebenfalls ganz besonders bevorzugt in der 4-Position für Wasserstoff oder Methyl,
- V¹: steht ebenfalls ganz besonders bevorzugt für Fluor, Chlor, Methyl, Methoxy, Trifluor- methyl, Trifluormethoxy oder Cyano,
- V²: steht ebenfalls ganz besonders bevorzugt für Wasserstoff, Fluor, Chlor, Methyl, Methoxy oder Trifluormethyl.
- W: steht außerdem ganz besonders bevorzugt für Wasserstoff, Methyl, Ethyl, Methoxy, Etho- xy, Chlor oder Brom,
- X: steht außerdem ganz besonders bevorzugt für Chlor, Brom, Iod, Methyl, Ethyl, Propyl, Methoxy, Ethoxy, Propoxy, Methoxy-ethoxy, Ethoxy-ethoxy, Trifluormethyl, Difluor- methoxy, Trifluormethoxy oder Cyano,
- Y: steht außerdem ganz besonders bevorzugt in der 4-Position für Methyl oder Ethyl,
- Z: steht außerdem ganz besonders bevorzugt für Wasserstoff.
- W: steht weiterhin ganz besonders bevorzugt für Wasserstoff, Chlor, Brom, Methyl oder E- thyl,
- X: steht weiterhin ganz besonders bevorzugt für Chlor, Brom, Iod, Methyl, Ethyl, Methoxy, Trifluormethyl, Difluormethoxy oder Trifluormethoxy,
- Y: steht weiterhin ganz besonders bevorzugt in der 4-Position für Wasserstoff, Chlor, Brom, Methyl oder Ethyl,
- Z: steht weiterhin ganz besonders bevorzugt in der 3- oder 5-Position für Fluor, Chlor, Brom, Iod, Methyl, Ethyl, Trifluormethyl oder Trifluormethoxy.
- CKE: steht ganz besonders bevorzugt für eine der Gruppen 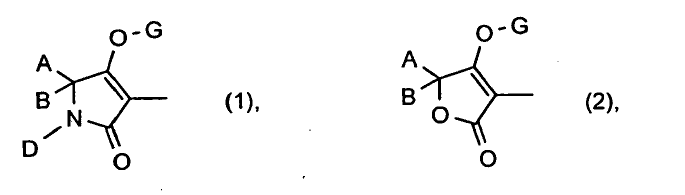 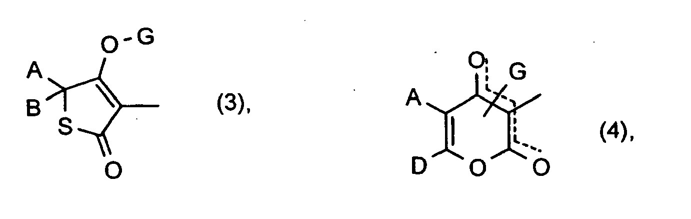 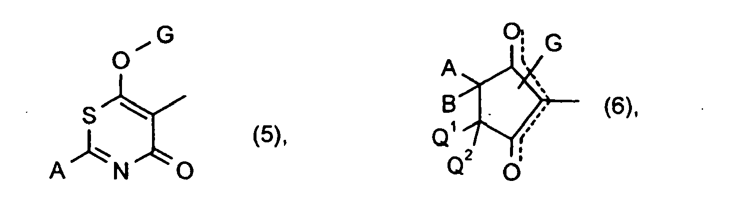 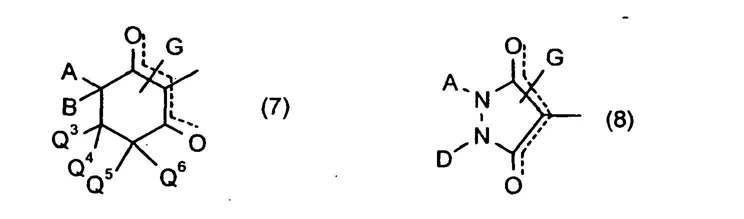 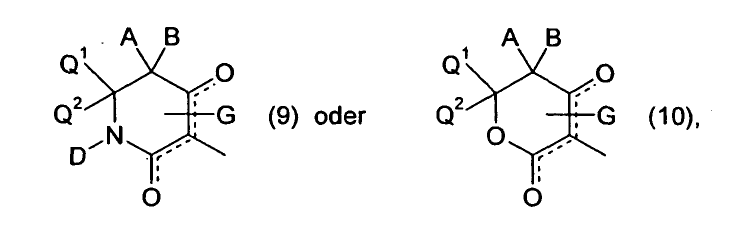
- A: steht ganz besonders bevorzugt für Wasserstoff, jeweils gegebenenfalls einfach bis drei- fach durch Fluor substituiertes C₁-C₄-Alkyl oder C₁-C₂-Alkoxy-C₁-C₂-alkyl, für Cyc- lopropyl, Cyclopentyl oder Cyclohexyl und nur im Fall der Verbindungen der Formel (I-5) für gegebenenfalls einfach bis zweifach durch Fluor, Chlor, Brom, Methyl, Ethyl, n- Propyl, iso-Propyl, Methoxy, Ethoxy, Trifluormethyl, Trifluormethoxy, Cyano oder Nitro substituiertes Phenyl,
- B: steht ganz besonders bevorzugt für Wasserstoff, Methyl oder Ethyl oder
- A, B: und das Kohlenstoffatom an das sie gebunden sind, stehen ganz besonders bevorzugt für gesättigtes C₅-C₆-Cycloalkyl, in welchem gegebenenfalls ein Ringglied durch Sauerstoff oder Schwefel ersetzt ist und welches gegebenenfalls einfach durch Methyl, Ethyl, Propyl, Isopropyl, Methoxymethyl, Ethoxymethyl, Propoxymethyl, Methoxyethyl, Ethoxyethyl, Trifluormethyl, Methoxy, Ethoxy, Propoxy, Methoxyethoxy, Butoxy, Ethoxyethoxy oder Cyclopropylmethoxy substituiert ist, mit der Maßgabe, dass dann Q³ ganz besonders be- vorzugt für Wasserstoff steht oder
- A, B: und das Kohlenstoffatom, an das sie gebunden sind, stehen ganz besonders bevorzugt für C₆-Cycloalkyl, welches gegebenenfalls durch mit zwei nicht direkt benachbarten Sauer- stoffatomen enthaltende Alkylendioxyl-Gruppe substituiert ist, mit der Maßgabe, dass dann Q³ ganz besonders bevorzugt für Wasserstoff steht oder
- A, B: und das Kohlenstoffatom, an das sie gebunden sind, stehen ganz besonders bevorzugt für C₅-C₆-Cycloalkyl oder C₅-C₆-Cycloalkenyl, worin zwei Substituenten gemeinsam mit den Kohlenstoffatomen, an die sie gebunden sind, für C₂-C₄-Alkandiyl oder C₂-C₄- Alkendiyl oder Butadiendiyl stehen, mit der Maßgabe, dass dann Q³ ganz besonders be- vorzugt für Wasserstoff steht,
- D: steht ganz besonders bevorzugt für Wasserstoff, für jeweils gegebenenfalls einfach bis dreifach durch Fluor substituiertes C₁-C₄-Alkyl, C₃-C₄-Alkenyl, C₁-C₄-Alkoxy-C₂-C₃- alkyl, für Cyclopropyl, Cyclopentyl oder Cyclohexyl oder (jedoch nicht im Fall der Ver- bindungen der Formeln (I-1)) für jeweils gegebenenfalls einfach durch Fluor, Chlor, Me- thyl, Ethyl, n-Propyl, iso-Propyl, Methoxy, Ethoxy oder Trifluormethyl substituiertes Phe- nyl oder Pyridyl,
oder
- A und D: stehen gemeinsam ganz besonders bevorzugt für gegebenenfalls einfach durch Methyl oder Methoxy substituiertes C₃-C₅-Alkandiyl, worin gegebenenfalls ein Kohlenstoffatom durch Sauerstoff oder Schwefel ersetzt ist oder für die Gruppe AD-1 steht, oder
- A und Q¹: stehen gemeinsam ganz besonders bevorzugt für gegebenenfalls einfach oder zweifach durch Methyl oder Methoxy substituiertes C₃-C₄-Alkandiyl oder
- D und Q1: stehen gemeinsam ganz besonders bevorzugt für C₃-C₄-Alkandiyl oder
- Q¹: steht ganz besonders bevorzugt für Wasserstoff, Methyl, Ethyl, Propyl, iso-Propyl, Cyc- Iopropyl, Cyclopentyl oder Cyclohexyl,
- Q²: steht ganz besonders bevorzugt für Wasserstoff, Methyl oder Ethyl,
- Q⁴, Q⁵ und Q⁶: stehen ganz besonders bevorzugt unabhängig voneinander für Wasserstoff oder Methyl,
- Q³: steht ganz besonders bevorzugt für Wasserstoff, Methyl, Ethyl oder Propyl, oder
- Q³ und Q⁴: stehen ganz besonders bevorzugt gemeinsam mit dem Kohlenstoff, an den sie ge- bunden sind, für einen gegebenenfalls einfach durch Methyl oder Methoxy substituierten gesättigten C₅-C₆-Ring, mit der Maßgabe, dass dann A ganz besonders bevorzugt für Wasserstoff steht,
- G: steht ganz besonders bevorzugt für Wasserstoff (a) oder für eine der Gruppen 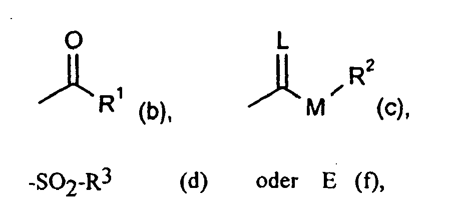 in welchen
L für Sauerstoff oder Schwefel steht,
M für Sauerstoff oder Schwefel steht und
E für ein Ammoniumion steht,
- R¹: steht ganz besonders bevorzugt für jeweils gegebenenfalls einfach durch Chlor substituier- tes C₁-C₆-Alkyl, C₂-C₁₇-Alkenyl, C₁-C₂-Alkoxy-C₁-alkyl, C₁-C₂-Alkylthio-C₁-alkyl oder jeweils gegebenenfalls einfach durch Fluor, Chlor, Methyl oder Methoxy substitu- iertes Cyclopropyl oder Cyclohexyl, für gegebenenfalls einfach durch Fluor, Chlor, Brom, Cyano, Nitro, Methyl, Methoxy, Tri- fluormethyl oder Trifluormethoxy substituiertes Phenyl,
- R²: steht ganz besonders bevorzugt für jeweils gegebenenfalls einfach durch Fluor sub- stituiertes C₁-C₈-Alkyl, C₂-C₆-Alkenyl oder C₁-C₄-Alkoxy-C₂-C₃-alkyl, Phenyl oder Benzyl,
- R³: steht ganz besonders bevorzugt für C₁-C₈-Alkyl.

Im einzelnen seien außer den bei den Beispielen genannten Verbindungen die folgenden Verbindungen genannt:

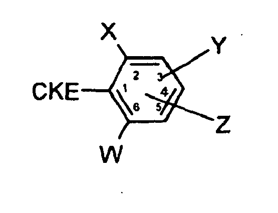

**Tabelle 1**

| **X** | **W** | **Y** | **Z** |
|---|---|---|---|
| CH3 | H | H | H |
| Br | H | H | H |
| Cl | H | H | H |
| CF₃ | H | H | H |
| OCH₃ | H | H | H |
| Br | H | 4-Cl | H |
| Cl | H | 4-Br | H |
| Cl | H | 4-Cl | H |
| Cl | H | 4-CH₃ | H |
| CH₃ | H | 4-Cl | H |
| CH₃ | H | 4-CH₃ | H |
| Cl | Cl | H | H |
| Cl | OCH₃ | H | H |
| Cl | CH₃ | H | H |
| Cl | OC₂H₅ | H | H |
| OCH₃ | OCH₃ | H | H |
| CH₃ | CH₃ | H | H |
| Br | CH₃ | 4-Br | H |
| Cl | Cl | 4-CH₃ | H |
| CH₃ | Br | 4-CH₃ | H |
| CH₃ | Cl | 4-CH₃ | H |
| OCH₃ | CH₃ | 4-CH₃ | H |
| OC₂H₅ | CH₃ | 4-CH₃ | H |
| OC₃H₇ | CH₃ | 4-CH₃ | H |
| CH₃ | CH₃ | 4-CH₃ | H |
| Br | Br | 4-CH₃ | H |
| CH₃ | CH₃ | 4-Br | H |
| C₂H₅ | CH₃ | H | H |
| C₂H₅ | C₂H₅ | H | H |
| OCH₃ | C₂H₅ | 4-CH₃ | H |
| CH₃ | CH₃ | 4-OCH₃ | H |
| Br | Cl | 4-CH₃ | H |
| Br | CH₃ | 4-Cl | H |
| Cl | CH₃ | 4-Br | H |
| CH₃ | CH₃ | 4-Cl | H |
| C₂H₅ | CH₃ | 4-CH₃ | H |
| C₂H₅ | CH₃ | 4-C₂H₅ | H |
| C₂H₅ | C₂H₅ | 4-CH₃ | H |
| C₂H₅ | C₂H₅ | 4-C₂H₅ | H |
| C₂H₅ | CH₃ | 4-Cl | H |
| C₂H₅ | C₂H₅ | 4-Cl | H |
| C₂H₅ | CH₃ | 4-Br | H |
| C₂H₅ | C₂H₅ | 4-Br | H |
| C₂H₅ | Cl | 4-CH₃ | H |
| C₂H₅ | Br | 4-CH₃ | H |
| C₂H₅ | Cl | 4-Cl | H |
| C₂H₅ | Br | 4-Br | H |
| C₂H₅ | Cl | 4-Br | H |
| C₂H₅ | Br | 4-Cl | H |
| OCH₃ | CH₃ | 4-Cl | H |
| OCH₃ | C₂H₅ | 4-Cl | H |
| OC₂H₅ | CH₃ | 4-Cl | H |
| OC₂H₅ | C₂H₅ | 4-Cl | H |
| Cl | OCH₃ | 4-CH₃ | H |
| Cl | OC₂H₅ | 4-CH₃ | H |
| Cl | Cl | 4-Cl | H |
| Cl | H | 4-Cl | 5-Cl |
| CH₃ | H | 4-CH₃ | 5-CH₃ |
| CH₃ | H | 4-Cl | 5-CH₃ |
| Br | H | 4-Cl | 5-CH₃ |
| Br | H | 4-CH₃ | 5-CH₃ |
| Cl | H | 4-Br | 5-CH₃ |
| Cl | H | 4-Cl | 5-CH₃ |
| CH₃ | H | 4-Br | 5-CH₃ |
| Cl | H | 4-CH₃ | 5-Cl |
| CH₃ | H | H | 5-CH₃ |
| Cl | H | H | 5-CH₃ |
| Br | H | H | 5-CH₃ |
| CH₃ | H | H | 5-Cl |
| CH₃ | H | H | 5-Br |
| CH₃ | CH₃ | 4-CH₃ | 5-CH₃ |
| CH₃ | CH₃ | 4-CH₃ | 5-Cl |
| CH₃ | CH₃ | 4-CH₃ | 5-Br |
| CH₃ | CH₃ | H | 3-Cl |
| CH₃ | CH₃ | H | 3-Br |
| Cl | Cl | H | 3-Br |
| CH₃ | CH₃ | 4-(4-Cl-C₆H₄) | H |
| C₂H₅ | CH₃ | 4-(4-Cl-C₆H₄) | H |
| C₂H₅ | C₂H₅ | 4-(4-Cl-C₆H₄) | H |
| Cl | CH₃ | 4-(4-Cl-C₆H₄) | H |
| Cl | C₂H₅ | 4-(4-Cl-C₆H₄) | H |
| CH₃ | H | 5-(4-Cl-C₆H₄) | H |
| CH₃ | CH₃ | 5-(4-Cl-C₆H₄) | H |
| CH₃ | H | 5-(4-Cl-C₆H₄) | 4-CH₃ |
| CH₃ | CH₃ | 5-(4-Cl-C₆H₄) | 4-CH₃ |
| Cl | H | 5-(4-Cl-C₆H₄) | H |
| J | H | H | H |
| J | H | 4- CH₃ | H |
| J | CH₃ | H | H |
| J | C₂H₅ | H | H |
| CH₃ | H | H | 5-J |
| CH₃ | H | 4- CH₃ | 5-J |
| J | CH₃ | 4- CH₃ | H |
| J | C₂H₅ | 4- CH₃ | H |
| J | CH₃ | 4-Cl | H |
| J | C₂H₅ | 4-Cl | H |
| J | Cl | 4- CH₃ | H |
| J | H | 4- CH₃ | 5- CH₃ |
| CH₃ | H | 4-J | H |
| C₂H₅ | H | 4-J | H |
| CH₃ | CH₃ | 4-J | H |
| C₂H₅ | CH₃ | 4-J | H |
| C₂H₅ | C₂H₅ | 4-J | H |
| Cl | CH₃ | 4-J | H |
| Cl | C₂H₅ | 4-J | H |
| CH₃ | H | 4-J | 5-CH₃ |
| CH₃ | CH₃ | H | 3-J |
| J | H | H | 5-CH₃ |

Als erfindungsgemäße Wirkstoffe kommen insbesondere bevorzugt Verbindungen aus mit den in Tabelle 1 genannten Restekombinationen für W, X, Y und Z mit den in Tabellen 2a und 2b genannten Restekombinationen für A, B und D in Frage.

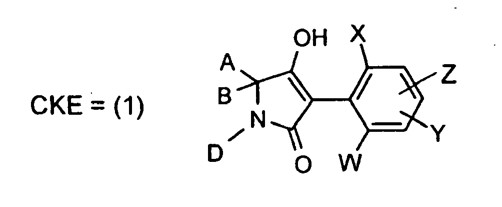

**Tabelle 2a**

| **A** | **B** | **D** |
|---|---|---|
| CH₃ | H | H |
| C₂H₅ | H | H |
| C₃H₇ | H | H |
| i-C₃H₇ | H | H |
| C₄H₉ | H | H |
| i-C₄H₉ | H | H |
| s-C₄H₉ | H | H |
| t-C₄H₉ | H | H |
| CH₃ | CH₃ | H |
| C₂H₅ | CH₃ | H |
| C₃H₇ | CH₃ | H |
| i-C₃H₇ | CH₃ | H |
| C₄H₉ | CH₃ | H |
| i-C₄H₉ | CH₃ | H |
| s-C₄H₉ | CH₃ | H |
| t-C₄H₉ | CH₃ | H |
| C₂H₅ | C₂H₅ | H |
| C₃H₇ | C₃H₇ | H |
| 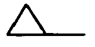 | CH₃ | H |
| 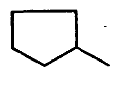 | CH₃ | H |
| 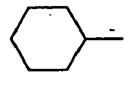 | CH₃ | H |
| -(CH₂)₂- | | H |
| -(CH₂)₄- | | H |
| -(CH₂)₅- | | H |
| -(CH₂)₆- | | H |
| -(CH₂)₇- | | H |
| -(CH₂)₂-O-(CH₂)₂- | | H |
| -CH₂-O-(CH₂)₃- | | H |
| -(CH₂)₂-S-(CH₂)₂- | | H |
| -CH₂-CHCH₃-(CH₂)₃- | | H |
| -CH₂-CHOCH₃-(CH₂)₂- | | H |
| -CH₂-CHOC₂H₅-(CH₂)₂- | | H |
| -CH₂-CHOC₃H₇-(CH₂)₂- | | H |
| -CH₂-CHOC₄H₉-(CH₂)₂- | | H |
| -CH₂-CHO(CH₂)₂0CH₃-(CH₂)₂- | | H |
| 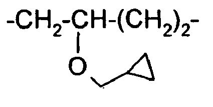 | | H |
| -CH₂-CHOCH₃-(CH₂)₃- | | H |
| -CH₂-CHOC₂H₅-(CH₂)₃- | | H |
| -CH₂-CHOC₃H₇-(CH₂)₃- | | H |
| -CH₂-CHOC₄H₉-(CH₂)₃- | | H |
| -CH₂-CHO(CH₂)₂OCH₃-(CH₂)₃- | | H |
| 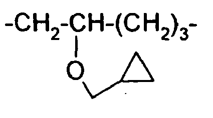 | | H |
| -(CH₂)₂-CHCH₃-(CH₂)₂- | | H |
| -(CH₂)₂-CHC2H₅-(CH₂)₂- | | H |
| -(CH₂)₂-CHC₃H₇-(CH₂)₂- | | H |
| -(CH₂)₂-CHi-C₃H₇-(CH₂)₂- | | H |
| -(CH₂)₂-CHOCH₃-(CH₂)₂- | | H |
| -(CH₂)₂-CHOC₂H₅-(CH₂)₂- | | H |
| -(CH₂)₂-CHOC₃H₇-(CH₂)₂- | | H |
| -(CH₂)₂-CHO-.-C₃H₇-(CH₂)₂- | | H |
| -(CH₂)₂-C(CH₃)₂-(CH₂)₂- | | H |
| -CH₂-(CHCH₃)₂-(CH₂)₂- | | H |
| 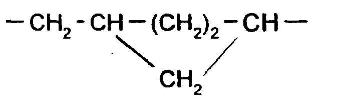 | | H |
| 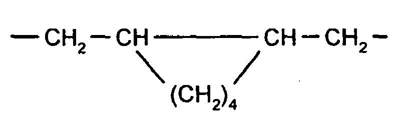 | | H |
| 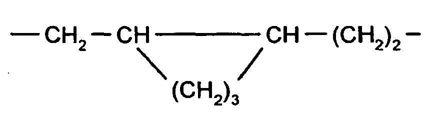 | | H |
| 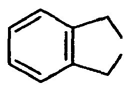 | | H |
| 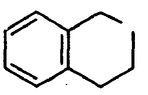 | | H |
| 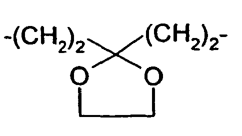 | | H |
| 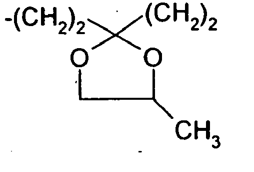 | | H |
| 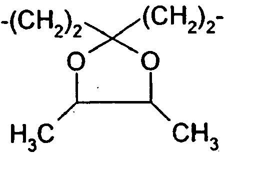 | | H |
| 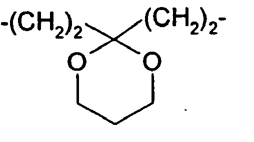 | | H |
| 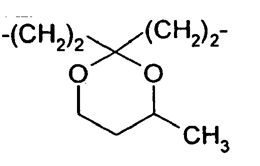 | | H |
| 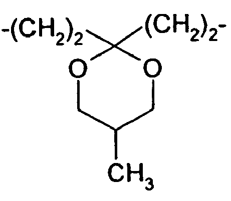 | | H |
| 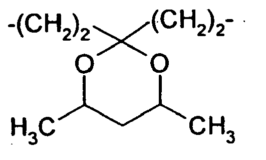 | | H |
| 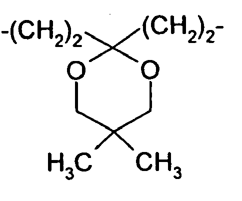 | | H |
| 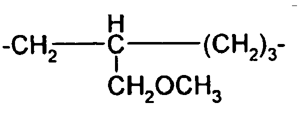 | | H |
| 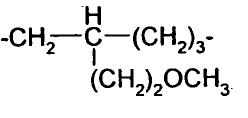 | | H |
| 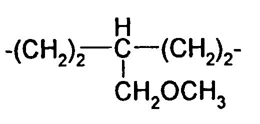 | | H |
| 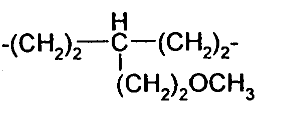 | | H |
| 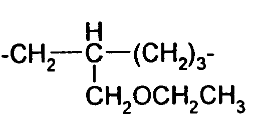 | | H |
| 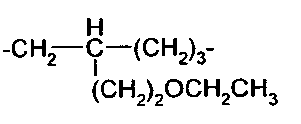 | | H |
| 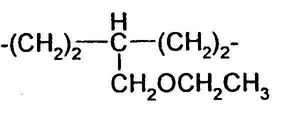 | | H |
| 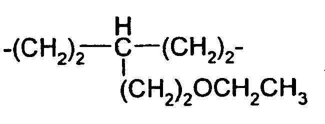 | | H |

**Tabelle 2b**

| **A** | **D** | **B** |
|---|---|---|
| -(CH₂)₃- | | H |
| -(CH₂)₄- | | H |
| -CH₂-CHCH₃-CH₂- | | H |
| -CH₂-CH₂-CHCH₃- | | H |
| -CH₂-CHCH₃-CHCH₃- | | H |
| -CH₂-CH(OCH₃)-CH₂- | | H |
| -CH₂-CH=CH-CH₂- | | H |
| 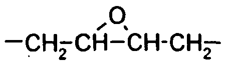 | | H |
| -CH₂-S-CH₂- | | H |
| -CH₂-S-(CH₂)₂- | | H |
| -(CH₂)₂-S-CH₂- | | H |
| 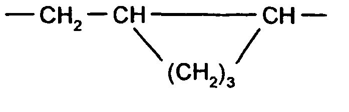 | | H |
| H | CH₃ | H |
| H | C₂H₅ | H |
| H | C₃H₇ | H |
| H | i-C₃H₇ | H |
| H | 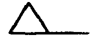 | H |
| H | 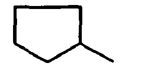 | H |
| H | 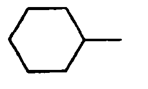 | H |
| CH₃ | CH₃ | H |
| CH₃ | C₂H₅ | H |
| CH₃ | C₃H₇ | H |
| CH₃ | i-C₃H₇ | H |
| CH₃ | 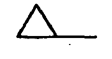 | H |
| CH₃ | 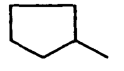 | H |
| CH₃ | 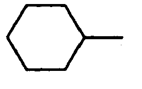 | H |
| C₂H₅ | CH₃ | H |
| C₂H₅ | C₂H₅ | H |

Als Wirkstoffe hervorgehoben werden insbesondere bevorzugte Verbindungen mit den in Tabelle 1 genannten Restekombinationen für W, X und Y und den in den Tabellen 2a und 2b für A, B und D genannten Restekombinationen, in denen W, X und Y einen in 2-Position substituierten, in 2,4-oder 2,6-Position disubstituierten oder in 2,4,6-Position trisubstituierten Phenylring darstellen

Als erfindungsgemäße Wirkstoffe kommen insbesondere bevorzugt Verbindungen aus mit den in Tabelle 1 genannten Restekombinationen für W, X, Y und Z mit den in Tabelle 3 genannten Restekombinationen für A und B in Frage.

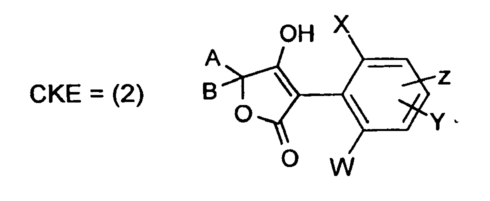

**Tabelle 3**

| **A** | **B** |
|---|---|
| CH₃ | H |
| C₂H₅ | H |
| C₃H₇ | H |
| i-C₃H₇ | H |
| C₄H₉ | H |
| i-C₄H₉ | H |
| s-C₄H₉ | H |
| t-C₄H₉ | H |
| CH₃ | CH₃ |
| C₂H₅ | CH₃ |
| C₃H₇ | CH₃ |
| i-C₃H₇ | CH₃ |
| C₄H₉ | CH₃ |
| i-C₄H₉ | CH₃ |
| s-C₄H₉ | CH₃ |
| t-C₄H₉ | CH₃ |
| C₂H₅ | C₂H₅ |
| C₃H₇ | C₃H₇ |
| 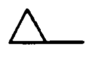 | CH₃ |
| 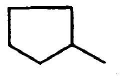 | CH₃ |
| 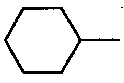 | CH₃ |
| -(CH₂)₂- | |
| -(CH₂)₄- | |
| -(CH₂)₅- | |
| -(CH₂)₆- | |
| -(CH2)7- | |
| -(CH₂)₂-O-(CH₂)₂- | |
| -CH₂-O-(CH₂)₃- | |
| -(CH₂)₂-S-(CH₂)₂- | |
| -CH₂-CHCH₃-(CH₂)₃- | |
| -CH₂-CHOCH₃-(CH₂)₃- | |
| -CH₂-CHOC₂H₅-(CH₂)₃- | |
| -CH₂-CHOC₃H₇-(CH₂)₃- | |
| -CH₂-CHOC₄H₉-(CH₂)₃- | |
| -CH₂-CHO(CH₂)₂OCH₃-(CH₂)₃- | |
| -(CH₂)₂-CHCH₃-(CH₂)₂- | |
| -(CH₂)₂-CHC₂H₅-(CH₂)₂- | |
| -(CH₂)₂-CHC₃H₇-(CH₂)₂- | |
| -(CH₂)₂-CHi-C₃H₇-(CH₂)₂- | |
| -(CH₂)₂-CHOCH₃-(CH₂)₂- | |
| -(CH₂)₂-CHOC₂H₅-(CH₂)₂- | |
| -(CH₂)₂-CHOC₃H₇-(CH₂)₂- | |
| -(CH₂)₂-CHO-i-C₃H₇-(CH₂)₂- | |
| -(CH₂)₂-C(CH₃)₂-(CH₂)₂- | |
| -CH₂-(CHCH₃)₂-(CH₂)₂- | |
| 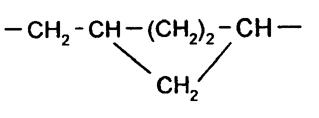 | |
| 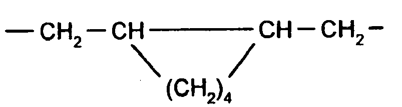 | |
| 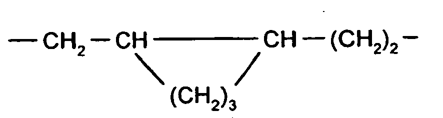 | |
| 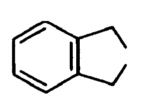 | |
| 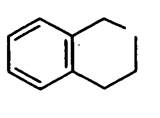 | |
| 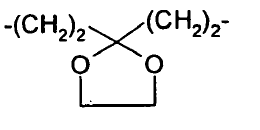 | |
| 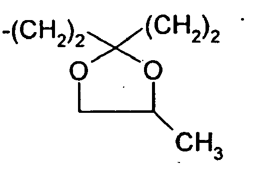 | |
| 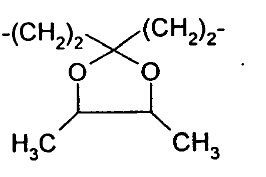 | |
| 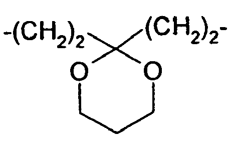 | |
| 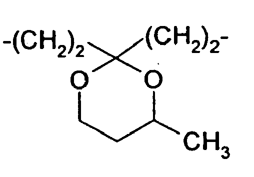 | |
| 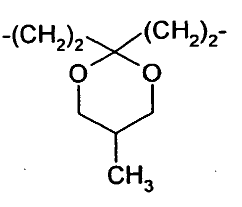 | |
| 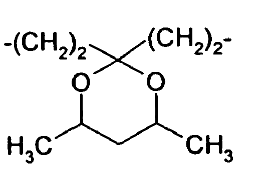 | |
| 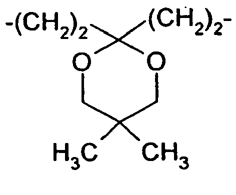 | |
| 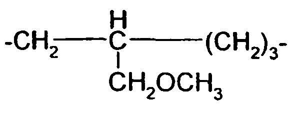 | |
| 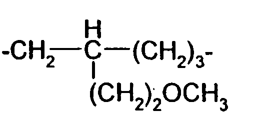 | |
| 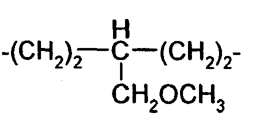 | |
| 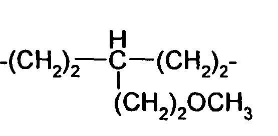 | |
| 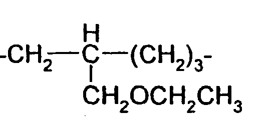 | |
| 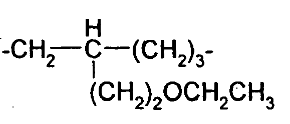 | |
| 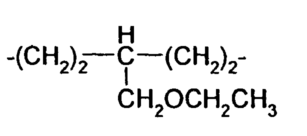 | |
| 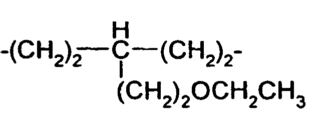 | |

Als Wirkstoffe hervorgehoben werden insbesondere bevorzugte Verbindungen mit den in Tabelle 1 genannten Restekombinationen für W, X und Y und den in Tabelle 3 für A und B genannten Restekombinationen, in denen W, X und Y einen in 2-Position substituierten, in 2,4-oder 2,6-Position disubstituierten oder in 2,4,6-Position trisubstituierten Phenylring darstellen

### Hervorgehoben seien die Verbindungen

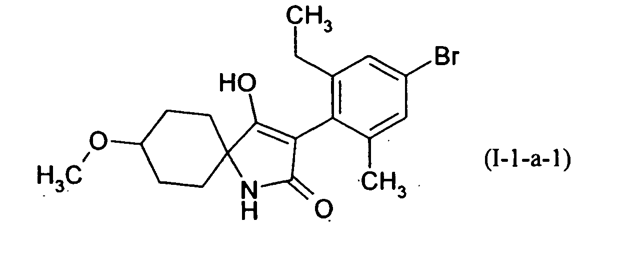

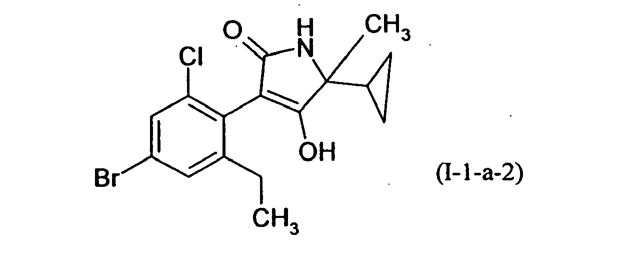

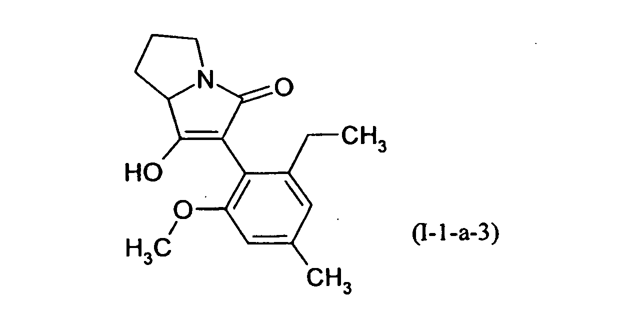

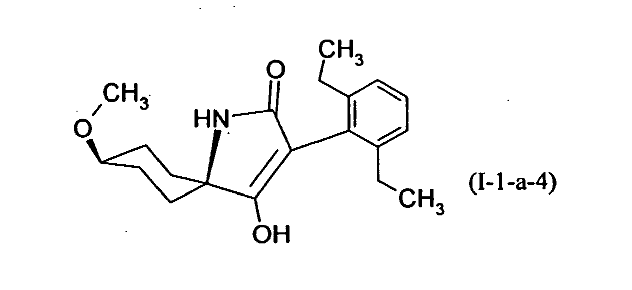

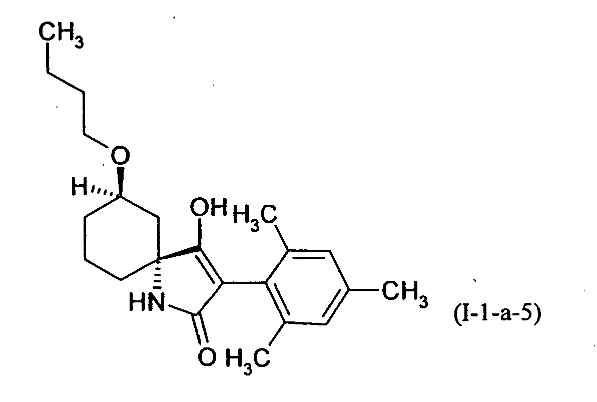

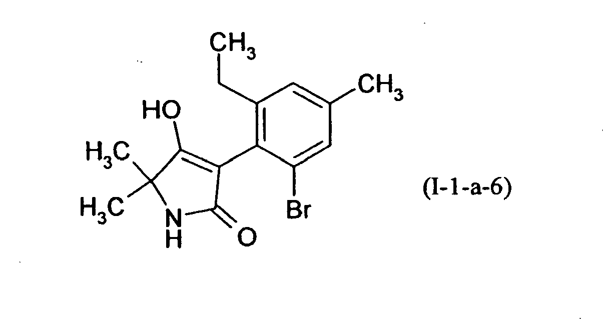

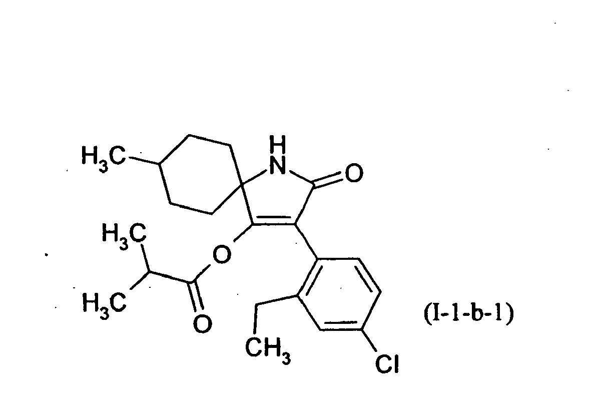

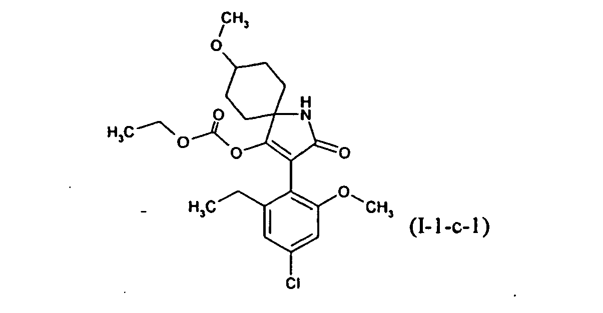

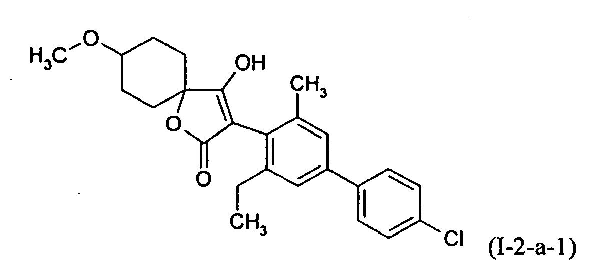

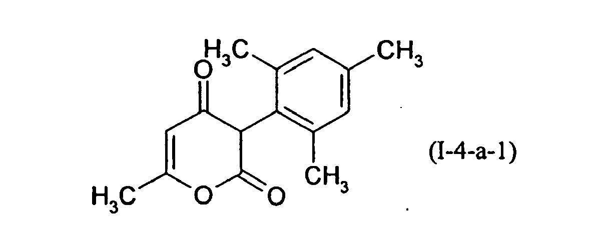

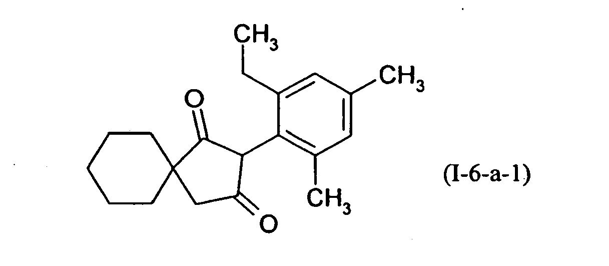

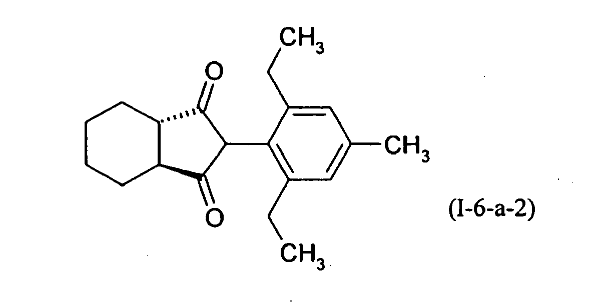

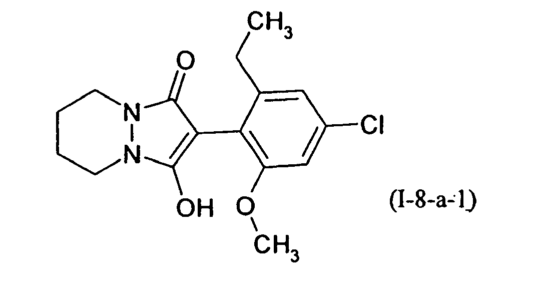

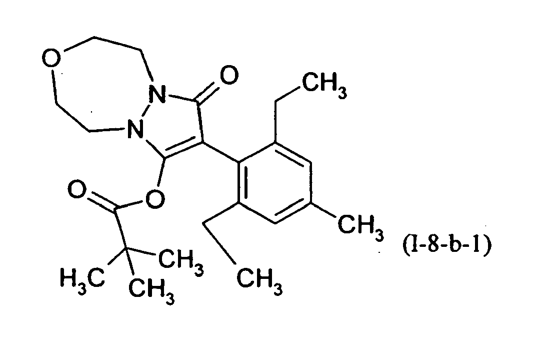

Die Verbindungen der Formel (I) besitzen eine herbizide Wirkung, die Wirkung und/oder Verträglichkeit lässt im Einzelnen aber zu wünschen übrig.

Die Wirkstoffe können in den erfindungsgemäßen Zusammensetzungen in einem breiten Konzentrationsbereich eingesetzt werden. Die Konzentration der Wirkstoffe in der Formulierung beträgt dabei üblicherweise 0,1-50 Gew.-%.

Ammonium- und Phosphoniumsalze, die erfindungsgemäß die Wirkung von Pflanzenschutzmitteln enthaltend Fettsäure-Biosynthese-Inhibitoren steigern, werden durch Formel (II) definiert 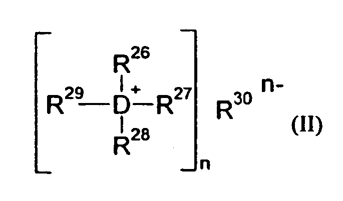 in welcher
- D: für Stickstoff oder Phosphor steht,
- D: bevorzugt für Stickstoff steht,
- R²⁶, R²⁷, R²⁸ und R²⁹: unabhängig voneinander für Wasserstoff oder jeweils gegebenenfalls substi- tuiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
- R²⁶, R²⁷, R²⁸ und R²⁹: bevorzugt unabhängig voneinander für Wasserstoff oder jeweils gegebenen- falls substituiertes C₁-C₄-Alkyl stehen, wobei die Substituenten aus Halogen, Nitro und Cy- ano ausgewählt sein können,
- R²⁶, R²⁷, R²⁸ und R²⁹: besonders bevorzugt unabhängig voneinander für Wasserstoff, Methyl, Ethyl, n-Propyl, i-Propyl, n-Butyl, i-Butyl, s-Butyl oder t-Butyl stehen,
- R²⁶, R²⁷, R²⁸ und R²⁹: ganz besonders bevorzugt für Wasserstoff stehen,
- R²⁶, R²⁷, R²⁸ und R²⁹: weiterhin ganz besonders bevorzugt gleichzeitig für Methyl oder gleichzeitig für Ethyl stehen,
- n: für 1, 2, 3 oder 4 steht,
- n: bevorzugt für 1 oder 2 steht,
- R³⁰: für Hydrogencarbonat, Tetraborat, Fluorid, Bromid, Jodid, Chlorid, Monohydro- genphosphat, Dihydrogenphosphat, Hydrogensulfat, Tartrat, Sulfat, Nitrat, Thiosulfat, Thio- cyanat, Formiat, Laktat, Acetat, Propionat, Butyrat, Pentanoat, Citrat oder Oxalat steht,
- R³⁰: weiterhin für Carbonat, Pentaborat, Sulfit, Benzoat, Hydrogenoxalat, Hydrogen- citrat, Methylsulfat oder Tetrafluoroborat steht,
- R³⁰: besonders bevorzugt für Laktat, Sulfat, Nitrat, Thiosulfat, Thiocyanat, Citrat, Oxalat oder Formiat steht,
- R³⁰: außerdem besonders bevorzugt für Acetat, Monohydrogenphosphat oder Dihydro- genphosphat steht und
- R³⁰: ganz besonders bevorzugt für Sulfat, Thiocyanat, Dihydrogenphosphat oder Monohydro- genphosphat steht.

Die Ammonium- und Phosphoniumsalze der Formel (II) können in einem breiten Konzentrationsbereich zur Steigerung der Wirkung von Pflanzenschutzmitteln enthaltend Ketoenole eingesetzt werden. Im Allgemeinen werden die Ammonium- oder Phosphoniumsalze im anwendungsfertigen Pflanzenschutzmittel in einer Konzentration von 0,5 bis 80 mmol/l, bevorzugt 0,75 bis 37,5 mmol/l, besonders bevorzugt 1,5 bis 25 mmol/l eingesetzt. Im Fall eines formulierten Produktes wird die Ammonium- und/oder Phosphoniumsalzkonzentration in der Formulierung so gewählt, dass sie nach Verdünnung der Formulierung auf die gewünschte Wirkstoffkonzentration in diesen angegebenen allgemeinen, bevorzugten oder besonders bevorzugten Bereichen liegt. Die Konzentration des Salzes in der Formulierung beträgt dabei üblicherweise 1 - 50 Gew.-%.

In der Ausführungsform der Erfindung wird den Pflanzenschutzmitteln zur Wirkungssteigerung nicht nur ein Ammonium- und/oder Phosphoniumsalz, sondern zusätzlich ein Penetrationsförderer zugegeben. Es ist als völlig überraschend zu bezeichnen, dass selbst in diesen Fällen eine noch weiter gehende Wirkungssteigerung zu beobachten ist. Gegenstand der vorliegenden Erfindung ist also die Verwendung einer Kombination von Penetrationsförderer und Ammonium- und/oder Phosphoniumsalzen zur Wirkungssteigerung von Pflanzenschutzmitteln, die herbizid wirksame phenylsubstituierte cyclische Ketoenole als Wirkstoff enthalten. Gegenstand der Erfindung sind ebenfalls Mittel, die herbizid wirksame phenylsubstituierte cyclische Ketoenole, Penetrationsförderer und Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von unerwünschtem Pflanzenwuchs.

Als Penetrationsförderer kommen im vorliegenden Zusammenhang alle in Anspruch 1 beschriebenen Penetrationsförderer in Betracht. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Als Penetrationsförderer kommen beispielsweise Alkanol-alkoxylate in Betracht. Erfindungsgemäße Penetrationsförderer sind Alkanol-alkoxylate der Formel

R-O-(-AO)ᵥ-R' (III)

in welcher
- R: für geradkettiges oder verzweigtes Alkyl mit 4 bis 20 Kohlenstoffatomen steht,
- R': für Wasserstoff, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- v: für Zahlen von 2 bis 30 steht.

Dabei werden solche Alkanol-Alkoxylate, bei denen R' Wasserstoff ist, als "offene" Alkanol-Alkoxylate bezeichnet. Eine bevorzugte Gruppe von Penetrationsförderern sind Alkanolalkoxylate der Formel

R-O-(-EO-)ₙ-R' (III-a)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.

Eine weitere bevorzugte Gruppe von Penetrationsförderern sind Alkanol-alkoxylate der Formel

R-O-(-EO-)p-(-PO-)q-R' (III-b)

in welcher
- R: die oben angegebene Bedeutung hat,
- R': die oben angegebene Bedeutung hat,
- EO: für -CH₂-CH₂-O- steht,
- PO: für 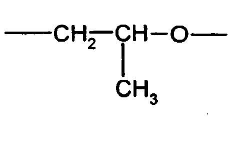 steht,
- p: für Zahlen von 1 bis 10 steht und
- q: für Zahlen von 1 bis 10 steht.

Eine weitere bevorzugte Gruppe von Penetrationsförderern sind Alkanol-Alkoxylate der Formel

R-O-(-PO-)ᵣ-(EO-)ₛ-R' (III-c)

in welcher
- R: die oben angegebene Bedeutung hat,
- R': die oben angegebene Bedeutung hat,
- EO: für -CH₂-CH₂-O- steht,
- PO: für 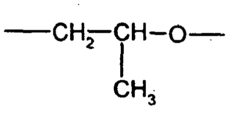 steht,
- r: für Zahlen von 1 bis 10 steht und
- s: für Zahlen von 1 bis 10 steht.

Eine weitere bevorzugte Gruppe von Penetrationsförderern sind Alkanol-alkoxylate der Formel

R-O-(-EO-)ₚ-(-BO-)_{q}-R' (III-d)

in welcher
- R und R': die oben angegebenen Bedeutungen haben,
- EO: für CH₂-CH₂-O- steht,
- BO: für 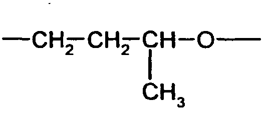 steht,
- p: für Zahlen von 1 bis 10 steht und
- q: für Zahlen von 1 bis 10 steht.

Eine weitere bevorzugte Gruppe von Penetrationsförderern sind Alkanol-alkoxylate der Formel

R-O-(-BO-)ᵣ-(-EO-)ₛ-R' (III-d)

in welcher
- R und R': die oben angegebenen Bedeutungen haben, BO für 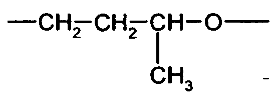 steht,
- EO: für CH₂-CH₂-O steht,
- r: für Zahlen von 1 bis 10 steht und
- s: für Zahlen von 1 bis 10 steht.

Eine weitere bevorzugte Gruppe von Penetrationsförderern sind Alkanol-Alkoxylate der Formel

CH₃-(CH₂)ₜ-CH₂-O-(-CH₂-CH₂-O-)ᵤ-R' (III-f)

in welcher
- R': die oben angegebene Bedeutung hat,
- t: für Zahlen von 8 bis 13 steht
- u: für Zahlen von 6 bis 17 steht.

In den zuvor angegebenen Formeln steht
- R: vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für ein Alkanol-Alkoxylat der Formel (III-c) sei 2-Ethyl-hexyl-alkoxylat der Formel 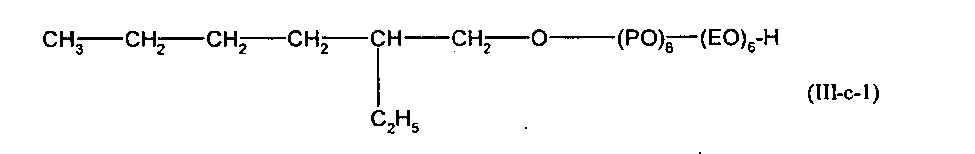 in welcher
- EO: für -CH₂-CH₂-O- steht,
- PO: für 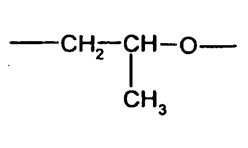 steht und
die Zahlen 8 und 6 Durchschnittswerte darstellen, genannt.

Als Beispiel für ein Alkanol-Alkoxylat der Formel (III-d) sei die Formel

CH₃-(CH₂)₁₀-O-(-EO-)₆-(-BO-)₂-CH₃ (III-d-1)

in welcher
- EO: für CH₂-CH₂-O- steht,
- BO: für 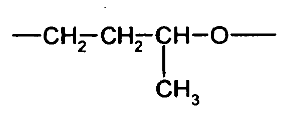 steht und
die Zahlen 10, 6 und 2 Durchschnittswerte darstellen, genannt.

Besonders bevorzugte Alkanol-Alkoxylate der Formel (III-f) sind Verbindungen dieser Formel, in denen
- t: für Zahlen von 9 bis 12 und
- u: für Zahlen von 7 bis 9
steht.

Ganz besonders bevorzugt genannt sei Alkanol-Alkoxylat der Formel (III-f-1)

CH₃-(CH₂)ₜ-CH₂-O-(-CH₂-CH₂-O-)ᵤ-H (III-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98-35 553, WO 00-35 278 und EP-A 0 681 865).

Als Penetrationsförderer kommen beispielsweise auch mineralische oder vegetabile Öle in Betracht. Als Öle kommen alle üblicherweise in agrochemischen Mitteln einsetzbaren mineralischen oder vegetabilen - gegebenenfalls modifizierte - Öle in Frage. Beispielhaft genannt seien Sonnenblumenöl, Rapsöl, Olivenöl, Rizinusöl, Rüböl, Maiskernöl, Baumwollsaatöl und Sojabohnenöl oder die Ester der genannten Öle. Bevorzugt sind Rapsöl, Sonnenblumenöl und deren Methyl- oder Ethylester.

Die Konzentration an Penetrationsförderer kann in den erfindungsgemäßen Mitteln in einem weiten Bereich variiert werden. Bei einem formulierten Pflanzenschutzmittel liegt sie im allgemeinen bei 1 bis 95 Gew.-%, bevorzugt bei 1 bis 55 Gew.-%, besonders bevorzugt bei 15 - 40 Gew.-%. In den anwendungsfertigen Mitteln (Spritzbrühen) liegen die Konzentration im allgemeinen zwischen 0,1 und 10 g/l, bevorzugt zwischen 0,5 und 5 g/l.

Erfindungsgemäß hervorgehobene Kombinationen von Wirkstoff, Salz und Penetrationsförderer sind in folgender Tabelle aufgeführt. "gemäß Test" bedeutet dabei, dass jede Verbindung geeignet ist, die in dem Test für die Kutikelpenetration (Baur et al., 1997, Pesticide Science 51, 131-152) als Penetrationsförderer wirkt.

| # | Wirk stoff | Salz | Penetrationsförderer |
|---|---|---|---|
| 1 | (I-1-a-1) | Ammoniumsulfat | gemäß Test |
| 2 | (I-1-a-1) | Ammoniumlaktat | gemäß Test |
| 3 | (I-1-a-1) | Ammoniumnitrat | gemäß Test |
| 4 | (I-1-a-1) | Ammoniumthiosulfat | gemäß Test |
| 5 | (I-1-a-1) | Ammoniumthiocyanat | gemäß Test |
| 6 | (I-1-a-1) | Ammoniumcitrat | gemäß Test |
| 7 | (I-1-a-1) | Ammoniumoxalat | gemäß Test |
| 8 | (I-1-a-1) | Ammoniumformiat | gemäß Test |
| 9 | (I-1-a-1) | Ammoniumhydrogenphosphat | gemäß Test |
| 10 | (I-1-a-1) | Ammoniumdihydrogenphosphat | gemäß Test |
| 11 | (I-1-a-1) | Ammoniumcarbonat | gemäß Test |
| 12 | (I-1-a-1) | Ammoniumbenzoat | gemäß Test |
| 13 | (I-1-a-1) | Ammoniumsulfit | gemäß Test |
| 14 | (I-1-a-1) | Ammoniumbenzoat | gemäß Test |
| 15 | (I-1-a-1) | Ammoniumhydrogenoxalat | gemäß Test |
| 16 | (I-1-a-1) | Ammoniumhydrogencitrat | gemäß Test |
| 17 | (I-1-a-1) | Ammoniumacetat | gemäß Test |
| 18 | (I-1-a-1) | Tetramethylammoniumsulfat | gemäß Test |
| 19 | (I-1-a-1) | Tetramethylammoniumlaktat | gemäß Test |
| 20 | (I-1-a-1) | Tetramethylammoniumnitrat | gemäß Test |
| 21 | (I-1-a-1) | Tetramethylammoniumthiosulfat | gemäß Test |
| 22 | (I-1-a-1) | Tetramethylammoniumthiocyanat | gemäß Test |
| 23 | (I-1-a-1) | Tetramethylammoniumcitrat | gemäß Test |
| 24 | (I-1-a-1) | Tetramethylammoniumoxalat | gemäß Test |
| 25 | (I-1-a-1) | Tetramethylammoniumformiat | gemäß Test |
| 26 | (I-1-a-1) | Tetramethylammoniumhydrogenphosphat | gemäß Test |
| 27 | (I-1-a-1) | Tetramethylammoniumdihydrogenphosphat | gemäß Test |
| 28 | (I-1-a-1) | Tetraethylammoniumsulfat | gemäß Test |
| 29 | (I-1-a-1) | Tetraethylammoniumlaktat | gemäß Test |
| 30 | (I-1-a-1) | Tetraethylammoniumnitrat | gemäß Test |
| 31 | (I-1-a-1) | Tetraethylammoniumthiosulfat | gemäß Test |
| 32 | (I-1-a-1) | Tetraethylammoniumthiocyanat | gemäß Test |
| 33 | (I-1-a-1) | Tetraethylammoniumcitrat | gemäß Test |
| 34 | (I-1-a-1) | Tetraethylammoniumoxalat | gemäß Test |
| 35 | (I-1-a-1) | Tetraethylammoniumformiat | gemäß Test |
| 36 | (I-1-a-1) | Tetraethylammoniumhydrogenphosphat | gemäß Test |
| 37 | (I-1-a-1) | Tetraethylammoniumdihydrogenphosphat | gemäß Test |
| 38 | (I-1-a-2) | Ammoniumsulfat | gemäß Test |
| 39 | (I-1-a-2) | Ammoniumlaktat | gemäß Test |
| 40 | (I-1-a-2) | Ammoniumnitrat | gemäß Test |
| 41 | (I-1-a-2) | Ammoniumthiosulfat | gemäß Test |
| 42 | (I-1-a-2) | Ammoniumthiocyanat | gemäß Test |
| 43 | (I-1-a-2) | Ammoniumcitrat | gemäß Test |
| 44 | (I-1-a-2) | Ammoniumoxalat | gemäß Test |
| 45 | (I-1-a-2) | Ammoniumformiat | gemäß Test |
| 46 | (I-1-a-2) | Ammoniumhydrogenphosphat | gemäß Test |
| 47 | (I-1-a-2) | Ammoniumdihydrogenphosphat | gemäß Test |
| 48 | (I-1-a-2) | Ammoniumcarbonat | gemäß Test |
| 49 | (I-1-a-2) | Ammoniumbenzoat | gemäß Test |
| 50 | (I-1-a-2) | Ammoniumsulfit | gemäß Test |
| 51 | (I-1-a-2) | Ammoniumbenzoat | gemäß Test |
| 52 | (I-1-a-2) | Ammoniumhydrogenoxalat | gemäß Test |
| 53 | (I-1-a-2) | Ammoniumhydrogencitrat | gemäß Test |
| 54 | (I-1-a-2) | Ammoniumacetat | gemäß Test |
| 55 | (I-1-a-2) | Tetramethylammoniumsulfat | gemäß Test |
| 56 | (I-1-a-2) | Tetramethylammoniumlaktat | gemäß Test |
| 57 | (I-1-a-2) | Tetramethylammoniumnitrat | gemäß Test |
| 58 | (I-1-a-2) | Tetramethylammoniumthiosulfat | gemäß Test |
| 59 | (I-1-a-2) | Tetramethylammoniumthiocyanat | gemäß Test |
| 60 | (I-1-a-2) | Tetramethylammoniumcitrat | gemäß Test |
| 61 | (I-1-a-2) | Tetramethylammoniumoxalat | gemäß Test |
| 62 | (I-1-a-2) | Tetramethylammoniumformiat | gemäß Test |
| 63 | (I-1-a-2) | Tetramethylammoniumhydrogenphosphat | gemäß Test |
| 64 | (I-1-a-2) | Tetramethylammoniumdihydrogenphosphat | gemäß Test |
| 65 | (I-1-a-2) | Tetraethylammoniumsulfat | gemäß Test |
| 66 | (I-1-a-2) | Tetraethylammoniumlaktat | gemäß Test |
| 67 | (I-1-a-2) | Tetraethylammoniumnitrat | gemäß Test |
| 68 | (I-1-a-2) | Tetraethylammoniumthiosulfat | gemäß Test |
| 69 | (I-1-a-2) | Tetraethylammoniumthiocyanat | gemäß Test |
| 70 | (I-1-a-2) | Tetraethylammoniumcitrat | gemäß Test |
| 71 | (I-1-a-2) | Tetraethylammoniumoxalat | gemäß Test |
| 72 | (I-1-a-2) | Tetraethylammoniumformiat | gemäß Test |
| 73 | (I-1-a-2) | Tetraethylammoniumhydrogenphosphat | gemäß Test |
| 74 | (I-1-a-2) | Tetraethylammoniumdihydrogenphosphat | gemäß Test |
| 75 | (I-1-a-3) | Ammoniumsulfat | gemäß Test |
| 76 | (I-1-a-3) | Ammoniumlaktat | gemäß Test |
| 77 | (I-1-a-3) | Ammoniumnitrat | gemäß Test |
| 78 | (I-1-a-3) | Ammoniumthiosulfat | gemäß Test |
| 79 | (I-1-a-3) | Ammoniumthiocyanat | gemäß Test |
| 80 | (I-1-a-3) | Ammoniumcitrat | gemäß Test |
| 81 | (I-1-a-3) | Ammoniumoxalat | gemäß Test |
| 82 | (I-1-a-3) | Ammoniumformiat | gemäß Test |
| 83 | (I-1-a-3) | Ammoniumhydrogenphosphat | gemäß Test |
| 84 | (I-1-a-3) | Ammoniumdihydrogenphosphat | gemäß Test |
| 85 | (I-1-a-3) | Ammoniumcarbonat | gemäß Test |
| 86 | (I-1-a-3) | Ammoniumbenzoat | gemäß Test |
| 87 | (I-1-a-3) | Ammoniumsulfit | gemäß Test |
| 88 | (I-1-a-3) | Ammoniumbenzoat | gemäß Test |
| 89 | (I-1-a-3) | Ammoniumhydrogenoxalat | gemäß Test |
| 90 | (I-1-a-3) | Ammoniumhydrogencitrat | gemäß Test |
| 91 | (I-1-a-3) | Ammoniumacetat | gemäß Test |
| 92 | (I-1-a-3) | Tetramethylammoniumsulfat | gemäß Test |
| 93 | (I-1-a-3) | Tetramethylammoniumlaktat | gemäß Test |
| 94 | (I-1-a-3) | Tetramethylammoniumnitrat | gemäß Test |
| 95 | (I-1-a-3) | Tetramethylammoniumthiosulfat | gemäß Test |
| 96 | (I-1-a-3) | Tetramethylammoniumthiocyanat | gemäß Test |
| 97 | (I-1-a-3) | Tetramethylammoniumcitrat | gemäß Test |
| 98 | (I-1-a-3) | Tetramethylammoniumoxalat | gemäß Test |
| 99 | (I-1-a-3) | Tetramethylammoniumformiat | gemäß Test |
| 100 | (I-1-a-3) | Tetramethylammoniumhydrogenphosphat | gemäß Test |
| 101 | (I-1-a-3) | Tetramethylammoniumdihydrogenphosphat | gemäß Test |
| 102 | (I-1-a-3) | Tetraethylammoniumsulfat | gemäß Test |
| 103 | (I-1-a-3) | Tetraethylammoniumlaktat | gemäß Test |
| 104 | (I-1-a-3) | Tetraethylammoniumnitrat | gemäß Test |
| 105 | (I-1-a-3) | Tetraethylammoniumthiosulfat | gemäß Test |
| 106 | (I-1-a-3) | Tetraethylammoniumthiocyanat | gemäß Test |
| 107 | (I-1-a-3) | Tetraethylammoniumcitrat | gemäß Test |
| 108 | (I-1-a-3) | Tetraethylammoniumoxalat | gemäß Test |
| 109 | (I-1-a-3) | Tetraethylammoniumformiat | gemäß Test |
| 110 | (I-1-a-3) | Tetraethylammoniumhydrogenphosphat | gemäß Test |
| 111 | (I-1-a-3) | Tetraethylammoniumdihydrogenphosphat | gemäß Test |
| 112 | (I-1-a-4) | Ammoniumsulfat | gemäß Test |
| 113 | (I-1-a-4) | Ammoniumlaktat | gemäß Test |
| 114 | (I-1-a-4) | Ammoniumnitrat | gemäß Test |
| 115 | (I-1-a-4) | Ammoniumthiosulfat | gemäß Test |
| 116 | (I-1-a-4) | Ammoniumthiocyanat | gemäß Test |
| 117 | (I-1-a-4) | Ammoniumcitrat | gemäß Test |
| 118 | (I-1-a-4) | Ammoniumoxalat | gemäß Test |
| 119 | (I-1-a-4) | Ammoniumformiat | gemäß Test |
| 120 | (I-1-a-4) | Ammoniumhydrogenphosphat | gemäß Test |
| 121 | (I-1-a-4) | Ammoniumdihydrogenphosphat | gemäß Test |
| 122 | (I-1-a-4) | Ammoniumcarbonat | gemäß Test |
| 123 | (I-1-a-4) | Ammoniumbenzoat | gemäß Test |
| 124 | (I-1-a-4) | Ammoniumsulfit | gemäß Test |
| 125 | (I-1-a-4) | Ammoniumbenzoat | gemäß Test |
| 126 | (I-1-a-4) | Ammoniumhydrogenoxalat | gemäß Test |
| 127 | (I-1-a-4) | Ammoniumhydrogencitrat | gemäß Test |
| 128 | (I-1-a-4) | Ammoniumacetat | gemäß Test |
| 129 | (I-1-a-4) | Tetramethylammoniumsulfat | gemäß Test |
| 130 | (I-1-a-4) | Tetramethylammoniumlaktat | gemäß Test |
| 131 | (I-1-a-4) | Tetramethylammoniumnitrat | gemäß Test |
| 132 | (I-1-a-4) | Tetramethylammoniumthiosulfat | gemäß Test |
| 133 | (I-1-a-4) | Tetramethylammoniumthiocyanat | gemäß Test |
| 134 | (I-1-a-4) | Tetramethylammoniumcitrat | gemäß Test |
| 135 | (I-1-a-4) | Tetramethylammoniumoxalat | gemäß Test |
| 136 | (I-1-a-4) | Tetramethylammoniumformiat | gemäß Test |
| 137 | (I-1-a-4) | Tetramethylammoniumhydrogenphosphat | gemäß Test |
| 138 | (I-1-a-4) | Tetramethylammoniumdihydrogenphosphat | gemäß Test |
| 139 | (I-1-a-4) | Tetraethylammoniumsulfat | gemäß Test |
| 140 | (I-1-a-4) | Tetraethylammoniumlaktat | gemäß Test |
| 141 | (I-1-a-4) | Tetraethylammoniumnitrat | gemäß Test |
| 142 | (I-1-a-4) | Tetraethylammoniumthiosulfat | gemäß Test |
| 143 | (I-1-a-4) | Tetraethylammoniumthiocyanat | gemäß Test |
| 144 | (I-1-a-4) | Tetraethylammoniumcitrat | gemäß Test |
| 145 | (I-1-a-4) | Tetraethylammoniumoxalat | gemäß Test |
| 146 | (I-1-a-4) | Tetraethylammoniumformiat | gemäß Test |
| 147 | (I-1-a-4) | Tetraethylammoniumhydrogenphosphat | gemäß Test |
| 148 | (I-1-a-4) | Tetraethylammoniumdihydrogenphosphat | gemäß Test |
| 149 | (I-1-a-5) | Ammoniumsulfat | gemäß Test |
| 150 | (I-1-a-5) | Ammoniumlaktat | gemäß Test |
| 151 | (I-1-a-5) | Ammoniumnitrat | gemäß Test |
| 152 | (I-1-a-5) | Ammoniumthiosulfat | gemäß Test |
| 153 | (I-1-a-5) | Ammoniumthiocyanat | gemäß Test |
| 154 | (I-1-a-5) | Ammoniumcitrat | gemäß Test |
| 155 | (I-1-a-5) | Ammoniumoxalat | gemäß Test |
| 156 | (I-1-a-5) | Ammoniumformiat | gemäß Test |
| 157 | (I-1-a-5) | Ammoniumhydrogenphosphat | gemäß Test |
| 158 | (I-1-a-5) | Ammoniumdihydrogenphosphat | gemäß Test |
| 159 | (I-1-a-5) | Ammoniumcarbonat | gemäß Test |
| 160 | (I-1-a-5) | Ammoniumbenzoat | gemäß Test |
| 161 | (I-1-a-5) | Ammoniumsulfit | gemäß Test |
| 162 | (I-1-a-5) | Ammoniumbenzoat | gemäß Test |
| 163 | (I-1-a-5) | Ammoniumhydrogenoxalat | gemäß Test |
| 164 | (I-1-a-5) | Ammoniumhydrogencitrat | gemäß Test |
| 165 | (I-1-a-5) | Ammoniumacetat | gemäß Test |
| 166 | (I-1-a-5) | Tetramethylammoniumsulfat | gemäß Test |
| 167 | (I-1-a-5) | Tetramethylammoniumlaktat | gemäß Test |
| 168 | (I-1-a-5) | Tetramethylammoniumnitrat | gemäß Test |
| 169 | (I-1-a-5) | Tetramethylammoniumthiosulfat | gemäß Test |
| 170 | (I-1-a-5) | Tetramethylammoniumthiocyanat | gemäß Test |
| 171 | (I-1-a-5) | Tetramethylammoniumcitrat | gemäß Test |
| 172 | (I-1-a-5) | Tetramethylammoniumoxalat | gemäß Test |
| 173 | (I-1-a-5) | Tetramethylammoniumformiat | gemäß Test |
| 174 | (I-1-a-5) | Tetramethylammoniumhydrogenphosphat | gemäß Test |
| 175 | (I-1-a-5) | Tetramethylammoniumdihydrogenphosphat | gemäß Test |
| 176 | (I-1-a-5) | Tetraethylammoniumsulfat | gemäß Test |
| 177 | (I-1-a-5) | Tetraethylammoniumlaktat | gemäß Test |
| 178 | (I-1-a-5) | Tetraethylammoniumnitrat | gemäß Test |
| 179 | (I-1-a-5) | Tetraethylammoniumthiosulfat | gemäß Test |
| 180 | (I-1-a-5) | Tetraethylammoniumthiocyanat | gemäß Test |
| 181 | (I-1-a-5) | Tetraethylammoniumcitrat | gemäß Test |
| 182 | (I-1-a-5) | Tetraethylammoniumoxalat | gemäß Test |
| 183 | (I-1-a-5) | Tetraethylammoniumformiat | gemäß Test |
| 184 | (I-1-a-5) | Tetraethylammoniumhydrogenphosphat | gemäß Test |
| 185 | (I-1-a-5) | Tetraethylammoniumdihydrogenphosphat | gemäß Test |
| 186 | (I-1-a-6) | Ammoniumsulfat | gemäß Test |
| 187 | (I-1-a-6) | Ammoniumlaktat | gemäß Test |
| 188 | (I-1-a-6) | Ammoniumnitrat | gemäß Test |
| 189 | (I-1-a-6) | Ammoniumthiosulfat | gemäß Test |
| 190 | (I-1-a-6) | Ammoniumthiocyanat | gemäß Test |
| 191 | (I-1-a-6) | Ammoniumcitrat | gemäß Test |
| 192 | (I-1-a-6) | Ammoniumoxalat | gemäß Test |
| 193 | (I-1-a-6) | Ammoniumformiat | gemäß Test |
| 194 | (I-1-a-6) | Ammoniumhydrogenphosphat | gemäß Test |
| 195 | (I-1-a-6) | Ammoniumdihydrogenphosphat | gemäß Test |
| 196 | (I-1-a-6) | Ammoniumcarbonat | gemäß Test |
| 197 | (I-1-a-6) | Ammoniumbenzoat | gemäß Test |
| 198 | (I-1-a-6) | Ammoniumsulfit | gemäß Test |
| 199 | (I-1-a-6) | Ammoniumbenzoat | gemäß Test |
| 200 | (I-1-a-6) | Ammoniumhydrogenoxalat | gemäß Test |
| 201 | (I-1-a-6) | Ammoniumhydrogencitrat | gemäß Test |
| 202 | (I-1-a-6) | Ammoniumacetat | gemäß Test |
| 203 | (I-1-a-6) | Tetramethylammoniumsulfat | gemäß Test |
| 204 | (I-1-a-6) | Tetramethylammoniumlaktat | gemäß Test |
| 205 | (I-1-a-6) | Tetramethylammoniumnitrat | gemäß Test |
| 206 | (I-1-a-6) | Tetramethylammoniumthiosulfat | gemäß Test |
| 207 | (I-1-a-6) | Tetramethylammoniumthiocyanat | gemäß Test |
| 208 | (I-1-a-6) | Tetramethylammoniumcitrat | gemäß Test |
| 209 | (I-1-a-6) | Tetramethylammoniumoxalat | gemäß Test |
| 210 | (I-1-a-6) | Tetramethylammoniumformiat | gemäß Test |
| 211 | (I-1-a-6) | Tetramethylammoniumhydrogenphosphat | gemäß Test |
| 212 | (I-1-a-6) | Tetramethylammoniumdihydrogenphosphat | gemäß Test |
| 213 | (I-1-a-6) | Tetraethylammoniumsulfat | gemäß Test |
| 214 | (I-1-a-6) | Tetraethylammoniumlaktat | gemäß Test |
| 215 | (I-1-a-6) | Tetraethylammoniumnitrat | gemäß Test |
| 216 | (I-1-a-6) | Tetraethylammoniumthiosulfat | gemäß Test |
| 217 | (I-1-a-6) | Tetraethylammoniumthiocyanat | gemäß Test |
| 218 | (I-1-a-6) | Tetraethylammoniumcitrat | gemäß Test |
| 219 | (I-1-a-6) | Tetraethylammoniumoxalat | gemäß Test |
| 220 | (I-1-a-6) | Tetraethylammoniumformiat | gemäß Test |
| 221 | (I-1-a-6) | Tetraethylammoniumhydrogenphosphat | gemäß Test |
| 222 | (I-1-a-6) | Tetraethylammoniumdihydrogenphosphat | gemäß Test |
| 223 | (I-1-b-1) | Ammoniumsulfat | gemäß Test |
| 224 | (I-1-b-1) | Ammoniumlaktat | gemäß Test |
| 225 | (I-1-b-1) | Ammoniumnitrat | gemäß Test |
| 226 | (I-1-b-1) | Ammoniumthiosulfat | gemäß Test |
| 227 | (I-1-b-1) | Ammoniumthiocyanat | gemäß Test |
| 228 | (I-1-b-1) | Ammoniumcitrat | gemäß Test |
| 229 | (I-1-b-1) | Ammoniumoxalat | gemäß Test |
| 230 | (I-1-b-1) | Ammoniumformiat | gemäß Test |
| 231 | (I-1-b-1) | Ammoniumhydrogenphosphat | gemäß Test |
| 232 | (I-1-b-1) | Ammoniumdihydrogenphosphat | gemäß Test |
| 233 | (I-1-b-1) | Ammoniumcarbonat | gemäß Test |
| 234 | (I-1-b-1) | Ammoniumbenzoat | gemäß Test |
| 235 | (I-1-b-1) | Ammoniumsulfit | gemäß Test |
| 236 | (I-1-b-1) | Ammoniumbenzoat | gemäß Test |
| 237 | (I-1-b-1) | Ammoniumhydrogenoxalat | gemäß Test |
| 238 | (I-1-b-1) | Ammoniumhydrogencitrat | gemäß Test |
| 239 | (I-1-b-1) | Ammoniumacetat | gemäß Test |
| 240 | (I-1-b-1) | Tetramethylammoniumsulfat | gemäß Test |
| 241 | (I-1-b-1) | Tetramethylammoniumlaktat | gemäß Test |
| 242 | (I-1-b-1) | Tetramethylammoniumnitrat | gemäß Test |
| 243 | (I-1-b-1) | Tetramethylammoniumthiosulfat | gemäß Test |
| 244 | (I-1-b-1) | Tetramethylammoniumthiocyanat | gemäß Test |
| 245 | (I-1-b-1) | Tetramethylammoniumcitrat | gemäß Test |
| 246 | (I-1-b-1) | Tetramethylammoniumoxalat | gemäß Test |
| 247 | (I-1-b-1) | Tetramethylammoniumformiat | gemäß Test |
| 248 | (I-1-b-1) | Tetramethylammoniumhydrogenphosphat | gemäß Test |
| 249 | (I-1-b-1) | Tetramethylammoniumdihydrogenphosphat | gemäß Test |
| 250 | (I-1-b-1) | Tetraethylammoniumsulfat | gemäß Test |
| 251 | (I-1-b-1) | Tetraethylammoniumlaktat | gemäß Test |
| 252 | (I-1-b-1) | Tetraethylammoniumnitrat | gemäß Test |
| 253 | (I-1-b-1) | Tetraethylammoniumthiosulfat | gemäß Test |
| 254 | (I-1-b-1) | Tetraethylammoniumthiocyanat | gemäß Test |
| 255 | (I-1-b-1) | Tetraethylammoniumcitrat | gemäß Test |
| 256 | (I-1-b-1) | Tetraethylammoniumoxalat | gemäß Test |
| 257 | (I-1-b-1) | Tetraethylammoniumformiat | gemäß Test |
| 258 | (I-1-b-1) | Tetraethylammoniumhydrogenphosphat | gemäß Test |
| 259 | (I-1-b-1) | Tetraethylammoniumdihydrogenphosphat | gemäß Test |
| 260 | (I-1-c-1) | Ammoniumsulfat | gemäß Test |
| 261 | (I-1-c-1) | Ammoniumlaktat | gemäß Test |
| 262 | (I-1-c-1) | Ammoniumnitrat | gemäß Test |
| 263 | (I-1-c-1) | Ammoniumthiosulfat | gemäß Test |
| 264 | (I-1-c-1) | Ammoniumthiocyanat | gemäß Test |
| 265 | (I-1-c-1) | Ammoniumcitrat | gemäß Test |
| 266 | (I-1-c-1) | Ammoniumoxalat | gemäß Test |
| 267 | (I-1-c-1) | Ammoniumformiat | gemäß Test |
| 268 | (I-1-c-1) | Ammoniumhydrogenphosphat | gemäß Test |
| 269 | (I-1-c-1) | Ammoniumdihydrogenphosphat | gemäß Test |
| 270 | (I-1-c-1) | Ammoniumcarbonat | gemäß Test |
| 271 | (I-1-c-1) | Ammoniumbenzoat | gemäß Test |
| 272 | (I-1-c-1) | Ammoniumsulfit | gemäß Test |
| 273 | (1-1-c-1) | Ammoniumbenzoat | gemäß Test |
| 274 | (I-1-c-1) | Ammoniumhydrogenoxalat | gemäß Test |
| 275 | (I-1-c-1) | Ammoniumhydrogencitrat | gemäß Test |
| 276 | (I-1-c-1) | Ammoniumacetat | gemäß Test |
| 277 | (I-1-c-1) | Tetramethylammoniumsulfat | gemäß Test |
| 278 | (I-1-c-1) | Tetramethylammoniumlaktat | gemäß Test |
| 279 | (I-1-c-1) | Tetramethylammoniumnitrat | gemäß Test |
| 280 | (I-1-c-1) | Tetramethylammoniumthiosulfat | gemäß Test |
| 281 | (I-1-c-1) | Tetramethylammoniumthiocyanat | gemäß Test |
| 282 | (I-1-c-1) | Tetramethylammoniumcitrat | gemäß Test |
| 283 | (I-1-c-1) | Tetramethylammoniumoxalat | gemäß Test |
| 284 | (I-1-c-1) | Tetramethylammoniumformiat | gemäß Test |
| 285 | (I-1-c-1) | Tetramethylammoniumhydrogenphosphat | gemäß Test |
| 286 | (I-1-c-1) | Tetramethylammoniumdihydrogenphosphat | gemäß Test |
| 287 | (I-1-c-1) | Tetraethylammoniumsulfat | gemäß Test |
| 288 | (I-1-c-1) | Tetraethylammoniumlaktat | gemäß Test |
| 289 | (I-1-c-1) | Tetraethylammoniumnitrat | gemäß Test |
| 290 | (I-1-c-1) | Tetraethylammoniumthiosulfat | gemäß Test |
| 291 | (I-1-c-1) | Tetraethylammoniumthiocyanat | gemäß Test |
| 292 | (I-1-c-1) | Tetraethylammoniumcitrat | gemäß Test |
| 293 | (I-1-c-1) | Tetraethylammoniumoxalat | gemäß Test |
| 294 | (I-1-c-1) | Tetraethylammoniumformiat | gemäß Test |
| 295 | (I-1-c-1) | Tetraethylammoniumhydrogenphosphat | gemäß Test |
| 296 | (I-1-c-1) | Tetraethylammoniumdihydrogenphosphat | gemäß Test |
| 297 | (I-2-a-1) | Ammoniumsulfat | gemäß Test |
| 298 | (I-2-a-1) | Ammoniumlaktat | gemäß Test |
| 299 | (I-2-a-1) | Ammoniumnitrat | gemäß Test |
| 300 | (I-2-a-1) | Ammoniumthiosulfat | gemäß Test |
| 301 | (I-2-a-1) | Ammoniumthiocyanat | gemäß Test |
| 302 | (I-2-a-1) | Ammoniumcitrat | gemäß Test |
| 303 | (I-2-a-1) | Ammoniumoxalat | gemäß Test |
| 304 | (I-2-a-1) | Ammoniumformiat | gemäß Test |
| 305 | (I-2-a-1) | Ammoniumhydrogenphosphat | gemäß Test |
| 306 | (I-2-a-1) | Ammoniumdihydrogenphosphat | gemäß Test |
| 307 | (I-2-a-1) | Ammoniumcarbonat | gemäß Test |
| 308 | (I-2-a-1) | Ammoniumbenzoat | gemäß Test |
| 309 | (I-2-a-1) | Ammoniumsulfit | gemäß Test |
| 310 | (I-2-a-1) | Ammoniumbenzoat | gemäß Test |
| 311 | (I-2-a-1) | Ammoniumhydrogenoxalat | gemäß Test |
| 312 | (I-2-a-1) | Ammoniumhydrogencitrat | gemäß Test |
| 313 | (I-2-a-1) | Ammoniumacetat | gemäß Test |
| 314 | (I-2-a-1) | Tetramethylammoniumsulfat | gemäß Test |
| 315 | (I-2-a-1) | Tetramethylammoniumlaktat | gemäß Test |
| 316 | (I-2-a-1) | Tetramethylammoniumnitrat | gemäß Test |
| 317 | (I-2-a-1) | Tetramethylammoniumthiosulfat | gemäß Test |
| 318 | (I-2-a-1) | Tetramethylammoniumthiocyanat | gemäß Test |
| 319 | (I-2-a-1) | Tetramethylammoniumcitrat | gemäß Test |
| 320 | (I-2-a-1) | Tetramethylammoniumoxalat | gemäß Test |
| 321 | (I-2-a-1) | Tetramethylammoniumformiat | gemäß Test |
| 322 | (I-2-a-1) | Tetramethylammoniumhydrogenphosphat | gemäß Test |
| 323 | (I-2-a-1) | Tetramethylammoniumdihydrogenphosphat | gemäß Test |
| 324 | (I-2-a-1) | Tetraethylammoniumsulfat | gemäß Test |
| 325 | (I-2-a-1) | Tetraethylammoniumlaktat | gemäß Test |
| 326 | (I-2-a-1) | Tetraethylammoniumnitrat | gemäß Test |
| 327 | (I-2-a-1) | Tetraethylammoniumthiosulfat | gemäß Test |
| 328 | (I-2-a-1) | Tetraethylammoniumthiocyanat | gemäß Test |
| 329 | (I-2-a-1) | Tetraethylammoniumcitrat | gemäß Test |
| 330 | (I-2-a-1) | Tetraethylammoniumoxalat | gemäß Test |
| 331 | (I-2-a-1) | Tetraethylammoniumformiat | gemäß Test |
| 332 | (I-2-a-1) | Tetraethylammoniumhydrogenphosphat | gemäß Test |
| 333 | (I-2-a-1) | Tetraethylammoniumdihydrogenphosphat | gemäß Test |
| 334 | (I-4-a-1) | Ammoniumsulfat | gemäß Test |
| 335 | (I-4-a-1) | Ammoniumlaktat | gemäß Test |
| 336 | (I-4-a-1) | Ammoniumnitrat | gemäß Test |
| 337 | (I-4-a-1) | Ammoniumthiosulfat | gemäß Test |
| 338 | (I-4-a-1) | Ammoniumthiocyanat | gemäß Test |
| 339 | (I-4-a-1) | Ammoniumcitrat | gemäß Test |
| 340 | (I-4-a-1) | Ammoniumoxalat | gemäß Test |
| 341 | (I-4-a-1) | Ammoniumformiat | gemäß Test |
| 342 | (I-4-a-1) | Ammoniumhydrogenphosphat | gemäß Test |
| 343 | (I-4-a-1) | Ammoniumdihydrogenphosphat | gemäß Test |
| 344 | (I-4-a-1) | Ammoniumcarbonat | gemäß Test |
| 345 | (I-4-a-1) | Ammoniumbenzoat | gemäß Test |
| 346 | (I-4-a-1) | Ammoniumsulfit | gemäß Test |
| 347 | (I-4-a-1) | Ammoniumbenzoat | gemäß Test |
| 348 | (I-4-a-1) | Ammoniumhydrogenoxalat | gemäß Test |
| 349 | (I-4-a-1) | Ammoniumhydrogencitrat | gemäß Test |
| 350 | (I-4-a-1) | Ammoniumacetat | gemäß Test |
| 351 | (I-4-a-1) | Tetramethylammoniumsulfat | gemäß Test |
| 352 | (I-4-a-1) | Tetramethylammoniumlaktat | gemäß Test |
| 353 | (I-4-a-1) | Tetramethylammoniumnitrat | gemäß Test |
| 354 | (I-4-a-1) | Tetramethylammoniumthiosulfat | gemäß Test |
| 355 | (I-4-a-1) | Tetramethylammoniumthiocyanat | gemäß Test |
| 356 | (I-4-a-1) | Tetramethylammoniumcitrat | gemäß Test |
| 357 | (I-4-a-1) | Tetramethylammoniumoxalat | gemäß Test |
| 358 | (I-4-a-1) | Tetramethylammoniumformiat | gemäß Test |
| 359 | (I-4-a-1) | Tetramethylammoniumhydrogenphosphat | gemäß Test |
| 360 | (I-4-a-1) | Tetramethylammoniumdihydrogenphosphat | gemäß Test |
| 361 | (I-4-a-1) | Tetraethylammoniumsulfat | gemäß Test |
| 362 | (I-4-a-1) | Tetraethylammoniumlaktat | gemäß Test |
| 363 | (I-4-a-1) | Tetraethylammoniumnitrat | gemäß Test |
| 364 | (I-4-a-1) | Tetraethylammoniumthiosulfat | gemäß Test |
| 365 | (I-4-a-1) | Tetraethylammoniumthiocyanat | gemäß Test |
| 366 | (I-4-a-1) | Tetraethylammoniumcitrat | gemäß Test |
| 367 | (I-4-a-1) | Tetraethylammoniumoxalat | gemäß Test |
| 368 | (I-4-a-1) | Tetraethytammoniumformiat | gemäß Test |
| 369 | (I-4-a-1) | Tetraethylammoniumhydrogenphosphat | gemäß Test |
| 370 | (I-4-a-1) | Tetraethylammoniumdihydrogenphosphat | gemäß Test |
| 371 | (I-6-a-1) | Ammoniumsulfat | gemäß Test |
| 372 | (I-6-a-1) | Ammoniumlaktat | gemäß Test |
| 373 | (I-6-a-1) | Ammoniumnitrat | gemäß Test |
| 374 | (I-6-a-1) | Ammoniumthiosulfat | gemäß Test |
| 375 | (I-6-a-1) | Ammoniumthiocyanat | gemäß Test |
| 376 | (I-6-a-1) | Ammoniumcitrat | gemäß Test |
| 377 | (I-6-a-1) | Ammoniumoxalat | gemäß Test |
| 378 | (I-6-a-1) | Ammoniumformiat | gemäß Test |
| 379 | (I-6-a-1) | Ammoniumhydrogenphosphat | gemäß Test |
| 380 | (I-6-a-1) | Ammoniumdihydrogenphosphat | gemäß Test |
| 381 | (I-6-a-1) | Ammoniumcarbonat | gemäß Test |
| 382 | (I-6-a-1) | Ammoniumbenzoat | gemäß Test |
| 383 | (I-6-a-1) | Ammoniumsulfit | gemäß Test |
| 384 | (I-6-a-1) | Ammoniumbenzoat | gemäß Test |
| 385 | (I-6-a-1) | Ammoniumhydrogenoxalat | gemäß Test |
| 386 | (I-6-a-1) | Ammoniumhydrogencitrat | gemäß Test |
| 387 | (I-6-a-1) | Ammoniumacetat | gemäß Test |
| 388 | (I-6-a-1) | Tetramethylammoniumsulfat | gemäß Test |
| 389 | (I-6-a-1) | Tetramethylammoniumlaktat | gemäß Test |
| 390 | (I-6-a-1) | Tetramethylammoniumnitrat | gemäß Test |
| 391 | (I-6-a-1) | Tetramethylammoniumthiosulfat | gemäß Test |
| 392 | (I-6-a-1) | Tetramethylammoniumthiocyanat | gemäß Test |
| 393 | (I-6-a-1) | Tetramethylammoniumcitrat | gemäß Test |
| 394 | (I-6-a-1) | Tetramethylammoniumoxalat | gemäß Test |
| 395 | (I-6-a-1) | Tetramethylammoniumformiat | gemäß Test |
| 396 | (I-6-a-1) | Tetramethylammoniumhydrogenphosphat | gemäß Test |
| 397 | (I-6-a-1) | Tetramethylammoniumdihydrogenphosphat | gemäß Test |
| 398 | (I-6-a-1) | Tetraethylammoniumsulfat | gemäß Test |
| 399 | (I-6-a-1) | Tetraethylammoniumlaktat | gemäß Test |
| 400 | (I-6-a-1) | Tetraethylammoniumnitrat | gemäß Test |
| 401 | (I-6-a-1) | Tetraethylammoniumthiosulfat | gemäß Test |
| 402 | (I-6-a-1) | Tetraethylammoniumthiocyanat | gemäß Test |
| 403 | (I-6-a-1) | Tetraethylammoniumcitrat | gemäß Test |
| 404 | (I-6-a-1) | Tetraethylammoniumoxalat | gemäß Test |
| 405 | (I-6-a-1) | Tetraethylammoniumformiat | gemäß Test |
| 406 | (I-6-a-1) | Tetraethylammoniumhydrogenphosphat | gemäß Test |
| 407 | (I-6-a-1) | Tetraethylammoniumdihydrogenphosphat | gemäß Test |
| 408 | (I-6-a-2) | Ammoniumsulfat | gemäß Test |
| 409 | (I-6-a-2) | Ammoniumlaktat | gemäß Test |
| 410 | (I-6-a-2) | Ammoniumnitrat | gemäß Test |
| 411 | (I-6-a-2) | Ammoniumthiosulfat | gemäß Test |
| 412 | (I-6-a-2) | Ammoniumthiocyanat | gemäß Test |
| 413 | (I-6-a-2) | Ammoniumcitrat | gemäß Test |
| 414 | (I-6-a-2) | Ammoniumoxalat | gemäß Test |
| 415 | (I-6-a-2) | Ammoniumformiat | gemäß Test |
| 416 | (I-6-a-2) | Ammoniumhydrogenphosphat | gemäß Test |
| 417 | (I-6-a-2) | Ammoniumdihydrogenphosphat | gemäß Test |
| 418 | (I-6-a-2) | Ammoniumcarbonat | gemäß Test |
| 419 | (I-6-a-2) | Ammoniumbenzoat | gemäß Test |
| 420 | (I-6-a-2) | Ammoniumsulfit | gemäß Test |
| 421 | (I-6-a-2) | Ammoniumbenzoat | gemäß Test |
| 422 | (I-6-a-2) | Ammoniumhydrogenoxalat | gemäß Test |
| 423 | (I-6-a-2) | Ammoniumhydrogencitrat | gemäß Test |
| 424 | (I-6-a-2) | Ammoniumacetat | gemäß Test |
| 425 | (I-6-a-2) | Tetramethylammoniumsulfat | gemäß Test |
| 426 | (I-6-a-2) | Tetramethylammoniumlaktat | gemäß Test |
| 427 | (I-6-a-2) | Tetramethylammoniumnitrat | gemäß Test |
| 428 | (I-6-a-2) | Tetramethylammoniunithiosulfat | gemäß Test |
| 429 | (I-6-a-2) | Tetramethylammoniumthiocyanat | gemäß Test |
| 430 | (I-6-a-2) | Tetramethylammoniumcitrat | gemäß Test |
| 431 | (I-6-a-2) | Tetramethylammoniumoxalat | gemäß Test |
| 432 | (I-6-a-2) | Tetramethylammoniumformiat | gemäß Test |
| 433 | (I-6-a-2) | Tetramethylammoniumhydrogenphosphat | gemäß Test |
| 434 | (I-6-a-2) | Tetramethylammoniumdihydrogenphosphat | gemäß Test |
| 435 | (I-6-a-2) | Tetraethylammoniumsulfat | gemäß Test |
| 436 | (I-6-a-2) | Tetraethylammoniumlaktat | gemäß Test |
| 437 | (I-6-a-2) | Tetraethylammoniumnitrat | gemäß Test |
| 438 | (I-6-a-2) | Tetraethylammoniumthiosulfat | gemäß Test |
| 439 | (I-6-a-2) | Tetraethylammoniumthiocyanat | gemäß Test |
| 440 | (I-6-a-2) | Tetraethylammoniumcitrat | gemäß Test |
| 441 | (I-6-a-2) | Tetraethylammoniumoxalat | gemäß Test |
| 442 | (I-6-a-2) | Tetraethylammoniumformiat | gemäß Test |
| 443 | (I-6-a-2) | Tetraethylammoniumhydrogenphosphat | gemäß Test |
| 444 | (I-6-a-2) | Tetraethylammoniumdihydrogenphosphat | gemäß Test |
| 445 | (I-8-a-1) | Ammoniumsulfat | gemäß Test |
| 446 | (I-8-a-1) | Ammoniumlaktat | gemäß Test |
| 447 | (I-8-a-1) | Ammoniumnitrat | gemäß Test |
| 448 | (I-8-a-1) | Ammoniumthiosulfat | gemäß Test |
| 449 | (I-8-a-1) | Ammoniumthiocyanat | gemäß Test |
| 450 | (I-8-a-1) | Ammoniumcitrat | gemäß Test |
| 451 | (I-8-a-1) | Ammoniumoxalat | gemäß Test |
| 452 | (I-8-a-1) | Ammoniumformiat | gemäß Test |
| 453 | (I-8-a-1) | Ammoniumhydrogenphosphat | gemäß Test |
| 454 | (I-8-a-1) | Ammoniumdihydrogenphosphat | gemäß Test |
| 455 | (I-8-a-1) | Ammoniumcarbonat | gemäß Test |
| 456 | (I-8-a-1) | Ammoniumbenzoat | gemäß Test |
| 457 | (I-8-a-1) | Ammoniumsulfit | gemäß Test |
| 458 | (I-8-a-1) | Ammoniumbenzoat | gemäß Test |
| 459 | (I-8-a-1) | Ammoniumhydrogenoxalat | gemäß Test |
| 460 | (I-8-a-1) | Ammoniumhydrogencitrat | gemäß Test |
| 461 | (I-8-a-1) | Ammoniumacetat | gemäß Test |
| 462 | (I-8-a-1) | Tetramethylammoniumsulfat | gemäß Test |
| 463 | (I-8-a-1) | Tetramethylammoniumlaktat | gemäß Test |
| 464 | (I-8-a-1) | Tetramethylammoniumnitrat | gemäß Test |
| 465 | (I-8-a-1) | Tetramethylammoniumthiosulfat | gemäß Test |
| 466 | (I-8-a-1) | Tetramethylammoniumthiocyanat | gemäß Test |
| 467 | (I-8-a-1) | Tetramethylammoniumcitrat | gemäß Test |
| 468 | (I-8-a-1) | Tetramethytammoniumoxalat | gemäß Test |
| 469 | (I-8-a-1) | Tetramethylammoniumformiat | gemäß Test |
| 470 | (I-8-a-1) | Tetramethylammoniumhydrogenphosphat | gemäß Test |
| 471 | (I-8-a-1) | Tetramethylammoniumdihydrogenphosphat | gemäß Test |
| 472 | (I-8-a-1) | Tetraethylammoniumsulfat | gemäß Test |
| 473 | (I-8-a-1) | Tetraethylammoniumlaktat | gemäß Test |
| 474 | (I-8-a-1) | Tetraethylammoniumnitrat | gemäß Test |
| 475 | (I-8-a-1) | Tetraethylammoniumthiosulfat | gemäß Test |
| 476 | (I-8-a-1) | Tetraethylammoniumthiocyanat | gemäß Test |
| 477 | (I-8-a-1) | Tetraethylammoniumcitrat | gemäß Test |
| 478 | (I-8-a-1) | Tetraethylammoniumoxalat | gemäß Test |
| 479 | (I-8-a-1) | Tetraethylammoniumformiat | gemäß Test |
| 480 | (I-8-a-1) | Tetraethylammoniumhydrogenphosphat | gemäß Test |
| 481 | (I-8-a-1) | Tetraethylammoniumdihydrogenphosphat | gemäß Test |
| 482 | (I-8-a-1) | Ammoniumsulfat | gemäß Test |
| 483 | (I-8-a-1) | Ammoniumlaktat | gemäß Test |
| 484 | (I-8-a-1) | Ammoniumnitrat | gemäß Test |
| 485 | (I-8-a-1) | Ammoniumthiosulfat | gemäß Test |
| 486 | (I-8-a-1) | Ammoniumthiocyanat | gemäß Test |
| 487 | (I-8-a-1) | Ammoniumcitrat | gemäß Test |
| 488 | (I-8-a-1) | Ammoniumoxalat | gemäß Test |
| 489 | (I-8-b-1) | Ammoniumformiat | gemäß Test |
| 490 | (I-8-a-1) | Ammoniumhydrogenphosphat | gemäß Test |
| 491 | (I-8-a-1) | Ammoniumdihydrogenphosphat | gemäß Test |
| 492 | (I-8-a-1) | Ammoniumcarbonat | gemäß Test |
| 493 | (I-8-b-1) | Ammoniumbenzoat | gemäß Test |
| 494 | (I-8-b-1) | Ammoniumsulfit | gemäß Test |
| 495 | (I-8-b-1) | Ammoniumbenzoat | gemäß Test |
| 496 | (I-8-b-1) | Ammoniumhydrogenoxalat | gemäß Test |
| 497 | (I-8-b-1) | Ammoniumhydrogencitrat | gemäß Test |
| 498 | (I-8-b-1) | Ammoniumacetat | gemäß Test |
| 499 | (I-8-b-1) | Tetramethylammoniumsulfat | gemäß Test |
| 500 | (I-8-b-1) | Tetramethylammoniumlaktat | gemäß Test |
| 501 | (I-8-a-1) | Tetramethylammoniumnitrat | gemäß Test |
| 502 | (I-8-a-1) | Tetramethylammoniumthiosulfat | gemäß Test |
| 503 | (I-8-b-1) | Tetramethylammoniumthiocyanat | gemäß Test |
| 504 | (I-8-b-1) | Tetramethylammoniumcitrat | gemäß Test |
| 505 | (I-8-b-1) | Tetramethylammoniumoxalat | gemäß Test |
| 506 | (I-8-b-1) | Tetramethylammoniumformiat | gemäß Test |
| 507 | (I-8-b-1) | Tetramethylammoniumhydrogenphosphat | gemäß Test |
| 508 | (I-8-b-1) | Tetramethylammoniumdihydrogenphosphat | gemäß Test |
| 509 | (I-8-b-1) | Tetraethylammoniumsulfat | gemäß Test |
| 510 | (I-8-b-1) | Tetraethylammoniumlaktat | gemäß Test |
| 511 | (I-8-b-1) | Tetraethylammoniumnitrat | gemäß Test |
| 512 | (I-8-b-1) | Tetraethylammoniumthiosulfat | gemäß Test |
| 513 | (I-8-b-1) | Tetraethylammoniumthiocyanat | gemäß Test |
| 514 | (I-8-b-1) | Tetraethylammoniumcitrat | gemäß Test |
| 515 | (I-8-b-1) | Tetraethylammoniumoxalat | gemäß Test |
| 516 | (I-8-a-1) | Tetraethylammoniumformiat | gemäß Test |
| 517 | (I-8-b-1) | Tetraethylammoniumhydrogenphosphat | gemäß Test |
| 518 | (I-8-a-1) | Tetraethylammoniumdihydrogenphosphat | gemäß Test |

Erfindungsgemäße Pflanzenschutzmittel können auch weitere Komponente, beispielsweise Tenside bzw. Dispergierhilfsmittel oder Emulgatoren enthalten.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Erfindungsgemäße Zusammensetzungen können außerdem neben mindestens einer Verbindung der Formel (I) mindestens einen weiteren herbiziden Wirkstoff enthalten, bevorzugt aus der Gruppe bestehend aus Acetochlor, Acifluorfen (-sodium), Aclonifen, Alachlor, Alloxydim (-sodium), A-metryne, Amicarbazone, Amidochlor, Amidosulfuron, Aminopyralid, Anilofos, Asulam, Atrazine, Azafenidin, Azimsulfuron, Beflubutamid, Benazolin (-ethyl), Benfuresate, Bensulfuron (-methyl), Bentazon, Bencarbazone, Benzfendizone, Benzobicyclon, Benzofenap, Benzoylprop (-ethyl), Bialaphos, Bifenox, Bispyribac (-sodium), Bromobutide, Bromofenoxim, Bromoxynil, Butachlor, Butafenacil (-allyl), Butroxydim, Butylate, Cafenstrole, Caloxydim, Carbetamide, Carfentrazone (-ethyl), Chlomethoxyfen, Chloramben, Chloridazon, Chlorimuron (-ethyl), Chlornitrofen, Chlorsulfuron, Chlortoluron, Cinidon (-ethyl), Cinmethylin, Cinosulfuron, Clefoxydim, Clethodim, Clodinafop (-propargyl), Clomazone, Clomeprop, Clopyralid, Clopyrasulfuron (-methyl), Cloransulam (-methyl), Cumyluron, Cyanazine, Cybutryne, Cycloate, Cyclosulfamuron, Cycloxydim, Cyhalofop (-butyl), 2,4-D, 2,4-DB, Desmedipham, Diallate, Dicamba, Dichlorprop (-P), Diclofop (-methyl), Diclosulam, Diethatyl (-ethyl), Difenzoquat, Diflufenican, Diflufenzopyr, Dimefuron, Dimepiperate, Dimethachlor, Dimethametryn, Dimethenamid, Dimexyflam, Dinitramine, Diphenamid, Diquat, Dithiopyr, Diuron, Dymron, Epropodan, EPTC, Esprocarb, Ethalfluralin, Ethametsulfuron (-methyl), Ethofumesate, Ethoxyfen, Ethoxysulfuron, Etobenzanid, Fenoxaprop (-P-ethyl), Fentrazamide, Flamprop (-isopropyl, -isopropyl-L, -methyl), Flazasulfuron, Florasulam, Fluazifop (-P-butyl), Fluazolate, Flucarbazone (-sodium), Flufenacet, Flumetsulam, Flumiclorac (-pentyl), Flumioxazin, Flumipropyn, Flumetsulam, Fluometuron, Fluorochloridone, Fluoroglycofen (-ethyl), Flupoxam, Flupropacil, Flurpyrsulfuron (-methyl, -sodium), Flurenol (-butyl), Fluridone, Fluroxypyr (-butoxypropyl, -meptyl), Flurprimidol, Flurtamone, Fluthiacet (-methyl), Fluthiamide, Fomesafen, Foramsulfuron, Glufosinate (-ammonium), Glyphosate (-isopropylammonium), Halosafen, Haloxyfop (-ethoxyethyl, -P-methyl), Hexazinone, HOK-201, Imazamethabenz -methyl), Imazamethapyr, Imazamox, Imazapic, Imazapyr, Imazaquin, Imazethapyr, Imazosulfuron, Iodosulfuron (-methyl, -sodium), Ioxynil, Isopropalin, Isoproturon, Isouron, Isoxaben, Isoxachlortole, Isoxaflutole, Isoxapyrifop, Lactofen, Lenacil, Linuron, MCPA, Mecoprop, Mefenacet, Mesosulfurone, Mesotrione, Metamifop, Metamitron, Metazachlor, Methabenzthiazuron, Metobenzuron, Metobromuron, (alpha-) Metolachlor, Metosulam, Metoxuron, Metribuzin, Metsulfuron (-methyl), Molinate, Monolinuron, Naproanilide, Napropamide, Neburon, Nicosulfuron, Norflurazon, Orbencarb, Orthosulfamuron, Oryzalin, Oxadiargyl, Oxadiazon, Oxasulfuron, Oxaziclomefone, Oxyfluorfen, Paraquat, Pelargonsäure, Pendimethalin, Pendralin, Penoxsulam, Pentoxazone, Phenmedipham, Picolinafen, Pinoxaden, Piperophos, Pretilachlor, Primisulfuron (-methyl), Profluazol, Prometryn, Propachlor, Propanil, Propaquizafop, Propisochlor, Propoxycarbazone (-sodium), Propyzamide, Prosulfocarb, Prosulfuron, Pyraflufen (-ethyl), Pyrasulfotole, Pyrazogyl, Pyrazolate, Pyrazosulfuron (-ethyl), Pyrazoxyfen, Pyribenzoxim, Pyributicarb, Pyridate, Pyridatol, Pyriftalid, Pyriminobac (-methyl), Pyrimisulfan, Pyrithiobac (-sodium), Pyroxasulfone, Quinchlorac, Quinmerac, Quinoclamine, Quizalofop (-P-ethyl, -P-tefuryl), Rimsulfuron, Sethoxydim, Simazine, Simetryn, Sulcotrione, Sulfentrazone, Sulfometuron (-methyl), Sulfosate, Sulfosulfuron, Tebutam, Tebuthiuron, Tembotrione, Tepraloxydim, Terbuthylazine, Terbutryn, Thenylchlor, Thiafluamide, Thiazopyr, Thidiazimin, Thifensulfuron (-methyl), Thiobencarb, Tiocarbazil, Topramezone, Tralkoxydim, Triallate, Triasulfuron, Tribenuron (-methyl), Triclopyr, Tridiphane, Trifluralin, Trifloxysulfuron, Triflusulfuron (-methyl), Tritosulfuron und den folgenden vier Verbindungen

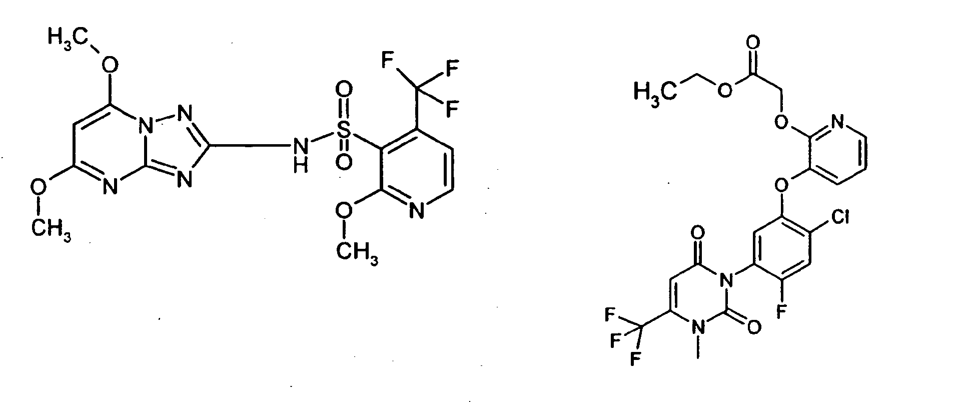

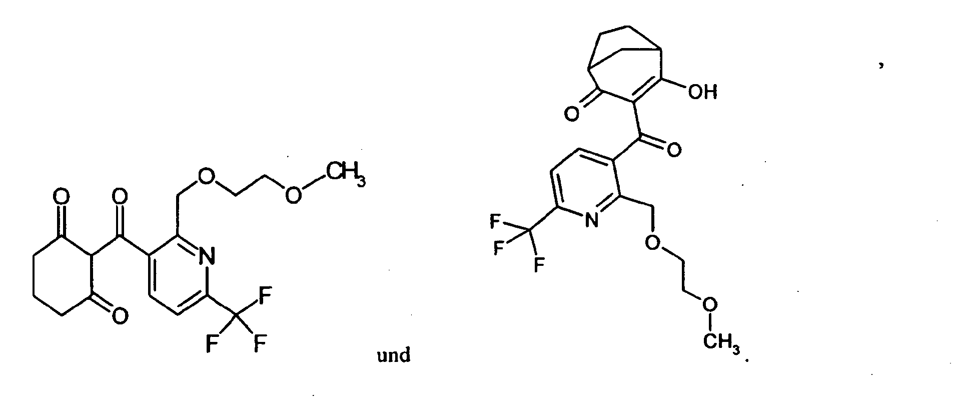

Die folgenden Beispiele dienen zur Verdeutlichung der Erfindung und sind in keiner Weise beschränkend auszulegen.

### Gewächshausversuche zur Wirkungssteigerung durch Ammonium-/Phosphoniumsalze

Samen von mono- und dikotylen Unkräutern bzw. Kulturpflanzen werden in Holzfasertöpfen oder in Plastiktöpfen in sandigem Lehmboden ausgelegt, mit Erde abgedeckt und im Gewächshaus, während der Vegetationsperiode auch im Freien ausserhalb des Gewächshauses, unter guten Wachstumsbedingungen angezogen. 2-3 Wochen nach der Aussaat werden die Versuchspflanzen im Ein- bis Drei-Blattstadium behandelt. Die als Spritzpulver (WP) oder Flüssigkeit (EC) formulierten Testverbindungen werden in verschiedenen Dosierungen mit einer Wasseraufwandmenge von umgerechnet 300 l/ha unter Zusatz von Penetratinosförderern (0,2 bis 0,4%) und gegebenenfalls eines Ammoniumsalzes auf die Pflanzen und die Bodenoberfläche gespritzt. Nach ca. 3 bis 4 Wochen Standzeit der Versuchspflanzen im Gewächshaus unter optimalen Wachstumsbedingungen wurde die Wirkung der Präparate visuell im Vergleich zu unbehandelten Kontrollen bonitiert (Wirkung in %, d. h. 0% = keine Wirkung bzw. wie Kontrolle, 100% = alle Pflanzen abgestorben).

Für Rapsölmethylester (RME) werden in den folgenden Tabellen Konzentrationsangaben in Vol.-% a.i. gemacht, für Ammoniumsulfat (AMS) in g/l in der Spritzbrühe.

### Beispiel 1

Folgende Verbindungen zeigten in einem Versuch in den angegebenen Aufwandmengen gegen Setaria viridis (SETVI), eine Wirkungssteigerung mit Ammoniumsulfat:

**Tabelle 1**

| **Wirksttoff** | **Aufwandmenge / g/ha** | **Zusatz** | **Wirkung/%** |
|---|---|---|---|
| I-1-a-1 | 50 | RME (0,25%) | 40 |
| I-1-a-1 | 50 | RME (0,25%) | 50 |
| | | AMS (3,3 g/l) | |
| I-1-a-1 | 25 | RME (0,25%) | 30 |
| I-1-a-1 | 25 | RME (0,25%) | 50 |
| | | AMS (3,3 g/l) | |
| | | | |
| I-1-a-2 | 50 | RME(0,25%) | 50 |
| I-1-a-2 | 50 | RME (0,25%) | 93 |
| | | AMS (3,3 g/l) | |
| I-1-a-2 | 25 | RME (0,25%) | 20 |
| I-1-a-2 | 25 | RME (0,25%) | 90 |
| | | AMS (3,3 g/l) | |
| I-1-a-2 | 12,5 | RME(0,25%) | 5 |
| I-1-a-2 | 12,5 | RME(0,25%) | 60 |
| | | AMS (3,3 g/l) | |
| | | | |
| I-1-a-3 | 100 | RME (0,25%) | 93 |
| I-1-a-3 | 100 | RME (0,25%) | 99 |
| | | AMS (3,3 g/l) | |
| I-1-a-3 | 50 | RME (0,25%) | 93 |
| I-1-a-3 | 50 | RME (0,25%) | 95 |
| | | AMS (3,3 g/l) | |
| I-1-a-3 | 25 | RME (0,25%) | 15 |
| I-1-a-3 | 25 | RME (0,25%) | 70 |
| | | AMS (3,3 g/l) | |
| | | | |
| I-4-a-1 | 100 | RME (0,25%) | 0 |
| I-4-a-1 | 100 | RME (0,25%) | 90 |
| | | AMS (3,3 g/l) | |
| I-4-a-1 | 50 | RME (0,25%) | 0 |
| I-4-a-1 | 50 | RME (0,25%) | 90 |
| | | AMS (3,3 g/l) | |
| I-4-a-1 | 25 | RME (0,25%) | 0 |
| I-4-a-1 | 25 | RME (0,25%) | 20 |
| | | AMS (3,3 g/l) | |
| | | | |
| I-6-a-1 | 50 | RME (0,25%) | 25 |
| I-6-a-1 | 50 | RME (0,25%) | 90 |
| | | AMS (3,3 g/l) | |
| I-6-a-1 | 25 | RME (0,25%) | 15 |
| I-6-a-1 | 25 | RME (0,25%) | 90 |
| | | AMS (3,3 g/l) | |
| I-6-a-1 | 12,5 | RME (0,25%) | 0 |
| I-6-a-1 | 12,5 | RME (0,25%) | 25 |
| | | AMS (3,3 g/l) | |

### Beispiel 2

Folgende Verbindungen zeigten in einem Versuch gegen
ALOMY = Alopecurus myosuroides
AVEFA = Avena fatua
LOLMU = Lolium multiflorum
LOLRI = Lolium rigidum
eine Wirkungssteigerung mit Ammoniumsulfat (AMS)

**Tabelle 2**

| Wirkstoff | Aufwandmenge /g/ha | Zusatz | Wirkung gegen | Wirkung/% |
|---|---|---|---|---|
| I-8-a-1 | 25 | RME (0,25%) | ALOMY | 50 |
| I-8-a-1 | 25 | RME (0,25%) | ALOMY | 70 |
| | | AMS (3,3 g/l) | | |
| I-8-a-1 | 12,5 | RME (0,25%) | ALOMY | 5 |
| I-8-a-1 | 12,5 | RME (0,25%) | ALOMY | 50 |
| | | AMS (3,3 g/l) | | |
| | | | | |
| I-8-a-1 | 25 | RME (0,25%) | AVEFA | 40 |
| I-8-a-1 | 25 | RME (0,25%) | AVEFA | 80 |
| | | AMS (3,3 g/l) | | |
| I-8-a-1 | 12,5 | RME (0,25%) | AVEFA | 30 |
| I-8-a-1 | 12,5 | RME (0,25%) | AVEFA | 70 |
| | | AMS (3,3 g/l) | | |
| | | | | |
| I-8-a-1 | 25 | RME (0,25%) | LOLMU | 80 |
| I-8-a-1 | 25 | RME (0,25%) | LOLMU | 95 |
| | | AMS (3,3 g/l) | | |
| I-8-a-1 | 12,5 | RME (0,25%) | LOLMU | 10 |
| I-8-a-1 | 12,5 | RME (0,25%) | LOLMU | 70 |
| | | AMS (3,3 g/l) | | |
| | | | | |
| I-1-a-4 | 50 | RME (0,25%) | ALOMY | 5 |
| I-1-a-4 | 50 | RME (0,25%) | ALOMY | 70 |
| | | AMS (3,3 g/l) | | |
| I-1-a-4 | 25 | RME (0,25%) | ALOMY | 3 |
| I-1-a-4 | 25 | RME (0,25%) | ALOMY | 50 |
| | | AMS (3,3 g/l) | | |
| | | | | |
| I-1-a-4 | 50 | RME (0,25%) | AVEFA | 5 |
| I-1-a-4 | 50 | RME (0,25%) | AVEFA | 30 |
| | | AMS (3,3 g/l) | | |
| I-1-a-4 | 25 | RME (0,25%) | AVEFA | 3 |
| I-1-a-4 | 25 | RME (0,25%) | AVEFA | 10 |
| | | AMS (3,3 g/l) | | |
| | | | | |
| I-1-a-4 | 50 | RME (0,25%) | LOLMU | 5 |
| I-1-a-4 | 50 | RME (0,25%) | LOLMU | 90 |
| | | AMS (3,3 g/l) | | |
| I-1-a-4 | 25 | RME (0,25%) | LOLMU | 2 |
| I-1-a-4 | 25 | RME (0,25%) | LOLMU | 75 |
| | | AMS (3,3 g/l) | | |
| | | | | |
| I-1-b-1 | 50 | RME (0,25%) | ALOMY | 20 |
| I-1-b-1 | 50 | RME (0,25%) | ALOMY | 75 |
| | | AMS (3,3 g/l) | | |
| I-1-b-1 | 25 | RME (0,25%) | ALOMY | 5 |
| I-1-b-1 | 25 | RME (0,25%) | ALOMY | 25 |
| | | AMS (3,3 g/l) | | |
| | | | | |
| I-1-b-1 | 50 | RME (0,25%) | AVEFA | 50 |
| I-1-b-1 | 50 | RME (0,25%) | AVEFA | 60 |
| | | AMS (3,3 g/l) | | |
| I-1-b-1 | 25 | RME (0,25%) | AVEFA | 15 |
| I-1-b-1 | 25 | RME (0,25%) | AVEFA | 60 |
| | | AMS (3,3 g/l) | | |
| | | | | |
| I-1-b-1 | 50 | RME (0,25%) | LOLMU | 10 |
| I-1-b-1 | 50 | RME (0,25%) | LOLMU | 75 |
| | | AMS (3,3 g/l) | | |
| I-1-b-1 | 25 | RME (0,25%) | LOLMU | 10 |
| I-1-b-1 | 25 | RME (0,25%) | LOLMU | 25 |
| | | AMS (3,3 g/l) | | |
| | | | | |
| I-6-a-2 | 25 | RME (0,25%) | ALOMY | 30 |
| I-6-a-2 | 25 | RME (0,25%) | ALOMY | 93 |
| | | AMS (3,3 g/l) | | |
| I-6-a-2 | 12,5 | RME (0,25%) | ALOMY | 10 |
| I-6-a-2 | 12,5 | RME (0,25%) | ALOMY | 75 |
| | | AMS (3,3 g/l) | | |
| | | | | |
| I-6-a-2 | 25 | RME (0,25%) | AVEFA | 35 |
| I-6-a-2 | 25 | RME (0,25%) | AVEFA | 99 |
| | | AMS (3,3 g/l) | | |
| I-6-a-2 | 12,5 | RME (0,25%) | AVEFA | 10 |
| I-6-a-2 | 12,5 | RME (0,25%) | AVEFA | 93 |
| | | AMS (3,3 g/l) | | |
| | | | | |
| I-6-a-2 | 25 | RME (0,25%) | LOLMU | 20 |
| I-6-a-2 | 25 | RME (0,25%) | LOLMU | 100 |
| | | AMS (3,3 g/l) | | |
| I-6-a-2 | 12,5 | RME (0,25%) | LOLMU | 5 |
| I-6-a-2 | 12,5 | RME (0,25%) | LOLMU | |
| | | AMS (3,3 g/l) | | 97 |
| | | | | |
| I-8-b-1 | 50 | RME (0,25%) | ALOMY | 90 |
| I-8-b-1 | 50 | ARME (0,25%) | ALOMY 95 | |
| | | AMS (3,3 g/l) | | |
| I-8-b-1 | 25 | RME (0,25%) | ALOMY | 20 |
| I-8-b-1 25 | | RME (0,25%) | ALOMY | 80 |
| | | AMS (3,3 g/l) | | |
| | | | | |
| I-8-b-1 | 50 | RME (0,25%) | AVEFA | 70 |
| I-8-b-1 | 50 | RME (0,25%) | AVEFA | 97 |
| | | AMS (3,3 g/l) | | |
| 1-8-b-1 | 25 | RME (0,25%) | AVEFA | 30 |
| I-8-b-1 | 25 | RME (0,25%) | AVEFA | 80 |
| | | AMS (3,3 g/l) | | |
| | | | | |
| I-8-b-1 | 50 | RME (0,25%) | LOLMU | 97 |
| I-8-b-1 | 50 | RME (0,25%) | LOLMU | 100 |
| | | AMS (3,3 g/l) | | |
| I-8-b-1 | 25 | RME (0,25%) | LOLMU | 60 |
| I-8-b-1 | 25 | RME (0,25%) | LOLMU | 93 |
| | | AMS (3,3 g/l) | | |
| | | | | |
| I-2-a-1 | 100 | RME(0,25%) | ALOMY | 30 |
| I-2-a-1 | 100 | RME (0,25%) | ALOMY | 70 |
| | | AMS (6,6 g/l) | | |
| I-2-a-1 | 50 | RME (0,25%) | ALOMY | 30 |
| I-2-a-1 | 50 | RME (0,25%) | ALOMY | 70 |
| | | AMS (6,6 g/l) | | |
| | | | | |
| I-2-a-1 | 50 | RME (0,25%) | LOLMU | 70 |
| I-2-a-1 | 50 | RME (0,25%) | LOLMU | 98 |
| | | AMS (6,6 g/l) | | |
| I-2-a-1 | 25 | RME (0,25%) | LOLMU | 30 |
| I-2-a-1 | 50 | RME (0,25%) | LOLMU | 80 |
| | | AMS (6,6 g/l) | | |
| | | | | |
| I-2-a-1 | 50 | RME (0,25%) | LOLRI | 40 |
| I-2-a-1 | 50 | RME (0,25%) | LOLRI | 80 |
| | | AMS (6,6 g/l) | | |
| I-2-a-1 | 25 | RME (0,25%) | LOLRI | 20 |
| I-2-a-1 | 50 | RME (0,25%) | LOLRI | 40 |
| | | AMS (6,6 g/l) | | |

### Beispiel 3

Folgende Verbindungen zeigten in einem Versuch mit abgestuften Konzentrationen von Ammoniumsulfat Wirkungssteigerungen:
ALOMY = Alopecurus myosuroides
AVEFA = Avena fatua
LOLMU = Lolium multiflorum
SETVI = Setaria viridis

**Tabelle 3**

| Wirkstoff | Aufwandmenge /g/ha | Zusatz | Wirkung gegen | Wirkung / % |
|---|---|---|---|---|
| I-8-b-1 | 50 | RME(0,25%) | AVEFA | 70 |
| I-8-b-1 | 50 | RME(0,25%) | AVEFA | 90 |
| | | AMS (0,33 g/l) | | |
| I-8-b-1 | 50 | RME(0,25%) | AVEFA | 95 |
| | | AMS (1 g/l) | | |
| I-8-b- 1 | 50 | RME(0,25%) | AVEFA | 97 |
| | | AMS (3,3 g/l) | | |
| | | | | |
| I-8-b-1 | 25 | RME(0,25%) | ALOMY | 20 |
| I-8-b-1 | 25 | RME (0,25%) | ALOMY | 70 |
| | | AMS (0,33 g/l) | | |
| I-8-b-1 | 25 | RME (0,25%) | ALOMY | 50 |
| | | AMS (1 g/l) | | |
| I-8-b-1 | 25 | RME(0,25%) | ALOMY | 80 |
| | | AMS (3,3 g/l) | | |
| | | | | |
| I-1-a-5 | 50 | RME(0,25%) | LOLMU | 5 |
| I-1-a-5 | 50 | RME(0,25%) | LOLMU | 60 |
| | | AMS (0,33 g/l) | | |
| I-1-a-5 | 50 | RME(0,25%) | LOLMU | 93 |
| | | AMS (1 g/l) | | |
| I-1-a-5 | 50 | RME (0,25%) | LOLMU | 95 |
| | | AMS (3,3 g/l) | | |
| | | | | |
| I-1-a-5 | 25 | RME(0,25%) | ALOMY | 25 |
| I-1-a-5 | 25 | RME(0,25%) | ALOMY | 50 |
| | | AMS (0,33 g/l) | | |
| I-1-a-5 | 25 | RME(0,25%) | ALOMY | 50 |
| | | AMS (1 g/l) | | |
| I-1-a-5 | 25 | RME(0,25%) | ALOMY | 60 |
| | | AMS (3,3 g/l) | | |
| | | | | |
| I-1-a-6 | 12,5 | RME (0,25%) | SETVI | 50 |
| I-1-a-6 | 12,5 | RME (0,25%) | SETVI | 65 |
| | | AMS (0,33 g/l) | | |
| I-1-a-6 | 12,5 | RME (0,25%) | SETVI | 75 |
| | | AMS (1 g/l) | | |
| I-1-a-6 | 12,5 | RME (0,25%) | SETVI | 90 |
| | | AMS (3,3 g/l) | | |
| | | | | |
| I-1-a-6 | 50 | RME (0,25%) | LOLMU | 5 |
| I-1-a-6 | 50 | RME (0,25%) | LOLMU | 20 |
| | | AMS (0,33 g/l) | | |
| I-1-a-6 | 50 | RME (0,25%) | LOLMU | 50 |
| | | AMS (1 g/l) | | |
| I-1-a-6 | 50 | RME (0,25%) | LOLMU | 65 |
| | | AMS (3,3 g/l) | | |

### Beispiel 4

Die Verbindung (I-1-c-1) zeigte in einem Versuch mit Ammoniumsulfat eine Wirkungssteigerung gegen
ALOMY = Alopecurus myosuroides -
AVEFA = Avena fatua
LOLMU = Lolium multiflorum
SETVI = Setaria viridis
BROER = Bromus erectus

**Tabelle 4:**

| Wirkstoff | Aufwandmenge / g/ha | Zusatz | Wirkung gegen | Wirkung / % |
|---|---|---|---|---|
| I-1-c-1 | 5 | Genapol LRO | ALOMY | 73 |
| | | (0,33%) | | |
| I-1-c-1 | 5 | Genapol LRO | ALOMY | 99 |
| | | (0,33%) | | |
| | | AMS (3,3 g/l) | | |
| | | | | |
| I-1-c-1 | 5 | Genapol LRO | APESV | 93 |
| | | (0,33%) | | |
| I-1-c-1 | 5 | Genapol LRO | APESV | 97 |
| | | (0,33%) | | |
| | | AMS (3,3 g/l) | | |
| | | | | |
| I-1-c-1 | 5 | Genapol LRO | AVEFA | 75 |
| | | (0,33%) | | |
| I-1-c-1 | 5 | Genapol LRO | AVEFA | 100 |
| | | (0,33%) | | |
| | | AMS (3,3 g/l) | | |
| | | | | |
| I-1-c-1 | 5 | Genapol LRO | BROER | 73 |
| | | (0,33%) | | |
| I-1-c-1 | 5 | Genapol LRO | BROER | 97 |
| | | (0,33%) | | |
| | | AMS (3,3 g/l) | | |
| | | | | |
| I-1-c-1 | 5 | Genapol LRO | LOLME | 86 |
| | | (0,33%) | | |
| I-1-c-1 | 5 | Genapol LRO | LOLME | 97 |
| | | (0,33%) | | |
| | | AMS (3,3 g/l) | | |

### Beispiel 5

In ca. 10 m² großen Parzellen wurden in 9 Versuchen Nachauflaufbehandlungen in 2 - 3 Wiederholungen mit Verbindung (I-1-c-1) durchgeführt. Es lag eine natürliche und/oder eingesäte speziell auf die Fragestellung ausgerichtete Verunkraütung vor. Dabei wurde der Wirkstoff (I-1-c-1) als EC-Formulierung in den angegebenen Aufwandmengen mit einem Penetrationsförderer der Formel (III-c-1) in einer Konzentration von 0,3 g/l in 300 1 Wasser als Tankmix ausgebracht. In den Versuchsgliedern mit Ammoniumsulfat (AMS) wurde das Salz mit 1 g/l der Spritzbrühe hinzugefügt Die Auswertung erfolgte am Tag der maximalen Wirkung. Dabei erhielt man über die Summe aller Versuche die in Tabelle 5 angegebenen Wirkungen.
- AGRRE =: Agropyron repens
- ALOMY =: Alopecurus myosuroides
- AVEFA =: Avena fatua

**Tabelle 5**

| Wirkstoff | Aufwandmenge / g/ha | Zusatz | Wirkung gegen | Wirkung /% |
|---|---|---|---|---|
| I-1-c-1 | 5 | (III-c-1) (0,3 g/l) | AGRRE | 80 |
| I-1-c-1 | 5 | (III-c-1) (0,3 g/l) | AGRRE | 90 |
| | | AMS (1 g/l) | | |
| | | | | |
| I-1-c-1 | 5 | (III-c-1) (0,3 g/l) | ALOMY | 67 |
| I-1-c-1 | 5 | (III-c-1) (0,3 g/l) | ALOMY | 72 |
| | | AMS (1 g/l) | | |
| | | | | |
| I-1-c-1 | 5 | (III-c-1) (0,3 g/l) | AVEFA | 80 |
| I-1-c-1 | 5 | (III-c-1) (0,3g/l) | AVEFA | 90 |
| | | AMS (1 g/l) | | |

## Patentansprüche

1. Zusammensetzung umfassend
- mindestens einen herbiziden Wirkstoff aus der Klasse der phenylsubstituierten cyclischen Ketoenole der Formel (I) 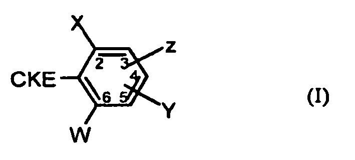 in welcher
W für Wasserstoff, Alkyl, Alkenyl, Alkinyl, Halogen, Alkoxy, Halogenalkyl, Halo- genalkoxy oder Cyano steht,
X für Halogen, Alkyl, Alkenyl, Alkinyl, Alkoxy, Alkoxy-alkoxy, Halogenalkyl, Ha- logenalkoxy oder Cyano steht,
Y für Wasserstoff, Halogen, Alkyl, Alkenyl, Alkinyl, Alkoxy, Cyano, Halogenal- kyl, Halogenalkoxy oder für jeweils gegebenenfalls substituiertes Phenyl oder Hetaryl steht,
Z für Wasserstoff, Halogen, Alkyl, Halogenalkyl, Cyano, Alkoxy oder Halogenal- koxy steht,
CKE für eine der Gruppen 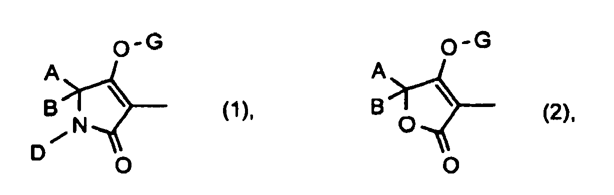 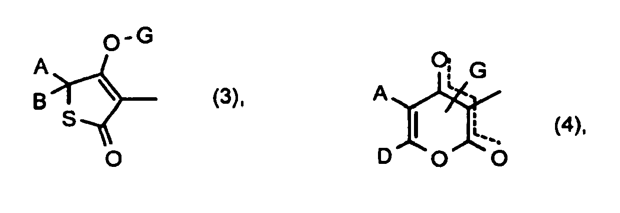 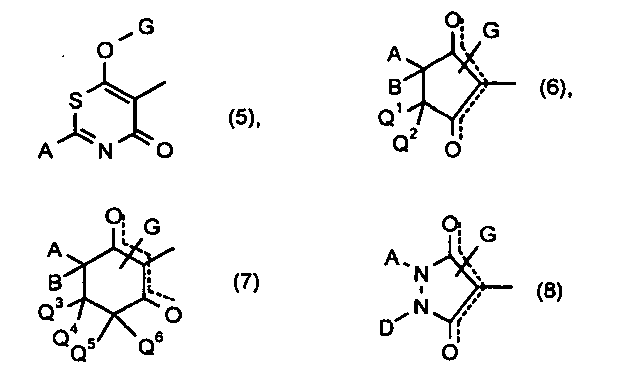 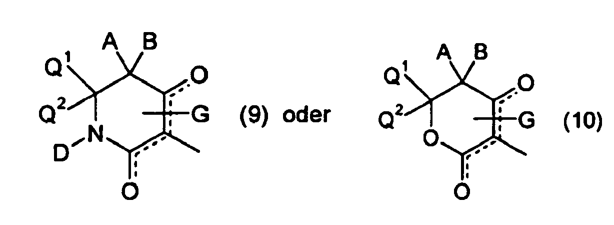 steht,
worin
A für Wasserstoff, jeweils gegebenenfalls durch Halogen substituiertes Alkyl, Alkenyl, Alkoxyalkyl, Alkylthioalkyl, gesättigtes oder ungesättigtes, ge- gebenenfalls substituiertes Cycloalkyl, in welchem gegebenenfalls mindes- tens ein Ringatom durch ein Heteroatom ersetzt ist, oder jeweils gegebenen- falls durch Halogen, Alkyl, Halogenalkyl, Alkoxy, Halogenalkoxy, Cyano oder Nitro substituiertes Aryl, Arylalkyl oder Hetaryl steht,
B für Wasserstoff, Alkyl oder Alkoxyalkyl steht, oder
A und B gemeinsam mit dem Kohlenstoffatom an das sie gebunden sind für ei- nen gesättigten oder ungesättigten, gegebenenfalls mindestens ein Hetero- atom enthaltenden unsubstituierten oder substituierten Cyclus stehen,
D für Wasserstoff oder einen gegebenenfalls substituierten Rest aus der Reihe Alkyl, Alkenyl, Alkinyl, Alkoxyalkyl, gesättigtes oder ungesättigtes Cyclo- alkyl, in welchem gegebenenfalls eines oder mehrere Ringglieder durch He- teroatome ersetzt sind, Arylalkyl, Aryl, Hetarylalkyl oder Hetaryl steht oder
A und D gemeinsam mit den Atomen an die sie gebunden sind für einen gesättig- ten oder ungesättigten und gegebenenfalls mindestens ein (im Falle CKE=8 ein weiteres) Heteroatom enthaltenden, im A,D-Teil unsubstituierten oder substituierten Cyclus stehen, bzw.
A und Q¹ gemeinsam für gegebenenfalls durch Hydroxy, jeweils gegebenenfalls substituiertes Alkyl, Alkoxy, Alkylthio, Cycloalkyl, Benzyloxy oder Aryl substituiertes Alkandiyl oder Alkendiyl stehen oder
D und Q¹ gemeinsam mit den Atomen, an die sie gebunden sind, für einen gesät- tigten oder ungesättigten und gegebenenfalls mindestens ein Heteroatom enthaltenden, im D, Q¹-Teil unsubstituierten oder substituierten Cyclus ste- hen,
Q¹ für Wasserstoff, Alkyl, Alkoxyalkyl, gegebenenfalls substituiertes Cycloal- kyl (worin gegebenenfalls eine Methylengruppe durch Sauerstoff oder Schwefel ersetzt ist) oder gegebenenfalls substituiertes Phenyl steht,
Q², Q⁴, Q⁵ und Q⁶ unabhängig voneinander für Wasserstoff oder Alkyl stehen,
Q³ für Wasserstoff, für gegebenenfalls substituiertes Alkyl, Alkoxyalkyl, Alkyl- thioalkyl, gegebenenfalls substituiertes Cycloalkyl (worin gegebenenfalls eine Methylengruppe durch Sauerstoff oder Schwefel ersetzt ist) oder ge- gebenenfalls substituiertes Phenyl steht, oder
Q¹ und Q² gemeinsam mit dem Kohlenstoffatom, an das sie gebunden sind, für einen gegebenenfalls ein Heteroatom enthaltenden unsubstituierten oder substituierten Cyclus stehen, oder
Q³ und Q⁴ gemeinsam mit dem Kohlenstoffatom, an das sie gebunden sind, für einen gesättigten oder ungesättigten, gegebenenfalls ein Heteroatom enthal- tenden unsubstituierten oder substituierten Cyclus stehen,
G für Wasserstoff (a) oder für eine der Gruppen 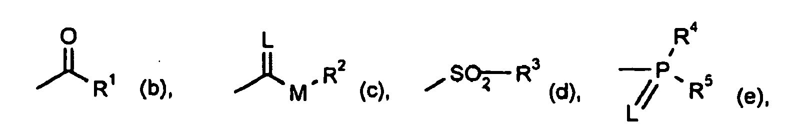
E(f) oder 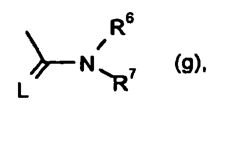 steht,
worin
E für ein Metallionäquivalent oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenen- falls substituiertes Phenyl, Phenylalkyl, Hetaryl, Phenoxyalkyl oder He- taryloxyalkyl steht,
R² für jeweils gegebenenfalls durch Halogen substituiertes Alkyl, Alkenyl, Alkoxyalkyl, Polyalkoxyalkyl oder für jeweils gegebenenfalls sub- stituiertes Cycloalkyl, Phenyl oder Benzyl steht,
R³, R⁴ und R⁵ unabhängig voneinander für jeweils gegebenenfalls durch Halogen substituiertes Alkyl, Alkoxy, Alkylamino, Dialkylamino, Al- kylthio, Alkenylthio, Cycloalkylthio oder für jeweils gegebenenfalls substituiertes Phenyl, Benzyl, Phenoxy oder Phenylthio stehen,
R⁶ und R⁷ unabhängig voneinander für Wasserstoff, jeweils gegebenenfalls durch Halogen substituiertes Alkyl, Cycloalkyl, Alkenyl, Alkoxy, Al- koxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen,
- mindestens ein Salz der Formel (II) 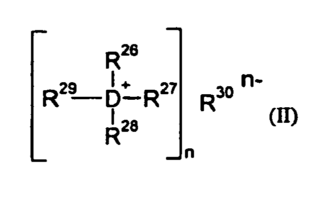 in welcher
D für Stickstoff oder Phosphor steht,
R²⁶, R²⁷, R²⁸ und R²⁹ unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
n für 1, 2, 3 oder 4 steht,
R³⁰ für Hydrogencarbonat, Tetraborat, Fluorid, Bromid, Jodid, Chlorid, Monohydro- genphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat
oder
für Carbonat, Pentaborat, Sulfit, Benzoat, Hydrogenoxalat, Hydrogencitrat, Methylsulfat oder Tetrafluoroborat steht
und
- mindestens einen Penetrationsförderer, wobei der Penetrationsförderer ein Fettalkohol-Alkoxylat der Formel (III)
R-O-(-AO)ᵥ-R' (III)
in welcher
R für geradkettiges oder verzweigtes Alkyl mit 4 bis 20 Kohlenstoffatomen steht,
R' für Wasserstoff, Methyl, Ethyl, n-Propyl, i-Propyl, n-Butyl, i-Butyl, t-Butyl, n- Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
v für Zahlen von 2 bis 30 steht,
oder ein mineralisches oder vegetabiles Öl oder der Ester eines mineralischen oder vegetabilen Öls ist.

2. Zusammensetzung gemäß Anspruch 1, **gekennzeichnet durch** die folgenden Definitionen für die Substituenten der Verbindungen der Formel (I):
W steht für Wasserstoff, C₁-C₆-Alkyl, C₂-C₆-Alkenyl, C₂-C₆-Alkinyl, Halogen, C₁- C₆-Alkoxy, C₁-C₄-Halogenalkyl, C₁-C₄-Halogenalkoxy oder Cyano,
X steht für Halogen, C₁-C₆-Alkyl, C₂-C₆-Alkenyl, C₂-C₆-Alkinyl, C₁-C₆-Alkoxy, C₁-C₆-Alkoxy-C₁-C₄-alkoxy, C₁-C₄-Halogenalkyl, C₁-C₄-Halogenalkoxy oder Cyano,
Y steht für Wasserstoff, Halogen, C₁-C₆-Alkyl, C₂-C₆-Alkenyl, C₂-C₆-Alkinyl, C₁- C₆-Alkoxy, Cyano, C₁-C₄-Halogenalkyl, Halogenalkoxy, für **durch** V¹ und V² sub- stituiertes Phenyl oder Pyridyl
V¹ steht für Halogen, C₁-C₁₂-Alkyl, C₁-C₆-Alkoxy, C₁-C₄-Halogenalkyl, C₁-C₄- Halogenalkoxy, Cyano oder Nitro.
V² steht für Wasserstoff, Halogen, C₁-C₆-Alkyl, C₁-C₆-Alkoxy oder C₁-C₄- Halogenalkyl,
V¹ und V² stehen gemeinsam für C₃-C₄-Alkandiyl, welches gegebenenfalls **durch** Halogen und/oder C₁-C₂-Alkyl substituiert sein kann und welches gegebenenfalls **durch** ein oder zwei Sauerstoffatome unterbrochen sein kann.
Z steht für Wasserstoff, Halogen, C₁-C₆-Alkyl, C₁-C₄-Halogenalkyl, Cyano, C₁-C₆- Alkoxy oder C₁-C₄-Halogenalkoxy.
CKE steht für eine der Gruppen 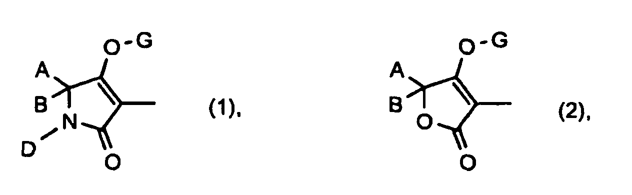 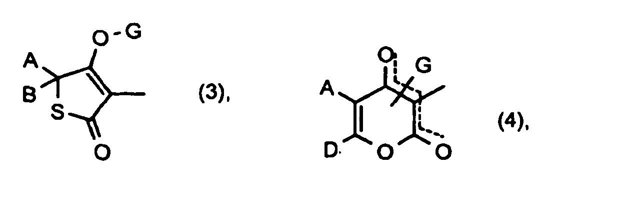 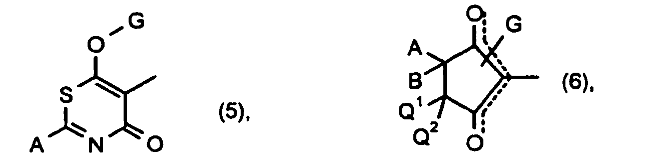 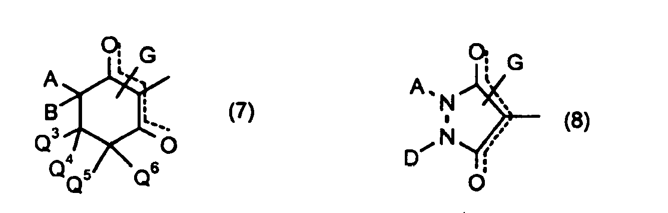 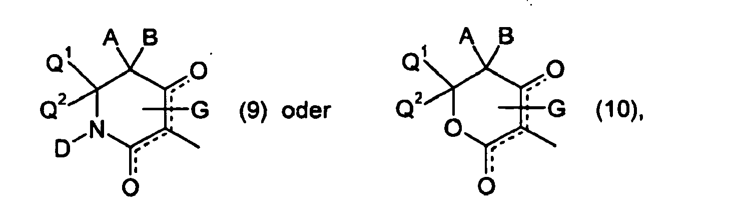
A steht für Wasserstoff oder jeweils gegebenenfalls **durch** Halogen substituiertes C₁- C₁₂-Alkyl, C₃-C₈-Alkenyl, C₁-C₁₀-Alkoxy-C₁-C₈-alkyl, C₁-C₁₀-Alkylthio-C₁- C₆-alkyl, gegebenenfalls **durch** Halogen, C₁-C₆-Alkyl oder C₁-C₆-Alkoxy substitu- iertes C₃-C₈-Cycloalkyl, in welchem gegebenenfalls ein oder zwei nicht direkt be- nachbarte Ringglieder **durch** Sauerstoff und/oder Schwefel ersetzt sind oder für je- weils gegebenenfalls **durch** Halogen, C₁-C₆-Alkyl, C₁-C₆-Halogenalkyl, C₁-C₆- Alkoxy, C₁-C₆-Halogenalkoxy, Cyano oder Nitro substituiertes Phenyl, Naphthyl, Hetaryl mit 5 bis 6 Ringatomen (beispielsweise Furanyl, Pyridyl, Imidazolyl, Tria- zolyl, Pyrazolyl, Pyrimidyl, Thiazolyl oder Thienyl), Phenyl-C₁-C₆-alkyl oder Naphthyl-C ₁-C₆-alkyl,
B steht für Wasserstoff, C₁-C₁₂-Alkyl oder C₁-C₈-Alkoxy-C₁-C₆-alkyl oder
A, B und das Kohlenstoffatom an das sie gebunden sind, stehen für gesättigtes C₃-C₁₀- Cycloalkyl oder ungesättigtes C₅-C₁₀-Cycloalkyl, worin gegebenenfalls ein Ring- glied **durch** Sauerstoff oder Schwefel ersetzt ist und welche gegebenenfalls einfach oder zweifach **durch** C₁-C₈-Alkyl, C₁-C₆-Alkoxy-C₁-C₆-Alkyl, C₃-C₆-Cycloalkyl- C₁-C₂-alkoxy, C₃-C₁₀-Cycloalkyl, C₁-C₈-Halogenalkyl, C₁-C₈-Alkoxy, C₁-C₆- Alkoxy-C₁-C₄-alkoxy, C₁-C₈-Alkylthio, Halogen oder Phenyl substituiert sind oder
A, B und das Kohlenstoffatom, an das sie gebunden sind, stehen für C₃-C₆-Cycloalkyl, welches **durch** eine gegebenenfalls ein oder zwei nicht direkt benachbarte Sauer- stoff- und/oder Schwefelatome enthaltende gegebenenfalls **durch** C₁-C₄-Alkyl sub- stituierte Alkylendiyl-, oder **durch** eine Alkylendioxyl- oder **durch** eine Alkylen- dithioyl-Gruppe substituiert ist, die mit dem Kohlenstoffatom, an das sie gebunden ist, einen weiteren fünf- bis achtgliedrigen Ring bildet oder
A, B und das Kohlenstoffatom, an das sie gebunden sind, stehen für C₃-C₈-Cycloalkyl oder C₅-C₈-Cycloalkenyl, in welchen zwei Substituenten gemeinsam mit den Koh- lenstoffatomen, an die sie gebunden sind, für jeweils gegebenenfalls **durch** C₁-C₆- Alkyl, C₁-C₆-Alkoxy oder Halogen substituiertes C₂-C₆-Alkandiyl, C₂-C₆- Alkendiyl oder C₄-C₆-Alkandiendiyl stehen, worin gegebenenfalls eine Methyl- lengruppe **durch** Sauerstoff oder Schwefel ersetzt ist,
D steht für Wasserstoff, jeweils gegebenenfalls **durch** Halogen substituiertes C₁-C₁₂- Alkyl, C₃-C₈-Alkenyl, C₃-C₈-Alkinyl, C₁-C₁₀-Alkoxy-C₂-C₈-alkyl, gegebenen- falls **durch** Halogen, C₁-C₄-Alkyl, C₁-C₄-Alkoxy oder C₁-C₄-Halogenalkyl substi- tuiertes C₃-C₈-Cycloalkyl, in welchem gegebenenfalls ein Ringglied **durch** Sauer- stoff oder Schwefel ersetzt ist oder jeweils gegebenenfalls **durch** Halogen, C₁-C₆- Alkyl, C₁-C₆-Halogenalkyl, C₁-C₆-Alkoxy, C₁-C₆-Halogenalkoxy, Cyano oder Nitro substituiertes Phenyl, Hetaryl mit 5 oder 6 Ringatomen (beispielsweise Fura- nyl, Imidazolyl, Pyridyl, Thiazolyl, Pyrazolyl, Pyrimidyl, Pyrrolyl, Thienyl oder Tri- azolyl), Phenyl-C₁-C₆-alkyl oder Hetaryl-C₁-C₆-alkyl mit 5 oder 6 Ringatomen (beispielsweise Furanyl, Imidazolyl, Pyridyl, Thiazolyl, Pyrazolyl, Pyrimidyl, Pyrro- lyl, Thienyl oder Triazolyl) oder
A und D stehen gemeinsam für jeweils gegebenenfalls substituiertes C₃-C₆-Alkandiyl oder C₃-C₆-Alkendiyl, worin gegebenenfalls eine Methylengruppe **durch** eine Carbonyl- gruppe, Sauerstoff oder Schwefel ersetzt ist und
wobei als Substituenten jeweils in Frage kommen:
Halogen, Hydroxy, Mercapto oder jeweils gegebenenfalls **durch** Halogen sub- stituiertes C₁-C₁₀-Alkyl, C₁-C₆-Alkoxy, C₁-C₆-Alkylthio, C₃-C₇-Cycloalkyl, Phe- nyl oder Benzyloxy, oder eine weitere C₃-C₆-Alkandiylgruppierung, C₃-C₆- Alkendiylgruppierung oder eine Butadienylgruppierung, die gegebenenfalls **durch** C₁-C₆-Alkyl substituiert ist oder in der gegebenenfalls zwei benachbarte Substi- tuenten mit den Kohlenstoffatomen, an die sie gebunden sind, einen weiteren gesät- tigten oder ungesättigten Cyclus mit 5 oder 6 Ringatomen bilden (im Fall der Ver- bindung der Formel (I-1) stehen A und D dann gemeinsam mit den Atomen, an die sie gebunden sind beispielsweise für die weiter unten genannten Gruppen AD-1 bis AD-10), der Sauerstoff oder Schwefel enthalten kann, oder worin gegebenenfalls ei- ne der folgenden Gruppen 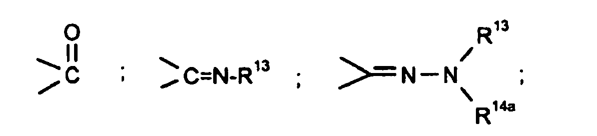 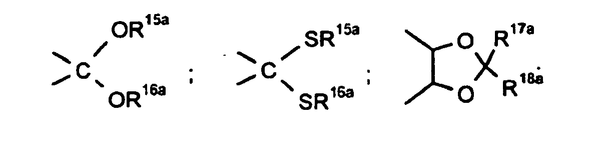 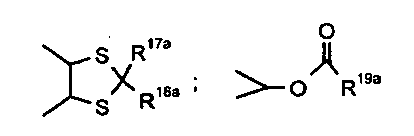 oder 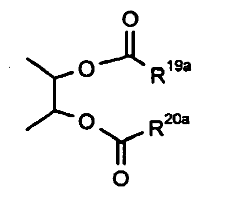 enthalten ist, oder
A und Q¹ stehen gemeinsam für jeweils gegebenenfalls einfach oder zweifach, gleich oder verschieden **durch** Halogen, Hydroxy, **durch** jeweils gegebenenfalls einfach bis drei- fach, gleich oder verschieden **durch** Halogen substituiertes C₁-C₁₀-Alkyl, C₁-C₆- Alkoxy, C₁-C₆-Alkylthio, C₃-C₇-Cycloalkyl oder **durch** jeweils gegebenenfalls ein- fach bis dreifach, gleich oder verschieden **durch** Halogen, C₁-C₆-Alkyl oder C₁-C₆- Alkoxy substituiertes Benzyloxy oder Phenyl substituiertes C₃-C₆-Alkandiyl oder C₄-C₆-Alkendiyl, welches außerdem gegebenenfalls eine der nachstehenden Grup- pen 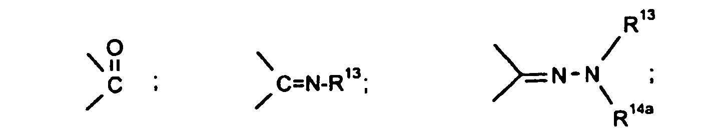 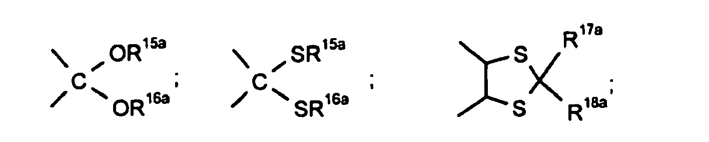 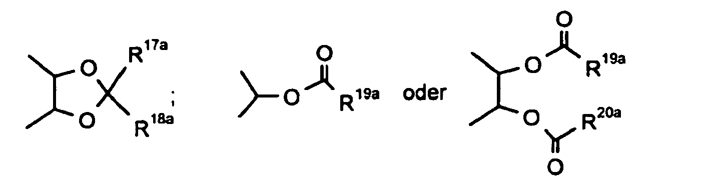 enthält oder **durch** eine C₁-C₂-Alkandiylgruppe oder **durch** ein Sauerstoffatom ü- berbrückt ist oder
D und Q¹ stehen gemeinsam für jeweils gegebenenfalls einfach oder zweifach, gleich oder verschieden **durch** C₁-C₄-Alkyl, C₁-C₄-Alkoxy substituiertes C₃-C₆-Alkandiyl.
Q¹ steht für Wasserstoff, C₁-C₆-Alkyl, C₁-C₆-Alkoxy-C₁-C₂-alkyl, gegebenenfalls **durch** Fluor, Chlor, C₁-C₄-Alkyl, C₁-C₂-Halogenalkyl oder C₁-C₄-Alkoxy substi- tuiertes C₃-C₈-Cycloalkyl, worin gegebenenfalls eine Methylengruppe **durch** Sauer- stoff oder Schwefel ersetzt ist oder gegebenenfalls **durch** Halogen, C₁-C₄-Alkyl, C₁-C₄-Alkoxy, C₁-C₂-Halogenalkyl, C₁-C₂-Halogenalkoxy, Cyano oder Nitro sub- stituiertes Phenyl oder
Q², Q⁴, Q⁵ und Q⁶ stehen unabhängig voneinander für Wasserstoff oder C₁-C₄-Alkyl,
Q³ steht für Wasserstoff, C₁-C₆-Alkyl, C₁-C₆-Alkoxy-C₁-C₂-alkyl, C₁-C₆-Alkylthio- C₁-C₂-alkyl, gegebenenfalls **durch** C₁-C₄-Alkyl oder C₁-C₄-Alkoxy substituiertes C₃-C₈-Cycloalkyl, worin gegebenenfalls eine Methylengruppe **durch** Sauerstoff o- der Schwefel ersetzt ist oder gegebenenfalls **durch** Halogen, C₁-C₄-Alkyl, C₁-C₄- Alkoxy, C₁-C₂-Halogenalkyl, C₁-C₂-Halogenalkoxy, Cyano oder Nitro substituier- tes Phenyl.
Q1 und Q2 stehen mit dem Kohlenstoffatom, an das sie gebunden sind, für gegebenenfalls **durch** C₁-C₆-Alkyl, C₁-C₆-Alkoxy oder C₁-C₂-Halogenalkyl substituierten C₃-C₇- Ring, in welchem gegebenenfalls ein Ringglied **durch** Sauerstoff oder Schwefel er- setzt ist,
Q³ und Q⁴ stehen gemeinsam mit dem Kohlenstoffatom, an das sie gebunden sind, für einen gegebenenfalls **durch** C₁-C₄-Alkyl, C₁-C₄-Alkoxy oder C₁-C₂-Halogenalkyl sub- stituierten C₃-C₇-Ring, in welchem gegebenenfalls ein Ringglied **durch** Sauerstoff oder Schwefel ersetzt ist,
G steht für Wasserstoff (a) oder für eine der Gruppen 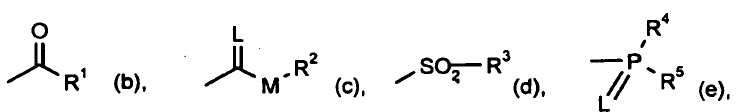
E (f) oder 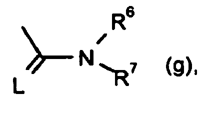 insbesondere für (a), (b), (c) oder (g)
in welchen
E für ein Metallionäquivalent oder ein Ammoniumion steht,
L für Sauerstoff oder Schwefel steht und
M für Sauerstoff oder Schwefel steht.
R¹ steht für jeweils gegebenenfalls **durch** Halogen substituiertes C₁-C₂₀-Alkyl, C₂- C₂₀-Alkenyl, C₁-C₈-Alkoxy-C₁-C₈-alkyl, C₁-C₈-Alkylthio-C₁-C₈-alkyl, Poly-C₁- C₈-alkoxy-C₁-C₈-alkyl oder gegebenenfalls **durch** Halogen, C₁-C₆-Alkyl oder C₁- C₆-Alkoxy substituiertes C₃-C₈-Cycloalkyl, in welchem gegebenenfalls ein oder mehrere ( nicht mehr als zwei) nicht direkt benachbarte Ringglieder **durch** Sauer- stoff und/oder Schwefel ersetzt sind,
für gegebenenfalls **durch** Halogen, Cyano, Nitro, C₁-C₆-Alkyl, C₁-C₆-Alkoxy, C₁- C₆-Halogenalkyl, C₁-C₆-Halogenalkoxy, C₁-C₆-Alkylthio oder C₁-C₆-Alkylsulfo- nyl substituiertes Phenyl,
für gegebenenfalls **durch** Halogen, Nitro, Cyano, C₁-C₆-Alkyl, C₁-C₆-Alkoxy, C₁- C₆-Halogenalkyl oder C₁-C₆-Halogenalkoxy substituiertes Phenyl-C₁-C₆-alkyl,
für gegebenenfalls **durch** Halogen oder C₁-C₆-Alkyl substituiertes 5- oder 6- gliedriges Hetaryl (beispielsweise Pyrazolyl, Thiazolyl, Pyridyl, Pyrimidyl, Furanyl oder Thienyl),
für gegebenenfalls **durch** Halogen oder C₁-C₆-Alkyl substituiertes Phenoxy-C₁-C₆- alkyl oder
für gegebenenfalls **durch** Halogen, Amino oder C₁-C₆-Alkyl substituiertes 5- oder 6-gliedriges Hetaryloxy-C₁-C₆-alkyl (beispielsweise Pyridyloxy-C₁-C₆-alkyl, Pyri- midyloxy-C₁-C₆-alkyl oder Thiazolyloxy-C₁-C₆-alkyl),
R² steht für jeweils gegebenenfalls **durch** Halogen substituiertes C₁-C₂₀-Alkyl, C₂- C₂₀-Alkenyl, C₁-C₈-Alkoxy-C₂-C₈-alkyl, Poly-C₁-C₈-alkoxy-C₂-C₈-alkyl,
für gegebenenfalls **durch** Halogen, C₁-C₆-Alkyl oder C₁-C₆-Alkoxy substituiertes C₃-C₈-Cycloalkyl oder
für jeweils gegebenenfalls **durch** Halogen, Cyano, Nitro, C₁-C₆-Alkyl, C₁-C₆-Alk- oxy, C₁-C₆-Halogenalkyl oder C₁-C₆-Halogenalkoxy substituiertes Phenyl oder Benzyl,
R³ steht für gegebenenfalls **durch** Halogen substituiertes C₁-C₈-Alkyl oder für jeweils gegebenenfalls **durch** Halogen, C₁-C₆-Alkyl, C₁-C₆-Alkoxy, C₁-C₄-Halogenalkyl, C₁-C₄-Halogenalkoxy, Cyano oder Nitro substituiertes Phenyl oder Benzyl,
R⁴ und R⁵ stehen unabhängig voneinander für jeweils gegebenenfalls **durch** Halogen substi- tuiertes C₁-C₈-Alkyl, C₁-C₈-Alkoxy, C₁-C₈-Alkylamino, Di-(C₁-C₈-alkyl)amino, C₁-C₈-Alkylthio, C₂-C₈-Alkenylthio, C₃-C₇-Cycloalkylthio oder für jeweils gege- benenfalls **durch** Halogen, Nitro, Cyano, C₁-C₄-Alkoxy, C₁-C₄-Halogenalkoxy, C₁- C₄-Alkylthio, C₁-C₄-Halogenalkylthio, C₁-C₄-Alkyl oder C₁-C₄-Halogenalkyl sub- stituiertes Phenyl, Phenoxy oder Phenylthio,
R⁶ und R⁷ stehen unabhängig voneinander für Wasserstoff, für jeweils gegebenenfalls **durch** Halogen substituiertes C₁-C₈-Alkyl, C₃-C₈-Cycloalkyl, C₁-C₈-Alkoxy, C₃- C₈-Alkenyl, C₁-C₈-Alkoxy-C₁-C₈-alkyl, für gegebenenfalls **durch** Halogen, C₁-C₈- Halogenalkyl, C₁-C₈-Alkyl oder C₁-C₈-Alkoxy substituiertes Phenyl, gegebe- nenfalls **durch** Halogen, C₁-C₈-Alkyl, C₁-C₈-Halogenalkyl oder C₁-C₈-Alkoxy substituiertes Benzyl oder zusammen für einen gegebenenfalls **durch** C₁-C₄-Alkyl
R¹³ substituierten C₃-C₆-Alkylenrest, in welchem gegebenenfalls ein Kohlenstoffatom **durch** Sauerstoff oder Schwefel ersetzt ist, steht für Wasserstoff, für jeweils gegebenenfalls **durch** Halogen substituiertes C₁- C₈-Alkyl oder C₁-C₈-Alkoxy, für gegebenenfalls **durch** Halogen, C₁-C₄-Alkyl oder C₁-C₄-Alkoxy substituiertes C₃-C₈-Cycloalkyl, in welchem gegebenenfalls eine Methylengruppe **durch** Sauerstoff oder Schwefel ersetzt ist, oder für jeweils gegebe- nenfalls **durch** Halogen, C₁-C₆-Alkyl, C₁-C₆-Alkoxy, C₁-C₄-Halogenalkyl, C₁-C₄- Halogenalkoxy, Nitro oder Cyano substituiertes Phenyl, Phenyl-C₁-C₄-alkyl oder Phenyl-C₁-C₄-alkoxy,
R^{14a} steht für Wasserstoff oder C₁-C₈-Alkyl oder
R¹³ und R^{14a} stehen gemeinsam für C₄-C₆-Alkandiyl,
R¹⁵ und R^{16a} sind gleich oder verschieden und stehen für C₁-C₆-Alkyl oder
R^{15a} und R^{16a} stehen gemeinsam für einen C₂-C₄-Alkandiylrest, der gegebenenfalls **durch** C₁-C₆-Alkyl, C₁-C₆-Halogenalkyl oder **durch** gegebenenfalls **durch** Halogen, C₁- C₆-Alkyl, C₁-C₄-Halogenalkyl, C₁-C₆-Alkoxy, C₁-C₄-Halogenalkoxy, Nitro oder Cyano substituiertes Phenyl substituiert ist,
R^{17a} und R^{18a} stehen unabhängig voneinander für Wasserstoff, für gegebenenfalls **durch** Halogen substituiertes C₁-C₈-Alkyl oder für gegebenenfalls **durch** Halogen, C₁-C₆- Alkyl, C₁-C₆-Alkoxy, C₁-C₄-Halogenalkyl, C₁-C₄-Halogenalkoxy, Nitro oder Cy- ano substituiertes Phenyl oder
R^{17a} und R^{18a} stehen gemeinsam mit dem Kohlenstoffatom, an das sie gebunden sind, für eine Carbonylgruppe oder für gegebenenfalls **durch** Halogen, C₁-C₄-Alkyl oder C₁- C₄-Alkoxy substituiertes C₅-C₇-Cycloalkyl, in dem gegebenenfalls eine Methylen- gruppe **durch** Sauerstoff oder Schwefel ersetzt ist,
R^{19a} und R^{20a} stehen unabhängig voneinander für C₁-C₁₀-Alkyl, C₂-C₁₀-Alkenyl, C₁-C₁₀-Alkoxy, C₁-C₁₀-Alkylamino, C₃-C₁₀-Alkenylamino, Di-(C₁-C₁₀- alkyl)amino oder Di-(C₃-C₁₀-alkenyl)amino.

3. Zusammensetzung gemäß Anspruch 2, **gekennzeichnet durch** die folgenden Definitionen der Substituenten von Verbindungen der Formel (I)
W steht für Wasserstoff, Fluor, Chlor, Brom, C₁-C₄-Alkyl, C₂-C₄-Alkenyl, C₂-C₄- Alkinyl, C₁-C₄-Alkoxy, C₁-C₂-Halogenalkyl oder C₁-C₂-Halogenalkoxy,
X steht für Chlor, Brom, Iod, C₁-C₄-Alkyl, C₂-C₄-Alkenyl, C₂-C₄-Alkinyl, C₁-C₄- Alkoxy, C₁-C₄-Alkoxy-C₁-C₃-alkoxy, C₁-C₂-Halogenalkyl, C₁-C₂-Halogenalkoxy oder Cyano,
Y steht in der 4-Position für Wasserstoff, Fluor, Chlor, Brom, Iod, Methoxy, Ethoxy, Cyano, Trifluormethyl, Difluormethoxy oder Trifluormethoxy,
Z steht für Wasserstoff.
W steht auch für Wasserstoff, Fluor, Chlor, Brom oder C₁-C₄-Alkyl,
X steht auch für Chlor, Brom, C₁-C₄-Alkyl, C₁-C₄-Alkoxy, C₁-C₂-Halogenalkyl, C₁- C₂-Halogenalkoxy oder Cyano,
Y steht auch in der 4-Position für C₂-C₄-Alkenyl, C₂-C₄-Alkinyl oder den Rest 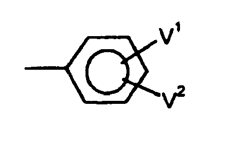
Z steht auch für Wasserstoff,
V¹ steht auch für Fluor, Chlor, C₁-C₄-Alkyl, C₁-C₄-Alkoxy, C₁-C₂-Halogenalkyl oder C₁ -C₂-Halogenalkoxy, Cyano oder Nitro,
V² steht auch für Wasserstoff, Fluor, Chlor, C₁-C₄-Alkyl, C₁-C₄-Alkoxy oder C₁-C₂- Halogenalkyl,
V¹ und V² stehen gemeinsam auch für-O-CH₂-O- und -O-CF₂-O-.
W steht ebenfalls für Wasserstoff, Fluor, Chlor, Brom oder C₁-C₄-Alkyl,
X steht ebenfalls für Chlor, Brom, C₁ -C₄-Alkyl, C ₁ -C₄-Alkoxy, C₁-C₂-Halogenalkyl, C₁-C₂-Halogenalkoxy oder Cyano,
Y steht ebenfalls in der 5-Position für C₂-C₄-Alkenyl, C₂-C₄-Alkinyl oder den Rest 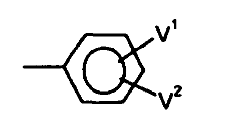
Z steht ebenfalls in der 4-Position für Wasserstoff, C₁-C₄-Alkyl oder Chlor,
V¹ steht ebenfalls für Fluor, Chlor, C₁-C₄-Alkyl, C₁-C₄-Alkoxy, C₁-C₂-Halogenalkyl oder C₁-C₂-Halogenalkoxy, Cyano oder Nitro
V² steht ebenfalls für Wasserstoff, Fluor, Chlor, C₁-C₄-Alkyl, C₁-C₄-Alkoxy oder C₁- C₂-Halogenalkyl,
V¹ und V² stehen gemeinsam ebenfalls für -O-CH₂-O- und -O-CF₂-O-.
W steht außerdem für Wasserstoff, C₁-C₄-Alkyl, C₂-C₄-Alkenyl, C₂-C₄-Alkinyl, C₁- C₄-Alkoxy, Fluor, Chlor, Brom oder Trifluormethyl,
X steht außerdem für Fluor, Chlor, Brom, Iod, C₁-C₄-Alkyl, C₂-C₄-Alkenyl, C₂-C₄- Alkinyl, C₁-C₄-Alkoxy, C₁-C₄-Alkoxy-C₁-C₃-alkoxy, C₁-C₂-Halogenalkyl, C₁- C₂-Halogenalkoxy oder Cyano,
Y steht außerdem in der 4-Position für C₁-C₄-Alkyl,
Z steht außerdem für Wasserstoff.
W steht weiterhin für Wasserstoff, Fluor, Chlor, Brom, C₁-C₄-Alkyl oder C₁-C₄- Alkoxy,
X steht weiterhin für Chlor, Brom, Iod, C₁-C₄-Alkyl, C₁-C₄-Alkoxy, C₁-C₂- Halogenalkyl, C₁-C₂-Halogenalkoxy oder Cyano,
Y steht weiterhin in der 4-Position für Wasserstoff, Chlor, Brom, Iod, C₁-C₄-Alkyl, C₁-C₂-Halogenalkyl oder C₁-C₂-Halogenalkoxy,
Z steht weiterhin in der 3- oder 5-Position für Fluor, Chlor, Brom, Iod, C₁-C₄-Alkyl, C₁-C₂-Halogenalkyl, C₁-C₄-Alkoxy oder C₁-C₂-Halogenalkoxy.
CKE steht für eine der Gruppen 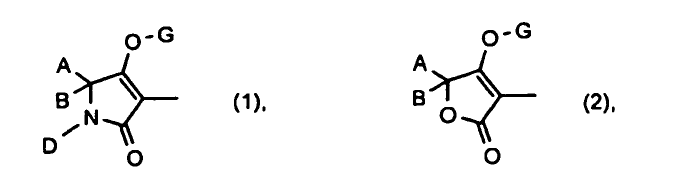 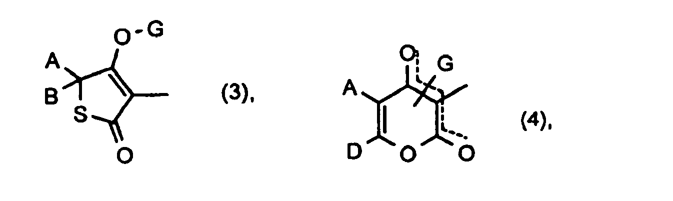 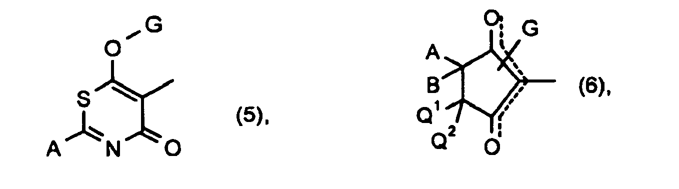 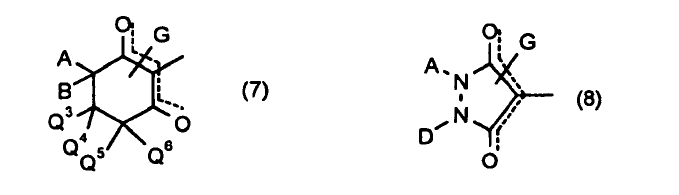 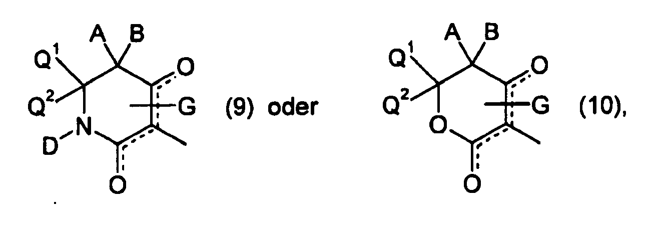
A steht für Wasserstoff, jeweils gegebenenfalls einfach bis dreifach **durch** Fluor oder Chlor substituiertes C₁-C₆-Alkyl, C₁-C₄-Alkoxy-C₁-C₂-alkyl, gegebenenfalls ein- fach bis zweifach **durch** C₁-C₂-Alkyl oder C₁-C₂-Alkoxy substituiertes C₃-C₆- Cycloalkyl oder (jedoch nicht im Fall der Verbindungen der Formeln (I-3), (I-4), (I-6) und (I-7)) jeweils gegebenenfalls einfach bis zweifach **durch** Fluor, Chlor, Brom, C₁-C₄-Alkyl, C₁-C₂-Halogenalkyl, C₁-C₄-Alkoxy, C₁-C₂-Halogenalkoxy, Cyano oder Nitro substituiertes Phenyl oder Benzyl,
B steht für Wasserstoff, C₁-C₄-Alkyl oder C₁-C₂-Alkoxyl-C₁-C₂-alkyl oder
A, B und das Kohlenstoffatom an das sie gebunden sind, stehen für gesättigtes oder unge- sättigtes C₃-C₇-Cycloalkyl, worin gegebenenfalls ein Ringglied **durch** Sauerstoff oder Schwefel ersetzt ist und welches gegebenenfalls einfach bis zweifach **durch** C₁-C₆-Alkyl, C₁-C₄-Alkoxy-C₁-C₂-Alkyl, Trifluormethyl, C₁-C₆-Alkoxy, C₁-C₃- Alkoxy-C₁-C₃-alkoxy oder C₃-C₆-Cycloalkylmethoxy substituiert ist mit der Maß- gabe, dass dann Q³ für Wasserstoff oder Methyl steht oder
A, B und das Kohlenstoffatom, an das sie gebunden sind, stehen für C₅-C₆-Cycloalkyl, welches **durch** eine gegebenenfalls ein oder zwei nicht direkt benachbarte Sauer- stoff- oder Schwefelatome enthaltende gegebenenfalls **durch** Methyl oder Ethyl sub- stituierte Alkylendiyl- oder **durch** eine Alkylendioxyl- oder **durch** eine Alkylendithi- ol-Gruppe substituiert ist, die mit dem Kohlenstoffatom, an das sie gebunden ist, ei- nen weiteren fünf- oder sechsgliedrigen Ring bildet mit der Maßgabe, dass dann Q³ für Wasserstoff oder Methyl steht, oder
A, B und das Kohlenstoffatom, an das sie gebunden sind, stehen für C₃-C₆-Cycloalkyl oder C₅-C₆-Cycloalkenyl, in welchen zwei Substituenten gemeinsam mit den Koh- lenstoffatomen, an die sie gebunden sind, für jeweils gegebenenfalls **durch** C₁-C₂- Alkyl oder C₁-C₂-Alkoxy substituiertes C₂-C₄-Alkandiyl, C₂-C₄-Alkendiyl oder Butadiendiyl stehen, mit der Maßgabe, dass dann Q³ für Wasserstoff oder Methyl steht,
D steht für Wasserstoff, für jeweils gegebenenfalls einfach bis dreifach **durch** Fluor substituiertes C₁-C₆-Alkyl, C₃-C₆-Alkenyl, C₁-C₄-Alkoxy-C₂-C₃-alkyl, für gege- benenfalls einfach bis zweifach **durch** C₁-C₄-Alkyl, C₁-C₄-Alkoxy oder C₁-C₂- Halogenalkyl substituiertes C₃-C₆-Cycloalkyl, in welchem gegebenenfalls eine Me- thylengruppe **durch** Sauerstoff ersetzt ist oder (jedoch nicht im Fall der Verbindun- gen der Formeln (I-1)) für jeweils gegebenenfalls einfach bis zweifach **durch** Fluor, Chlor, Brom, C₁-C₄-Alkyl, C₁-C₄-Halogenalkyl, C₁-C₄-Alkoxy oder C₁-C₄- Halogenalkoxy substituiertes Phenyl oder Pyridyl, oder
A und D stehen gemeinsam für gegebenenfalls einfach bis zweifach substituiertes C₃-C₅- Alkandiyl, in welchem eine Methylengruppe **durch** eine Carbonylgruppe (nicht je- doch im Fall der Verbindungen der Formel (I-1)), Sauerstoff oder Schwefel ersetzt sein kann, wobei als Substituenten C₁-C₂-Alkyl oder C₁-C₂-Alkoxy in Frage kom- men oder
A und D stehen (im Fall der Verbindungen der Formel (I-1)) gemeinsam mit den Atomen, an die sie gebunden sind, für eine der Gruppen AD-1 bis AD-10: 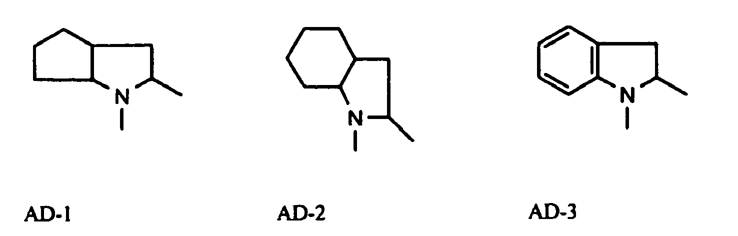 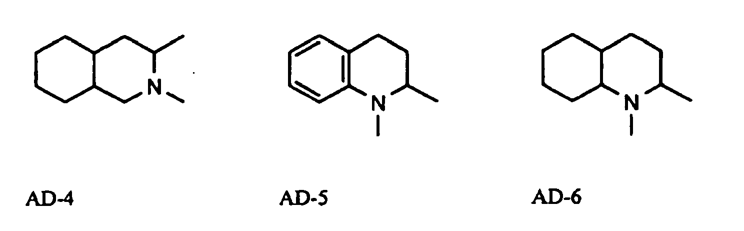 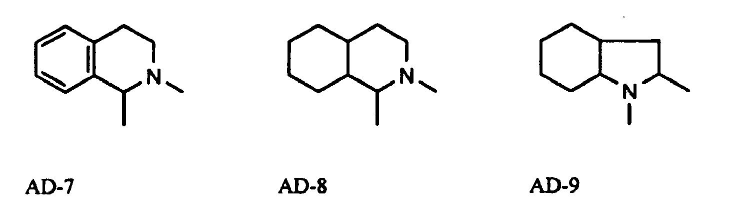 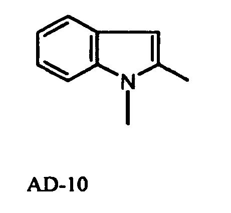 oder
A und Q¹ stehen gemeinsam für jeweils gegebenenfalls einfach oder zweifach, gleich oder verschieden **durch** C₁-C₂-Alkyl oder C₁-C₂-Alkoxy substituiertes C₃-C₄-Alkandiyl oder
D und Q¹ stehen gemeinsam für C₃-C₄-Alkandiyl, oder
Q¹ steht für Wasserstoff, C₁-C₄-Alkyl, C₁-C₄-Alkoxy-C₁-C₂-alkyl, oder gegebenen- falls **durch** Methyl oder Methoxy substituiertes C₃-C₆-Cycloalkyl, worin gegebe- nenfalls eine Methylengruppe **durch** Sauerstoff ersetzt ist,
Q² steht für Wasserstoff, Methyl oder Ethyl,
Q⁴, Q⁵ und Q⁶ stehen unabhängig voneinander für Wasserstoff oder C₁-C₃-Alkyl,
Q³ steht für Wasserstoff, C₁-C₄-Alkyl, oder gegebenenfalls einfach bis zweifach **durch** Methyl oder Methoxy substituiertes C₃-C₆-Cycloalkyl, oder
Q¹ und Q² steht für Wasserstoff, C₁-C₄-Alkyl, C₁-C₄-Alkoxy-C₁-C₂-alkyl, oder gegebe- nenfalls **durch** Methyl oder Methoxy substituiertes C₃-C₆-Cycloalkyl, worin gege- benenfalls eine Methylengruppe **durch** Sauerstoff ersetzt ist, oder
Q³ und Q⁴ stehen gemeinsam mit dem Kohlenstoff, an das sie gebunden sind, für einen ge- gebenenfalls **durch** C₁-C₂-Alkyl oder C₁-C₂-Alkoxy substituierten gesättigten C₅- C₆-Ring, in welchem gegebenenfalls ein Ringglied **durch** Sauerstoff oder Schwefel ersetzt ist, mit der Maßgabe, dass dann A für Wasserstoff oder Methyl steht,
G steht für Wasserstoff (a) oder für eine der Gruppen 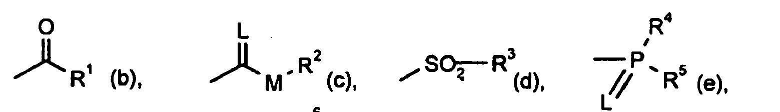
E (f) oder 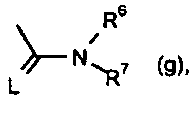 insbesondere für (a), (b) oder (c),
in welchen
E für ein Metallionäquivalent oder ein Ammoniumion steht,
L für Sauerstoff oder Schwefel steht und
M für Sauerstoff oder Schwefel steht,
R¹ steht für jeweils gegebenenfalls einfach bis dreifach **durch** Fluor oder Chlor sub- stituiertes C₁-C₈-Alkyl, C₂-C₁₈-Alkenyl, C₁-C₄-Alkoxy-C₁-C₂-alkyl, C₁-C₄- Alkylthio-C₁-C₂-alkyl oder gegebenenfalls einfach bis zweifach **durch** Fluor, Chlor, C₁-C₂-Alkyl oder C₁-C₂-Alkoxy substituiertes C₃-C₆-Cycloalkyl, in welchem ge- gebenenfalls ein oder zwei nicht direkt benachbarte Ringglieder **durch** Sauerstoff er- setzt sind,
für gegebenenfalls einfach bis zweifach **durch** Fluor, Chlor, Brom, Cyano, Nitro, C₁-C₄-Alkyl, C₁-C₄-Alkoxy, C₁-C₂-Halogenalkyl oder C₁-C₂-Halogenalkoxy sub- stituiertes Phenyl,
R² steht für jeweils gegebenenfalls einfach bis dreifach **durch** Fluor substituiertes C₁- C₈-Alkyl, C₂-C₈-Alkenyl oder C₁-C₄-Alkoxy-C₂-C₄-alkyl,
für gegebenenfalls einfach **durch** C₁-C₂-Alkyl oder C₁-C₂-Alkoxy substituiertes C₃-C₆-Cycloalkyl oder
für jeweils gegebenenfalls einfach bis zweifach **durch** Fluor, Chlor, Brom, Cyano, Nitro, C₁-C₄-Alkyl, C₁-C₃-Alkoxy, Trifluormethyl oder Trifluormethoxy substitu- iertes Phenyl oder Benzyl,
R³ steht für gegebenenfalls einfach bis dreifach **durch** Fluor substituiertes C₁-C₆-Alkyl oder für gegebenenfalls einfach **durch** Fluor, Chlor, Brom, C₁-C₄-Alkyl, C₁-C₄- Alkoxy, Trifluormethyl, Trifluormethoxy, Cyano oder Nitro substituiertes Phenyl,
R⁴ steht für C₁-C₆-Alkyl, C₁-C₆-Alkoxy, C₁-C₆-Alkylamino, Di-(C₁-C₆-alkyl)amino, C₁-C₆-Alkylthio, C₃-C₄-Alkenylthio, C₃-C₆-Cycloalkylthio oder für jeweils gege- benenfalls einfach **durch** Fluor, Chlor, Brom, Nitro, Cyano, C₁-C₃-Alkoxy, C₁-C₃- Halogenalkoxy, C₁-C₃-Alkylthio, C₁-C₃-Halogenalkylthio, C₁-C₃-Alkyl oder Tri- fluormethyl substituiertes Phenyl, Phenoxy oder Phenylthio,
R⁵ steht für C₁-C₆-Alkoxy oder C₁-C₆-Alkylthio,
R⁶ steht für Wasserstoff, C₁-C₆-Alkyl, C₃-C₆-Cycloalkyl, C₁-C₆-Alkoxy, C₃-C₆- Alkenyl, C₁-C₆-Alkoxy-C₁-C₄-alkyl, für gegebenenfalls einfach **durch** Fluor, Chlor, Brom, Trifluormethyl, C₁-C₄-Alkyl oder C₁-C₄-Alkoxy substituiertes Phenyl, für gegebenenfalls einfach **durch** Fluor, Chlor, Brom, C₁-C₄-Alkyl, Trifluormethyl oder C₁-C₄-Alkoxy substituiertes Benzyl,
R⁷ steht für C₁-C₆-Alkyl, C₃-C₆-Alkenyl oder C₁-C₆-Alkoxy-C₁-C₄-alkyl,
R⁶ und R⁷ stehen zusammen für einen gegebenenfalls **durch** Methyl oder Ethyl substituier- ten C₄-C₅-Alkylenrest, in welchem gegebenenfalls eine Methylengruppe **durch** Sau- erstoff oder Schwefel ersetzt ist.

4. Zusammensetzung gemäß einem oder mehreren der Ansprüche 1 bis 3, **dadurch gekennzeichnet, dass** der Wirkstoffgehalt zwischen 0,5 und 50 Gew.-% beträgt.

5. Zusammensetzung gemäß einem mehreren der Ansprüche 1 bis 4, **dadurch gekennzeichnet, dass** in der Formel (II) gemäß Anspruch 1 D für Stickstoff steht.

6. Zusammensetzung gemäß einem oder mehreren der Ansprüche 1 bis 5, **dadurch gekennzeichnet, dass** der Gehalt an Ammonium- oder Phosphoniumsalz 0,5 bis 80 mmol/l beträgt.

7. Zusammensetzung gemäß Anspruch 1, **dadurch gekennzeichnet, dass** in der Formel (II) gemäß Anspruch 1 R³⁰ für Laktat, Sulfat, Nitrat, Thiosulfat, Thiocyanat, Citrat, Oxalat, Formiat, Acetat, Monohydrogenphosphat oder Dihydrogenphosphat steht.

8. Zusammensetzung gemäß Anspruch 1, **dadurch gekennzeichnet, dass** R³⁰ für Sulfat, Thiocyanat, Dihydrogenphosphat oder Monohydrogenphosphat steht.

9. Zusammensetzung gemäß einem der Ansprüche 1 bis 8, **dadurch gekennzeichnet, dass** der Penetrationsförderer Ester eines vegetabilen Öls ist.

10. Zusammensetzung gemäß einem der Ansprüche 1 bis 8, **dadurch gekennzeichnet, dass** der Penetrationsförderer Rapsölmethylester ist.

11. Zusammensetzung gemäß einem der Ansprüche 1 bis 8, **dadurch gekennzeichnet, dass** der Penetrationsförderer ein offenes Alkanol-Alkoxylat ist.

12. Zusammensetzung gemäß einem der Ansprüche 1 bis 8, **dadurch gekennzeichnet, dass** der Penetrationsförderer eine Verbindung der Formel (III-c) ist,
R-O-(-PO-)ᵣ-(EO-)ₛ-R' (III-c)
in welcher
R die oben angegebene Bedeutung hat,
R' die oben angegebene Bedeutung hat,
EO für -CH₂-CH₂-O- steht,
PO für 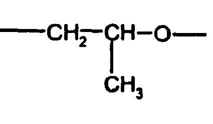 steht,
r für Zahlen von 1 bis 10 steht und
s für Zahlen von 1 bis 10 steht.

13. Zusammensetzung gemäß einem der Ansprüche 1 bis 8, **dadurch gekennzeichnet, dass** der Penetrationsförderer eine Verbindung der Formel (III-c-1) ist, 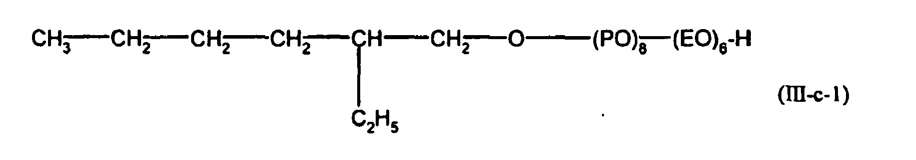 in welcher
EO für -CH₂-CH₂-O- steht,
PO für 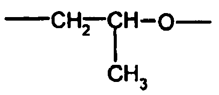 steht und
die Zahlen 8 und 6 Durchschnittswerte darstellen.

14. Zusammensetzung gemäß einem der Ansprüche 1 bis 13, **dadurch gekennzeichnet, dass** der Gehalt an Penetrationsförderer 1 bis 95 Gew.-% beträgt.

15. Verfahren zur Bekämpfung von unerwünschtem Pflanzenwuchs, **dadurch gekennzeichnet, dass** eine Zusammensetzung gemäß einem oder mehreren der Ansprüche 1 bis 14 unverdünnt oder verdünnt auf die Pflanzen, Pflanzenteile, Pflanzensamen oder die Fläche, auf der die Pflanzen wachsen, appliziert wird.

16. Verfahren zur Steigerung der Wirkung von herbiziden Pflanzenschutzmitteln enthaltend einen Wirkstoff aus der Klasse der phenylsubstituierten cyclischen Ketoenole, **dadurch gekennzeichnet, dass** das anwendungsfertige Mittel (Spritzbrühe) unter Einsatz einer Zusammensetzung gemäß Anspruch 1 zubereitet wird.

17. Verfahren gemäß Anspruch 16, **dadurch gekennzeichnet, dass** das Salz der Formel (II) in einer Endkonzentration von 0,5 bis 80 mmol/l vorliegt.

18. Verfahren gemäß Anspruch 16, **dadurch gekennzeichnet, dass** der Penetrationsförderer in einer Endkonzentration von 0,1 bis 10 g/l vorliegt.

19. Verfahren gemäß Anspruch 16, **dadurch gekennzeichnet, dass** der Penetrationsförderer in einer Endkonzentration von 0,1 bis 10 g/l und das Salz der Formel (II) in einer Endkonzentration von 0,5 bis 80 mmol/l vorliegt.

20. Verwendung eines Salzes der Formel (II) in einer Zusammensetzung gemäß Anspruch 1 zur Steigerung der Wirkung eines herbiziden Pflanzenschutzmittels enthaltend einen Wirkstoff aus der Klasse der phenylsubstituierten cyclischen Ketoenole der Formel (I) gemäß Anspruch 2, **dadurch gekennzeichnet, dass** das Salz bei der Zubereitung eines anwendungsfertigen Pflanzenschutzmittels (Spritzbrühe) eingesetzt wird.

21. Verwendung gemäß Anspruch 20, **dadurch gekennzeichnet, dass** das Salz der Formel (II) in dem anwendungsfertigen Pflanzenschutzmittel in einer Konzentration von 0,5 bis 80 mmol/l vorliegt.

## Claims

1. Composition comprising
- at least one active herbicidal ingredient from the class of the phenyl-substituted cyclic ketoenols of formula (I) 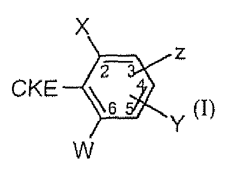 in which
W is hydrogen, alkyl, alkenyl, alkynyl, halogen, alkoxy, haloalkyl, haloalkoxy or cyano,
X is halogen, alkyl, alkenyl, alkynyl, alkoxy, alkoxy-alkoxy, haloalkyl, haloalkoxy or cyano,
Y is hydrogen, halogen, alkyl, alkenyl, alkynyl, alkoxy, cyano, haloalkyl, haloalkoxy or in each case optionally substituted phenyl or hetaryl,
Z is hydrogen, halogen, alkyl, haloalkyl, cyano, alkoxy or haloalkoxy,
CKE is one of the groups 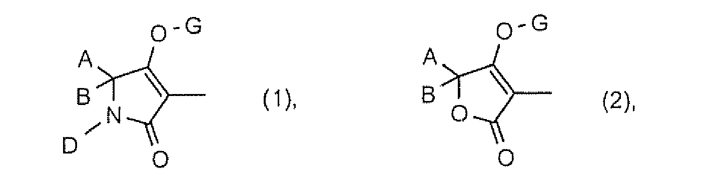 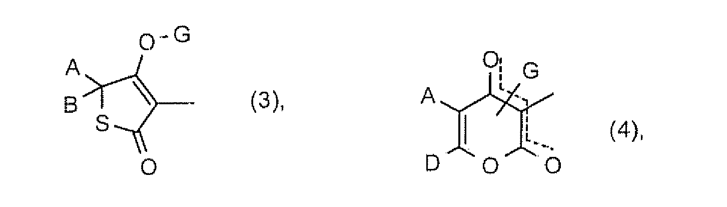 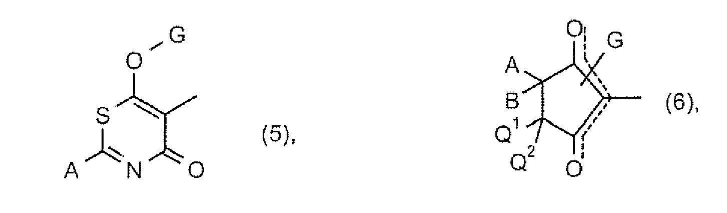 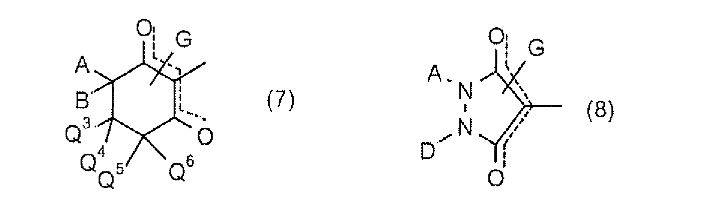 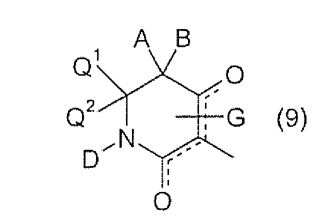 or 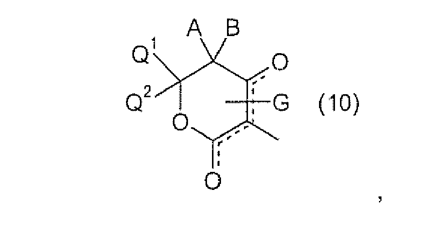 in which
A is hydrogen, in each case optionally halogen-substituted alkyl, alkenyl, alkoxyalkyl, alkylthioalkyl, saturated or unsaturated, optionally substituted cycloalkyl in which optionally at least one ring atom is replaced by a heteroatom, or in each case optionally halogen-, alkyl-, haloalkyl-, alkoxy-, haloalkoxy-, cyano- or nitro- substituted aryl, arylalkyl or hetaryl,
B is hydrogen, alkyl or alkoxyalkyl, or
A and B, together with the carbon atom to which they are attached, are a saturated or unsaturated, unsubstituted or substituted ring optionally containing at least one heteroatom,
D is hydrogen or an optionally substituted radical from the series alkyl, alkenyl, alkynyl, alkoxyalkyl, saturated or unsaturated cycloalkyl in which optionally one or more ring members are replaced by heteroatoms, or is arylalkyl, aryl, hetarylalkyl or hetaryl, or
A and D, together with the atoms to which they are attached, are a saturated or unsaturated ring which optionally contains at least one (in the case of CKE=8 one further) heteroatom and is substituted or unsubstituted in the A,D moiety, or
A and Q¹ together are alkenediyl or alkanediyl optionally substituted by hydroxyl or by in each case optionally substituted alkyl, alkoxy, alkylthio, cycloalkyl, benzyloxy or aryl, or
D and Q¹, together with the atoms to which they are attached, are a saturated or unsaturated ring which optionally contains at least one heteroatom and is substituted or unsubstituted in the D, Q¹ moiety,
Q¹ is hydrogen, alkyl, alkoxyalkyl, optionally substituted cycloalkyl (in which optionally one methylene group is replaced by oxygen or sulphur) or optionally substituted phenyl.
Q², Q⁴, Q⁵ and Q⁶ independently of one another are hydrogen or alkyl,
Q³ is hydrogen, is optionally substituted alkyl, alkoxyalkyl, alkylthioalkyl, optionally substituted cycloalkyl (in which optionally one methylene group is replaced by oxygen or sulphur) or optionally substituted phenyl, or
Q¹ and Q², together with the carbon atom to which they are attached, are a substituted or unsubstituted ring optionally containing a heteroatom, or
Q³ and Q⁴, together with the carbon atom to which they are attached, are a saturated or unsaturated, unsubstituted or substituted ring optionally containing a heteroatom,
G is hydrogen (a) or is one of the groups 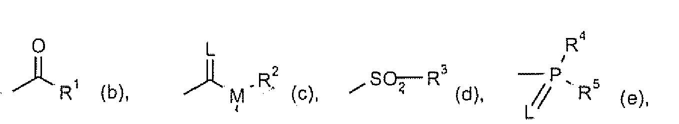
E (f) or 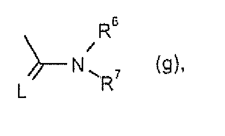 in which
E is one metal ion equivalent or an ammonium ion,
L is oxygen or sulphur,
M is oxygen or sulphur,
R¹ is in each case optionally halogen-substituted alkyl, alkenyl, alkoxyalkyl, alkylthioalkyl, polyalkoxyalkyl or optionally halogen-, alkyl- or alkoxy-substituted cycloalkyl, which may be interrupted by at least one heteroatom, or is in each case optionally substituted phenyl, phenylalkyl, hetaryl, phenoxyalkyl or hetaryloxyalkyl,
R² is in each case optionally halogen-substituted alkyl, alkenyl, alkoxyalkyl, polyalkoxyalkyl or is in each case optionally substituted cycloalkyl, phenyl or benzyl,
R³, R⁴ and R⁵ independently of one another are in each case optionally halogen-substituted alkyl, alkoxy, alkylamino, dialkylamino, alkylthio, alkenylthio, cycloalkylthio or are in each case optionally substituted phenyl, benzyl, phenoxy or phenylthio,
R⁶ and R⁷ independently of one another are hydrogen, in each case optionally halogen-substituted alkyl, cycloalkyl, alkenyl, alkoxy, alkoxyalkyl, are optionally substituted phenyl, are optionally substituted benzyl, or, together with the N atom to which they are attached, are a ring which is optionally interrupted by oxygen or sulphur,
- at least one salt of the formula (II) 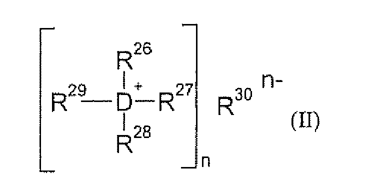 in which
D is nitrogen or phosphorus
R²⁶, R²¹, R²⁸ and R²⁹ independently of one another are hydrogen or in each case optionally substituted C₁-C₈-alkyl or singly or multiply unsaturated, optionally substituted C₁-C₈-alkylene, the substituents being selectable from halogen, nitro and cyano,
n is 1, 2, 3 or 4,
R³⁰ is hydrogencarbonate, tetraborate, fluoride, bromide, iodide, chloride, monohydrogenphosphate, dihydrogenphosphate, hydrogensulphate, tartrate, sulphate, nitrate, thiosulphate, thiocyanate, formate, lactate, acetate, propionate, butyrate, pentanoate, citrate or oxalate or
is carbonate, pentaborate, sulphite, benzoate, hydrogenoxalate, hydrogencitrate, methylsulphate or tetrafluoroborate
and
at least one penetrant, the penetrant being a fatty alcohol alkoxylate of the formula (III)
R-O-(-AO)ᵥ-R' (III)
in which
R is linear or branched alkyl having 4 to 20 carbon atoms,
R¹ is hydrogen, methyl, ethyl, n-propyl, isopropyl, n-butyl, isobutyl, tert-butyl, n-pentyl or n-hexyl,
AO is an ethylene oxide radical, a propylene oxide radical a butylene oxide radical or is mixtures of ethylene oxide and propylene oxide radicals or butylene oxide radicals, and
v is a number from 2 to 30, or a mineral or vegetable oil or the ester of a mineral or vegetable oil

2. Composition according to Claim 1, **characterized by** the following definitions for the substituents of the compounds of the formula (I):
W is hydrogen, C₁-C₆-alkyl, C₂-C₆-alkenyl, C₂-C₆-alkynyl, halogen, C₁-C₆- alkoxy, C₁-C₄-haloalkyl, C₁-C₄-haloalkoxy or cyano,
X is halogen, C₁-C₆-alkyl, C₂-C₆-alkenyl, C₂-C₆-alkynyl, C₁-C₆-alkoxy, C₁- C₆-alkoxy-C₁-C₄-alkoxy, C₁-C₄-lialoalkyl, C₁-C₄-haloalkoxy or cyano,
Y is hydrogen, halogen, C₁-C₆-alkyl, C₂-C₆-alkenyl, C₂-C₆-alkynyl, C₁-C₆- alkoxy, cyano, C₁-C₄-haloalkyl, haloalkoxy, or is V¹- and V²-substituted Phenyl or pyridyl,
V¹ is halogen, C₁-C₁₂-alkyl, C₁-C₆-alkoxy, C₁-C₄-haloalk-yl, C₁-C₄- haloalkoxy, cyano or nitro,
V² is hydrogen, halogen, C₁-C₆-alkyl, C₁-C₆-alkoxy or C₁-C₄-haloalkyl,
V¹ and V² are together C₃-C₄-alkanediyl which optionally can be substituted by halogen and/or C₁-C₂-alkyl and which optionally can be interrupted by one or two oxygen atoms,
Z is hydrogen, halogen, C₁-C₆-alkyl, C₁-C₄-haloalkyl, cyano, C₁-C₆-alkoxy or C₁-C₄-haloalkaxy,
CKE is one of the groups 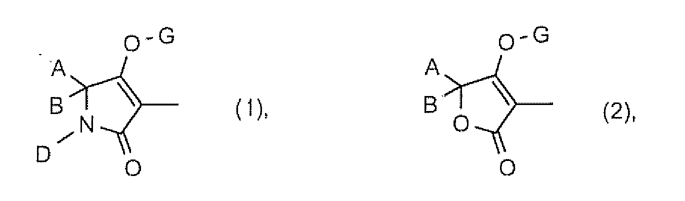 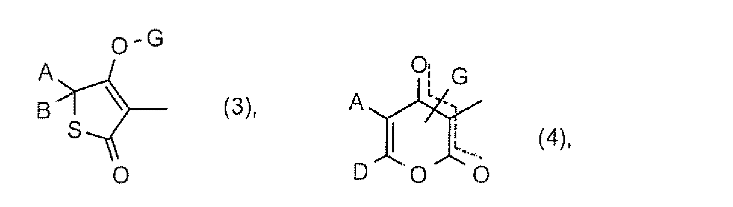 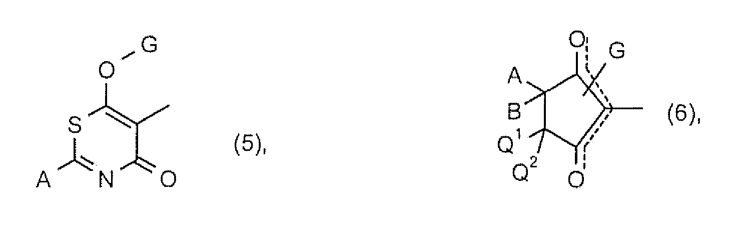 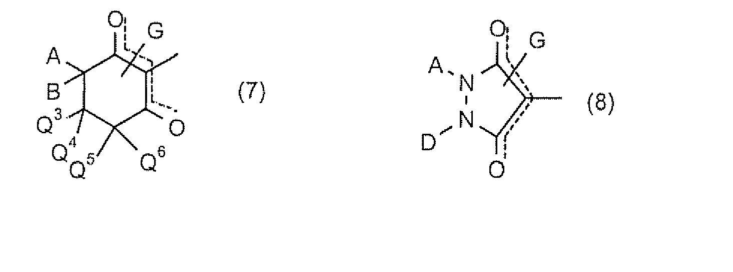 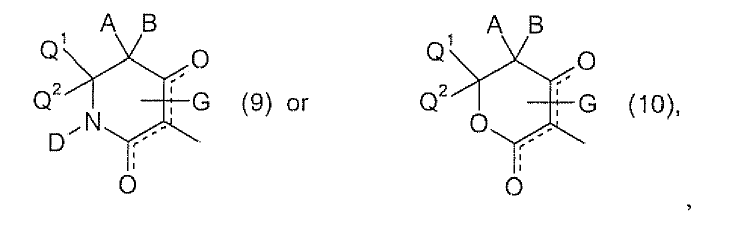
A is hydrogen or in each case optionally halogen-substituted C₁-C₁₂-alkyl, C₃-C₈-alkenyl, C₁-C₁₀-alkoxy-C₁-C₈-alkyl, C₁-C₁₀-alkylthio-C₁-C₆- alkyl, optionally halogen-, C₁-C₆-alkyl- or C₁-C₆-alkoxy-substituted C₃- C₈-cycloalkyl in which optionally one or two ring members not directly adjacent are replaced by oxygen and/or sulphur, or is in each case optionally halogen-, C₁-C₆-allcyl-, C₁-C₆-haloalkyl-, C₁-C₆-alkoxy-, C₁- C₆-haloalkoxy-, cyano- or nitro-substituted phenyl, naphthyl, hetaryl having 5 to 6 ring atoms (for example furanyl, pyridyl, imidazolyl, triazolyl, pyrazolyl, pyrimidyl, thiazolyl or thienyl), phenyl-C₁-C₆-alkyl or naphthyl- C₁-C₆-alkyl,
B is hydrogen, C₁-C₁₂-alkyl or C₁-C₈-alkoxy-C₁-C₆-alkyl or
A, B and the carbon atom to which they are attached are saturated C₃-C₁₀- cycloalkyl or unsaturated C₅-C₁₀-cycloalkyl, in which optionally one ring member is replaced by oxygen or sulphur and which optionally are singly or doubly substituted by C₁-C₈-alkyl, C₁-C₆-alkoxy-C₁-C₆-alkyl, C₃-C₆- cycloalkyl-C₁-C₂-alkoxy, C₃-C₁₀-cycloalkyl, C₁-C₈-haloalkyl, C₁-C₈- alkoxy, C₁-C₆-alkoxy-C₁-C₄-alkoxy, C₁-C₈-alylthio, halogen or phenyl, or
A, B and the carbon atom to which they are attached are C₃-C₆-cycloalkyl which is substituted by an alkylenediyl group which is optionally substituted by C₁-C₄-alkyl and optionally contains one or two oxygen and/or sulphur atoms not directly adjacent, or by an alkylenedioxyl group or by an alkylenedithioyl group, which with the carbon atom to which it is attached forms a further five- to eight-membered ring, or
A, B and the carbon atom to which they are attached are C₃-C₈-cycloalkyl or C₅-C₈-cycloalkenyl in which two substituents, together with the carbon atoms to which they are attached, are in each case optionally C₁-C₆-alkyl-, C₁-C₆-alkoxy- or halogen-substituted C₂-C₆-alkanediyl, C₂-C₆-alkenediyl or C₄-C₆-alkanedienediyl, in which optionally one methylene group is replaced by oxygen or sulphur,
D is hydrogen, in each case optionally halogen-substituted C₁-C₁₂-alkyl, C₃- C₈-alkenyl, C₁₃-Cg-alkynyl, C₁-C₁₀-alkoxy-C₂-C₈-alkyl, optionally halogen,-, C₁-C₄-alkyl-, C₁-C₄-alkoxy- or C₁-C₄-haloalkyl-substituted C₃- C₈-cycloalkyl in which optionally one ring member is replaced by oxygen or sulphur, or is in each case optionally halogen-, C₁-C₆-alkyl-, C₁-C₆- haloalkyl.-, C₁-C₆-alkoxy-, C₁-C₆-haloalkoxy-, cyano- or nitro-substituted phenyl, hetaryl having 5 or 6 ring atoms (for example furanyl, imidazolyl, pyridyl, thiazolyl, pyrazolyl, pyrimidyl, pyrrolyl, thienyl or triazolyl), phenyl-C₁C₆-alkyl or hetaryl-C₁-C₆-alkyl having 5 or 6 ring atoms (for example furanyl, imidazolyl, pyridyl, thiazolyl, pyrazolyl, pyrimidyl, pyrrolyl, thienyl or triazolyl) or
A and D are together in each case optionally substituted C₃-C₆-alkanediyl or C₃- C₆-alkenediyl, in which optionally one methylene group is replaced by a carbonyl group, oxygen or sulphur, and
suitable substituents are in each case as follows:
halogen, hydroxyl, mercapto or in each case optionally halogen-substituted C₁-C₁₀-alkyl, C₁-C₆-alkoxy, C₁-C₆-alkylthio, C₃-C₇-cycloalkyl, phenyl or benzyloxy, or a further C₃-C₆-alkanediyl moiety, C₃-C₆-alkenediyl moiety or a butadienyl moiety, which is optionally substituted by C₁-C₆-alkyl or in which optionally two adjacent substituents, with the carbon atoms to which they are attached, form a further saturated or unsaturated ring having 5 or 6 ring atoms (in the case of the compound of the formula (I-1) A and D, together with the atoms to which they are attached, then are, for example, the groups AD-1 to AD-10 specified later on below), which can contain oxygen or sulphur, or in which optionally one of the following groups 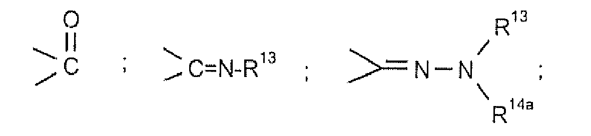 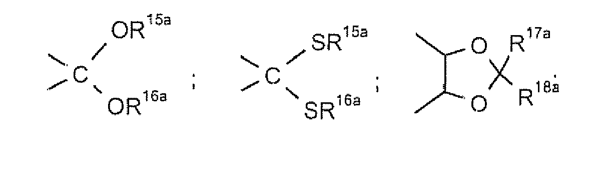 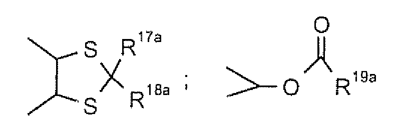 or 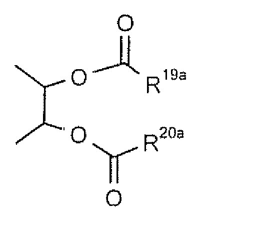 is present, or
A and Q¹ are together C₄-C₆-alkenediyl or C₃-C₆-alkanediyl which are in each case optionally substituted one or two times by identical or different substituents selected from halogen, hydroxyl, C₃-C₇-cycloalkyl, C₁-C₆- alkylthio, C₁-C₆-alkaxy or C₁-C₁₀-alkyl in each case optionally substituted one to three times by identical or different halogen substituents, and phenyl, or benzyloxy in each case optionally substituted one to three times by identical or different halogen, C₁-C₆-alkyl or C₁-C₆-alkoxy substituents, and which, moreover, optionally contains one of the following groups 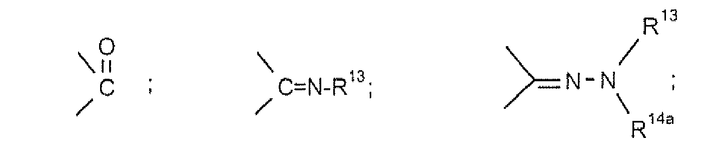 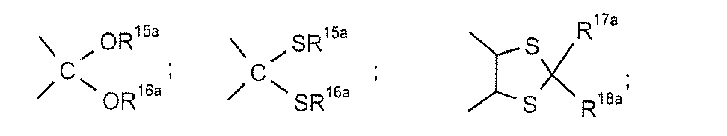 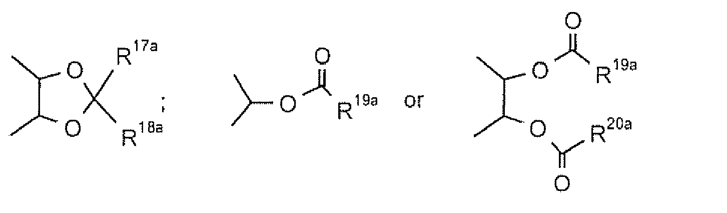 or is bridged by a C₁ -C₂-alkanediyl group or by an oxygen atom, or
D and Q¹ are together C₃-C₆-alkanediyl which is in each case optionally substituted one or two times by identical or different substituents selected from C₁-C₄-alkyl and C₁-C₄-alkoxy,
Q¹ is hydrogen, C₁-C₆-alkyl, C₁-C₆-alkoxy-C₁-C₂-alkyl, optionally fluorine-, chlorine-, C₁-C₄-alkyl-, C₁-C₂-haloalkyl- or C₁-C₄-alkoxy-substituted C₃- C₈-cycloalkyl, in which optionally one methylene group is replaced by oxygen or sulphur, or is optionally halogen-, C₁-C₄-alkyl-, C₁-C₄-alkoxy-, C₁-C₂-haloalkyl-, C₁-C₂-haloalkoxy-, cyano- or nitro-substituted phenyl or
Q², Q⁴, Q⁵ and Q⁶ independently of one another are hydrogen ar C₁-C₄-alkyl,
Q³ is hydrogen, C₁-C₆-alkyl, C₁-C₆-alkoxy-C₁-C₂-alkyl, C₁-C₆-alkylthio-C₁- C₂-alkyl, optionally C₁-C₄-alkyl- or C₁-C₄-alkoxy-substituted C₃-C₈- cycloalkyl, in which optionally one methylene group is replaced by oxygen or sulphur, or is optionally halogen-, C₁-C₄-alkyl-, C₁-C₄-alkoxy-, C₁-C₂- haloalkyl-, C₁-C₂-haloalkoxy-, cyano- or nitro-substituted phenyl,
Q1 and Q2, with the carbon atom to which they are attached, are optionally C₁-C₆- alkyl-, C₁-C₆-alkoxy- or C₁-C₂-haloalkyl-substituted C₃-C₇ ring in which optionally one ring member is replaced by oxygen or sulphur,
Q³ and Q⁴, together with the carbon atom to which they are attached, are an optionally C₁-C₄-alkyl-, C₁-C₄-alkoxy- or C₁-C₂-haloalkyl-substituted C₃- C₇ ring in which optionally one ring member is replaced by oxygen or sulphur,
G is hydrogen (a) or is one of the groups 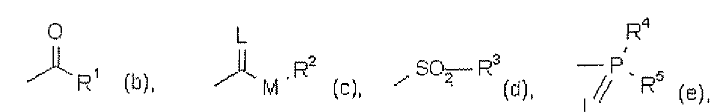
E (f) or 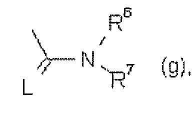 in particular is (a), (b), (c) or (g)
in which
E is one metal ion equivalent or an ammonium ion,
L is oxygen or sulphur and
M is oxygen or sulphur,
R¹ is in each case optionally halogen-substituted C₁-C₂₀-alkyl, C₂-C₂₀- alkenyl, C₁-C₈-alkoxy-C₁-C₈-alkyl, C₁-C₈-alkylthio-C₁-C₈-alkyl, poly- C₁-C₈-alkoxy-C₁-C₈-alkyl or optionally halogen-, C₁-C₆-alk-yl- or C₁-C₆- alkoxy-substituted C₃-C₈-cycloalkyl in which optionally one or more (not more than two) ring members not directly adjacent are replaced by oxygen and/or sulphur,
is optionally halogen-, cyano-, nitro-, C₁-C₆-alkyl-, C₁-C₆-alkoxy-, C₁-C₆- haloalkyl-, C₁-C₆-haloalkoxy-, C₁-C₆-alkylthio- or C₁-C₆-alkylsulphonyl- substituted phenyl,
is optionally halogen-, nitro-, cyano-, C₁-C₆-alkyl-, C₁-C₆-alkoxy-, C₁-C₆- haloalkyl- or C₁-C₆-haloalkoxy-substituted phenyl-C₁-C₆-alkyl,
is optionally halogen- or C₁-C₆-alkyl-substituted 5- or 6-membered hetaryl (for example pyrazolyl, thiazolyl, pyridyl, pyrimidyl, furanyl or thienyl),
is optionally Halogen- or C₁-C₆-alkyl-substituted phenoxy-C₁-C₆-alkyl or is optionally halogen-, amino- or C₁-C₆-alkyl-substituted 5- or 6-membered hetaryloxy-C₁-C₆-alkyl (for example pyridyloxy-C₁-C₆-alkyl, pyrimidyloxy-C₁-C₆-alkyl or thiazolyloxy-C₁-C₆-alkyl),
R² is in each case optionally halogen-substituted C₁-C₂₀-alkyl, C₂-C₂₀- alkenyl, C₁-C₈-alkoxy-C₂-C₈-alkyl, poly-C₁-C₈-alkoxy-C₂-C₈-alkyl,
is optionally halogen-, C₁-C₆-alkyl- or C₁-C₆-alkoxy-substituted C₃-C₈- cycloalkyl, or
is in each case optionally halogen-, cyano,-, nitro-, C₁-C₆-alkyl-, C₁-C₆- alkoxy-, C₁-C₆-haloalkyl- or C₁-C₆-haloalkoxy-substituted phenyl or benzyl,
R³ is optionally halogen-substituted-C₁-C₈-alkyl or is in each case optionally halogen-, C₁-C₆-alkyl-, C₁-C₆-alkoxy-, C₁-C₄-haloalkyl-, C₁-C₄- haloalkoxy-, cyano- or nitro-substituted phenyl or benzyl,
R⁴ and R⁵ independently of one another are in each case optionally halogen- substituted C₁-C₈-alkyl, C₁-C₈-alkoxy, C₁-C₈-alkylamino, di-(C₁-C₈- alkyl)amino, C₁-C₈-alkylthio, C₂-C₈-alkenylthio, C₃-C₇-cycloalkylthio or are in each case optionally halogen-, nitro-, cyano-, C₁-C₄-alkoxy-, C₁-C₄- haloalkoxy-, C₁-C₄-alkylthio-, C₁-C₄-haloalkylthio-, C₁-C₄-alkyl- or C₁- C₄-haloalkyl-substituted phenyl, phenoxy or phenylthio,
R⁶ and R⁷ are independently of one another hydrogen, are in each case optionally halogen-substituted C₁-C₈-alkyl, C₃-C₈-cycloalkyl, C₁-C₈-alkoxy, C₃-C₈- alkenyl, C₁-C₈-alkoxy-C₁-C₈-alkyl, are optionally halogen-, C₁-C₈- haloalkyl-, C₁-C₈-alkyl- or C₁-C₈-alkoxy-substituted phenyl, optionally halogen,-, C₁-C₈-alkyl-, C₁-C₈-haloalkyl- or C₁-C₈-alkoxy-substituted benzyl or together are an optionally C₁-C₄-alkyl-substituted C₃-C₆- alkylene radical in which optionally one carbon atom is replaced by oxygen or sulphur,
R¹³ is hydrogen, is in each case optionally halogen-substituted C₁-C₈-alkyl or C₁-C₈-alkoxy, is optionally halogen-, C₁-C₄-alkyl- or C₁-C₄-alkoxy- substituted C₃-C₈-cycloalkyl in which optionally one methylene group is replaced by oxygen or sulphur, or is in each case optionally halogen-, C₁- C₆-alkyl-, C₁-C₆-alkoxy-, C₁-C₄-haloalkyl-, C₁-C₄-haloalkoxy-, nitro- or cyano-substituted phenyl, phenyl-C₁-C₄-alkyl or phenyl-C₁-C₄-alkoxy,
R^{14a} is hydrogen or C₁-C₈-alkyl or
R¹³ and R^{14a} are together C₄-C₆-alkanediyl,
R^{15a} and R^{16a} are alike or different and are C₁-C₆-alkyl or
R^{15a} and R^{16a} are together a C₂-C₄-alkanediyl radical which is optionally substituted by C₁-C₆-alkyl, C₁-C₆-haloalkyl or by optionally halogen-, C₁- C₆-alkyl-, C₁-C₄-haloalkyl-, C₁-C₆-alkoxy-, C₁-C₄-haloalkoxy-, nitro- or cyano-substituted phenyl,
R^{17a} and R^{18a} are independently of one another hydrogen, are optionally halogen- substituted C₁-C₈-alkyl or are optionally halogen-, C₁-C₆-alkyl-, C₁-C₆- alkoxy-, C₁-C₄-haloalkyl-, C₁-C₄-haloalkoxy-, nitro- or cyano-substituted phenyl or
R^{17a} and R^{18a}, together with the carbon atom to which they are attached, are a carbonyl group or are optionally halogen-, C₁-C₄-alkyl- or C₁-C₄-alkoxy- substituted C₅-C₇-cycloalkyl in which optionally one ethylene group is replaced by oxygen or sulphur,
R^{19a} and R^{20a} are independently of one another C₁-C₁₀-alkyl, C₂-C₁₀-alkenyl, C₁-C₁₀-alkoxy, C₁-C₁₀-alkylamino, C₃-C₁₀-alkenylamino, di-(C₁-C₁₀- alkyl)amino or di-(C₃-C₁₀-alkenyl)amino,

3. Composition according to Claim 2, **characterized by** the following definitions of the substituents of compounds of the formula (I)
W is hydrogen, fluorine, chlorine, bromine, C₁-C₄-alkyl, C₂-C₄-alkenyl, C₂- C₄-alkynyl, C₁-C₄-alkoxy, C₁-C₂-haloalkyl or C₁-C₂-haloalkoxy,
X is chlorine, bromine, iodine, C₁-C₄-alkyl, C₂-C₄-alkenyl, C₂-C₄-alkynyl, C₁-C₄-alkoxy, C₁-C₄-alkoxy-C₁-C₃-alkoxy, C₁-C₂-haloalkyl, C₁-C₂- haloalkoxy or cyano,
Y is in position 4 hydrogen, fluorine, chlorine, bromine, iodine, Methoxy, ethoxy, cyano, trifluoromethyl, difluoromethoxy or trifluoromethoxy,
Z is hydrogen;
W is also hydrogen, fluorine, chlorine, bromine or C₁-C₄-alkyl,
X is also chlorine, bromine, C₁-C₄-alkyl, C₁-C₄-alkoxy, C₁-C₂-haloalkyl, C₁-C₂-haloalkoxy or cyano,
Y is also in position 4 C₂-C₄-alkenyl, C₂-C₄-alkynyl or the radical 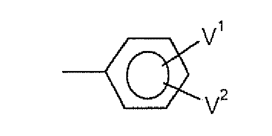
Z is also hydrogen,
V¹ is also fluorine, chlorine, C₁-C₄-alkyl, C₁-C₄-alkoxy, C₁-C₂-haloalkyl or C₁-C₂-haloalkoxy, cyano or nitro,
V² is also hydrogen, fluorine, chlorine, C₁-C₄-alkyl, C₁-C₄-alkaxy or C₁-C₂- haloalkyl,
V¹ and V² together are also -O-CH₂-O- and -O-CF₂-O-;
W is likewise hydrogen, fluorine, chlorine, bromine or C₁-C₄-alkyl,
X is likewise chlorine, bromine, C₁-C₄-alkyl, C₁-C₄-alkoxy, C₁-C₂- haloalkyl, C₁-C₂-haloalkoxy or cyano,
Y is likewise in position 5 C₂-C₄-alkenyl, C₂-C₄-alkynyl or the radical 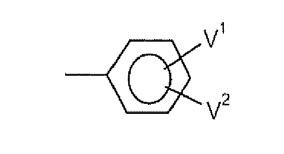
Z is likewise in position 4 hydrogen, C₁-C₄-alkyl or chlorine,
V¹ is likewise fluorite, chlorine, C₁-C₄-alkyl, C₁-C₄-alkoxy, C₁-C₂-haloalkyl or C₁-C₂-haloalkoxy, cyano or nitro,
V² is likewise hydrogen, fluorine, chlorine, C₁-C₄-alkyl, C₁-C₄-alkoxy or C₁- C₂-haloalkyl,
V¹ and V² together are likewise -O-CH₂-O- and -O-CF₂-O-;
W moreover is hydrogen, C₁-C₄-alkyl, C₂-C₄-alkenyl, C₂-C₄-alkynyl, C₁-C₄- alkoxy, fluorine, chlorine, bromine or trifluoromethyl,
X moreover is fluorine, chlorine, bromine, iodine, C₁-C₄-alkyl, C₂-C₄- alkenyl, C₂-C₄-alkynyl, C₁-C₄-alkoxy, C₁-C₄-alkoxy-C₁-C₃-alkoxy, C₁- C₂-haloalkyl, C₁-C₂-haloalkoxy or cyano,
Y moreover in position 4 is C₁-C₄-alkyl,
Z moreover is hydrogen;
W additionally is hydrogen, fluorine, chlorine, bromine, C₁-C₄-alkyl or C₁- C₄-alkoxy,
X additionally is chlorine, bromine, iodine, C₁-C₄-alkyl, C₁-C₄-alkoxy, C₁- C₂-haloalkyl, C₁-C₂-haloalkoxy or cyano,
Y additionally in position 4 is hydrogen, chlorine, bromine, iodine, C₁-C₄- alkyl, C₁-C₂-haloalkyl or C₁-C₂-haloalkoxy,
Z additionally in position 3 or 5 is fluorine, chlorine, bromine, iodine, C₁-C₄- alkyl, C₁-C₂-haloalkyl, C₁-C₄-alkoxy or C₁-C₂-haloalkoxy;
CKE is one of the groups 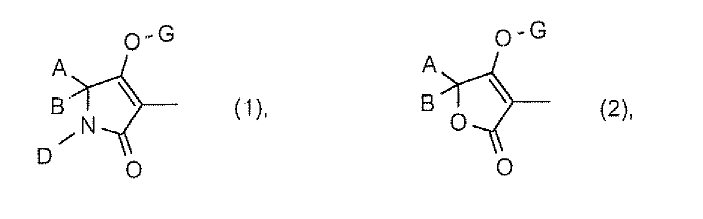 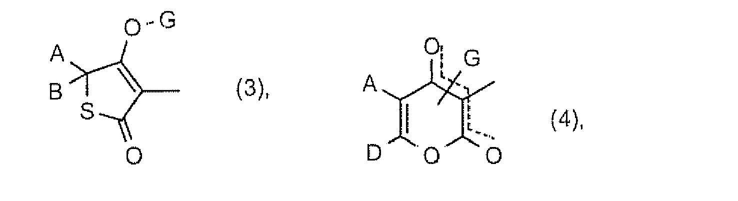 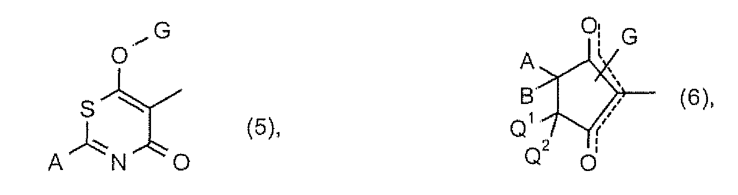 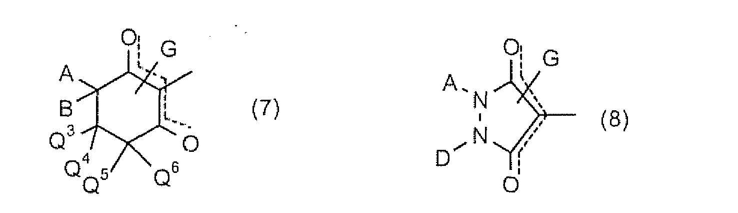 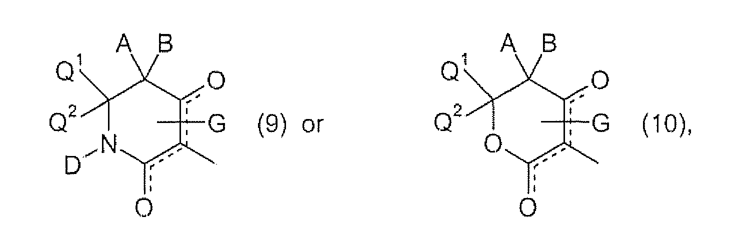
A is hydrogen, in each case optionally mono- to tri-fluorine- or -chlorine- substituted C₁-C₆-alkyl, C₁-C₄-alkoxy-C₁-C₂-alkyl, optionally singly to doubly C₁-C₂-alkyl- or C₁-C₂-alkoxy-substituted C₃-C₆-cycloalkyl or (but not in the case of the compounds of the formulae (1-3), (1-4), (1-6) and (1-7)) in each case optionally singly to doubly fluorine-, chlorine-, bromine-, C₁- C₄-alkyl-, C₁-C₂-haloalkyl-, C₁-C₄-alkoxy-, C₁-C₂-haloalkoxy-, cyano- or nitre-substituted phenyl, or benzyl,
B is hydrogen, C₁-C₄-alkyl or C₁-C₂-alkoxy-C₁-C₂-alkyl, or
A, B and the carbon atom to which they are attached are saturated or unsaturated C₃-C₇-cycloalkyl in which optionally one ring member is replaced by oxygen or sulphur and which is optionally singly to doubly substituted by C₁-C₆-alkyl, C₁-C₄-alkoxy-C₁-C₂-alkyl, trifluoromethyl, C₁-C₆-alkoxy, C₁-C₃-alkoxy-C₁-C₃-alkoxy or C₃-C₆-cycloalkylmethoxy, with the proviso that in that case Q³ is hydrogen or Methyl, or
A, B and the carbon atom to which they are attached are C₅-C₆-cycloalkyl which is substituted by an alkylenedithiol group or by an alkylenedioxyl group or by an alkylenediyl group which is optionally substituted by methyl or ethyl and optionally contains one or two oxygen or sulphur atoms not directly adjacent, and which, with the carbon atom to which it is attached, forms a further five- or six-membered ring, with the proviso that in that case Q³ is hydrogen or methyl, or
A, B and the carbon atom to which they are attached are C₃-C₆-cycloalkyl or C₅-C₆-cycloalkenyl in which two substituents, together with the carbon atoms to which they are attached, are in each case optionally C₁-C₂-alkyl- or C₁-C₂-alkoxy-substituted C₂-C₄-alkanediyl, C₂-C₄-alkenediyl or butadienediyl, with the proviso that in that case Q³ is hydrogen or methyl,
D is hydrogen, is in each case optionally mono- to tri-fluoro-substituted C₁- C₆-alkyl, C₃-C₆-alkenyl, C₁-C₄-alkoxy-C₂-C₃-alkyl, is optionally C₃-C₆- cycloalkyl which is singly to doubly substituted by C₁-C₄-alkyl, C₁-C₄- alkoxy or C₁-C₂-haloalkyl and in which optionally one methylene group is replaced by oxygen, or (but not in the case of the compounds of the formulae (I-1)) is pyridyl or phenyl in each case optionally substituted singly to doubly by fluorine, chlorine, bromine, C₁-C₄-alkyl, C₁-C₄- haloalkyl, C₁-C₄-alkoxy or C₁-C₄-haloalkoxy, or
A and D together are optionally singly to doubly substituted C₃-C₅-alkanediyl in which one methylene group can be replaced by a carbonyl group (but not in the case of the compounds of the formula (I-1)), oxygen or sulphur, suitable substituents, being C₁-C₂-alkyl or C₁-C₂-alkoxy, or
A and D (in the case of the compounds of the formula (I-1)), together with the atoms to which they are attached, are one of the groups AD-1 to AD-10: 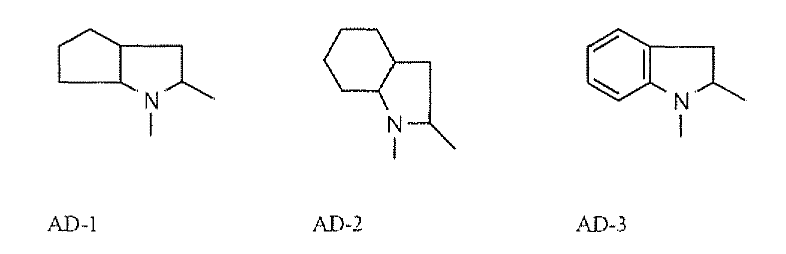 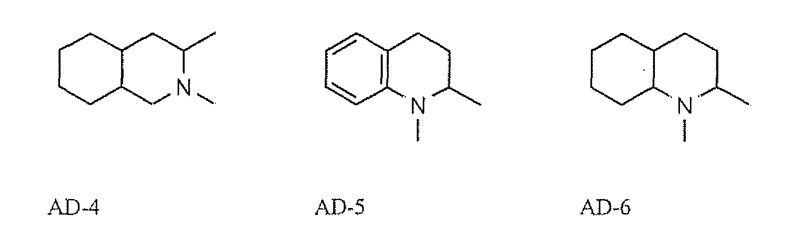 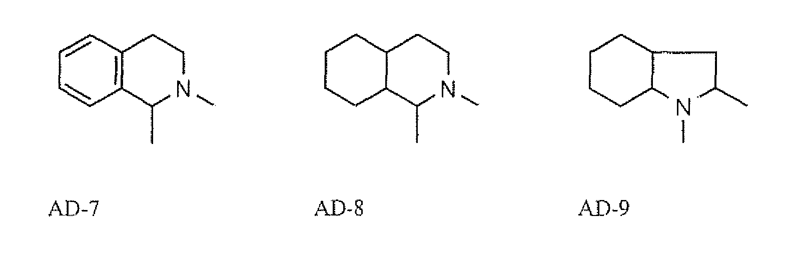 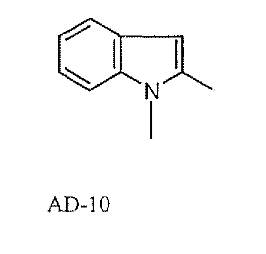 or
A and Q¹ together are C₃-C₄-akanediyl in each case optionally substituted singly or doubly by identical or different substituents selected from C₁-C₂-alkyl or C₁-C₂-alkoxy, or
D and Q¹ together are C₃-C₄-alkanediyl, or
Q¹ is hydrogen, C₁-C₄-alkyl, C₁-C₄-alkoxy-C₁-C₂-alkyl, or optionally methyl- or methoxy-substituted C₃-C₆-cycloalkyl in which optionally one methylene group is replaced by oxygen,
Q₂ is hydrogen, methyl or ethyl,
Q⁴, Q⁵ and Q⁶ independently of one another are hydrogen or C₁-C₃-alkyl,
Q³ is hydrogen, C₁-C₄-alkyl, or optionally singly to doubly methyl- or methoxy-substituted C₃-C₆-cycloalkyl, or
Q¹ and Q² are hydrogen, C₁-C₄-alkyl, C₁-C₄-alkoxy-C₁-C₂-alkyl, or optionally methyl- or methoxy-substituted C₃-C₆-cycloalkyl in which optionally one ethylene group is replaced by oxygen, or
Q³ and Q⁴, together with the carbon to which they are attached, are an optionally C₁-C₂-alkyl- or C₁-C₂-alkoxy-substituted saturated C₅-C₆ ring in which optionally one ring member is replaced by oxygen or sulphur, with the proviso that in that case A is hydrogen or methyl,
G is hydrogen (a) or is one of the groups 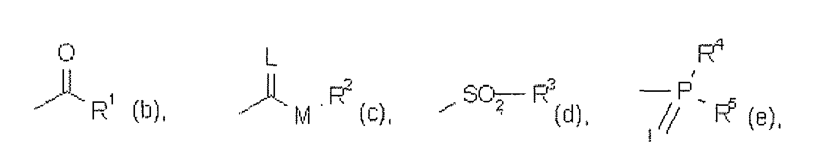
E (f) or 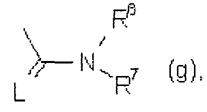 in particular is (a), (b) or (c),
in which
E is one metal ion equivalent or an ammonium ion,
L is oxygen or sulphur and
M is oxygen or sulphur,
R¹ is in each case optionally mono- to tri-fluorine- or -chlorine-substituted C₁- C₈-alkyl, C₂-C₁₈-alkenyl, C₁-C₄-alkoxy-C₁-C₂-alkyl, C₁-C₄-alkylthio- C₁-C₂-alkyl or optionally singly to doubly fluorine-, chlorine-, C₁-C₂- alkyl- or C₁-C₂-alkoxy-substituted C₃-C₆-cycloalkyl in which optionally one or two ring members not directly adjacent are replaced by oxygen,
is phenyl optionally substituted singly to doubly by fluorine, chlorine, bromine, cyano, nitro, C₁-C₄-alkyl, C₁-C₄-alkoxy, C₁-C₂-haloalkyl or C₁- C₂-haloalkoxy,
R² is in each case optionally mono- to tri-fluorine-substituted C₁-C₈-alkyl, C₂- C₈-alkenyl or C₁-C₄-alkoxy-C₂-C₄-alkyl,
is optionally mono-C₁-C₂-alkyl- or -C₁-C₂-alkoxy-substituted C₃-C₆- cycloalkyl or
is Benzyl or Phenyl in each case optionally substituted singly to doubly by fluorine, chlorine, bromine, cyano, nitro, C₁-C₄-alkyl, C₁-C₃-alkoxy, trifluoromethyl or trifluoromethoxy,
R³ is C₁-C₆-alkyl optionally substituted one to three times by fluorine or is phenyl optionally substituted once by fluorine, chlorine, bromine, C₁-C₄- alkyl, C₁-C₄-alkoxy, trifluoromethyl, trifluoromethoxy, cyano or nitro,
R⁴ is C₁-C₆-alkyl, C₁-C₆-alkoxy, C₁-C₆-alkylamino, di-(C₁-C₆-alkyl)amino, C₁-C₆-alkylthio, C₃-C₄-alkenylthio, C₃-C₆-cycloalkylthio or is phenylthio, phenoxy or phenyl in each case optionally substituted once by fluorine, chlorine, bromine, nitro, cyano, C₁-C₃-alkoxy, C₁-C₃-haloalkoxy, C₁-C₃- alkylthio, C₁-C₃-haloalkylthio, C₁-C₃-alkyl or trifluoromethyl,
R⁵ is C₁-C₆-alkoxy or C₁-C₆-alkylthio,
R⁶ is hydrogen, C₁-C₆-alkyl, C₃-C₆-cycloalkyl, C₁-C₆-alkoxy, C₃-C₆- alkenyl, C₁-C₆-alkoxy-C₁-C₄-alkyl, is phenyl, optionally substituted once by fluorine, chlorine, bromine, trifluoromethyl, C₁-C₄-alkyl or C₁-C₄- alkoxy, or is benzyl optionally substituted once by fluorine, chlorine, bromine, C₁-C₄-alkyl, trifluoromethyl or C₁-C₄-alkoxy,
R⁷ is C₁-C₆-alkyl, C₃-C₆-alkenyl or C₁-C₆-alkoxy-C₁-C₄-alkyl,
R⁶ and R⁷ together are an optionally methyl- or ethyl-substituted C₄-C₅-alkylene radical in which optionally one methylene group is replaced by oxygen or sulphur

4. Composition according to one or more of Claims 1 to 3, **characterized in that** the active ingredient content is between 0.5% and 50% by weight.

5. Composition according to one or more of Claims 1 to 4, **characterized in that** in the formula (II) according to Claim 1 D is nitrogen

6. Composition according to one or more of Claims 1 to 5, **characterized in that** the amount of ammonium salt or phosphonium salt is 0.5 to 80 mmol/l.

7. Composition according to Claim 1, **characterized in that** in the formula (II) according to Claim 1 R³⁰ is lactate, sulphate, nitrate, thiosulphate, thiocyanate, citrate, oxalate, formate, acetate, monohydrogenphosphate or dihydrogenphosphate

8. Composition according to Claim 1, **characterized in that** R³⁰ is sulphate, thiocyanate, dihydrogenphosphate or monohydrogenphosphate.

9. Composition according to any one of Claims 1 to 8, **characterized in that** the penetrant is the ester of a vegetable oil

10. Composition according to any one of Claims 1 to 8, **characterized in that** the penetrant is rapeseed oil methyl ester.

11. Composition according to any one of Claims 1 to 8, **characterized in that** the penetrant is an open alkanol alkoxylate.

12. Composition according to any one of Claims 1 to 8, **characterized in that** the penetrant is a compound of the formula (III-c),
R-O-(-PO-)ᵣ-(EO-)ₛ-R' (III-c)
in which
R is as defined above,
R' is as defined above,
EO is -CH₂-CH₂-O-,
PO is 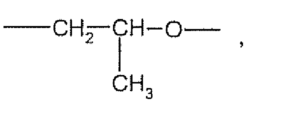
r is a number from 1 to 10, and
s is a number from 1 to 10.

13. Composition according to any one of Claims 1 to 8, **characterized in that** the penetrant is a compound of the formula (III-c-1), 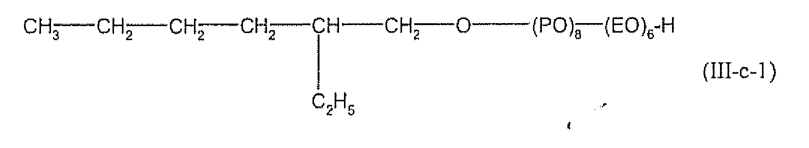 in which
EO is -CH₂-CH₂-O-,
PO is 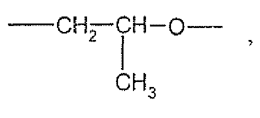 and
the numbers 8 and 6 represent average values

14. Composition according to any one of Claims 1 to 13, **characterized in that** the amount of penetrant is 1% to 95% by weight.

15. Method of controlling unwanted plant growth, **characterized in that** a composition according to one or more of Claims 1 to 14 is applied neat or diluted to the plants, plant parts, plant seeds or area on which the plants are growing

16. Method of boosting the activity of herbicidal crop protection materials comprising an active ingredient from the class of the phenyl-substituted cyclic ketoenols, **characterized in that** the application-ready material (spray liquor) is prepared using a composition according to Claim 1

17. Method according to Claim 16, **characterized in that** the salt of the formula (II) is present in a final concentration of 05 to 80 mmol/l

18. Method according to Claim 16, **characterized in that** the penetrant is present in a final concentration of 0 1 to 10 g/l.

19. Method according to Claim 16, **characterized in that** the penetrant is present in a final concentration of 0.1 to 10 g/l and the salt of the formula (II) in a final concentration of 0.5 to 80 mmol/l.

20. Use of a salt of the formula (II) in a composition according to Claim 1 for boosting the activity of a herbicidal crop protection material comprising an active ingredient from the class of the phenyl-substituted cyclic ketoenols of the formula (I) according to Claim 2, **characterized in that** the salt is used in preparing an application-ready crop protection material (spray liquor).

21. Use according to Claim 20, **characterized in that** in the application-ready crop protection material the salt of the formula (II) is present in a concentration of 0.5 to 80 mmol/l.

## Revendications

1. Composition comprenant
- au moins un principe actif herbicide de la classe des céto-énols cycliques phényle-substitués de la formule (I) 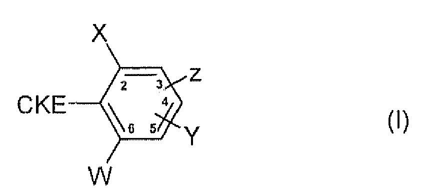 dans laquelle
W représente l'hydrogène, un groupe alkyle, alcényle, alcynyle, un atome d'halogène, un groupe alcoxy, halogénoalkyle, halogénoalcoxy ou cyano,
X représente un atome d'halogène, un groupe alkyle, alcényle, alcynyle, alcoxy, alcoxy- alcoxy, halogénoalkyle, halogénoalcoxy ou cyano,
Y représente l'hydrogène, un atome d'halogène, un groupe alkyle, alcényle, alcynyle, alcoxy, cyano, halogénoalkyle, halogénoalcoxy ; ou phényle ou hétaryle éventuellement substitué,
Z représente l'hydrogène, un atome d'halogène, un groupe alkyle, halogénoalkyle, cyano, alcoxy, ou halogénoalcoxy,
CAKE représente un des groupes 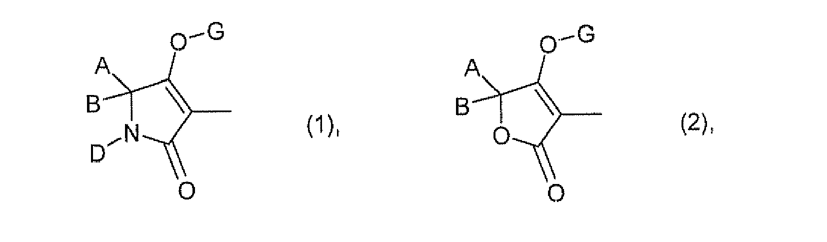 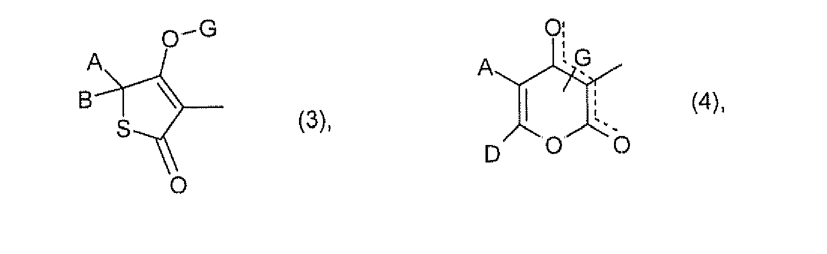 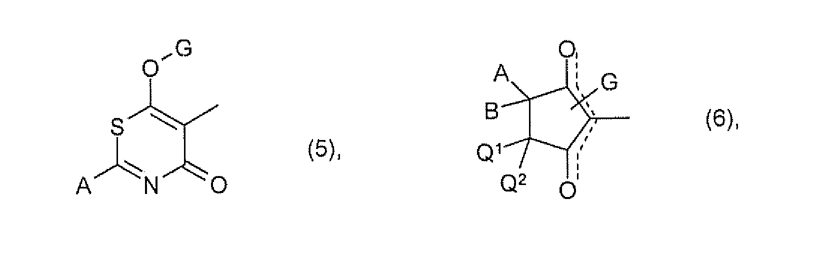 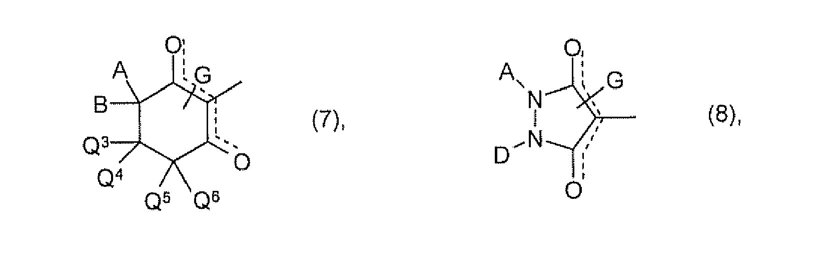 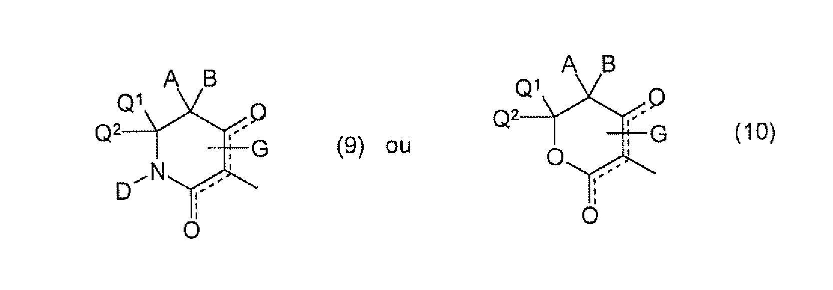 dans lesquels
A représente l'hydrogène ; un groupe alkyle, alcényle, alcoxyalkyle, alkylthioalkyle à chaque fois éventuellement substitué par un atome d'halogène ; un groupe cyclo- alkyle saturé ou insaturé, éventuellement substitué, dans lequel au moins un atome du noyau est éventuellement remplacé par un hétéroatome ; ou un groupe aryle, arylalkyle ou hétaryle à chaque fois éventuellement substitué par un atome d'halogène, un groupe alkyle, halogéno- alkyle, alcoxy, halogénoalcoxy, cyano ou nitro,
B représente l'hydrogène, un groupe alkyle ou alcoxyalkyle, ou
A et B avec l'atome de carbone auquel ils sont liés représentent un cycle saturé ou insaturé, non substitué ou substitué contenant éventuellement au moins un hétéroatome,
D représente l'hydrogène ou un reste éventuellement substitué de la série des groupes alkyle, alcényle, alcynyle, alcoxyalkyle ; cycloalkyle saturé ou insaturé, dans lequel éventuellement un ou plusieurs éléments du noyau sont remplacés par des hétéroatomes ; arylalkyle, aryle, hétarylalkyle ou hétaryle ou
A et D représentent avec les atomes auxquels ils sont liés un cycle saturé ou insaturé et substitué ou non substitué dans la partie A, D, contenant éventuellement au moins un hétéroatome (dans le cas de CKE = 8 un autre), respectivement
A et Q¹ représentent ensemble un groupe alcanediyle ou alcènediyle éventuellement substitué par un groupe hydroxy, à chaque fois éventuellement substitué par un groupe alkyle, alcoxy, alkylthio, cycloalkyle, benzylaxy ou aryle ou
D et Q¹ représentent avec les atomes auxquels ils sont liés un cycle saturé ou insaturé et non substitué ou substitué dans la partie D, Q¹, contenant éventuellement au moins un hétéroatome
Q¹ représente l'hydrogène, un groupe alkyle, alcoxyalkyle, cycloalkyle éventuellement substitué (où éventuellement un groupe méthylène est remplacé par de l'oxygène ou du soufre) ou un groupe phényle éventuellement substitué,
Q², Q⁴, Q⁵ et Q⁶ représentent indépendamment l'un de l'autre l'hydrogène ou un groupe alkyle,
Q³ représente l'hydrogène, un groupe alkyle, alcoxyalkyle, alkylthioalkyle éventuellement substitué, cycloalkyle éventuellement substitué (où éventuellement un groupe méthylène est remplacé de l'oxygène ou du soufre) ou un groupe phényle éventuellement substitué, ou
Q¹ et Q² représentent avec les atomes de carbone auxquels ils sont liés un cycle substitué ou non substitué contenant éventuellement un hétéroatome, ou
Q³ et Q⁴ représentent avec les atomes de carbone auxquels ils sont liés un cycle saturé ou insaturé, non substitué ou substitué contenant éventuellement un hétéroatome,
G représente l'hydrogène (a) ou un des groupes 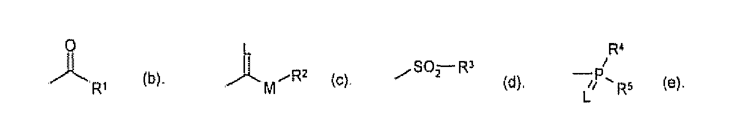
E(f) ou 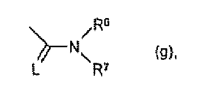 où
E représente un équivalent d'ion métallique ou un ion ammonium,
L représente l'oxygène ou le soufre,
M représente l'oxygène ou le soufre,
R¹ représente un groupe alkyle, alcényle, alcoxyalkyle, alkylthioalkyle, poly- alcoxyalkyle éventuellement substitué par un atome d'halogène ou cycloalkyle éventuellement substitué par un atome d'halogène, un groupe alkyle ou alcoxy, lequel peut être interrompu par au moins un hétéroatome, un groupe phényle, phénylalkyle, hétaryle, phénoxyalkyle ou hétaryloxyalkyle à chaque fois éventuellement substitué,
R² représente un groupe alkyle, alcényle, alcoxyalkyle, polyalcoxyalkyle à chaque fois éventuellement substitué par un atome d'halogène ou un groupe cycloalkyle, phényle ou benzyle à chaque fois éventuellement substitué,
R³, R⁴ et R⁵ représentent indépendamment l'un de l'autre un groupe alkyle, alcoxy, alkylamino, dialkylamino, alkylthio, alcénylthio, cycloalkylthio à chaque fois éventuellement substitué par un atome d'halogène ou un groupe phényle, benzyle, phénoxy ou phénylthio à chaque fois éventuellement substitué,
R⁶ et R⁷ représentent indépendamment l'un de l'autre l'hydrogène, un groupe alkyle, cycloalkyle, alcényle, alcoxy, alcoxyalkyle à chaque fois éventuellement substitué par un atome d'halogène ; un groupe phényle éventuellement substitué ; un groupe benzyle éventuellement substitué ou avec l'atome N auquel ils sont liés un cycle éventuellement interrompu par de l'oxygène ou du soufre,
- au moins un sel de la formule (II) 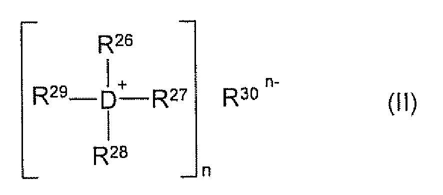 dans laquelle
D représente l'azote ou le phosphore,
R²⁶, R²⁷, R²⁸ et R²⁹ peuvent être choisis indépendamment l'un de l'autre parmi l'hydrogène ou un groupe alkyle en C₁-C₈ à chaque fois éventuellement substitué ou alkylène en C₁-C₈ une fois ou plusieurs fois insaturé, éventuellement substitué, les substituants pouvant être choisis parmi un atome d'halogène, un groupe nitro et cyano,
n représente 1, 2, 3 ou 4,
R³⁰ représente l'hydrogénocarbonate, le tétraborate, le fluorure, le bromure, l'iodure, le chlorure, le monohydrogéno- phosphate, le dihydrogénophosphate, l'hydrogénosulfate, le tartrate, le sulfate, le nitrate, le thiosulfate, le thiocyanate, le formiate, le lactate, l'acétate, le propionate,
le butyrate, le pentanoate, le citrate ou l'oxalate, ou
le carbonate, le pentaborate, le sulfite, le benzoate, l'hydrogénooxalate, l'hydrogénocitrate, le sulfate de méthyle ou le tétrafluoroborate
et
- au moins un promoteur de pénétration, le promoteur de pénétration étant un alcoxylate d'alcool gras de la formule (III)
R-O-(-AO)ᵥ-R¹ (III)
dans laquelle
R représente un groupe alkyle alinéaire ou ramifié ayant de 4 à 20 atomes de carbone,
R¹ représente l'hydrogène, un groupe méthyle, éthyle, n-propyle, i-propyle, n-butyle, i-butyle, t-butyle, n-pentyle ou n-hexyle,
AO représente un reste oxyde d'éthylène, un reste oxyde de propylène, un reste oxyde de butylène ou des mélanges de restes oxyde d'éthylène et oxyde de propylène ou des restes oxyde de butylène et
v représente des nombres de 2 à 30, ou une huile minérale ou végétale ou l'ester d'une huile minérale ou végétale.

2. Composition selon la revendication 1, **caractérisée par** les définitions pour les substituant des composés de la formule (I) :
W représente l'hydrogène, un groupe alkyle en C₁-C₆, alcényle, en C₂-C₆, alcynyle en C₂-C₆, un atome d'halogène, un groupe alcoxy en C₁-C₆, halogénoalkyle en C₁-C₄, halogénoalcoxy en C₁-C₄ ou cyano,
X représente un atome d'halogène, un groupe alkyle en C₁-C₆, alcényle en C₂-C₆, alcynyle en C₂-C₆, alcoxy en C₁-C₆, (alcoxy en C₁-C₆)-(alcoxy en C₁- C₄), halogénoalkyle en C₁-C₄, halogénoalcoxy en C₁-C₄ ou cyano,
Y représente l'hydrogène, un atome d'halogène, un groupe alkyle en C₁-C₆, alcényle, en C₂-C₆, alcynyle en C₂-C₆, alcoxy en C₁-C₆, cyano, halogénoalkyle en C₁-C₄, halogénoalcoxy ; phényle ou pyridyle substitué par V¹ et V²,
V¹ représente un atome d'halogène, un groupe alkyle en C₁-C₁₂, alcoxy en C₁-C₆, halogénoalkyle en C₁- C₄, halogénoalcoxy en C₁-C₄, cyano ou nitro,
V² représente l'hydrogène, un atome d'halogène, un groupe alkyle en C₁-C₆, alcoxy en C₁-C₆ ou halogénoalkyle en C₁-C₄,
V¹ et V² représentent ensemble un groupe alcanediyle en C₃-C₄, lequel peut être éventuellement substitué par un atome d'halogène et/ou un groupe alkyle en C₁-C₂ et lequel peut être éventuellement interrompu par un ou deux atomes d'oxygène,
Z représente l'hydrogène, un atome d'halogène, un groupe alkyle en C₁-C₆, halogénoalkyle en C₁-C₄, cyano, alcoxy en C₁-C₆ ou halogénoalcoxy en C₁- C₄,
CKE représente un des groupes 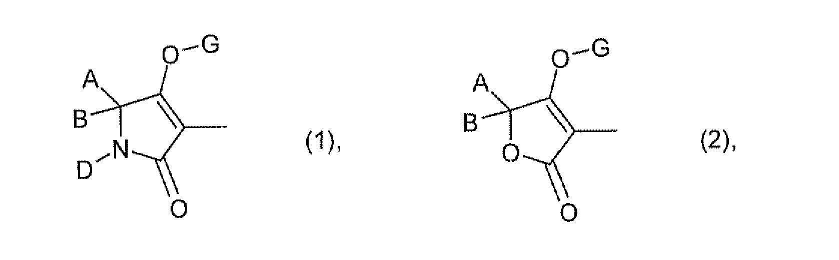 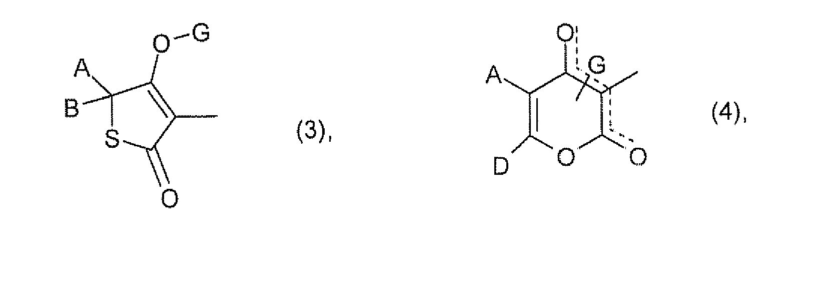 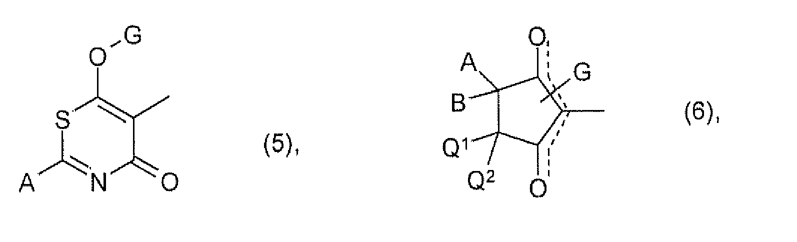 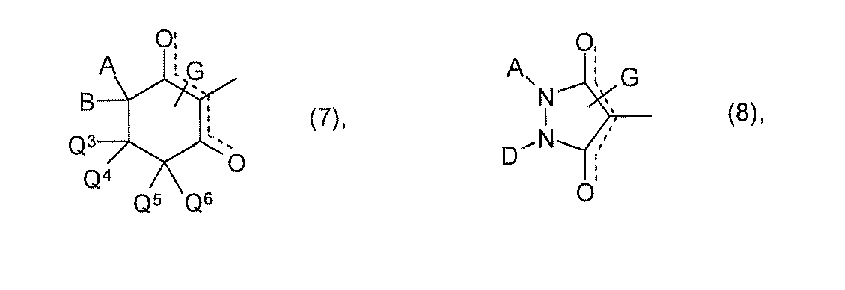 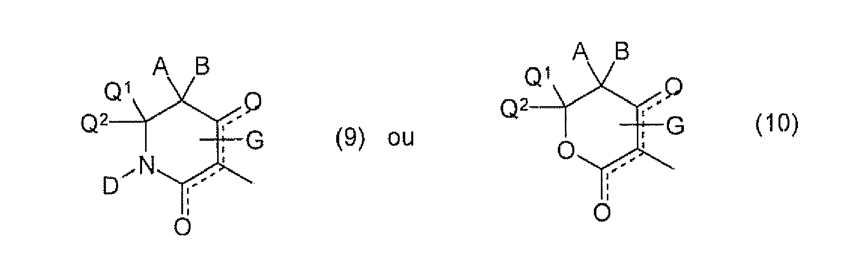
A représente l'hydrogène ou un groupe alkyle en C₁- C₁₂, alcényle en C₃-C₈, (alcoxy en C₁-C₁₀)-(alkyle en C₁-C₈), (alkylthio en C₁-C₁₀)-(alkyle en C₁-C₆) à chaque fois éventuellement substitué par un atome d'halogène ; un groupe cycloalkyle en C₃-C₈ éventuellement substitué par un atome d'halogène, un groupe alkyle en C₁-C₆ ou alcoxy en C₁-C₆, dans lequel éventuellement un ou deux éléments du noyau non directement voisin sont remplacés par l'oxygène et/ou le soufre ou un groupe phényle, naphtyle, hétaryle avec de 5 à 6 atomes de noyau (par exemple furanyle, pyridyle, imidazolyle, triazolyle, pyrazolyle, pyrimidyle, thiazolyle ou thiényle), phényle-(alkyle en C₁-C₆) ou naphtyle-(alkyle en C₁-C₆) éventuellement substitué par un atome d'halogène, un groupe alkyle en C₁-C₆, halogénoalkyle en C₁-C₆, alcoxy en C₁-C₆, halogénoalcoxy en C₁-C₆, cyano ou nitro,
B représente l'hydrogène, un groupe alkyle en C₁-C₁₂ ou (alcoxy en C₁-C₈)-(alkyle en C₁-C₆) ou
A, B et l'atome de carbone auquel ils sont liés, représentent un groupe cycloalkyle en C₃-C₁₀ saturé ou cycloalkyle en C₅-C₁₀ insaturé, où un élément du noyau est éventuellement remplacé par de l'oxygène ou du soufre et lesquels sont éventuellement substitués une ou deux fois par un groupe alkyle en C₁-C₈, (alcoxy en C₁-C₆)-(alkyle en C₁-C₆), (cycloalkyle en C₃-C₆)-(alcoxy en C₁-C₂), cycloalkyle en C₃-C₁₀, halogénoalkyle en C₁-C₈, alcoxy en C₁-C₈, (alcoxy en C₁-C₆)-(alcoxy en C₁- C₄), alkylthio en C₁-C₈, un atome d'halogène ou un groupe phényle ou
A, B et l'atome de carbone auquel ils sont liés représentent un groupe cycloalkyle en C₃-C₆, lequel est substitué par un groupe alkylènediyle éventuellement substitué par un groupe alkyle en C₁-C₄ contenant un ou deux atomes d'oxygène et/ou de soufre non directement voisins, ou par un groupe alkylènedioxyle ou alkylènedithioyle, lequel forme avec l'atome de carbone auquel il est lié un autre noyau à de 5 à 8 éléments ou
A, B et l'atome de carbone auquel ils sont liés, représentent un groupe cycloalkyle en C₃-C₈ ou cycloalcényle en C₅-C₈, dans lesquels deux substituants avec les atomes de carbone auxquels ils sont liés représentent un groupe alcanediyle en C₂-C₆, alcènediyle en C₂-C₆ ou alcanediènediyle en C₄-C₆ à chaque fois éventuellement substitué par un groupe alkyle en C₁-C₆, alcoxy en C₁-C₆ ou un atome d'halogène, où un groupe méthylène est éventuellement remplacé par de l'oxygène ou du soufre,
D représente l'hydrogène, un groupe alkyle en C₁- C₁₂, alcényle en C₃-C₈, alcynyle en C₃-C₈, (alcoxy en C₁-C₁₀)-(alkyle en C₂-C₈) éventuellement substitué par un atome d'halogène ; un groupe cycloalkyle en C₃-C₈ éventuellement substitué par un atome d'halogène, un groupe alkyle en C₁-C₄, alcoxy en C₁-C₄ ou halogénoalkyle en C₁-C₄, dans lequel un élément de noyau est éventuellement remplacé par de l'oxygène ou du soufre ou un groupe phényle, hétaryle avec 5 ou 6 atomes de noyau (par exemple furanyle, imidazolyle, pyridyle, thiazolyle, pyrazolyle, pyrimidyle, pyrrolyle, thiényle ou triazolyle) à chaque fois éventuellement substitué par un atome d'halogène, un groupe alkyle en C₁-C₆, halogénoalkyle en C₁-C₆, alcoxy en C₁-C₆, halogénoalcoxy en C₁-C₆, cyano ou nitro ; phényl- (alkyle en C₁-C₆) ou hétaryle-(alkyle en C₁-C₆) avec 5 ou 6 atomes de noyau (par exemple furanyle, imidazolyle, pyridyle, thiazolyle, pyrazolyle, pyrimidyle, pyrrolyle, thiényle ou triazolyle) ou
A et D représentent ensemble un groupe alcanediyle en C₃-C₆ ou alcènediyle en C₃-C₆ à chaque fois éventuellement substitué, où un groupe méthylène est éventuellement remplacé par un groupe carbonyle, de l'oxygène ou du soufre et interviennent à chaque fois comme substituants : un atome d'halogène, un groupe hydroxy, mercapto ; ou alkyle en C₁-C₁₀, alcoxy en C₁-C₆, (alkylthio en C₁-C₆, cycloalkyle en C₃-C₇, phényle ou benzyloxy à chaque fois éventuellement substitué par un atome d'halogène, ou un autre groupement alcanediyle en C₃-C₆, groupement alcènediyle en C₃-C₆ ou groupement butanediényle, lequel est éventuellement substitué par un groupe alkyle en C₁-C₆ ou dans lequel deux substituants éventuellement voisins forment avec les atomes de carbone auxquels ils sont liés un autre cycle saturé ou insaturé avec 5 ou 6 atomes de noyau (dans le cas du composé de la formule (I-I) A et D représentent avec les atomes auxquels ils sont liés par exemple les groupes AD-1 à AD-10 cités ci- dessous), qui peuvent contenir de l'oxygène ou du soufre, ou dans lesquels est éventuellement contenu un des groupes suivants 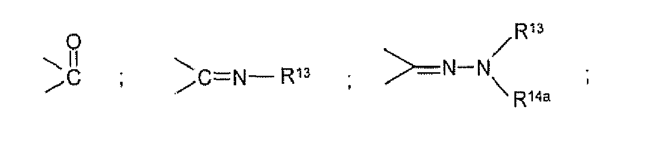 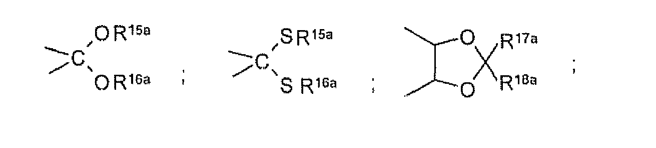 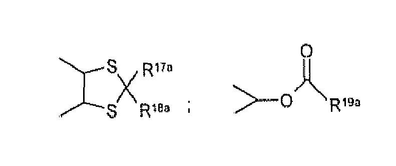 ou 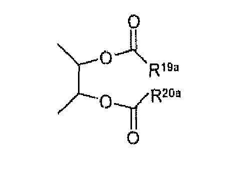 ou
A et Q¹ représentent ensemble un groupe alkyle en C₁-C₁₀, alcoxy en C₁-C₆, alkylthio en C₁-C₆, cycloalkyle en C₃-C₆ à chaque fois éventuellement substitué une ou deux fois, de manière identique ou différente par un atome d'halogène ; un groupe hydroxy, substitué à chaque fois éventuellement une ou à trois fois, de manière identique ou différente par un atome d'halogène ; ou un groupe alcanediyle en C₃-C₆ ou alcènediyle en C₄-C₆ substitué à chaque fois éventuellement une à trois fois, de manière identique ou différente par un groupe benzyloxy ou phényle substitué par un atome d'halogène, un groupe alkyle en C₁-C₆ ou alcoxy en C₁-C₆ ; lequel contient en plus éventuellement un des groupes suivants 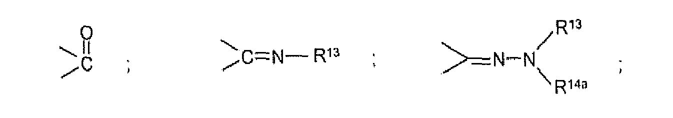 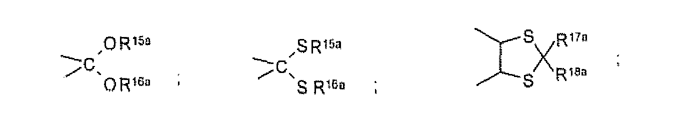 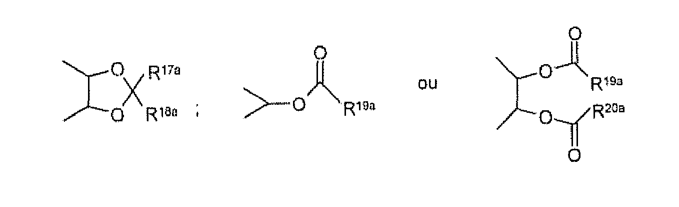 ou est ponté par un groupe alcanediyle en C₁-C₂ ou par un atome d'oxygène ou
D et Q¹ représentent ensemble un groupe alcanediyle à chaque fois éventuellement substitué une ou deux fois, de manière identique ou différente par un groupe alkyle en C₁-C₄, alcoxy en C₁-C₄,
Q¹ représente l'hydrogène, un groupe alkyle en C₁-C₆, (alcoxy en C₁-C₆)-(alkyle en C₁-C₂), cycloalkyle en C₃-C₈ éventuellement substitué par du fluor, du chlore, un groupe alkyle en C₁-C₄, halogénoalkyle en C₁-C₂ ou alcoxy en C₁-C₄, où un groupe méthylène est éventuellement remplacé par de l'oxygène ou du soufre ou un groupe phényle éventuellement substitué par un atome d'halogène, un groupe alkyle en C₁-C₄, alcoxy en C₁-C₄, halogénoalkyle en C₁-C₂, halogénoalcoxy en C₁-C₂, cyano ou nitro ou
Q², Q⁴, Q⁵ et Q⁶ représentent indépendamment l'un de l'autre l'hydrogène ou un groupe alkyle en C₁-C₄,
Q³ représente l'hydrogène, un groupe alkyle en C₁-C₆, (alcoxy, en C₁-C₆)-(alkyle en C₁-C₂), (alkylthio en C₁-C₆)-(alkyle en C₁-C₂), cycloalkyle en C₃-C₈ éventuellement substitué par un groupe alkyle en C₁-C₄ ou alcoxy en C₁-C₄, où un groupe méthylène est éventuellement remplacé par de l'oxygène ou du soufre ou un groupe phényle éventuellement substitué par un atome d'halogène, un groupe alkyle en C₁-C₄, alcoxy en C₁-C₄, halogénoalkyle en C₁-C₂, halogénoalcoxy en C₁-C₂, cyano ou nitro,
Q¹ et Q² représentent avec l'atome de carbone auquel ils sont liés un noyau en C₃-C₇ éventuellement substitué par un groupe alkyle en C₁-C₆, alcoxy en C₁-C₆ ou halogénoalkyle en C₁-C₂, dans lequel un élément de noyau est éventuellement remplacé par de l'oxygène ou du soufre,
Q³ et Q⁴ représentent ensemble avec l'atome de carbone auquel ils sont liés un noyau en C₃-C₇ éventuellement substitué par un groupe alkyle en C₁-C₄, alcoxy en C₁-C₄ ou halogénoalkyle en C₁-C₂, dans lequel un élément de noyau est éventuellement remplacé par de l'oxygène ou du soufre,
G représente l'hydrogène (a) ou un des groupes 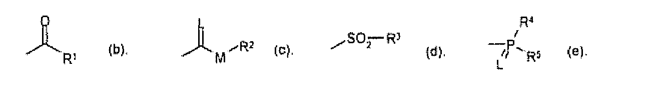
E(f) ou 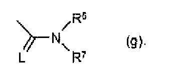 en particulier (a), (b), (c) ou (g)
dans lesquels
E représente un équivalent d'ion métallique ou un ion ammonium,
L représente l'oxygène ou le soufre et
M représente l'oxygène ou le soufre.
R¹ représente un groupe alkyle en C₁-C₂₀, alcényle en C₂-C₂₀, (alcoxy en C₁-C₆)-(alkyle en C₁-C₈), (alkylthio en C₁-C₈)-(alkyle en C₁-C₈), poly-(alcoxy en C₁-C₈)-(alkyle en C₁-C₈) à chaque fois éventuellement substitué par un atome d'halogène ; ou cycloalkyle en C₃-C₈ éventuellement substitué par un atome d'halogène, un groupe alkyle en C₁-C₆ ou alcoxy en C₁-C₆, dans lequel un ou plusieurs (au plus deux) éléments de noyau non directement voisins sont éventuellement remplacés par de l'oxygène et/ou du soufre,
un groupe phényle éventuellement substitué par un atome d'halogène, un groupe cyano, nitro, alkyle en C₁-C₆, alcoxy en C₁-C₆, halogénoalkyle en C₁-C₆, halogénoalcoxy en C₁-C₆, alkylthio en C₁-C₆ ou alkylsulfonyle en C₁-C₆,
un groupe phényle-(alkyle en C₁-C₆) éventuellement substitué par un atome d'halogène, un groupe nitro, cyano, alkyle en C₁- C₆, alcoxy en C₁-C₆, halogénoalkyle en C₁-C₆ ou halogénoalcoxy en C₁-C₆,
un groupe hétaryle à 5 ou 6 éléments (par exemple pyrazolyle, thiazolyle, pyridyle, pyrimidyle, furanyle ou thiényle) éventuellement substitué par un atome d'halogène ou un groupe alkyle en C₁-C₆,
un groupe phénoxy-(alkyle en C₁-C₆) éventuellement substitué par un atome d'halogène ou un groupe alkyle en C₁-C₆ ou
un groupe hétaryloxy-(alkyle en C₁-C₆) (par exemple pyridyloxy-(alkyle en C₁-C₆), pyrimidyloxy-(alkyle en C₁-C₆) ou thiazolyloxy- (alkyle en C₁-C₆)) à 5 ou 6 éléments éventuellement substitué par un atome d'halogène, un groupe amino ou alkyle en C₁-C₆,
R² représente un groupe alkyle en C₁-C₂₀, alcényle en C₂-C₂₀, (alcoxy en C₁-C₈)-(alkyle en C₂-C₈), poly- (alcoxy en C₁-C₈)-(alkyle en C₂-C₈) à chaque fois éventuellement substitué par un atome d'halogène,
un groupe cycloalkyle en C₃-C₈ éventuellement substitué par un atome d'halogène, un groupe alkyle en C₁-C₆ ou alcoxy en C₁-C₆ ou
un groupe phényle ou benzyle à chaque fois éventuellement substitué par un atome d'halogène, un groupe cyano, nitro, alkyle en C₁- C₆, alcoxy en C₁-C₆, halogénoalkyle en C₁-C₆ ou halogénoalcoxy en C₁-C₆,
R³ représente un groupe alkyle en C₁-C₈ éventuellement substitué par un atome d'halogène ou un groupe phényle ou benzyle à chaque fois éventuellement substitué par un atome d'halogène, un groupe alkyle en C₁-C₆, alcoxy, en C₁-C₆, halogénoalkyle en C₁-C₄, halogénoalcoxy en C₁-C₄, cyano ou nitro,
R⁴ et R⁵ représentent indépendamment l'un de l'autre un groupe alkyle en C₁-C₈, alcoxy en C₁-C₈, alkylamino en C₁-C₈, di-(alkyle en C₁-C₈)amino, alkylthio en C₁-C₈, alcénylthio en C₂-C₈, cycloalkylthio en C₃-C₈ éventuellement à chaque fois substitué par un atome d'halogène ; ou un groupe phényle, phénoxy ou phénylthio à chaque fois éventuellement substitué par un atome d'halogène, un groupe nitro, cyano, alcoxy en C₁- C₄, halogénoalcoxy en C₁-C₄, alkylthio en C₁-C₄, halogénoalkylthio en C₁-C₄, alkyle en C₁-C₄ ou halogénoalkyle en C₁-C₄,
R⁶ et R⁷ représentent indépendamment l'un de l'autre l'hydrogène, un groupe alkyle en C₁-C₈, cycloalkyle en C₃-C₈, alcoxy, en C₁-C₈, alcényle en C₃-C₈, (alcoxy en C₁-C₈)-(alkyle en C₁-C₈) à chaque fois éventuellement substitué par un atome d'halogène ; un groupe phényle éventuellement substitué par un atome d'halogène, un groupe halogénoalkyle en C₁-C₈, alkyle en C₁-C₈ ou alcoxy en C₁-C₈ ; un groupe benzyle éventuellement substitué par un atome d'halogène, un groupe alkyle en C₁-C₈, halogénoalkyle en C₁-C₈ ou alcoxy en C₁-C₈ ou ensemble un reste alkylène en C₃-C₆ éventuellement substitué par un groupe alkyle en C₁-C₄, dans lequel un atome de carbone est éventuellement remplacé par de l'oxygène ou du soufre,
R¹³ représente l'hydrogène, un groupe alkyle en C₁-C₈ ou alcoxy en C₁-C₈ éventuellement substitué par un atome d'halogène, un groupe cycloalkyle en C₃- C₈ éventuellement substitué par un atome d'halogène, un groupe alkyle en C₁-C₄ ou alcoxy en C₁-C₄, dans lequel un groupe méthylène est éventuellement remplacé par de l'oxygène ou du soufre ; ou un groupe phényle, phényle-(alkyle en C₁-C₄) ou phényle-(alcoxy en C₁-C₄) à chaque fois éventuellement substitué par un atome d'halogène, un groupe alkyle en C₁-C₆, alcoxy en C₁-C₆, halogénoalkyle en C₁-C₄, halogénoalcoxy en C₁-C₄, nitro ou cyano,
R^{14a} représente l'hydrogène ou un groupe alkyle en C₁- C₈ ou
R¹³ et R^{14a} représentent ensemble un groupe alcanediyle en C₄-C₆,
R^{15a} et R^{16a} sont identiques ou différents et représentent un groupe alkyle en C₁-C₆ ou
R^{15a} et R^{16a} représentent ensemble un reste alcanediyle en C₂-C₄, lequel est éventuellement substitué par un groupe alkyle en C₁-C₆, halogénoalkyle en C₁-C₆ ou par un groupe phényle éventuellement substitué par un atome d'halogène, un groupe alkyle en C₁- C₆, halogénoalkyle en C₁-C₄, alcoxy en C₁-C₆, halogénoalcoxy en C₁-C₄, nitro ou cyano,
R^{17a} et R^{18a} représentent indépendamment l'un de l'autre l'hydrogène, un groupe alkyle en C₁-C₈ éventuellement substitué par un atome d'halogène ; ou un groupe phényle éventuellement substitué par un atome d'halogène, un groupe alkyle en C₁-C₆, alcoxy en C₁-C₆, halogénoalkyle en C₁-C₄, halogénoalcoxy en C₁-C₄, nitro ou cyano ou
R^{17a} et R^{18a} représentent avec l'atome de carbone auquel ils sont liés un groupe carbonyle ou un groupe cycloalkyle en C₅-C₇ éventuellement substitué par un atome d'halogène, un groupe alkyle en C₁-C₄ ou alcoxy en C₁-C₄, dans lequel un groupe méthylène est éventuellement remplacé par de l'oxygène ou du soufre,
R^{19a} et R^{20a} représentent indépendamment l'un de l'autre un groupe alkyle en C₁-C₁₀, alcényle en C₂-C₁₀, alcoxy, en C₁-C₁₀, alkylamino en C₁-C₁₀, alcénylamino en C₃-C₁₀, di-(alkyle en C₁-C₁₀)amino ou di-(alcényle en C₃-C₁₀)amino.

3. Composition selon la revendication 2, **caractérisée par** les définitions suivantes des substituants des composés de la formule (I)
W représente l'hydrogène, le fluor, le chlore, le brome, un groupe alkyle en C₁-C₄, alcényle en C₂- C₄, alcynyle en C₂-C₄, alcoxy en C₁-C₄, halogénoalkyle en C₁-C₂ ou halogénoalcoxy en C₁- C₂,
X représente le chlore, le brome, l'iode, un groupe alkyle en C₁-C₄, alcényle en C₂-C₄, alcynyle en C₂- C₄, alcoxy, en C₁-C₄, (alcoxy en C₁-C₄)alcoxy en C₁-C₃), halogénoalkyle en C₁-C₂, halogénoalcoxy en C₁-C₂ ou cyano,
Y représente à la position 4 l'hydrogène, le fluor, le chlore, le brome, l'iode, un groupe méthoxy, éthoxy, cyano, trifluorométhyle, difluorométhoxy ou trifluorométhoxy,
Z représente l'hydrogène,
W représente également l'hydrogène, le fluor, le chlore, le brome ou un groupe alkyle en C₁-C₄,
X représente également le chlore, le brome, un groupe alkyle en C₁-C₄, alcoxy, en C₁-C₄, halogénoalkyle en C₁-C₂, halogénoalcoxy en C₁-C₂ ou cyano,
Y représente également à la position 4 un groupe alcényle en C₂-C₄, alcinyle en C₂-C₄ ou le reste 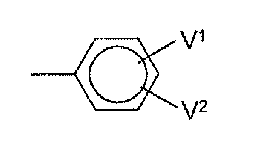
Z représente également l'hydrogène,
V¹ représente également le fluor, le chlore, un groupe alkyle en C₁-C₄, alcoxy en C₁-C₄, halogénoalkyle en C₁-C₂ ou halogénoalcoxy en C₁-C₂, cyano ou nitro,
V² représente également l'hydrogène, le fluor, le chlore, un groupe alkyle en C₁-C₄, alcoxy en C₁-C₄ ou halogénoalkyle en C₁-C₂,
V¹ et V² représentent ensemble également -O-CH-O- et -O-CF₂-O-,
W représente également l'hydrogène, le fluor, le chlore, le brome ou un groupe alkyle en C₁-C₄,
X représente également le chlore, le brome, un groupe alkyle en C₁-C₄, alcoxy, en C₁-C₄, halogénoalkyle en C₁-C₂, halogénoalcoxy en C₁-C₂ ou cyano,
Y représente également à la position 5 un groupe alcényle en C₂-C₄, alcynyle en C₂-C₄ ou le reste 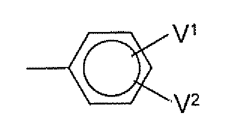
Z représente également à la position 4 l'hydrogène, un groupe alkyle en C₁-C₄ ou le chlore,
V¹ représente également le fluor, le chlore, un groupe alkyle en C₁-C₄, alcoxy en C₁-C₄, halogénoalkyle en C₁-C₂ ou halogénoalcoxy en C₁-C₂, cyano ou nitro,
V² représente également l'hydrogène, le fluor, le chlore, un groupe alkyle en C₁-C₄, alcoxy en C₁-C₄ ou halogénoalkyle en C₁-C₂,
V¹ et V² représentent ensemble également -O-CH₂-O- et -O-CF₂-O-,
W représente de plus l'hydrogène, un groupe alkyle en C₁-C₄, alcényle en C₂-C₄, alcinyle en C₂-C₄, alcoxy en C₁-C₄, le fluor, le chlore, le brome ou un groupe trifluorométhyle,
X représente de plus le fluor, le chlore, le brome, l'iode, un groupe alkyle en C₁-C₄, alcényle en C₂- C₄, alcynyle en C₂-C₄, alcoxy en C₁-C₄, (alcoxy, en C₁-C₄)-(alcoxy en C₁-C₃), halogènoalkyle en C₁-C₂, halogénoalcoxy en C₁-C₂ ou cyano,
Y représente de plus à la position 4 un groupe alkyle en C₁-C₄,
Z représente de plus l'hydrogène,
W représente de plus l'hydrogène, le fluor, le chlore, le brome, un groupe alkyle en C₁-C₄ ou alcoxy, en C₁-C₄,
X représente de plus le chlore, le brome, l'iode, un groupe alkyle en C₁-C₄, alcoxy en C₁-C₄, halogénoalkyle en C₁-C₂, halogénoalcoxy en C₁-C₂ ou cyano,
Y représente de plus à la position 4 l'hydrogène, le chlore, le brome, l'iode, un groupe alkyle en C₁-C₄, halogénoalkyle en C₁-C₂ ou halogénoalcoxy en C₁- C₂,
Z représente de plus à la position 3 ou 5 le fluor, le chlore, le brome, l'iode, un groupe alkyle en C₁-C₄, halogénoalkyle en C₁-C₂, alcoxy en C₁-C₄ ou halogénoalcoxy en C₁-C₂,
CKE représente un des groupes 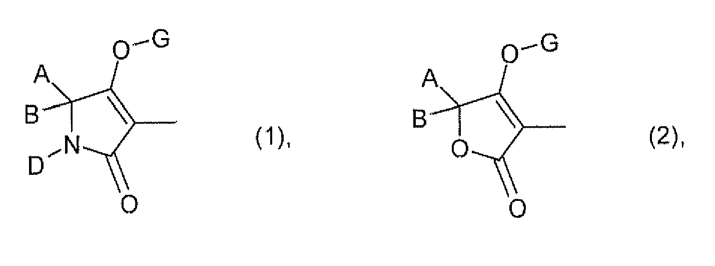 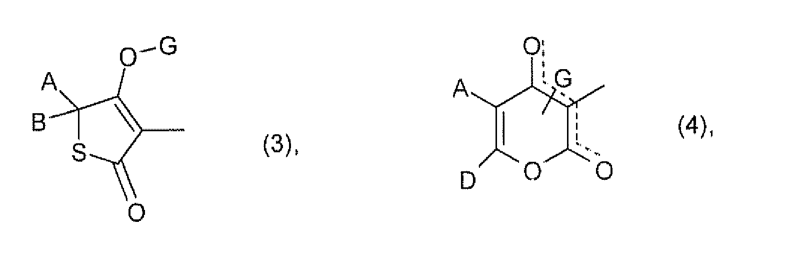 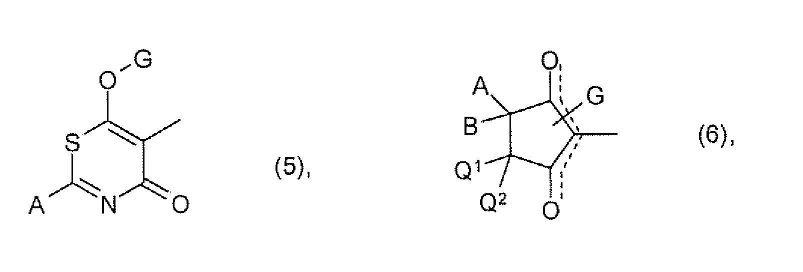 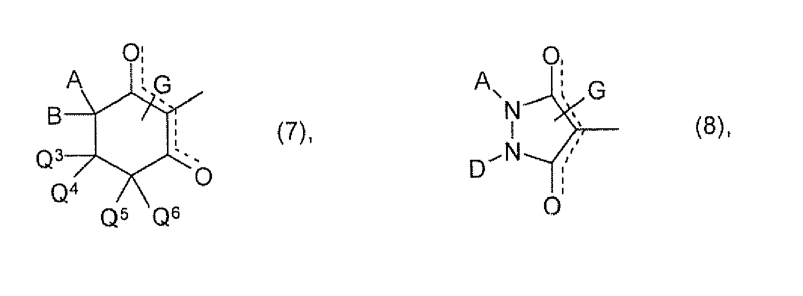 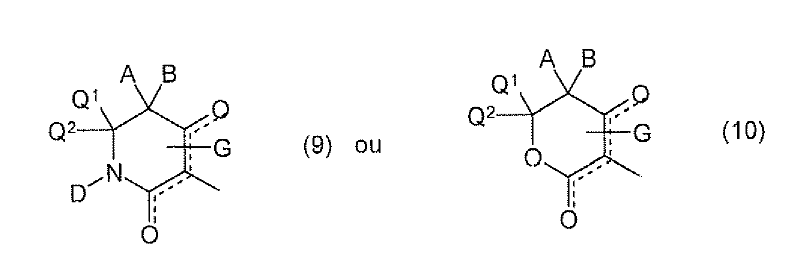
A représente l'hydrogène, un groupe alkyle en C₁-C₆, (alcoxy, en C₁-C₄)-(alkyle en C₁-C₂) éventuellement une à trois fois substitué par du fluor ou du chlore, un groupe cycloalkyle en C₃-C₆ éventuellement substitué une à deux fois par un groupe alkyle en C₁-C₂ ou alcoxy en C₁-C₂ ou (toutefois pas dans le cas des composés des formules (I-3), (I-4), (I-6) et (1-7), un groupe phényle ou benzyle à chaque fois éventuellement substitué une à deux fois par du fluor, du chlore, du brome, un groupe alkyle en C₁-C₄, halogénoalkyle en C₁-C₂), alcoxy en C₁-C₄, halogénoalcoxy en C₁-C₂, cyano ou nitro,
B représente l'hydrogène, un groupe alkyle en C₁-C₄ ou (alcoxy en C₁-C₂)-(alkyle en C₁-C₂) ou
A, B et l'atome de carbone auquel ils sont liés représentent un groupe cycloalkyle en C₃-C₇ saturé ou insaturé, dans lequel au moins un élément de noyau est remplacé par l'oxygène ou le soufre et lequel est éventuellement substitué une à deux fois par un groupe alkyle en C₁-C₆, (alcoxy en C₁-C₄)-(alkyle en C₁-C₂), trifluorométhyle, alcoxy en C₁-C₆, (alcoxy en C₁-C₃)-(alcoxy en C₁-C₃) ou cycloalkylméthoxy en C₃-C₆ à condition qu'alors Q³ représente l'hydrogène ou un groupe méthyle ou
A, B et l'atome de carbone auquel ils sont liés représentent un groupe cycloalkyle en C₅-C₆, lequel est substitué par un groupe alkylènediyle éventuellement substitué par un groupe méthyle ou éthyle contenant éventuellement 1 ou 2 atomes d'oxygène ou de soufre non directement voisin(s) ou par un groupe alkylènedioxyle ou par un groupe alkylènedithiol, lequel forme avec l'atome de carbone auquel il est lié un autre noyau à 5 ou 6 éléments à condition qu'alors Q³ représente l'hydrogène ou un groupe méthyle, ou
A, B et l'atome de carbone auquel ils sont liés représentent un groupe cycloalkyle en C₃-C₆ ou cycloalcényle en C₅-C₆, dans lequel deux substituants représentent avec les atomes de carbone auxquels ils sont liés un groupe alcanediyle en C₂-C₄, alcènediyle en C₂-C₄ ou butadiènediyle éventuellement à chaque fois substitué par un groupe alkyle en C₁-C₂ ou alcoxy en C₁-C₂ à condition qu'alors Q³ représente l'hydrogène ou un groupe méthyle,
D représente l'hydrogène, un groupe alkyle en C₁-C₆, alcényle en C₃-C₆, (alcoxy en C₁-C₄)-(alkyle en C₂-C₃) à chaque fois éventuellement substitué une à trois fois par du fluor ; un groupe cycloalkyle en C₃-C₆ éventuellement substitué une à deux fois par un groupe alkyle en C₁-C₄, alcoxy, en C₁-C₄ ou halogénoalkyle en C₁-C₂, dans lequel un groupe méthylène est éventuellement remplacé par de l'oxygène ou (toutefois pas dans le cas des composés de la formule (I-1)) un groupe phényle ou pyridyle éventuellement à chaque fois substitué une à deux fois par du fluor, du chlore, du brome, un groupe alkyle en C₁-C₄, halogénoalkyle en C₁-C₄, alcoxy en C₁-C₄ ou halogénoalcoxy en C₁-C₄, ou
A et B représentent ensemble un groupe alcanediyle en C₃-C₅ éventuellement une à deux fois substitué, dans lequel un groupe méthylène peut être remplacé par un groupe carbonyle (toutefois pas dans le cas des composés de la formule (I-1)), l'oxygène ou le soufre, où interviennent comme substituants un groupe alkyle en C₁-C₂ ou alcoxy en C₁-C₂ ou
A et D représentent (dans le cas des composés de la formule (I-1)) avec les atomes auxquels ils sont liés, un des groupes AD-1 à AD-10 : 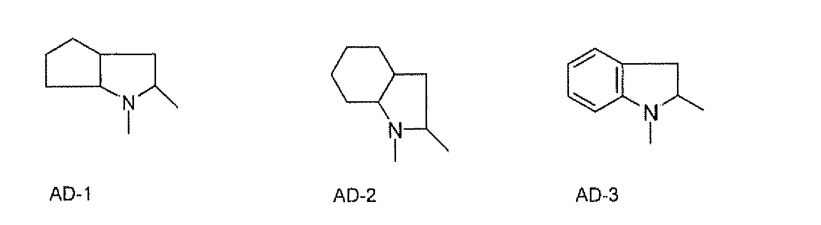 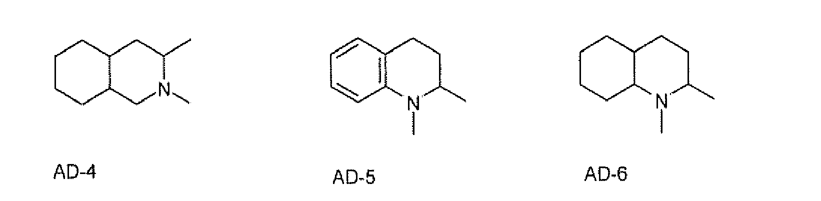 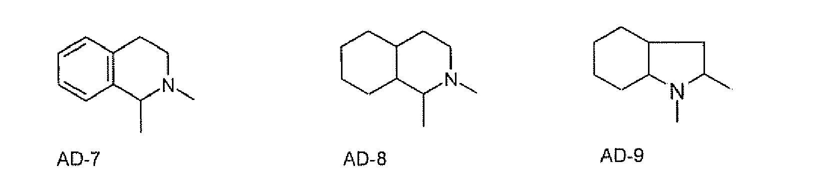 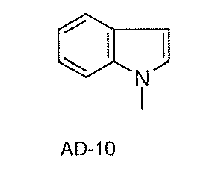 ou
A et Q¹ représentent ensemble un groupe alcanediyle en C₃-C₄ à chaque fois éventuellement substitué une ou deux fois, de manière identique ou différente par un groupe alkyle en C₁-C₂ ou alcoxy en C₁-C₂ ou
D et Q1 représentent ensemble un groupe alcanediyle en C₃-C₄, ou
Q¹ représente l'hydrogène, un groupe alkyle en C₁-C₄, (alcoxy en C₁-C₄)-(alkyle en C₁-C₂) ou cycloalkyle en C₃-C₆ éventuellement substitué par un groupe méthyle ou méthoxy, un groupe méthylène étant éventuellement remplacé par de l'oxygène,
Q² représente l'hydrogène, un groupe méthyle ou éthyle,
Q⁴, Q⁵ et Q⁶ représentent indépendamment l'un de l'autre l'hydrogène ou un groupe alkyle en C₁-C₃,
Q³ représente l'hydrogène, un groupe alkyle en C₁-C₄ ou cycloalkyle en C₃-C₆ éventuellement substitué une à deux fois par un groupe méthyle ou méthoxy, ou
Q¹ et Q² représentent l'hydrogène, un groupe alkyle en C₁-C₄, (alcoxy en C₁-C₄)-(alkyle en C₁-C₂), ou cycloalkyle en C₁-C₆ éventuellement substitué par un groupe méthyle ou méthoxy, un groupe méthylène étant éventuellement remplacé par l'oxygène, ou
Q³ et Q⁴ représentent avec l'atome de carbone auquel ils sont liés un noyau en C₅-C₆ saturé éventuellement substitué par un groupe alkyle en C₁-C₂ ou alcoxy en C₁-C₂, dans lequel un élément de noyau est éventuellement remplacé par de l'oxygène ou du soufre à condition qu'alors A représente l'hydrogène ou un groupe méthyle,
G représente l'hydrogène (a) ou un des groupes 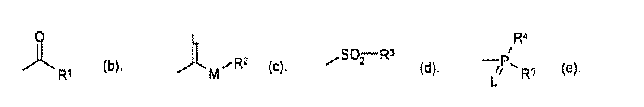
E(f) ou 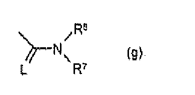 en particulier (a), (b) ou (c), dans lesquels
E représente un équivalent d'ion métallique ou un ion ammonium
L représente l'oxygène ou le soufre et
M représente l'oxygène ou le soufre,
R¹ représente un groupe alkyle en C₁-C₈, alcényle en C₂-C₁₈, (alcoxy en C₁-C₄)-(alkyle en C₁-C₂), (alkylthio en C₁-C₄)-(alkyle en C₁-C₂) à chaque fois éventuellement substitué une à trois fois par du fluor ou du chlore ; ou un groupe cycloalkyle en C₃-C₆ éventuellement substitué une à deux fois par du Fluor, du chlore, un groupe alkyle en C₁-C₂ ou alcoxy en C₁-C₂, dans lequel un ou deux éléments de noyau non directement voisin(s) sont éventuellement remplacés par l'oxygène, un groupe phényle éventuellement substitué une à deux fois par du fluor, du chlore, du brome, un groupe cyano, nitro, alkyle en C₁-C₄, alcoxy en C₁-C₄, halogénoalkyle en C₁-C₂ ou halogénoalcoxy en C₁-C₂,
R² représente un groupe alkyle en C₁-C₈, alcényle en C₂-C₈ ou (alcoxy en C₁-C₄)-(alkyle en C₂-C₄), à chaque fois éventuellement substitué une à trois fois par du fluor, un groupe cycloalkyle en C₃-C₆ éventuellement substitué une fois par un groupe alkyle en C₁-C₂ ou alcoxy en C₁-C₂ ou un groupe phényle ou benzyle substitué à chaque fois éventuellement une à deux fois par du fluor, du chlore, du brome, un groupe cyano, nitro, alkyle en C₁-C₄, alcoxy en C₁-C₃, trifluorométhyle ou trifluorométhoxy,
R³ représente un groupe alkyle en C₁-C₆ éventuellement substitué une à trois fois par du fluor ou un groupe phényle éventuellement substitué une fois par du fluor, du chlore, du brome, un groupe alkyle en C₁-C₄, alcoxy en C₁-C₄, trifluorométhyle, trifluorométhoxy, cyano ou nitro,
R⁴ représente un groupe alkyle en C₁-C₆, alcoxy en C₁-C₆, alkylamino en C₁-C₆, di-(alkyle en C₁-C₆)amino, alkylthio en C₁-C₆, alcénylthio en C₃-C₄, cycloalkylthio en C₃-C₆ ; ou un groupe phényle, phénoxy ou phénylthio à chaque fois éventuellement substitué une fois par du fluor, du chlore, du brome, un groupe nitro, cyano, alcoxy en C₁-C₃, halogénoalcoxy en C₁-C₃, alkylthio en C₁-C₃, halogénoalkylthio en C₁-C₃, alkyle en C₁-C₃ ou trifluorométhyle,
R⁵ représente un groupe alcoxy en C₁-C₆ ou alkylthio en C₁-C₆,
R⁶ représente l'hydrogène, un groupe alkyle en C₁-C₆, cycloalkyle en C₃-C₆, alcoxy, en C₁-C₆, alcényle en C₃-C₆, (alcoxy en C₁-C₆)-(alkyle en C₁-C₄) ; phényle éventuellement substitué une fois par du fluor, du chlore, du brome, du trifluorométhyle, un groupe alkyle en C₁-C₄ ou alcoxy en C₁-C₄; benzyle éventuellement substitué une fois par du fluor, du chlore, du brome, un groupe alkyle en C₁-C₄, trifluorométhyle ou alcoxy en C₁-C₄,
R⁷ représente un groupe alkyle en C₁-C₆, alcényle en C₃-C₆ ou (alcoxy en C₁-C₆)-(alkyle en C₁-C₄),
R⁶ et R⁷ représentent ensemble un reste alkylène en C₄-C₅ éventuellement substitué par un groupe méthyle ou éthyle, dans lequel un groupe méthylène est éventuellement remplacé par de l'oxygène ou du soufre.

4. Composition selon l'une ou plusieurs quelconques des revendications 1 à 3, **caractérisée en ce que** la teneur en principe actif est de 0,5 à 50 % en masse.

5. Composition selon l'une ou plusieurs quelconques des revendications 1 à 4, **caractérisé en ce que** dans la formule (II) selon la revendication 1 D représente l'azote.

6. Composition selon l'une ou plusieurs quelconques des revendications 1 à 5, **caractérisée en ce que** la teneur en sel d'ammonium ou de phosphonium est de 0,5 à 80 mmol/l.

7. Composition selon la revendication 1, **caractérisée en ce que** dans la formule (II) selon la revendication 1 R³⁰ représente un lactate, un sulfate, un nitrate, un thiosulfate, un thiocyanate, un citrate, un oxalate, un formiate, un acétate, un monohydragénophosphate ou un dihydrogénophosphate.

8. Composition selon la revendication 1, **caractérisée en ce que** R³⁰ représente un sulfate, un thiocyanate, un dihydrogénophosphate ou un monohydrogénophosphate.

9. Composition selon l'une quelconque des revendications 1 à 8, **caractérisée en ce que** le promoteur de pénétration est un ester d'une huile végétale.

10. Composition selon l'une quelconque des revendications 1 à 8, **caractérisée en ce que** le promoteur de pénétration est l'ester méthylique d'huile de colza.

11. Composition selon l'une quelconque des revendications 1 à 8, **caractérisée en ce que** le promoteur de pénétration est un alcoxylate d'alcanol ouvert.

12. Composition selon l'une quelconque des revendications 1 à 8, **caractérisée en ce que** le promoteur de pénétration est un composé de la formule (III-c),
RO-(-PO-)ᵣ-(EO)₅-R' (III-c)
dans laquelle
R a la signification indiquée ci-dessus,
R' a la signification indiquée ci-dessus,
EO représente -CH₂-CH₂-O-,
PO représente 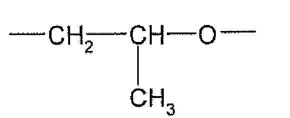
r représente des nombres de 1 à 10 et
s représente des nombres de 1 à 10.

13. Composition selon l'une quelconque des revendications 1 à 8, **caractérisée en ce que** le promoteur de pénétration est un composé de la formule (III-c-1), 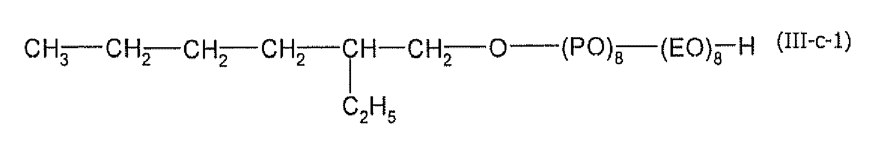 dans laquelle
EO représente -CH₂-CH₂-O-,
PO représente 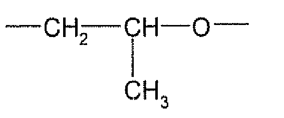
et
les nombres 8 et 6 représentent des valeurs moyennes.

14. Composition selon l'une quelconque des revendications à 13, **caractérisée en ce que** la teneur en promoteur de pénétration est de 1 à 95 % en masse.

15. Procédé pour combattre des croissances de plantes non souhaitées, **caractérisé en ce que** l'on applique une composition selon l'une ou plusieurs quelconques des revendications 1 à 4 de manière non diluée ou diluée sur les plantes, les parties de plantes, les semences de plantes ou sur la surface sur laquelle les plantes croissent.

16. Procédé pour augmenter l'action d'agents de protection herbicides des plantes contenant un principe actif de la classe des céto-énols cycliques phényle-substitués, **caractérisé en ce que** l'agent prêt à l'application (bouillie pour pulvérisation) est préparé en utilisant une composition selon la revendication 1.

17. Procédé selon la revendication 16, **caractérisé en ce que** le sel de la formule (II) est présent dans une concentration finale de 0,5 à 80 mmol/l.

18. Procédé selon la revendication 16, **caractérisé en ce que** le promoteur de pénétration est présent dans une concentration finale de 0,1 à 10 g/l.

19. Procédé selon la revendication 16, **caractérisé en ce que** le promoteur de pénétration est présent dans une concentration finale de 0,1 à 10 g/l et le sel de la formule (II) dans une concentration finale de 0,5 à 80 mmol/l.

20. Utilisation d'un sel de la formule (II) dans une composition selon la revendication 1 pour augmenter l'action d'un agent de protection herbicide des plantes contenant un principe actif de la classe des céto-énols cycliques phényle-substitués de la formule (I) selon la revendication 2, **caractérisée en ce que** l'on utilise le sel dans la préparation d'un agent de protection des plantes (bouillie pour pulvérisation) prêt à l'application.

21. Utilisation selon la revendication 20, **caractérisée en ce que** le sel de la formule (II) est présent dans l'agent de protection des plantes prêt à l'application dans une concentration de 0,5 à 80 mmol/l.
